# EUROPEAN PATENT APPLICATION

(11) **EP 3 647 916 A2**
(43) Date of publication of application: **06.05.2020**
(21) Application number: 18823310.0
(22) Date of filing: 02.07.2018
(51) Int. Cl.: G06F 3/03, G06F 3/041

(54) **CODE GENERATION DEVICE**

(30) Priority: 30.06.2017 JP 2017129968; 29.12.2017 JP 2017255255
(71) Applicant: I.P. Solutions, Ltd., Tokyo 101-0051 (JP)
(72) Inventor: YOSHIDA, Kenji, Tokyo 112-0002 (JP)
(74) Representative: Danubia Patent & Law Office LLC
(86) International application number: PCT/JP2018/025120
(87) International publication number: WO 2019/004486

(57) **Abstract**

The functions of an electronic stamp are significantly improved. Especially, (1) the number of code numbers is significantly increased, (2) by a predetermined operation, a plurality of code are generated by a single electronic stamp, (3) changing of pattern code settings is possible with as single electronic stamp. Furthermore, an object of the present invention is to meet a user's needs by any or a combination of the above.

The apparatus is detected by bringing it into contact with a panel comprising a sensor that detects a change in a physical quantity at one or more positions, and the apparatus comprises a plurality of electrodes arranged on the bottom portion, a housing that is at least partially formed of a conductive material, and a setting unit that enables selective switching of conduction between the electrodes and the conductive material, and that presets a conductive pattern formed by one or more electrodes detected by the panel.

## Description

### FIELD OF THE INVENTION

The present invention relates to a code generation apparatus used with an electronic device equipped with a touch panel.

### BACKGROUND OF THE INVENTION

In recent years, electronic stamps of which conductive patterns are formed that can be detected with a capacitive touch panel have become widespread. By holding these electronic stamps over an electronic device (for example, a smartphone) equipped with a capacitive touch panel, the conductors are detected, and the capacitance code defined by the arrangement of the conductive pattern is recognized (see Patent Literature 1 and 2).

### Prior Art Documents

### Patent Literature

Patent Literature 1: Japanese Unexamined Patent Application Publication No. 2015-5275.
Patent Literature 2: Japanese Translation of PCT International Application Publication No. JP-T-2016-505922.

### Summary of the Invention

### Problems that the Invention is to Solve

However, with the electronic stamps of Patent Literature 1 and 2, only one fixed conductive pattern can be used.

Therefore, when issuing a plurality of coupons or rewarding points, a plurality of stamps is required. Needless to say, a large number of electronic stamps having different conductive patterns for distinguishing each store, respectively, for issuing coupons or rewarding points is required.

The supplier side of the electronic stamp needs to manufacture electronic stamps having different arrangements of electrodes (conductors) forming the conductive patterns. However, since the molds and mechanisms are changed for the production of each stamp in order to manufacture stamps having different conductive patterns, there is the issue that high costs are required, and the cost for a single electronic stamp is high.

Furthermore, the number of conductive patterns that can be set is limited with the electronic stamp of Patent Literature 1 and other various electronic stamps. Specifically, there are at most several hundred patterns. However, in order to complete payments, reward and erase points, or the like at many different stores, it is necessary to distinguish the stores, and thus a large number of conductive patterns (capacitance codes) are required. This cannot be handled by current electronic stamps. In addition, if an electronic stamp is used as a personal seal, an electronic stamp having much more different codes is required.

The present invention has been made in view of such a situation, to enable switching of a plurality of conductive patterns and to provide a large number of different electronic stamps are regarded as the issues.

### Solution to the Problems

(1) In order to solve the above-described problems, featured is an apparatus according to the present invention that is detected by bringing it into contact with a panel comprising a sensor that detects a change in a physical quantity at one or more positions, comprising a plurality of electrodes arranged on the bottom portion, a housing that is at least partially formed of a conductive material, a setting unit that enables selective switching of conduction between the said electrodes and the said conductive material, and presets a conductive pattern formed by one or more electrodes detected by the said panel.
(2) Featured is an apparatus according to the present invention that is detected by bringing it into contact with a panel comprising a capacitance sensor, comprising a plurality of electrodes arranged on a bottom portion, a housing that is at least partially formed of a conductive material, one or more operation units that enables switching between a plurality of conductive patterns formed by one or more electrodes detected by the said panel by conduction or cutoff of at least part of a conduction path between the said electrodes and the said conductive material when a predetermined operation is received.
(3) Featured is an apparatus according to the present invention that is detected by bringing it into contact with a panel comprising a capacitance sensor, comprising, a plurality of electrodes arranged on a bottom portion, a housing that is at least partially formed of a conductive material, wherein a part of the said conductive material is formed in a plurality of areas on a surface of a housing, and when the apparatus is brought into contact with the said panel and receives a human body contact operation at the said conductive material formed at least on one or more of areas among the plurality of areas on the said surface, a plurality of conductive patterns formed by one or more electrodes detected by the said panel are made switchable by conduction between a conductive material of each of the areas and any one of a plurality of electrodes.
(4) Featured is an apparatus according to the present invention that is detected by bringing it into contact with a panel comprising a capacitance sensor, comprising, a plurality of electrodes arranged on a bottom portion, a housing that is at least partially formed of a conductive material, wherein at least part of the said conductive material is conducting wire connected to the said electrodes, and the apparatus is configured so that a capacitance of the said electrodes is within a capacitance range that can be detected by the said panel, based at least on an area of the said electrodes and a length of the conducting wires that is of predetermined length or longer.
(5) Furthermore, the apparatus may further comprise a setting unit that enables selective switching of conduction between the said electrodes and the said conductive material, and presets a conductive pattern formed by one or more electrodes detected by the said panel.
(6) Furthermore, the said setting unit can set a plurality of conductive patterns,
   and may comprise one or more operation units that makes the panel detect any one of a plurality of conductive patterns set by the said setting unit when receiving a predetermined operation and is capable of switching a plurality of conductive patterns formed by one or more electrodes.
(7) Furthermore, the said setting unit enables the said conduction to be selectively switched at least by any one of a connector, a push button type switch, a slide type switch, a toggle switch, and a solder.
(8) Furthermore, the apparatus may further comprise one or more operation units that enables switching between a plurality of conductive patterns formed by one or more electrodes detected by the said panel by conduction or cutoff at least of part of a conduction path between the said electrodes and the said conductive material when a predetermined operation is received.
(9) Furthermore, the apparatus may further comprise each first terminal conducting with each of the said plurality of electrodes, a second terminal conducting with the said conductive material, respective contacts conducting with the said first terminal and the second said terminal, one or more operation units that enable switching of a plurality of the said conductive patterns formed by one or more electrodes detected by the said panel depending on whether or not the said respective contacts are conductive with conduction changed to cutoff, cutoff changed to conduction, or conduction changed to cutoff then to conduction between the said first terminal and the said second terminal when a predetermined operation is received.
(10) Furthermore, one of the said plurality of conductive patterns may be switched by the said operation unit independent of at least one other conductive pattern.
(11) Furthermore, at least one of the electrodes forming the said plurality of conductive patterns may be made unswitchable by the said operation unit.
(12) Furthermore, the said operation unit may have a mechanism in which predetermined electrode positions are selectively moved in a vertical direction when receiving the said predetermined operation, and comprises electrodes that are not detected by the panel by providing a predetermined gap between the panel and the electrodes when the said predetermined electrodes are moved in a vertical direction, and comprises electrodes detected by the panel when the said predetermined electrodes are moved in a vertical direction.
(13) Furthermore, the said predetermined operation may include one or more of operations of one or more buttons, dials, toggles, and slide switches provided on a surface of the said housing, or an operation of pressing or rotating at least a part of the said housing.
(14) Furthermore, the apparatus may further comprise electrodes that are continuously in conduction with the said conductive material.
(15) Furthermore, the area made conductive by contact with the human body may be formed of the said conductive material.
(16) Furthermore, regarding the electrodes that form respective conductive patterns, a number of the electrodes detected by the said panel multiple times may be the same as or less than a number of multi-touches that the panel can detect simultaneously, when switching from a first conductive pattern to another conductive pattern in response to a predetermined operation by the said operation unit.
(17) Furthermore, the apparatus may comprise a switching mechanism wherein at least different electrodes among electrodes that form each conductive pattern are not simultaneously detected by the said panel, when switching from a first conductive pattern to another conductive pattern in response to a predetermined operation by the said operation unit.
(18) Furthermore, as a first operation, the said predetermined operation may have the said panel detect two or more conductive patterns upon switching a plurality of conductive patterns formed by the said one or more electrodes by pressing one or more buttons provided on a surface of the said housing or at least a part of the said housing.
(19) Furthermore, as the said predetermined operation may be a second operation performed as needed before or after the said first operation by performing an operation with one or more second buttons, dials, toggles, and slide switches provided on a surface of the said housing or by rotating at least a part of the said housing, and may have the said panel detect corresponding conductive patterns by switching a plurality of conductive patterns formed by the said one or more electrodes.
(20) Furthermore, a part of the said conductive material may be formed in a plurality of areas on a surface of a housing, and when the apparatus is brought into contact with the said panel and receives a human body contact operation at the said conductive material formed on at least one or more of areas among a plurality of areas on the said surface, a plurality of conductive patterns formed by one or more electrodes detected by the said panel are made switchable by conduction between a conductive material of each of the areas and any one of the said plurality of electrodes.
(21) Furthermore, a first conductive pattern is may be made to be detected by the said panel by having the three or more electrodes arranged to recognize an orientation and an arrangement of a conductive pattern to be in conduction when the housing is held and the apparatus comes into contact with the said panel with a first area formed at least in one of the said plurality of areas is provided at positions for holding a housing.
(22) Furthermore, one or more areas may be provided at least at positions different from the said first region among the said plurality of areas, and the said housing is held and the apparatus comes into contact with the said panel, and in addition to electrodes forming the said first electrode pattern, electrodes newly arranged at one or more different positions may be in conduction, and corresponding electrode patterns are made to be detected by the said panel when a human body comes into contact with at least one area among the said one or more areas.
(23) Furthermore, the said plurality of areas may be provided at positions other than positions for holding a housing, the housing is held and the apparatus comes into contact with the panel, wherein three or more of predetermined electrodes arranged to enable the recognition of an orientation and an arrangement of a conductive pattern may be in conduction and a corresponding conductive pattern is made to be detected by the said panel when at least one area of the said plurality of areas comes into contact with a human body.
(24) Furthermore, the apparatus may conduct to a predetermined electrode and make the said panel detect a corresponding conductive pattern when a human body comes into contact with two or more of the said plurality of areas.
(25) Furthermore, a plurality of conductive materials may be formed with predetermined intervals within a range where simultaneous contact is possible at least in one of the said plurality of areas when a human body comes into contact with the said area, and comprises electrodes in conduction with each of the said plurality of conductive materials.
(26) Furthermore, a capacitance at least of a part of the said electrodes in conduction with the said conductive material may be formed within a capacitance range detectable by the said panel even if a human body does not come into contact with the conductive material.
(27) Furthermore, a part of the said conductive material may be a conductive wire, and a capacitance of the said electrodes detectable by the said panel is within a capacitance range detectable by the said panel based at least on the area of the said electrodes and a predetermined length or more of the said conductive wires.
(28) Furthermore, the said electrodes that may be in conduction with the said conductive material are formed to have physical quantities in a range detectable by the said panel when a human body comes into contact with at least a part of the said conductive material.
(29) Furthermore, the electrodes may be formed within a capacitance range in which the said panel can recognize a cutoff when at least a part of a conduction path of the said conducting electrodes with the said conductive material is cut off from conduction.
(30) Furthermore, electrodes not conducting to the said conductive material may be formed within a capacitance range in which the said panel cannot detect.
(31) Furthermore, each surface of the said plurality of electrodes may be provided on a same surface, and the plurality of electrodes are provided on a same surface or in a convex shape with respect to a surface of the said bottom portion.
(32) Furthermore, the said housing may have a sheet-like medium on a side that is brought into contact with the said panel, and the said plurality of electrodes are formed in a film shape on a surface of the said sheet-like medium that is brought into contact with the said panel or on a surface opposite thereof.
(33) Furthermore, the said sheet-like medium may be attached to a bottom portion of a thin plate of a non-conductive material, and the said bottom portion may be formed by fitting a thin plate of the said non-conductive material.
(34) Furthermore, the said thin plate may comprise a non-conductive material having a low dielectric constant and elasticity.
(35) Furthermore, the said thin plate may include honeycomb walls, lattice walls, or ribs at predetermined intervals so as to provide air gap regions and maintain flatness.
(36) Furthermore, at a bottom portion of the said housing, honeycomb walls, lattice walls, or ribs at predetermined intervals may be formed so as to provide air gap regions and maintain flatness, and the said sheet-like medium may be attached.
(37) Furthermore, a predetermined air gap may be provided between a thin plate of the said non-conductive material and the said housing.
(38) Furthermore, the said predetermined gap may be 0.4 mm or more.
(39) Furthermore, at least a part of a conduction path conducting to the said electrode may be further formed on the said sheet-like medium.
(40) Furthermore, a line width of a conduction path formed at least in the area of the said sheet-like medium that is brought into contact with the said panel may be 0.3 mm or less in a case where a conduction path is of silver salt ink, silver nano ink, or silver paste ink.
(41) Furthermore, at least one or more terminals may be further formed at least either at a middle or an end of the said conduction path formed above the bent section formed by bending upward the said sheet-like medium including a portion where the said conduction path is formed, at least in a vicinity of an area where the apparatus is brought into contact with the panel.
(42) Furthermore, the said sheet-like medium can be bent upward in a vicinity of an area for bringing the apparatus into contact with the panel, and one or more terminals may be further formed on the said sheet-like medium at least either at a middle or at an end of the said conduction path.
(43) Furthermore, the said terminal or a terminal connected to the terminal through a conduction path may be the said first terminal according to (9).
(44) Furthermore, the said sheet-like medium may be removable.
(45) Furthermore, an information processing apparatus connected to the said panel may be made to recognize an orientation of the said conductive pattern formed by detecting three or more electrodes arranged uniquely, and to decode a capacitance code defined by the conductive pattern.
(46) Furthermore, one conductive pattern among the said plurality of conductive patterns may be a conductive pattern where an information processing apparatus connected to the said panel detects three or more electrodes arranged uniquely, recognizes an orientation of the said conductive pattern formed, and decodes a capacitance code defined by the conductive pattern, and using the one conductive pattern as a reference pattern, relative positions of electrodes forming other conductive patterns may be made to be recognized, and capacitance codes defined by other conductive patterns may be made to be decoded.
(47) Furthermore, a pattern in which at least two of the said plurality of conductive patterns are overlaid may be used as a reference pattern for an information processing apparatus connected to the said panel to recognize an orientation of a formed conductive pattern by a detection of at least three or more electrodes arranged uniquely and arrangements of other electrodes, and based upon the reference pattern, relative positions of electrodes forming the said plurality of conductive patterns may be made to be recognized and a plurality of capacitance codes defined by the plurality of conductive patterns may be made to be decoded.
(48) Furthermore, a code including an order of capacitance codes decoded from arrangements of electrodes forming the said plurality of conductive patterns may be defined.
(49) Furthermore, among the said plurality of conductive patterns, with a first conductive pattern that is made to be detected first of all is used as a reference pattern, codes defined by combinations of arrangements of relative positions of electrodes that form other conductive patterns including their order may be made to be decoded by an information processing apparatus connected to the said panel.
(50) Furthermore, the apparatus may comprise a sensor that detects a change in a physical quantity at one or more positions is a capacitance sensor.
(51) Furthermore, the apparatus may comprise a sheet, a thin plate, a coating, or a film covered with printing formed of a non-conductive material for blindfolding and/or protecting at least the said plurality of electrodes.
(52) Furthermore, the said panel may be a touch panel equipped with or connected to a smartphone, a tablet, or an information processing apparatus.
(53) Featured is an information reading system according to the present invention, and comprises a panel having a sensor for detecting a change in a physical quantity at one or more positions, an information processing apparatus that can be mounted on or can be connected externally to the said panel, the apparatus according to (1) to (52) that is detected by bringing it into contact with the said panel, wherein the said panel detects one or more of the said plurality of electrodes, wherein the said information processing apparatus decodes capacitance codes defined by arrangements of the said electrodes.
(54) Featured is a reading method according to the present invention, wherein the said panel detects a conductive pattern formed by one or more electrodes disposed on a bottom portion of the said apparatus when the apparatus according to any one of (1) to (52) comes into contact with a panel comprising a sensor that detects a change in a physical quantity at one or more positions, wherein an information processing apparatus connected to the said panel recognizes an orientation of the said conductive pattern formed by detecting three or more electrodes arranged uniquely and decodes a capacitance code defined by the conductive pattern.
(55) Featured is a reading method according to the present invention, wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of (2) to (52) comes into contact with a panel comprising a sensor that detects a change in a physical quantity at one or more positions, wherein an information processing apparatus connected to the said panel recognizes an orientation of the said conductive pattern formed by detecting three or more electrodes arranged uniquely from one of the said plurality of conductive patterns and decodes a capacitance code defined by the conductive pattern, and with the one conductive pattern as the reference pattern, relative positions of electrodes forming other conductive patterns are recognized, and capacitive codes defined by other conductive patterns are decoded.
(56) Featured is a reading method according to the present invention, wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of (2) to (52) comes into contact with a panel comprising a sensor that detects a change in a physical quantity at one or more positions, wherein a pattern in which two of the said plurality of conductive patterns are overlaid is used as a reference pattern for an information processing apparatus connected to the said panel to recognize an orientation of a formed conductive pattern by a detection of at least three or more electrodes arranged uniquely and an arrangement of other electrodes, and based upon the reference pattern, relative positions of electrodes forming the said plurality of conductive patterns are made to be recognized and a plurality of capacitance codes defined by the plurality of conductive patterns are made to be decoded.
(57) Furthermore, an information processing apparatus connected to the said panel may define codes including the order of capacitance codes decoded from arrangements of electrodes forming the said plurality of conductive patterns.
(58) Featured is a reading method according to the present invention, wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of (2) to (52) comes into contact with a panel comprising a sensor that detects a change in a physical quantity at one or more positions, wherein codes defined by a combination of arrangements of relative positions of electrodes that form other conductive patterns including their order among the said plurality of conductive patterns, with a first conductive pattern that is made to be detected first of all is used as a reference pattern, codes defined by a combination of arrangements of relative positions of electrodes that form other conductive patterns including their order are decoded by an information processing apparatus connected to the said panel.

### ADVANTAGEOUS EFFECT OF THE INVENTION

According to the present invention, it is possible to switch a plurality of conductive patterns and to provide many different stamps.

### BRIEF DESCRIPTION OF THE DRAWINGS

FIG. 1 shows diagrams of an example of an external configuration of an information processing system according to one embodiment of the present invention.
FIG. 2 shows diagrams of an overview of an operation specification of a code generation apparatus capable of switching codes.
FIG. 3 shows a diagram of a basic circuit of a code generation apparatus capable of switching codes.
FIG. 4 is a diagram showing an example of an information electrode arrangement for pattern coding of a code generation apparatus.
FIG. 5 is a diagram showing an example of an arrangement coordinate of an information electrode detection state for pattern coding.
FIG. 6 is a diagram showing a calculation of a placement orientation of a code generation apparatus for pattern coding.
FIG. 7 is a diagram showing normalization coordinates for the longest line segment for two points among those detected for pattern coding.
FIG. 8 is a diagram showing a table of normalization coordinates-pattern codes for pattern coding.
FIG. 9 is a flowchart diagram showing an example of a pattern coding processing.
FIG. 10 shows schematic drawings of an evaluation board for evaluating electrostatic capacitance allowance for not being detect by a touch panel at the time of code generation.
FIG. 11 shows diagrams of an example of an external shape of a code generation apparatus according to the first embodiment.
FIG. 12 is a diagram showing an example of a circuit of a code generation apparatus according to the first embodiment.
FIG. 13 shows diagrams of an example of a circuit board wiring pattern of a code generation apparatus according to the first embodiment.
FIG. 14 shows diagram of an example of an operation overview of an operation unit of a code generation apparatus according to the first embodiment.
FIG. 15 is a sectional view showing an example of an external form of a code generation apparatus according to the second embodiment.
FIG. 16 shows diagrams of an example of a circuit board wiring pattern of a code generation apparatus according to the second embodiment.
FIG. 17 is a diagram showing an example of a circuit of a code generation apparatus according to the third embodiment.
FIG. 18 shows diagrams of an example of a circuit board wiring pattern of a code generation apparatus of the third embodiment.
FIG. 19 shows a diagram of an example of a state in which components are assembled on a circuit board of a code generation apparatus according to the third embodiment.
FIG. 20 shows a diagram of an example of a structure of a setting unit and an operation unit of a code generation apparatus according to the third embodiment.
FIG. 21 shows views of an example of an external shape of a code generation apparatus according to the fourth embodiment.
FIG. 22 is a diagram showing an example of a circuit of a code generation apparatus according to a fourth embodiment.
FIG. 23 is a diagram showing an example of a state in which components are mounted on a circuit board of a code generation apparatus according to the fourth embodiment.
FIG. 24 is a diagram showing an example of a structure of an operation unit of a code generation apparatus according to the fourth embodiment.
FIG. 25 shows views of an example of an external shape of a code generation apparatus according to the fifth embodiment.
FIG. 26 is a diagram showing an example of a circuit of a code generation apparatus according to the fifth embodiment.
FIG. 27 shows diagrams of an example of a structure of a rotation switch of an operation unit of a code generation apparatus according to the fifth embodiment.
FIG. 28 shows views of an example of an external shape of a code generation apparatus according to the sixth embodiment.
FIG. 29 is a diagram showing an example of a circuit of a code generation apparatus according to the sixth embodiment.
FIG. 30 shows views of an example of an external shape of a core generation apparatus according to the seventh embodiment.
FIG. 31 is a diagram showing an example of a circuit of a code generation apparatus according to the seventh embodiment.
FIG. 32 shows diagrams of an example of a circuit board wiring pattern of the code generation apparatus according to the seventh embodiment.
FIG. 33 shows diagrams of an example of a conductive pattern of a code generation apparatus according to the seventh embodiment.
FIG. 34 is a diagram showing an external view of a modification example of a code generation apparatus according to the seventh embodiment.
FIG. 35 shows diagrams of a conductive pattern of a modification example of a code generation apparatus according to the seventh embodiment.
FIG. 36 shows diagrams of an example of an external shape of a code generation apparatus according to the eighth embodiment.
FIG. 37 is a diagram showing an example of a circuit of a code generation apparatus according to the eighth embodiment.
FIG. 38 is a diagram showing an example of a structure of a rotary switch of an operation unit of a code generation apparatus according to the eighth embodiment.
FIG. 39 shows diagrams of an example of circuit board wiring patterns of a code generation apparatus according to the eighth embodiment.
FIG. 40 shows diagrams of an example of an external shape of a code generation apparatus according to the ninth embodiment.
FIG. 41 is a diagram showing an example of a card for code setting of a code generating apparatus according to the ninth embodiment.
FIG. 42 is a diagram showing an example of a circuit of a code generation apparatus according to the ninth embodiment.
FIG. 43 is a sectional view showing an example of a structure of a setting unit of a code generating apparatus according to the ninth embodiment.
FIG. 44 shows sectional views of an example of a structure of a setting unit of a code generation apparatus according to the tenth embodiment.
FIG. 45 is a diagram showing an example of a structure of a bottom face of a code generation apparatus according to the tenth embodiment.
FIG. 46 shows schematic diagrams of an external shape of a code generation apparatus according to the eleventh embodiment.
FIG. 47 shows diagrams of an example of a code generation apparatus according to the eleventh embodiment.
FIG. 48(A) is a diagram showing a conductive pattern diagram printed on a conductive pattern printed sheet, and FIG. 48(B) is a diagram showing the shape when a conductive pattern printed sheet is attached to the bottom part of the housing.
FIG. 49 is a schematic diagram of a circuit of a code generation apparatus according to the eleventh embodiment.
FIG. 50(A) is a schematic representation of a first conductive pattern detected by a touch panel in a state with a code generation apparatus making contact with the touch panel with touching of human body contact electrodes, and FIG. 50(B) is a schematic representation of a second conductive pattern detected by a touch panel in a state with a push button of a code generation apparatus being pressed.
FIG. 51 shows schematic diagrams of an external shape of a code generation apparatus according to the twelfth embodiment.
FIG. 52 is a diagram showing an example of a structure of a code generation apparatus according to the twelfth embodiment.
FIG. 53 shows diagrams of an example of a structure of a code generation apparatus according to the twelfth embodiment.
FIG. 54 shows diagrams of overviews of electrode detection operations of a general electrostatic capacitance type touch panel.
FIG. 55 shows diagrams of a result of an examination of the number of electrodes required for a conductive pattern of a code generation apparatus with human body non-conduction detection.
FIG. 56 shows diagrams of a result of an evaluation of the additional capacitance of a conductive sheet for the electrostatic capacitance addition of a code generation apparatus with human body non-conduction detection.
FIG. 57 shows schematic diagrams of an external shape of a code generation apparatus according to the thirteenth embodiment.
FIG. 58 shows schematic diagrams of an external shape of a code generation apparatus according to the fourteenth embodiment.
FIG. 59 is a diagram showing a modification example of a code generation apparatus according to the fourteenth embodiment.
FIG. 60 shows diagrams of a result of an evaluation of the area required for an indicator electrode of a code generation apparatus with human body conduction detection.
FIG. 61 is a schematic diagram of a circuit of a code generation apparatus according to the fifteenth embodiment.
FIG. 62 shows diagrams of an example of a code generation apparatus according to the fifteenth embodiment.
FIG. 63 shows diagrams of an example of a code generation apparatus according to the fifteenth embodiment.
FIG. 64 shows schematic diagrams of a circuit of a code generation apparatus according to the sixteenth embodiment.
FIG. 65 shows schematic diagrams of an external shape of a code generation apparatus according to the sixteenth embodiment.
FIG. 66 shows diagrams of an example of a circuit board wiring pattern of a code generation apparatus according to the sixteenth embodiment.
FIG. 67 shows diagrams of an example of a conductive pattern printing and an example of a conductive pattern of a conductive pattern printed sheet of a code generation apparatus according to the sixteenth embodiment.
FIG. 68 is a schematic diagram showing a cross-sectional structure of a code generation apparatus according to the seventeenth embodiment.
FIG. 69 shows schematic diagrams of a cross-sectional structure of a modification example of a code generation apparatus according to the seventeenth embodiment.
FIG. 70 shows diagrams of a judgement method for (STEP 1) and (STEP 2) of electrode detection coordinates for pattern coding according to the eighteenth embodiment.
FIG. 71 shows diagrams of a coordinate transformation method for pattern coding.
FIG. 72 shows flowchart diagrams of an example of pattern coding processing according to the eighteenth embodiment.
FIG. 73 shows schematic diagrams of cross-sectional structures of a code generation apparatus according to the nineteenth embodiment.
FIG. 74 shows schematic diagrams of cross-sectional structures of a modification example of a code generation apparatus according to the nineteenth embodiment.
FIG. 75 shows schematic diagrams of an external shape of a code generation apparatus according to the twentieth embodiment.
FIG. 76 is a schematic diagram showing a configuration of a code generating apparatus according to the twentieth embodiment.
FIG. 77 is a schematic sectional view showing a structure of a code generation apparatus according to the twentieth embodiment.
FIG. 78 shows schematic diagrams of a form of a code generation apparatus of a modification example according to the twentieth embodiment.
FIG. 79 shows schematic diagrams of a form of a code generation apparatus of a modification example according to the twentieth embodiment.
FIG. 80 shows diagrams of a code specification of a multi-code stamp of which several stamp codes can be set with a slide switch.
FIG. 81 is a flowchart diagram showing an authentication system using an electronic stamp.
FIG. 82 is a diagram showing an example of interface screen correspondence.
FIG. 83 shows diagrams of QR codes in which a URL including a company ID and a subcode is registered.
FIG. 84 is a diagram showing an example of interface screen correspondence..
FIG. 85 shows an embodiment of a code generation apparatus equipped with a dot code reader.
FIG. 86 shows an embodiment of a code generation apparatus equipped with an optical code reader.
FIG. 87 shows an embodiment of a code generation apparatus equipped with an optical code reader.
FIG. 88 is an example showing synchronization by an optical code reader.
FIG. 89 is an example showing the time-series change of synchronization by an optical code reader.
FIG. 90 is for describing embodiments of information dots, wherein FIG. 90(A) shows a first example, FIG. 90(B) shows a second example, FIG. 90(C) shows a third example, FIG. 90(D) shows a fourth example, and FIG. 90(E) shows a fifth example, respectively.
FIG. 91 is for describing embodiments of a dot code assignment format, wherein FIG. 91(A) shows a first example, FIG. 91(B) shows a second example, and FIG. 91(C) shows a third example, respectively.
FIG. 92 is for describing embodiments of the first example ("GRID0") of the dot pattern, wherein FIG. 92(A) shows a first general-purpose example, FIG. 92(B) shows a second general-purpose example. FIG. 93(C) shows a third general-purpose example, respectively.
FIG. 93 is for describing modification examples of a dot pattern (GRID0), wherein FIG. 93(A) shows a fourth modification, and at the same time describes an embodiment of a second example of the dot pattern ("GRID1"), FIG. 93(B) shows a fifth modification example, and FIG. 93(C) shows a sixth modification example, respectively.
FIG. 94 is for describing a connection example or a concatenation example of a dot pattern (GRID0, 1), wherein FIG. 94(A) shows a connection example of a dot pattern (GRID0, 1), and FIG. 94(B) shows a first concatenation example of a dot pattern (GRID0), respectively.
FIG. 95 is for showing a second concatenation example of a dot pattern (GRID0).
FIG. 96 is for describing an embodiment of a second example ("GRID5") of a dot pattern, wherein FIG. 96(A) shows a first general-purpose example, FIG. 96(B) shows a second general-purpose example, and FIG. 96(C) shows a third general-purpose example, respectively.
FIG. 97 is for describing the arrangement of reference dots or virtual points of a dot pattern (GRID5).

### DESCRIPTIONS OF THE EMBODIMENTS

Hereinafter, the embodiments of the present invention will be described with reference to the figures.

### [Overview of the information processing system]

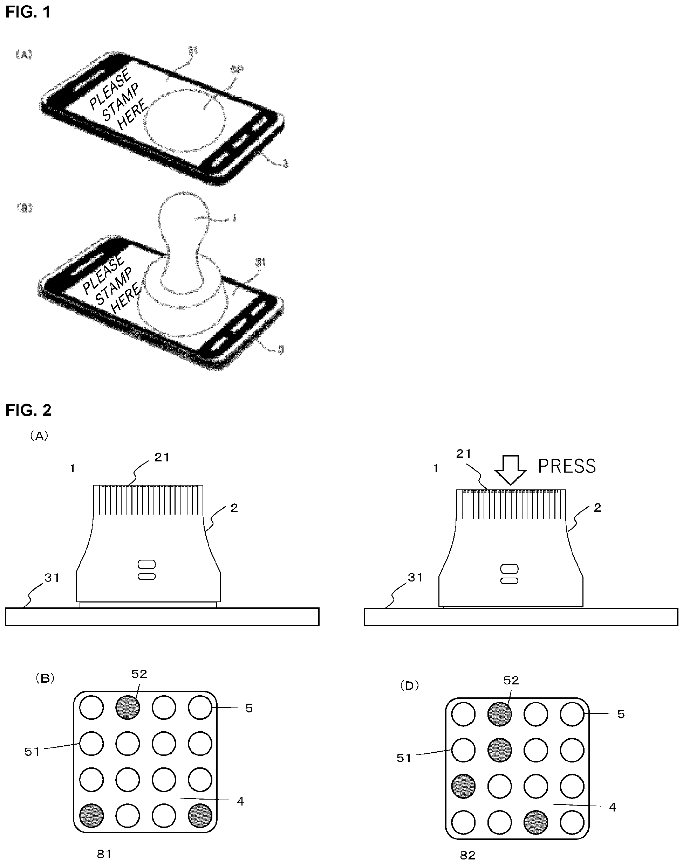

FIG. 1 is a diagram showing an example of an external configuration of an information processing system according to an embodiment of the present invention.

The information processing system shown in FIG. 1 includes a code generation apparatus 1 that generates codes, a code recognition apparatus 3 that recognizes the codes, and a server 4 that executes predetermined processings corresponding to the codes.

The code recognition apparatus 3 and the server 4 are connected via a predetermined network N such as the Internet.

As shown in FIG. 1, a code recognition apparatus 3 is configured with an information processing apparatus such as a smartphone or a tablet having a touch panel 31. The touch panel 31 includes a display unit and a capacitance type position input sensor stacked on the display surface of the display unit. On the touch panel 31, an area SP (hereinafter referred to as "code detection area SP") for detecting a group of electrodes indicating a pattern code output by the code generation apparatus 1 is displayed.

The code recognition apparatus 3 includes a detection unit and a recognition unit as functional blocks not shown.

Note that although a functional block may be configured with hardware alone, in this embodiment, it is configured with software and hardware. That is, the detection unit and the recognition unit exhibit the following functions by the cooperation of software and hardware.

When one or more electrodes 5 of a code generation apparatus 1 connected to the human body with a low impedance make contact with or comes into close proximity to the code detection region SP of the touch panel 31, the detection unit detects conductive patterns which are arrangement information of the one or more electrodes 5 based on the detection results of the position input sensor.

The recognition unit recognizes pattern codes generated by the code generation unit of the code generation apparatus 1 based on conductive patterns of one or more detected electrodes.

This pattern code is transmitted to the server as necessary.

The server executes various processings based on the pattern code.

### [Overview of the code generation apparatus]

FIG. 2 is a schematic diagram describing an example of a configuration of a code generation apparatus 1 capable of switching codes.

Specifically, FIG. 2(A) is a schematic diagram of a side view of a state where the code generation apparatus 1 is making contact with a touch panel 31. FIG. 2(B) is a schematic diagram showing a state of electrodes 5 on the bottom surface 4 of the code generation apparatus 1 in a state where the code generation apparatus 1 is making contact with the touch panel 31. FIG. 2(C) is a schematic side view showing a state where the code generation apparatus 1 is pressed on the panel surface of the touch panel 31 by the human hand on the touch panel 31. FIG. 2(D) is a schematic diagram showing a state of electrodes 5 on the bottom surface 4 of the code generation apparatus 1 in a state where the code generation apparatus 1 is pressed against the panel surface of the touch panel 31 by the human hand on the touch panel 31.

Note that the electrodes 51 shown in FIGS. 2(B) and 2(D) are in a state not detected by the touch panel 31, and the electrodes 52 shown with diagonal lines are in a state detected by the touch panel 31.

As shown in FIGS. 2(A) and 2(B), for example, in a state in which the code generation apparatus 1 is in contact with the touch panel 31 while a human hand touches the human body contact conductive material 21 formed of a conductive material provided at least on a part of the housing 2 (STEP 1), a pattern code is generated by having the touch panel 31 detect, for example, the plurality of electrodes 5 formed on the bottom surface 4 made of a non-conductive base material corresponding to a first conductive pattern 81 that is an ID pattern code among those assigned to each code generation apparatus 1. In the case of FIG. 2(B), the three electrodes 52 at specific positions among the sixteen electrodes 5 arranged at equal intervals in a 4 × 4 alignment are detected by the touch panel 31 as the first conductive pattern by a method described later.

The number and arrangement of the electrodes 5 arranged on the bottom surface of the code generation apparatus 1, and the number and arrangement of the electrodes 52 to be detected by the touch panel 31 as a conductive pattern is not limited to those described, and any other number and arrangement of electrodes can be used as long as the code recognition apparatus 3 can identify them as pattern codes. However, when the code recognition apparatus 3 is a smartphone, it is preferable that the number of the electrodes 52 to be detected at a time is 5 or less at the maximum. This is to accommodate smartphones that execute control to perform error processing when the code recognition apparatus 3 is a smartphone and the number of coordinates detected simultaneously on the touch panel 31 is set to a maximum of five locations, and if the number of detected coordinates exceeded five. Needless to say, this is not necessarily the case if the code recognition apparatus 3 has a function enabling the detecting of more than five electrodes.

By a performing a predetermined operation on the code generation apparatus 1, transition from the state of FIG 2(A) to the next state occurs.

As shown in FIGS. 2(C) and 2(D), in a state in which the code generation apparatus 1 is pressed against the touch panel 31 while a human hand touches the human body contact conductive material 21 formed of a conductive material provided at least on a part of the housing 2, which is a predetermined operation (STEP 2), for example, by having the electrodes 5 corresponding to the second conductive pattern 82, which is an active pattern code assigned to the processing performed by the code recognition apparatus 3, be detected by the touch panel 31, the plurality of electrodes 5 formed on the bottom surface 4 made of a non-conductive base material 5 generate a pattern code. In the case of FIG. 2(D), the five electrodes 52 at specific positions among the sixteen electrodes 5 arranged at equal intervals in a 4 × 4 alignment are detected by the touch panel 31 as the second conductive pattern 82 by a method described later.

The number and arrangement of the electrodes 52 to be detected by the touch panel 31 as the second conductive pattern 82 are also not particularly limited to those described, and any other number and arrangement of electrodes can be used as long as the code recognition apparatus 3 can identify them as pattern codes. However, when the code recognition apparatus 3 is a smartphone, it is preferable that the number of the electrodes 52 to be detected at a time is 5 or less at the maximum. Needless to say, this is not necessarily the case if the code recognition apparatus 3 is an apparatus having a function enabling the detection of more than five electrodes.

Furthermore, the arrangement and number of the electrodes 52 that are detected by the touch panel 31 for the first conductive pattern 81 and the second conductive pattern 82 can be set independently.

In addition, in a state in the middle of a transition period from the state of FIG. 2(A) to the state of FIG. 2(C), for example, even in a state where a human hand touches the human body contact conductive material 21 formed of a conductive material provided at least on a part of the housing 2, none of the electrodes 5 formed on the bottom surface 4 are detected by the touch panel 31 (except for the reference electrodes 54 when there are reference electrodes 54 as described later) by performing a predetermined operation

### [Overview of a pattern code switching method]

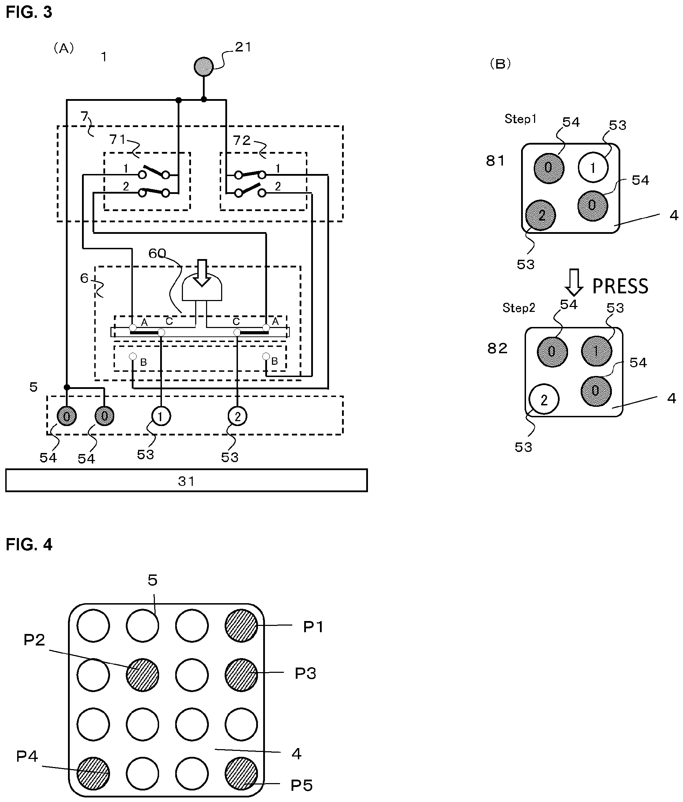

FIG. 3(A) is a schematic diagram of a basic circuit of a code generation apparatus 1 capable of switching between a first conductive pattern 81 and a second conductive pattern 82. FIG. 3(B) is a diagram for describing a pattern code switching state of FIG 3(A). This is an example of a basic configuration for describing a switching method, and the electrodes are in a 2 × 2 alignment.

The code generation apparatus 1 includes a push button switch 60 in an operation unit 6, a first code switch 71 and a second code switch 72 in a setting unit 7, electrodes 5, and a human body contact conductive material 21.

The electrodes 5 may include code electrodes 53 that enable the touch panel 31 to switch between detection and non-detection for the pattern code settings of the first conductive pattern 81 and the second conductive pattern 82, and reference electrodes 54 that are set to always be detectable by the touch panel 31 for all pattern code settings. Reference electrodes 54 are not particularly required when the code recognition apparatus 3 does not need them for code recognition, and it is possible to have all of the electrodes 5 be code electrodes 53.

The push button switch 60, that is the operation unit 6, is an SPDT (one input system, two output systems) type A/B changeover switch that enables switching by a single push button pressing operation of a combination of n poles corresponding to the code electrodes 53.

The C terminals, which are common terminals, are connected to the electrodes 5 with a conductive wire or a conductor, and the A terminals that are ON in the initial state are connected to the first code switch 71 that is in the setting unit 7 for the first conductive pattern 81, and B terminals which become ON when the apparatus is pressed are connected to the second code switch 72 which is in the setting unit for the second conductive pattern 82 by a conductive wire or a conductor.

The push button switch 60 of the operation unit 6 is not limited to a push button switch, and any kind of switching system will be sufficient as long as there is a function to switch from terminals for the setting of the first conductive pattern 81 to terminals for the setting of the second conductive pattern 82 when a predetermined operation is received.

Furthermore, the push button switch 60 of the operation unit 6 can receive push button pressing operations, which are predetermined operations, from the outside of the housing 2 of the code generation apparatus 1.

The first code switch 71 and the second code switch 72 in the setting unit 7 are SPST (one input system, one output system) type ON/OFF slide switches provided respectively for each code electrode 53. The first code switch 71 is connected at one terminal to conductive wires or conductors connected to the A terminals of the operation unit, and at the other terminal to conductive wires or conductors connected to the human body contact conductive material 21. The second code switch 72 is connected at one terminal to conductive wires or conductors connected to the B terminals of the operation unit, and at the other terminal to conductive wires or conductors connected to the human body contact conductive material 21.

The first code switch 71 and the second code switch 72 of the setting unit 7 are not limited to slide switches, and any kind of switching system will be sufficient as long as there is a function to select detected electrodes 5 and set pattern codes by having the other side of the terminals connected to electrodes 5 at positions detected by the touch panel 31 as a first conductive pattern 81 and a second conductive pattern corresponding to a pattern code be connected to the human contact conductor 21, and having the other side of the terminals connected to electrodes 5 at positions not detected be disconnected from the human contact material 21.

In addition, the setting unit 7 may be configured so that the first code switch 71 and the second code switch 72 can each be set from the outside of the housing 2 of the code generation apparatus 1, or either one or both of the code switches may be configured so that they cannot be set from the outside.

The human body contact conductive material 21 is provided so as to be contactable from the outside of the housing 2 of the code generation apparatus 1 and connects all of the conductive wires or conductors connected to the mentioned other terminals of the setting unit 7. Furthermore, in a case where the reference electrodes 54 that are set to always be detected by the touch panel 31 for all pattern code settings are provided, the conductive wires or conductors connected to the electrodes are directly connected to the human body contact conductive material 21.

Furthermore, it is sufficient that the code generation apparatus 1 includes a switching function of the operation unit 6 (push button switch 60) and a selecting function of the setting unit 7 (first and second code switches 71 and 72) between the electrodes 5 and the human body contact conductive material 21, and the order of connection may be the electrodes 5, the setting unit 7, the operation unit 6, and the human body contact conductive material 21.

Furthermore, it is possible to only provide the switching function of the operation unit 6, or to only provide the selection function of the setting unit 7.

FIG. 3(B) is a diagram showing a state of the electrodes 5 when a code generation switching operation is performed in the code generation apparatus 1 of FIG. 3(A).

In STEP 1, when the code generation apparatus 1 is brought into contact with the touch panel 31 while touching the human body contact conductive material 21 of the housing 2 with a human hand, for example, No. 2 of the electrodes 53 is connected to the human hand with low impedance via the human body contact conductive material 21, the switch 2 of the first code switch 71, and the A and C terminals of the push button switch 60, and is detected by the touch panel 31 by the change in capacitance between the touch panel 31 and the electrode 53. Furthermore, since No. 0 of the reference electrodes 54 is directly connected to the human hand via the human body contact conductive material 21 with low impedance, it is similarly detected by the touch panel 31. Providing the reference electrodes 54 makes it easy to specify the orientation of a conductive pattern and the pattern code.

Although the parasitic capacitance between the electrode 53 and the first code switch 71 changes the capacitance between the touch panel 31 and the electrode 53, since the switch 1 of the first code switch 71 is OFF for No. 1 of the electrode 53, it can be prevented from being detected by the touch panel 31 by suppressing the amount of change in capacitance between the touch panel 31 and the electrode 53 due to parasitic capacitance to the detection threshold or to less.

From these, a pattern code of the first conductive pattern 81 in which the electrodes Nos. 0 and 2 are detected by the touch panel 31 is generated.

In STEP 2, the code generation apparatus 1 is pressed against the touch panel 31 while the human body contact conductive material 21 of the housing 2 is being touched by a human hand, for example, which is a predetermined operation, and when the two connections between A terminals and C terminals of the push button switch 60 are switched to connections on the B terminal sides, since the switch 1 of the second code switch 72 is ON and the switch 2 is OFF, No. 1 of electrodes 53 is connected to the human body contact conductive material 21, and No. 2 of electrodes 53 is disconnected by the switch 2 of the second code switch 72. Also, the connection relationship of No. 0 of the reference electrodes 54 does not change from STEP 1.

For this reason, a pattern code of the second conductive pattern 82 in which the electrodes Nos. 0 and 1 are detected by the touch panel 31 is generated.

In addition, in order to prevent the temporary generation of a pattern code differing from the first and second conductive patterns 81 and 82 during the transition from STEP 1 to STEP 2, and to prevent having the code recognition apparatus 3 make a misrecognition, and to avoid having the code recognition apparatus 3 detect too many electrodes 53 simultaneously and violate the restriction on the maximum number of multi-touches that the touch panel 31 can simultaneously detect, it is desirable to adopt the so called non-shorting type switching method where a state which is not detected by the touch panel 31 is formed by making a state where neither the A terminals or the B terminals are connected to the C terminals and all of the electrodes 53 other than the reference electrodes 54 are disconnected from the human body contact conductive material 21 during the process of pressing the push button switch 60.

For these reasons, it is preferable that the various switches of the operation unit 6 that can switch the conductive patterns be of a non-shorting type switching method.

### [Overview of a pattern code decoding method]

By generating electrode conductive patterns, for example, by the two methods below, as for the first and second conductive patterns 81 and 82 generated by the code generation apparatus 1, the codes can be identified as pattern codes and information can be acquired by code recognition apparatus 3.

As a first pattern coding method, there is a method in which the first pattern code is determined from the detected position information of the electrodes 52 (hereinafter referred to as the ON electrodes 52) of the first conductive pattern 81 detected by the touch panel 31, and in which in addition, the second pattern code is determined from the position information of the arrangement and relative positions of the ON electrodes 52 of the second conductive pattern 82 which are determined based on the arrangement and relative positions of each electrode 5 obtained, with the first conductive pattern with the ON electrodes 52 as a reference pattern.

In this method, for example, since the order of the generation of the first conductive pattern 81 and the second conductive pattern 82 is determined by a predetermined operation of pressing, this method can be applied when the first conductive pattern 81 is generated prior to the second conductive pattern 82. In the case of this method, since there is no restriction on the conductive pattern with respect to the arrangement of the plurality of ON electrodes 52 to form a unique pattern code for the second electrode pattern 82, the number of second conductive patterns 82 that can be selected as compared with that of the first conductive pattern 81 increases significantly. Since the total number of pattern codes is the multiplication of the plurality of first conductive patterns 81 and second electrode patterns 82, the total number of pattern codes can be dramatically increased.

The second pattern coding method is a method of determining the first pattern code and the second pattern code respectively from the first conductive pattern 81 and the second conductive pattern 82 independently, from the position information of respectively detected ON electrodes 52 with the first conductive pattern 81 and the second conductive pattern 82 treated as independent patterns. This method is applied when the generation order of the first conductive pattern 81 and the second conductive pattern 82 can be arbitrarily selected in a configuration in which the first conductive pattern 81 and the conductive pattern 82 can be switched, depending on whether or not the human body contact conductive material 21 which is provided in a plurality is touched, as in, for example, the sixth and seventh embodiments described later.

Furthermore, needless to say, the second pattern coding method can also be applied to the case of the code generation apparatus 1 shown in FIG. 2 wherein the order is predetermined.

With reference to FIG. 4 to FIG. 9, a method of recognizing the positions of the electrodes 5 by the code recognition apparatus 3 and the processing of a program according to this position recognition method will be exemplified. In this embodiment, the code recognition apparatus 3 recognizes conductive patterns using all five electrodes 5 (conductors) detected in the code detection area SP of the touch panel 31 as information conductors, and the pattern code is defined and obtained with the five detection points.

### (Algorithm details)

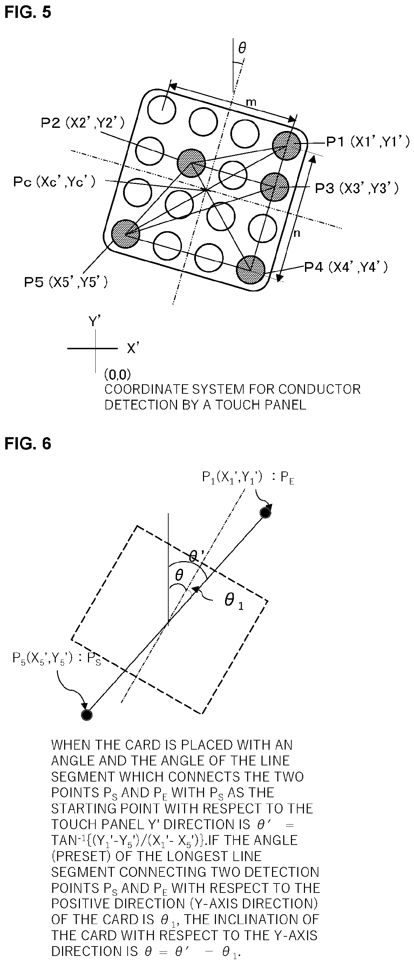

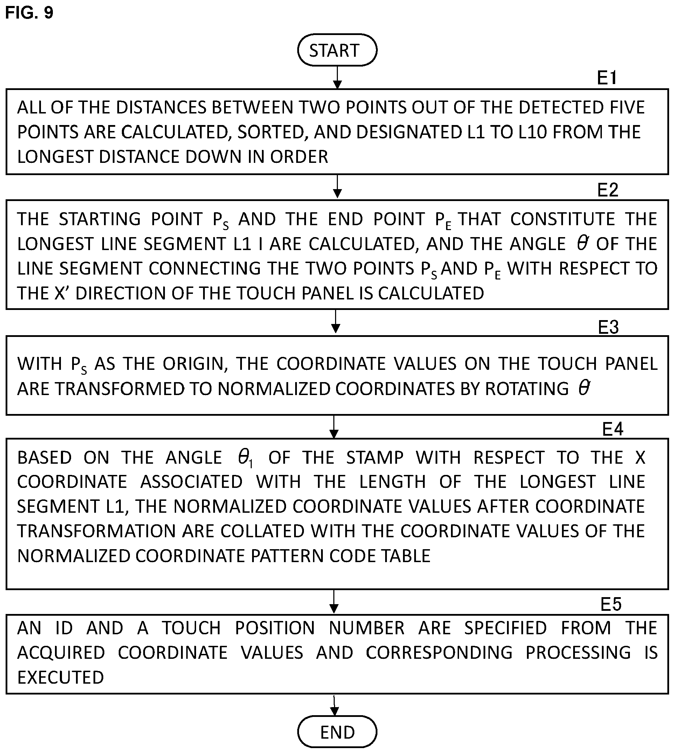

(Step E1) FIG. 9 illustrates details of the algorithm. In this embodiment also, the coordinate values of the detection points of the coordinate system on the touch panel in FIG. 5 are presented as P1 (X1', Y1'), P2 (X2', Y2'), P3 (X3', Y3'), P4 (X4', Y4'), P5 (X5', Y5'). The information device 200 calculates all of the distances between two points out of the five points detected in the ID area. From the longest distance between two points, L1 to L10 are assigned. The result of sorting is L1 > L2 > L3 > L4 > L5 > L6 > L7 > L8 > L9 > L10. Note that the XY coordinate system in FIG. 5 is a coordinate system which has a coordinate origin in the lower left of the touch area. Also, in FIG. 5, the coordinate values of each detection point when the code generation apparatus 1 is placed on the touch panel with *θ* rotation are represented by the X'Y' coordinate system of the touch panel. The longest line segment L1 connecting the two detection points consists of P1 and P5, and L1 forms an angle of *θ*1 with respect to the positive direction (Y-axis direction) of the code generation apparatus 1. θ1 is set in advance in the code recognition apparatus 3 as one piece of information corresponding to the longest line segment connecting two detection points, and is stored in, for example, a ROM.

(Step E2) In the code recognition with five detection points, first of all, the code recognition apparatus 3 finds the starting point PS and the end point PE (P5 and P1 in this modification example) constituting the longest line segment L1 connecting two detection points. The angle of the line segment connecting the two points PS and PE with PS as the starting point with respect to the Y' direction of the touch panel when the code generation apparatus 1 is placed at an angle is θ' = tan-1 {(Y1'-Y5')/(X1'-X5')}.

(Step E3) Using PS as the coordinate origin, the code recognition apparatus 3 calculates the relative coordinate values of the other four detection points normalized with L1, ΔP1 {ΔX1' = (X1'-X5')/L1, ΔY1' = (Y1'-Y5')/L1}, ΔP2 {ΔX2' = (X2'-X5')/L1, ΔY2' = (Y2'-Y5')/L1}, ΔP3 {ΔX3' = (X3'-X5')/L1, ΔY3' = (Y3'-Y5')/L1}, ΔP4 {ΔX4' = (X4'-X5')/L1, ΔY4' = (Y4'-Y5')/L1}.

Furthermore, as shown in FIG. 6, the code recognition apparatus 3 performs coordinate transformation by rotating the coordinate values on the touch panel by -θ'. The coordinates after the coordinate transformation are called standardized coordinates, and the coordinate values after the coordinate transformation are called standardized coordinate values. Here, since the starting point and the end point cannot be discriminated, the coordinate values of each detection point are obtained with P5 and P1 each as coordinate origins.

(Step E4) Then, the code recognition apparatus 3 calculates in advance the standardized coordinate values of the three points excluding the starting point PS and the end point PE constituting the longest line segment L1, and they are stored in the standardized coordinate-code number table in association with the angle θ1 of the longest line segment L1 with respect to the positive direction (Y-axis direction) of the code generation apparatus 1. The code recognition apparatus 3 collates the angle θ1 of the longest line segment L1 with respect to the positive direction (Y-axis direction) of the code generation apparatus 1 and the angle θ1 of the longest line segment stored in the standardized coordinate-code number table.

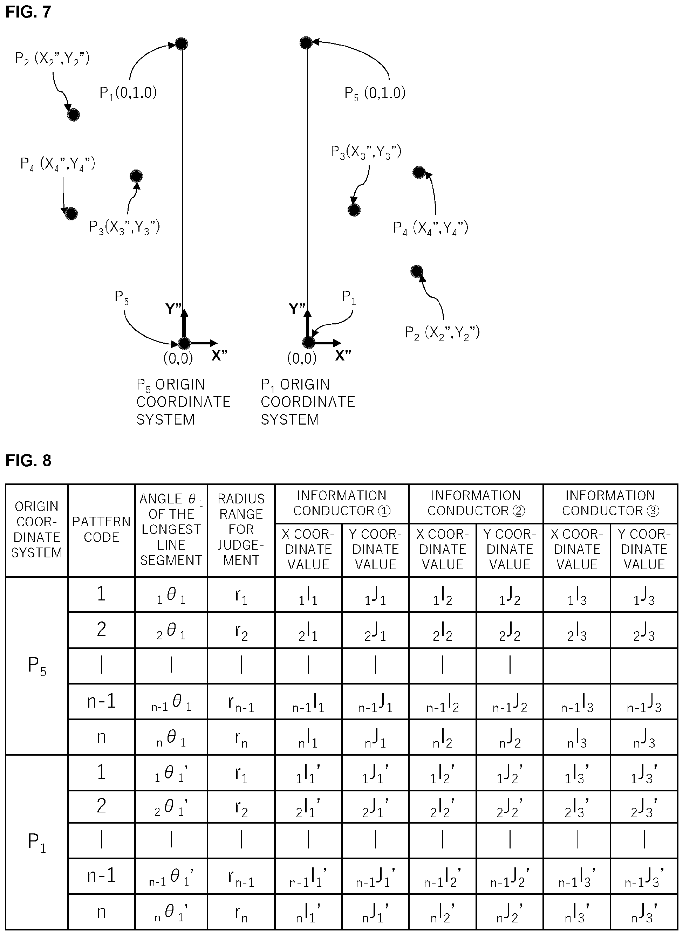

FIG. 8 is an example of a standardized coordinate-code number table. With respect to the arrangement coordinates of the five electrodes 5 in the SP region, three standardized coordinate values excluding the starting point PS and the end point PE are calculated and stored in the ROM for each angle θ1 of the longest line segment L1. In the figure, the field of "origin coordinate system" is determined by which of the end points P1 and P5 of the longest line segment L1 is the coordinate origin, and two coordinate systems are indicated. The "pattern code" field indicates pattern codes determined in each row of the table of FIG. 8. The field of "angle θ1 of the longest line segment" corresponds to the angle θ1 of the longest line segment L1 with respect to the positive direction (Y-axis direction) of the code generation apparatus 1. Since the code recognition apparatus 3 possesses a correspondence table between the length of the longest line segment L1 and the angle θ1 in the RAM or ROM, the angle θ1 can be obtained by calculating the length of the longest line segment L1. The "radius range for judgement" is the allowable error between the coordinate values specified in the table of FIG. 8 and the positional coordinates of the three points acquired by the code recognition apparatus 3 from the touch panel. Coordinates of "information conductor 1" to "information conductor 3" are standardized coordinate values with which the coordinates of the three points other than the end points P1 and P5 of the longest line segment L1 are collated. The code recognition apparatus 3 specifies the code number of the row as a pattern code, when the angle θ1 of the longest line segment L1 agree, and the coordinates of the three points other than the end points P1 and P5 of the longest line segment L1 match with the coordinates of "information conductor 1" to "information conductor 3" within the error range of the radius range for judgement.

The predetermined errors are largely influenced by the detection resolution of the touch panel, and the errors are absolute values of actual sizes. On the other hand, since each detection coordinate is standardized by the longest line segment L1 connecting two detection points, the error range is not constant and depends on the ID (that is, the distance of L1). Therefore, as shown in FIG. 8, an error range radius r is set in the standardized coordinate-code number table for enabling the determination of proper matching even with standardized coordinate values. The code recognizing apparatus 3 determines as matching if the coordinates fall within the radius r centering the coordinate values (I, J) in the table. Note that the code recognition apparatus 3 may set and determine the error range as a rectangle.

(Step E4) Then, the code recognition apparatus 3 specifies a pattern code (ID) and a touch position number from the obtained coordinate values, and executes a corresponding processing.

(Effect) As described above, the code recognition apparatus 3 can obtain a pattern code corresponding to a code number when coordinates are collated with those of the standardized coordinate-code number table of FIG. 8 and they match within a predetermined error range. Therefore, the code recognition apparatus 3 can execute various processings corresponding to the obtained pattern code.

### [Overview of the examination of restrictions of switchable electrodes]

From the description of the pattern code switching method, with a code generation apparatus 1 capable of switching codes, it can be found that it is important to reduce the capacitance between the electrodes 5 and the touch panel 31 including the parasitic capacitance of the electrodes 5 that are in contact with the touch panel 31, so that the amount of change in the capacitance of the touch panel 31 does not exceed the detection threshold although they are disconnected from the human body contact conductive material 21 by a push button switch of the operation unit 6 or a second code switch 72 of the setting unit 7.

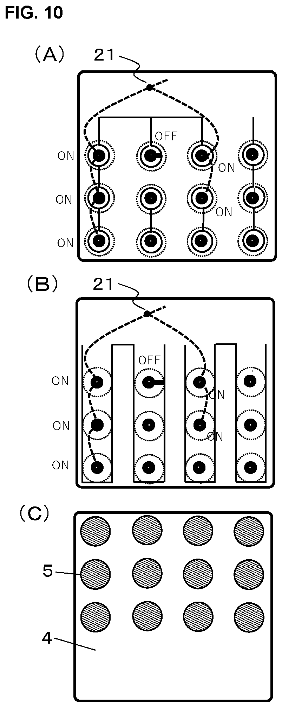

For this reason, the capacitance allowed for the electrodes not to be detected by the touch panel was evaluated. FIG. 10 is a schematic view of a circuit board for evaluation. FIG. 10(A) is a top view of the circuit board for evaluation assuming that the electrodes have more parasitic electrostatic capacitance on the human body side, FIG. 10(B) is a top view of the circuit board for evaluation assuming that the electrodes have more parasitic electrostatic capacitance on the on the touch panel side, and FIG. 10(C) is a bottom view of both circuit boards.

The circuit board is a PCB circuit board having a thickness of 1.5 mm, and electrodes having a diameter of 8 mm are on the bottom surface in an arrangement of 3 × 4 at intervals of 12 mm in the vertical direction and 14 mm in the horizontal direction. The electrodes are connected to land patterns with a diameter of 3 mm on the upper surface via through holes, and circuit board wiring on the upper surface for electrodes to have parasitic capacitance is formed so that it overlaps with the electrodes in (A), and it is routed with a 0.1 mm wide wiring so as not to overlap with the electrodes in (B).

In the evaluation method, the land pattern of the outer five electrodes are connected with additional wiring, and electrodes with touching of an end of the wiring by the human body was set to be in a detection state (ON) and electrodes with the connection of the land pattern of the single central electrode and wiring on the circuit board, and having parasitic capacitance was set to be in a non-detection state (OFF). Evaluation of the electrostatic capacitance of the central electrode was done for maintaining a state where the one central electrode remains undetected at all times while the five outer electrodes are detected normally by changing the wiring length of circuit board when the bottom side is brought into contact with the touch panel so that the surfaces overlap.

Determination of electrode detection/non-detection by the touch panel was performed by determining whether or not the touch panel correctly returned output of the coordinates of the electrodes upon having the circuit board for evaluation brought into contact by placing it vertically and horizontally 10 times each.
The notations in Table 1 are 5: normal detection for all times, 3: normal detection for 10 times or more, 2: normal detection for less than 10 times, 1: detection for less than 10 times with partial missing of the 5 detection electrodes, 0: no detection for all times, E: touch panel error output returned for 10 times or more.

As for the code recognition apparatus 3 and the usage environment, the four conditions applied are an iPhone (registered trademark) 6 held in the hand, an iPhone placed on a cork board which is most difficult for the detection of electrodes, an iPad (registered trademark) placed on a steel desk, and an iPad placed on a cork board.

**[Table 1]**

| Sample | | | | | Circuit board A | | | | | Circuit board B | | | | Uni t |
|---|---|---|---|---|---|---|---|---|---|---|---|---|---|---|
| Type | Method | Item | | Wiring length | 156 | 131 | 106 | 80 | 66 | 174 | 136 | 84 | 66 | mm |
| iPhon e 6 | Handhel d | Parasitic capacitanc | OFF electrode to panel | | 8.4 4 | 7.6 9 | 6.8 6 | 5.9 7 | 5.1 4 | 9.7 | 8.1 6 | 6.0 5 | 5.4 9 | pF |
| | | e | OFF electrode to ON electrode | | 5.3 5 | 4.4 9 | 3.5 6 | 2.5 9 | 2.3 2 | 3.7 | 2.9 5 | 1.9 1 | 1.7 6 | pF |
| | | Panel detection | No human contac t | OFF electrod e | 0 | 0 | 0 | 0 | 0 | 0 | 0 | 0 | 0 | |
| | | | Huma n contac t | OFF electrod e | E | E | E | 3 | 0 | E | E | 3 | 0 | |
| | | | Huma n contac t | ON electrod e | E | E | E | 3 | 5 | E | E | 3 | 5 | |
| | On a corkboar d | Parasitic capacitanc e | OFF electrode to panel | | 7.3 8 | 7.7 2 | 6.8 1 | 5.6 8 | 5.3 6 | 9.6 | 8.0 3 | 6.0 6 | 5.6 6 | pF |
| | | | OFF electrode to ON electrode | | 5.8 2 | 5.5 9 | 4.5 7 | 3.5 8 | 3.3 8 | 5.42 | 4.4 7 | 3.0 5 | 2.9 4 | pF |
| | | Panel detection | No human contac t | OFF electrod e | 0 | 0 | 0 | 0 | 0 | 0 | 0 | 0 | 0 | |
| | | | Huma n contac t | OFF electrod e | E | E | E | 3 | 0 | E | E | 3 | 0 | |
| | | | Huma n contac t | ON electrod e | E | E | E | 3 | 5 | E | E | 3 | 5 | |
| iPad-Pro | On a steel desk | Parasitic capacitanc e | OFF electrode to panel | | 9.8 2 | 8.6 7 | 7.7 5 | 6.7 6 | 6.1 5 | 10.6 5 | 9.0 7 | 6.9 1 | 6.5 1 | pF |
| | | | OFF electrode to ON electrode | | 5 | 4.4 8 | 3.6 2 | 2.7 | 2.7 4 | 3.75 | 3.2 9 | 2.0 6 | 1.9 5 | pF |
| | | Panel detection | No human contac t | OFF electrod e | 2 | 0 | 0 | 0 | 0 | 2 | 0 | 0 | 0 | |
| | | | Huma n contac t | OFF electrod e | 5 | 5 | 2 | 0 | 0 | 5 | 2 | 0 | 0 | |
| | | | Huma n contac t | ON electrod e | 5 | 5 | 5 | 5 | 5 | 5 | 5 | 5 | 5 | |
| | On a corkboar d | Parasitic capacitanc e | OFF electrode to panel | | 9.3 9 | 8.8 3 | 7.5 9 | 6.6 5 | 5.9 5 | 10.3 7 | 8.8 9 | 6.8 | 6.4 6 | pF |
| | | | OFF electrode to ON electrode | | 6.5 6 | 5.6 8 | 4.6 8 | 3.7 2 | 3.4 1 | 5.62 | 4.3 2 | 3.3 3 | 3.0 2 | pF |
| | | Panel detection | No human contac t | OFF electrod e | 0 | 0 | 0 | 0 | 0 | 0 | 0 | 0 | 0 | |
| | | | Huma n contac t | OFF electrod e | 5 | 5 | 2 | 0 | 0 | 5 | 0 | 0 | 0 | |
| | | | Huma n contac t | ON electrod e | 5 | 5 | 5 | 5 | 5 | 5 | 5 | 5 | 5 | |

As a result of the evaluation, as shown in Table 1, it was found that if the capacitance between the electrode and the touch panel is 5 pF or less under either one of the conditions with an iPhone (registered trademark) 6 with both evaluation circuit boards A and B, the electrodes are not detected by the touch panel. Furthermore, it was found that even when there are detected electrodes are densely arranged, such as the five detected electrodes, the coordinates are correctly detected by the touch panel. By setting the specification based on the evaluation result, a code generation apparatus capable of switching codes can be created.

### [First Embodiment]

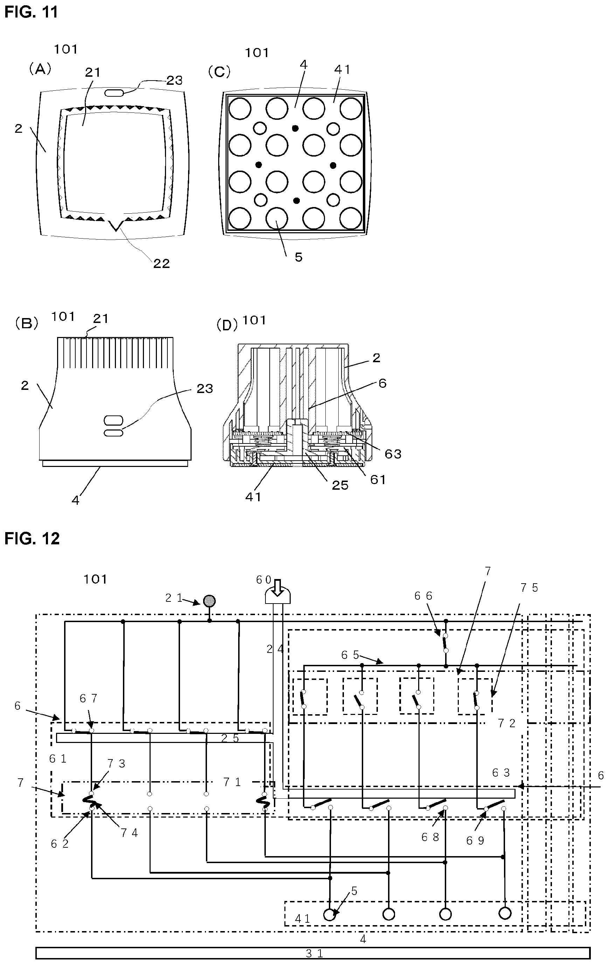

FIG. 11 shows schematic diagrams of an external form of the code generation apparatus 101 according to the first embodiment. FIG. 11(A) is a top view, FIG. 11(B) is a side view, and FIG. 11(C) is a bottom view. FIG. 11(D) is a sectional view with scission in the vertical direction. As shown in FIG. 11, the code generation apparatus 101 has a shape similar to that of a square stamp, and since the entire housing 2 is a push button of a push button switch of the operation unit 6, by making contact with the touch panel 31 with the housing 2 held in the hand and then pressing down, two types of pattern codes consisting of the first conductive pattern 81 and the second conductive pattern 82 can be generated sequentially. The upper surface of the housing 2 is formed of a conductor so as to form a human body contact conductive material 21 so that it can be touched naturally while holding the housing in the hand. On the side surface of the housing 2, a protrusion 22 is provided as an indicator of direction when bringing the apparatus into contact with the touch panel 31. Since the orientation of the apparatus upon making contact with the touch panel 31 can be determined by providing the protrusion 22, the orientation of the code generation apparatus 101 brought into contact with the touch panel 31 can be displayed, and conductive patterns can be determined on the premises that the orientation of the code generation apparatus 101 in contact with the touch panel 31 is always fixed, and thus the number of pattern codes can be increased.

Furthermore, a strap through hole 23 is provided on the side surface opposite to the protrusion 22. The bottom surface 4 has a first circuit board 41 formed of a non-conductor, and the electrodes 5 provided on the bottom surface of the first circuit board 41 are arranged in a 4 × 4 array on the same plane as the bottom surface 4. The number and arrangement of the electrodes 5 are not limited to those described, and can be increased or decreased as appropriate according to the number of required code patterns.

In addition, regarding the electrodes 5 provided on the bottom surface of the first circuit board 41, all of the electrodes 5 need only be on the same plane, and the bottom surface of the first circuit board 41 may be formed in a convex shape.

Still further, although the electrodes 5 are exposed on the bottom surface 4 of FIG. 11(C), it is for explanation, and the actual bottom surface of the first circuit board 41 is covered to avoid the exposure of the electrodes 5 with a colored resin sheet, a thin plate, a resist applied to the surface of the PCB circuit board, or coating printing with a thickness to such an extent that the capacitance of the electrode 5 is not significantly reduced, and it is preferable to improve the appearance design along with the protection of the electrodes 5.

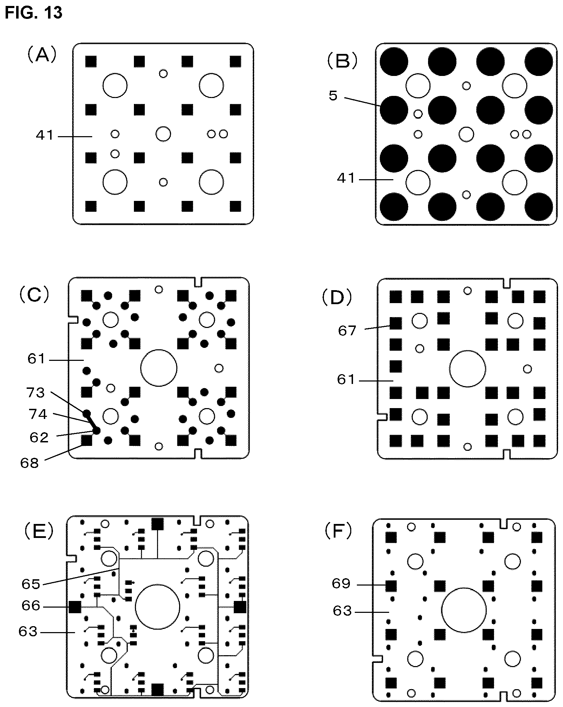

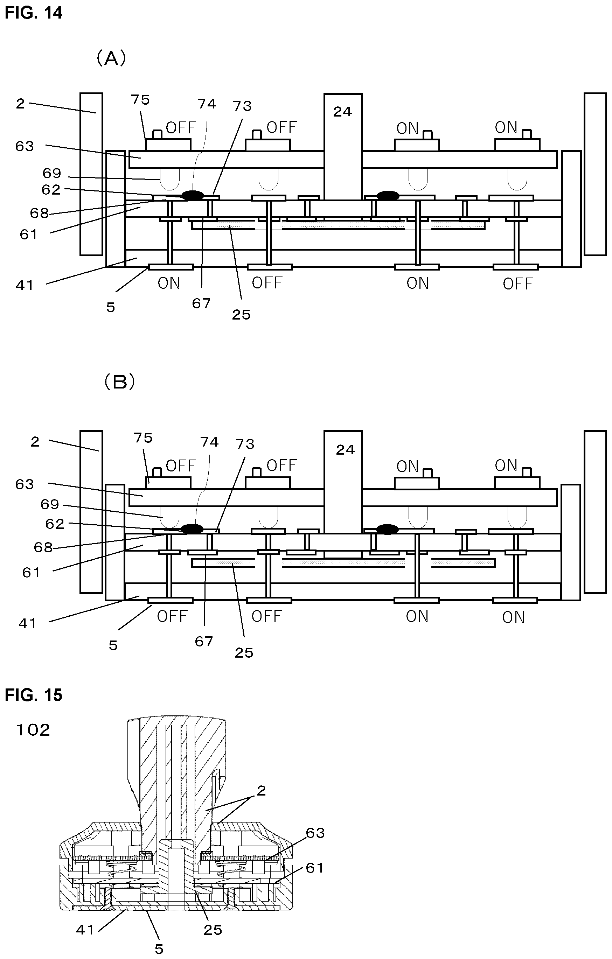

FIG. 12 is a schematic diagram of a circuit of the code generation apparatus 101. FIG. 13 shows a PCB circuit board for forming the electrodes 5, the operation unit 6, and the setting unit 7 of the code generation apparatus 101, wherein FIG. 13(A) shows a pattern of the upper surface of the first circuit board 41, FIG. 13(B) shows a pattern of the bottom surface of the first circuit board 41, FIG. 13(C) shows a pattern of the upper surface of the second circuit board, FIG. 13(D) shows a pattern of the bottom surface of the second circuit board, FIG. 13(E) shows a pattern of the upper surface of the third circuit board, and FIG. 13(F) shows a pattern of the bottom surface of the third circuit board. FIG. 14 is a sectional view with scission in the vertical direction in regards with the contact section of the push button switch, which is the operation unit 6 of the code generation apparatus 101, wherein FIG. 14(A) shows a state in which the apparatus is making contact with the touch panel (STEP 1), and FIG. 14(B) shows a state in which the push button is pressed (STEP 2).

As shown in FIG. 11 to FIG. 14, according to the specifications of the code generation apparatus 101, the first conductive pattern 81 of the setting unit 7 is selectively set at the time of apparatus assembly, and only the second conductive pattern 82 is set to be changeable by the second code switch 72. For example, it can be assumed that the first pattern code is used as the ID code of the code generation apparatus 101 itself.

The first conductive pattern 81 is formed by a method in which the second circuit board electrode terminals 62 connected to the electrodes 5 of the first substrate 41 provided on the upper surface of the second substrate 61 and only terminals corresponding to the electrodes of the first conductive pattern 81 among pattern setting terminals 73 detected by the touch panel are connected with solder joints 74. The solder joint 74 corresponds to the ON function of the first code switch 71 of the setting unit 7. The pattern setting terminal 73 is connected to a first contact 67 through a through hole, and the first contact 67 opposes a movable electrode 25. The movable electrode 25 is connected to the human body contact conductive material 21 in a state in which it is separable from the housing 2 by the conductor of the housing 2.

The second conductive pattern 82 is formed by turning ON the slide switches 75 that are the second code switches 72 of the setting unit 7 provided for each electrode 5 provided on the upper surface of the third circuit board 63. Since the slide switches 75 are provided on the third circuit board 63 inside the housing 2, the housing 2 and the third circuit board are detachably screwed together. The second conductive pattern 82 is changed by removing the screws, opening the housing 2, and changing the ON/OFF states of the slide switches 75. Contacts 66 that can connect and disconnect the common connection lines 65 on the third circuit board 63 with the human body contact conductive material 21 provided in the housing 2 in accordance with the assembly and removal of screws are provided.

The operation unit 6 performs a switch from the first pattern code to the second pattern code by having the third circuit board 63 detachably attached to the central shaft 24 inside the housing 2, and movable electrodes 25, conductors provided on the bottom surface side of the second circuit board 61 and passes through the center holes of the third circuit board 63 and the second circuit board 61 be movable between the second circuit boards 61 in accordance with the pressing operation to the causing 2. The movable electrodes 25 are connected to the human body contact conductive material 21 on the surface of the housing 2 through the central shaft 24.

In the state of STEP 1 with the apparatus in contact with the touch panel 31, as shown in FIG. 14(A), the movable electrodes 25 and the third circuit board 63 are in a upper position by the spring of a push button switch not shown, the first contacts 67 provided for each electrode 5 on the bottom surface of the second circuit board 61 connected to the pattern setting terminals 73 and the movable electrodes 25 are in a connected state, and the pairs of a second contact 68 on the second circuit board side of the upper surface of the second circuit board 61 and a second contact 69 on the third circuit board side of the bottom surface of the third circuit board 63 provided for each electrode 5 are in a disconnected state.
In the state of STEP 1, among the electrodes 5, those without the solder joint 74 are made so that the capacitance between the electrodes 5 on the bottom surface of the first circuit board 41 and the touch panel 31 including the parasitic capacitance of the conductors to the pattern setting terminals 73 connected from the electrodes 5 is in a range not exceeding the detection threshold of the touch panel 31.

As a result, only the electrodes 5 having the solder joint 74 between the second circuit board electrode terminal 62 and the pattern setting terminal 73 become conductive to the human body contact conductive material 21, and the first conductive pattern can be generated. Next, in the state of STEP 2 with the apparatus pressed on the touch panel 31, as shown in FIG. 14(B), the movable electrodes 25 and the third circuit board 63 are in a lower position by the pressing, the first contacts 67 on the bottom surface of the second circuit board 61 are provided. 67 and the movable electrodes 25 are in a disconnected state, and the pairs of second circuit board side second contacts 68 on the upper surface of the second circuit board 61 and a third circuit board side second contacts 69 on the bottom surface of the third circuit board 63 are in a connected state. In the state of STEP 2, among the electrodes 5, those with the slide switch 75 OFF are made so that the capacitance between the electrodes 5 on the bottom surface of the first circuit board 41 and the touch panel 31 including the parasitic capacitance of the conductors to the slide switches 75 connected from the electrodes 5 is in a range not exceeding the detection threshold of the touch panel 31.

As a result, only the electrodes 5 with the slide switch 75 of the third circuit board 63 ON are in a conduction state up to the human body contact conductive material 21, and the second conductive pattern can be generated.

The push button switch 60 has a drive mechanism using a spring. The drive mechanism itself is not particularly limited to those described, and a general push button switch mechanism can be used. However, as described in the "Overview of a pattern code switching method" section, a non-shorting type switching method is preferable, since it is necessary that at least different electrodes 5 are not simultaneously detected by the touch panel 31 upon switching of the first electrode pattern 81 and the second electrode pattern 82.

Furthermore, when the code generation apparatus 101 is brought into contact with the touch panel 31, in order to prevent a situation where the first conductive pattern 81 is not properly detected by the touch panel 31 due to a pressing force applied to the push button switch 60 before the bottom surface 4 makes evenly contact, it is preferable to have the initial torque for driving the push button be appropriately increased for the push button switch 60 and a clicking can be felt.

Furthermore, the driving mechanism may adopt either operation methods between a momentary operation method or an alternate operation method.

When the push button switch 60 is pressed, if 16 locations consisting of the second circuit board side second contacts 68 on the top surface of the second circuit board 61 and the third circuit board side second contacts 69 on the bottom surface of the third circuit board 63 are brought into contact simultaneously, the charge stored in the parasitic capacitance up to terminals of one side of switches 75 of the third circuit board 63 which are OFF is transmitted to electrodes 5 that ought not be detected at the same time, and the capacitance of the touch panel 31 may be changed widely over the entire region of the bottom surface 4 of the touch panel 31 in contact even though by a little to cause erroneous detection. For this reason, the stroke length of the push button switch is increased, the distance between the contacts 68 and 69 is increased, the distance between the 16 contacts is changed for sets of a plurality of contacts, and the switching of the contacts 68 and 69 at the time of pressing is implemented stepwise, and thus it is possible to prevent erroneous detection.

Next, the number and arrangement of electrodes 5 to be detected by the touch panel 31 of the first conductive patterns 81 and the second conductive patterns 81 set by the setting unit 7 can be made variable for respective conductive patterns within a range in which the code recognition apparatus 3 can recognize them as pattern codes. For example, a specification in which five electrodes are detected for the first conductive pattern 81 and only two for the second conductive pattern 81 are detected is possible. As a result, the number of pattern codes that can be selected can be greatly increased.

In addition, among the plurality of first and second conductive patterns 81 and 82, the number of electrodes 5 to be detected by the touch panel 31 can be fixed. With this specification, the number of pattern codes that can be selected is reduced compared to when they are variable. However, detection error determination can be made based on the number of detected electrodes 5 and thus the reliability of the code recognition system can be improved.

For example, the first and second conductive patterns 81 and 82 have pattern code specifications in which four and five electrodes 5 are detected for any pattern code, respectively, and in the code decryption by the code recognition apparatus 3, when the first and second conductive patterns 81 and 82 are detected and decoded, respectively, if the number of the detected electrodes 5 are other than 4 or 5, respectively, it is possible to process all as errors, and thus it is easy to extract misdetections of the code.

As a result, for the code generation apparatus 101 of the first embodiment, a single code generation apparatus 101 can generate a plurality of pattern codes by switching between the first conductive pattern 81 and the second conductive pattern 82, and thus the number of pattern codes that can be generated greatly increased.

Since setting can be changed for the first conductive pattern 81 in a soldering operation during assembly, and the second conductive pattern can be changed by switching the slide switch ON and OFF after the product is completed, there is no need to change the mold or circuit board for each pattern code, and manufacturing costs for changing the pattern code set to the product in the manufacturing process can be greatly reduced and the TAT (turnaround time) for making changes can be greatly shortened.

Furthermore, since settings for the second conductive pattern are changeable by an extremely simple method of switching the slide switch ON and OFF after the product is completed, by disclosing the code setting method to the customer, the customer could also change the code setting, thus convenience for the customer can be improved.

In the present embodiment, although settings for electrodes 5 to be detected by touch panel 31 for the first conductive pattern 81 was described as only the corresponding second circuit board electrode terminal 62 on the upper surface of the second circuit board 61 and the pattern setting terminal 73 being connected by the solder joint 74, a connection method using a jumper wiring in the place of the solder joint 74 may be used. Still further, in the place of solder joint 74, a method of selectively connecting in advance with the wiring pattern of the second circuit board 61 may be used. As a result, in the assembly of the apparatus, the soldering operation is not required, and by the reduction of assembly work processes and the reduction of erroneous setting during assembly, the manufacturing costs can be reduced.

In the present embodiment, the method of switching the first conductive pattern 81 set by the setting unit 7 to the second conductive pattern 82 by a single operation (for example, one stroke) by the operation unit 6 is described. However, the number of times of=switching is not limited to two stages.

For example, the electrodes 5 of the second conductive pattern 82 to be detected by the touch panel 31 are divided into two sets, and by increasing the distance between the second circuit board side second contacts 68 on the upper surface of the second circuit board 61 of the push button switch 60 of the operation unit 6 and the third circuit board side second contacts 69 on the bottom surface of the third circuit board 63, and dividing the contact distance into the two groups of narrow and wide gaps, and by making the pressing mechanism also into two stages, it is possible to switch between three stages of patterns, by detection of the first conductive pattern 81 before pressing, a pattern of a combination of electrodes 5 of the narrow contact distance side of the second conductive pattern 82 of the first pressing stage, and the second conductive pattern 82 of the second pressing stage with all of the electrodes 5 for detection.

Furthermore, for example, multi-stage switching is possible by the switching between the second circuit board side second contacts 68 on the upper surface of the second circuit board 61 and the third circuit board side second contacts 69 on the bottom surface of the third circuit board 63 by pressing of the push button switch 60 of the operation unit 6, by adapting a slide switch or a dial switch of multi-circuit multi-contact to each electrode 5, providing a plurality of the second circuit board side second contacts 68 on the common terminal side and the third circuit board side second contacts 69 (and the configuration of the setting unit 7 thereafter), connecting on the switching contact side of the slide switch or the dial switch, and switching the slide switch or the dial switch by a predetermined operation.

Still further, by providing an electrical control circuit for operating a relay in the operation unit 6, and with the relay of the push button switch 60 of the operation unit 6, contacts on the electrodes 5 side of the first and second conductive patterns 81 and 82, and contacts on the common terminal side of the human body contact conductive material 21 can be switched.

### [Second Embodiment]

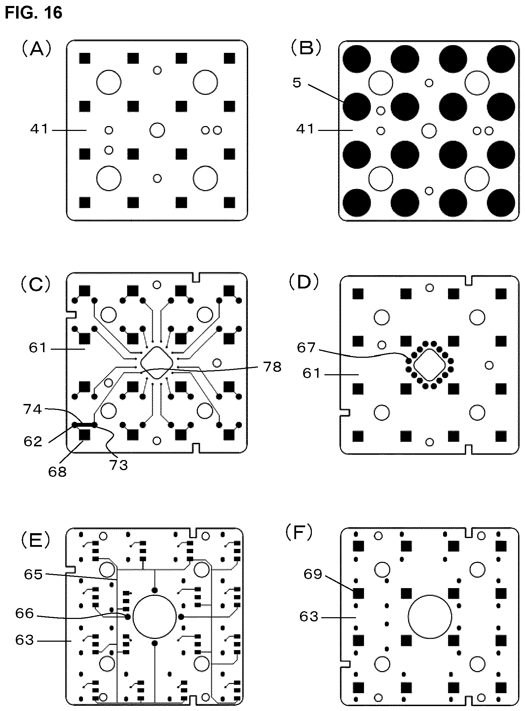

FIG. 15 is a sectional view of a code generation apparatus 102 with scission in the vertical direction. FIG. 16 shows a PCB circuit board for forming the electrodes 5, the operation unit 6, and the setting unit 7 of the code generation apparatus 102, wherein FIG. 16(A) shows a pattern of the upper surface of the first circuit board 41, FIG. 16(B) shows a pattern of the bottom surface of the first circuit board 41, FIG. 16(C) shows a pattern of the upper surface of the second circuit board, FIG. 16(D) shows a pattern of the bottom surface of the second circuit board, FIG. 16(E) shows a pattern of the upper surface of the third circuit board, and FIG. 16(F) shows a pattern of the bottom surface of the third circuit board.

As shown in FIGS. 15 and 16, the size of movable contacts 25 can be reduced and the electrode areas can be reduced thereby enabling the parasitic capacitance of the electrodes 5 to be reduced, and the shape of the housing 2 can be provided in a shape with a central column, and thus, parasitic capacitance between the human body contact conductive material 21 which is the conductor section of the housing 2 and the electrodes 5 can be reduced, and an external design close to the shape of a general square stamp can be adopted, by having an arrangement with the first contacts 67 collected at the center of the bottom surface of the second circuit board via through holes 78 provided in the center of the second circuit board with wiring extended from the pattern setting terminals 73 of the second circuit board corresponding to each electrode 5, and also by providing a contact 66 connected to the human body contact conductive material 21 from the common connection line 65 on the upper surface of the third circuit board 63 at the center of the third circuit board 63.

As described above, with the code generation apparatus 102 of the second embodiment, erroneous detection by touch panel 31 at the time of a code switching operation can be reduced by reducing the parasitic capacitance of the electrodes 5 by reducing the size of movable contacts 25 and reducing the electrode areas.

In addition, since the outer shape of the code generation apparatus 102 can be given flexibility, the design of the product can be improved.

Also, needless to say, the number of pattern codes can be greatly increased by switching between the first conductive pattern 81 and the second conductive pattern 82 as in the case of a code generation apparatus 101 of the first embodiment. Since the setting of a code pattern can be changed at the time of assembly or after completion of the product, the manufacturing costs for changing the pattern code can be reduced, TAT for making changes can be shortened, and convenience for the customer can be improved.

### [Third Embodiment]

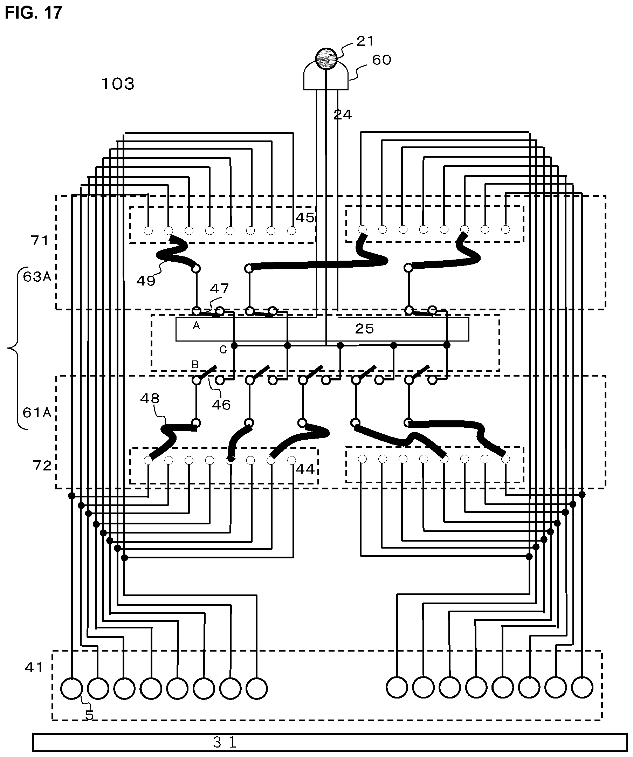

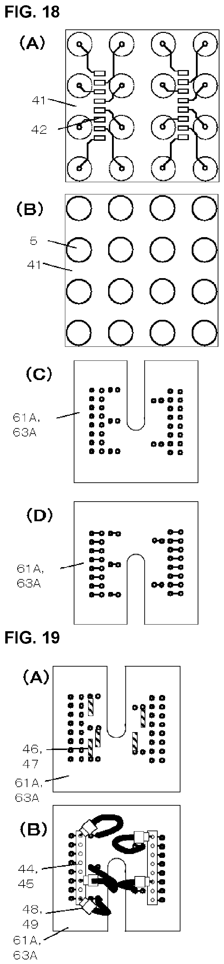

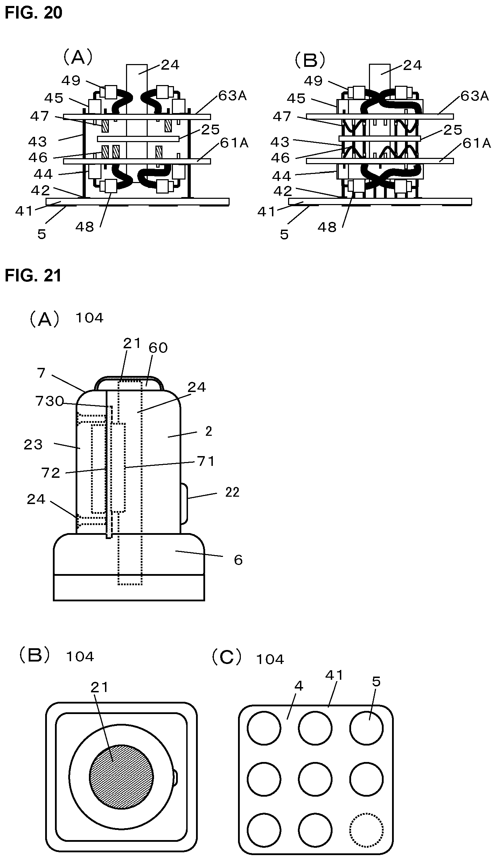

FIG. 17 is a schematic diagram of a circuit of a code generation apparatus 103 according to the third embodiment. FIG. 18 shows PCB circuit boards for forming electrodes 5, an operation unit 6, and a setting unit 7 for a code generation circuit 103. FIG. 18(A) shows the upper surface pattern of the first circuit board 41, FIG. 18(B) shows the bottom surface pattern of the first circuit board 41, FIG. 18(C) shows the upper surface pattern of the second and third circuit boards, and FIG. 18(D) shows the bottom surface pattern of the second and third circuit boards. For arranging the second circuit board and the third circuit board in the housing, by reversing the upper and bottom surfaces, a circuit board of the same specification can be used. FIG. 19 shows a state in which components are installed on the second circuit board and the third circuit board of the code generation apparatus 103. FIG. 19(A) shows the upper surface of the second circuit board (the bottom surface of the third circuit board), and FIG. 19(B) shows the bottom surface of the second circuit board (the upper surface of the third circuit board). FIG. 20 is a sectional view in which the contact component of the push button switch which is the operation unit 6 is cut in the vertical direction. FIG. 20(A) shows the front view and FIG. 20(B) shows a side view.

In addition, descriptions of parts other than the operation unit 6 and the setting unit 7 that are not significantly different from those of the code generation apparatus of the first embodiment are omitted.

As shown in FIGS. 17 to 20, the code generation apparatus 103 has a specification that allows the first conductive pattern 81 and the second conductive pattern 82 of the setting unit 7 to be set by a pin connector type selector.

Electrodes 5 are arranged on the bottom surface of the first circuit board 41 are arranged evenly in a 4 × 4 array. The number and arrangement of electrodes 5 are not limited, and it is possible to increase or decrease as appropriate according to the number of required code patterns.

Electrodes 5 on the bottom surface of the first circuit board 41 are connected to contacts 42 provided in two rows on both the left and right sides of the upper surface with conductive wires on the upper surface via through holes. Pin headers 43, which are bar-shaped metals extending from the second and third circuit boards 61A and 63A, are pressure welded and connected to the contacts 42. The pin headers 43 solder-connected to the second and third circuit boards 61A and 63A are connected to the pin connector female terminals 44 and 45 in respective circuit boards. As a result, each electrode 5 is connected to the corresponding pin connector female terminals 44 and 45 on the second and third circuit boards 61A and 63A.

The selection of the electrodes 5 detected by the touch panel 31 by the setting unit 7 is performed by switching of the pin connector.

The first conductive pattern 81 is formed by selectively connecting pin connector male terminals 45 provided at the leading end of the third circuit board 63A connected to a flat spring contacts 47 provided on the bottom surface of the third circuit board 63 to pin connector female terminals 45 connected from each electrode 5 of the first circuit board 41 provided on the upper surface of the third circuit board 63A. The connection between a pin connector male terminal 49 and a pin connector female terminal 45 corresponds to the ON function of the first code switch 71 of the setting unit 7.

The same number as the maximum number of electrodes 5 detected by the touch panel for the first conductive pattern 81 is provided from the flat spring contacts 47 to the pin connector male terminals 49, and all of the pin connector male terminals 49 have conductive wires long enough to connect with all pin connector female terminals 45. When the number of electrodes detected by the touch panel of the first conductive pattern 81 is variable, the remaining pin connector male terminals 49 are in an open state upon connecting the required pin connector male terminals 49 to pin connector female terminals 45 when the electrodes 5 are of a conductive pattern with a number less than the above mentioned maximum number. For this reason, the pin connector female terminals 45 in the open state may be provided for fixing the excess pin connector male terminals 49 on the upper surface of the third| circuit board 63A.

Similarly to the first conductive pattern 81, the second conductive pattern 82 is formed by selectively connecting pin connector male terminals 48 provided at the leading end of the conductive wire on the bottom surface of the second circuit board 61A connected to the flat spring contact 46 provided on the upper surface of the second circuit board 61A to the pin connector female terminals 44 connected from each electrode 5 of the first circuit board 41 provided on the upper surface of the second circuit board 61A. The connection between a pin connector male terminal 49 and a pin connector female terminal 45 corresponds to the ON function of the second code switch 72 of the setting unit 7.

As shown in FIGS. 18 to 20, the circuit board patterns of the second circuit board 61A and the third circuit board 63A are designed so that pin connector male terminals having a larger number of electrodes detected by the touch panel among the first and second conductive patterns 81 and 82, and the flat spring contacts can be arranged, and by arranging the upper and bottom surfaces of the second circuit board 61A and the third circuit board 63A in reverse when installing the housing, the same circuit board can be used.

Next, as in the first embodiment, the operation unit 6 switches from the first pattern code 81 to the second pattern code 82 by moving conductive movable electrodes 25 connected to a human body contact conductive material 21 outside of the housing between the flat spring contacts 46 and 47 of the second and third circuit boards 61A and 63A along the central shaft 24 inside the housing 2 according to the pressing operation of the housing 2.

By inserting a central shaft 24 with movable contacts 25 fixed thereto into the U-shaped grooves of the second and third circuit boards 61A and 63A, the movable electrodes 25 are placed between the flat spring contacts 46 and 47 of the second and third circuit boards 61A and 63A. the U-shaped groove is fixed by a groove fixing component (not shown) after the central shaft 24 is inserted, and the central shaft 24 and the movable electrodes 25 are placed so that the flat spring contacts 46 and 47 are freely movable on the centers of circuit board planes of the second and third circuit boards 61A and 63A. The movable electrodes 25 are connected to the human body contact conductive material 21 of the housing 2 (not shown) by a conductive wire or a conductor.

In STEP 1, a state in which a stamp is placed on the touch panel 31 before pressing, the movable electrodes 25 are in an upper position by the spring of a push button switch (not shown) and is connected to the flat spring contact 47 on the bottom surface of the third circuit board 63A, and only the electrodes 5 corresponding to the pin connector female terminals 45 inserted with the pin connector male terminals 49 connected from the spring contacts 47 become electrically connected to the human body contact conductive material 21, and the first conductive pattern 81 can be generated.

Next, in STEP 2, a state in which a stamp is pressed onto a touch panel 31, the movable electrodes 25 and the flat spring contact 46 on the upper surface of the second circuit board 61A are connected by pressing, and only the electrodes 5 corresponding to the pin connector female terminals 44 inserted with pin connector male terminals 48 connected from the flat spring contacts 46 become electrically connected to the human body contact conductive material 21 and the second conductive pattern 82 can be generated.

As a result, for the code generation apparatus 103 of the third embodiment, by making the second and third circuit boards 61A and 63A sharable, and adopting a method of switching where the pin connectors corresponding to the number of the electrodes 5 for detecting switch switching of the setting unit 7 are switched, the number of parts can be greatly reduced and the number of processes for the assembly can also be reduced, and thus, the manufacturing costs can be further reduced.

Needless to say that the number of pattern codes can be greatly increased by switching between the first conductive pattern 81 and the second conductive pattern 82 as in the case of the code generation apparatus 101 of the first embodiment. Since the code pattern setting can be changed after the product is completed, the manufacturing costs for changing the pattern code can be reduced, the TAT for making changes can be shortened, and convenience for the customer can be improved.

### [Fourth Embodiment]

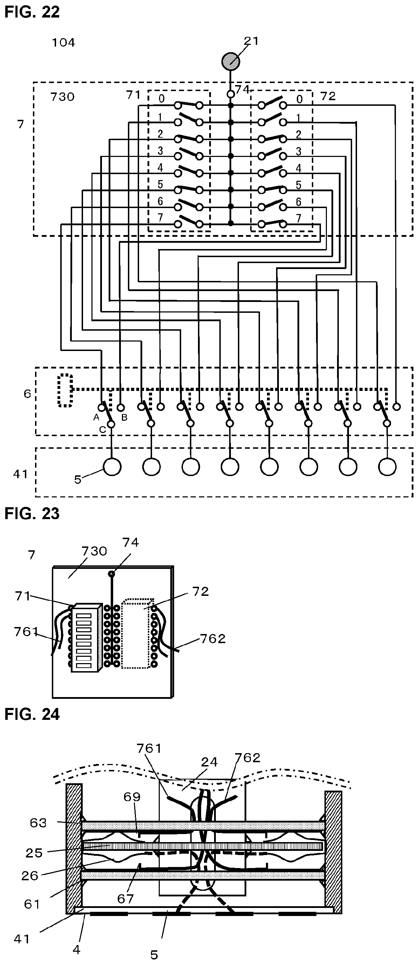

FIG. 21 is a schematic view of an external form of a code generation apparatus 104 according to the fourth embodiment. FIG. 21(A) shows a side view, FIG. 21(B) shows a top view, and FIG. 21(C) shows a bottom view. FIG. 22 is a schematic diagram of a circuit of the code generation circuit 104. FIG. 23 shows a PCB circuit board on which the setting unit 7 is formed. FIG. 24 is a sectional view with scission in the vertical direction showing the structure of the push button switch forming the operation unit 6. Also, descriptions of parts other than the operation unit 6 and the setting unit 7 that are not significantly different from those of the code generation apparatus of the first embodiment are omitted.

As shown in FIG. 21 to FIG. 24, the code generation apparatus 104 has a specification where the first conductive patterns 81 and the second conductive patterns 82 are set to be changeable with the first and the second code switches 71 and 72 of the setting unit 7 which are Dip switches, one form of slide switches.

The code generation apparatus 104 has a shape similar to that of a square stamp, and a push button of the push button switch 60 that is the operation unit 6 is provided as one with the human body contact conductive material 21 on the upper surface of the housing 2. Contact points of the push button switch 60 and the main body moiety of switches for driving mechanisms and the like are provided in the bottom part of the housing 2 in order to reduce parasitic capacitance of the electrodes 5. By placing the housing 2 on the touch panel 31 and pressing the push button while the human body contact conductive material 21 is touched by the hand, two types of pattern codes, the first conductive pattern 81 and the second conductive pattern 82 can be generated sequentially. On the side surface of the housing 2, a protrusion 22 is provided as an indicator of direction when placing a stamp on a touch panel. The bottom surface 4 has a first circuit board 41 made of a non-conductor, and eight electrodes 5 are provided on the bottom surface of the first circuit board 41 arranged a 3 × 3 array on the same plane as the bottom surface 4. (One location is vacant.) The number and arrangement of the electrodes 5 are not limited, and can be increased or decreased as appropriate according to the number of required code patterns.

Furthermore, the external form is not limited to a square, and any specification may be adopted as long as the stamp can be placed on a touch panel and the plurality of electrodes 5 can be evenly brought into contact with the surface of the touch panel. In FIG. 21, the push button 60 and the human body contact conductive material 21 are integrated, but each may be provided at different positions of the housing 2.

A lid component 23 that can be opened and closed by a screw 24 is provided on the side surface opposite to the protrusion 22 of the housing 2 and a fourth circuit board 730 is disposed so that when the lid component 23 is opened, the Dip switch 72 of the second code switch is exposed. As a result, it is possible to easily switch the second code switch 72 and change the second pattern code simply by opening the lid component 23 of the housing 2. Furthermore, instead of affixing the lid component 23 with the screw 24, a nail may be provided at the edge of the lid component 23 like the lid of a battery storage unit provided in what is referred to as a small electronic device, and a nail receiving hole may be provided on the housing 2 side to make it easy to open and close.

In addition, opposite to these methods, in order to prevent the second code switch 72 from being easily changed, it is possible to make the screw 24 have a screw head with an uncommon shape such as a hexagonal hole or a hexalobular hole.

The setting unit 7 adopts the method of switching settings by a Dip switch. FIG. 23 shows a fourth circuit board 730 for forming the setting unit 7 of the code generation circuit 104, and the first code switch 71 is installed on one surface and the second code switch 72 is installed on the other surface. The fourth circuit board 730 is disposed in the housing 2 with the other surface facing the lid component 23 side of the housing 2.

The terminal 1 side of each switch of the first code switch 71 is connected to each terminal on the third circuit board 63 corresponding to each electrode 5 by a conducting wire 761, and the terminal 1 side of each switch of the second code switch 72 is connected to each terminal on the second circuit board 61 corresponding to each electrode 5 by a conducting wire 762. The other terminal side of each switch of the first and second code switches 71 and 72 is connected to all of the common wiring on the fourth circuit board 730 and is connected to the human body contact conductive material 21 from the terminal 74 with a conductive wire. The wirings 761 and 762 may be connected to the second circuit board 61 and the third circuit board 63, respectively, using printed wiring on the fourth circuit board 730 after wiring to the bottom portion of the fourth circuit board 730.

Next, the operation unit 6 switches between the first conductive pattern 81 and the second conductive pattern 82 by the drive mechanism of the push button switch 60 provided in the lower part of the housing 2. As shown in FIG. 24, each electrode 5 provided on the first circuit board 41 is connected to each flat spring terminal 26 of a movable electrode 25 by a conducting wire. The flat spring terminals 26 are provided on both surfaces of the movable electrode 25. Each electrode is connected to a second circuit board first contact 67 and a third circuit board second contact 69 provided on the movable electrode 25 side of the second circuit board 61 and the third circuit board 63, respectively, fixed to the housing 2 at predetermined intervals on both sides of the movable electrode 25.

In STEP 1, a state in which a stamp is placed on the touch panel 31, the movable electrodes 25 are in an upper position by the spring of a push button switch (not shown), and the second contact 69 provided for each electrode 5 on the bottom surface of the third circuit board 63 and the movable electrodes 25 are connected, and the second circuit board side first contact 67 on the upper surface of the second circuit board 61 provided for each electrode 5 and the plate spring terminal 26 of the movable electrodes 25 are disconnected. As a result, only the electrodes 5 set to the ON side with the first code switch 71 will be in a conduction state to the human body contact conductive material 21, and a first conductive pattern can be generated.

Next, in STEP 2 in the state where the stamp is pressed onto the touch panel 31, by the pressing, the movable electrodes 25 are in a lower position, and the first contacts 67 on the upper surface of the second circuit board 61 and the flat spring terminals 26 of the movable electrodes 25 are in a disconnected state, and the third circuit board side second contacts 69 on the bottom surface of the third circuit board 63 and the flat spring terminals 26 of the movable electrodes 25 are in a connected state. As a result, only the electrodes 5 set to the ON side by the second code switch 72 will be in a conduction state to the human body contact conductive material 21, and a second conductive pattern can be generated.

As a result, for the code generation apparatus 104 of the fourth embodiment, by providing the lid component 23 that can be opened and closed by the screw 24 on the back side of the housing 2, and adopting a structure in which the Dip switch 72 of the second code switch is exposed, the second code switch 72 can easily be switched and the second pattern code can be changed, and convenience for the customer can be further improved.

Furthermore, by using an inexpensive Dip switch for the switch of the setting unit 7, it is possible to reduce the cost of parts and reduce the manufacturing costs.

Needless to say, as with the code generation apparatus 101 of the first embodiment, the number of pattern codes can be greatly increased by switching between the first and second conductive patterns 81 and 82, and since the code pattern setting can be changed after the product is completed, the manufacturing costs for changing the pattern code can be reduced, the TAT for making changes can be shortened, and convenience for the customer can be improved.

The setting of a lid 23 that can be opened and closed by a screw 24 on a part of the housing 2, the exposing of the setting unit 7, the use of a Dip switch for the setting unit 7, and the like as in the present embodiment can also be applied to other embodiments such as the first, second, and third embodiments, and the like.

### [Fifth Embodiment]

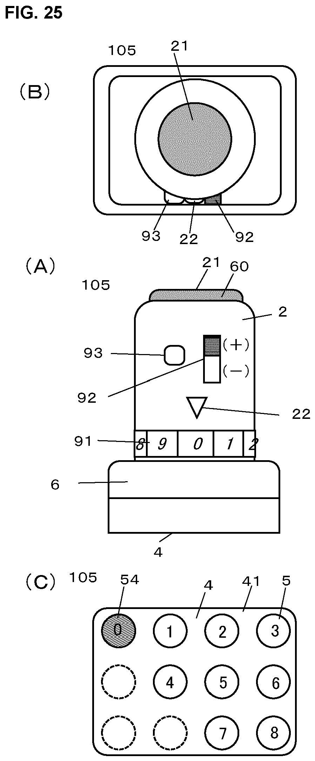

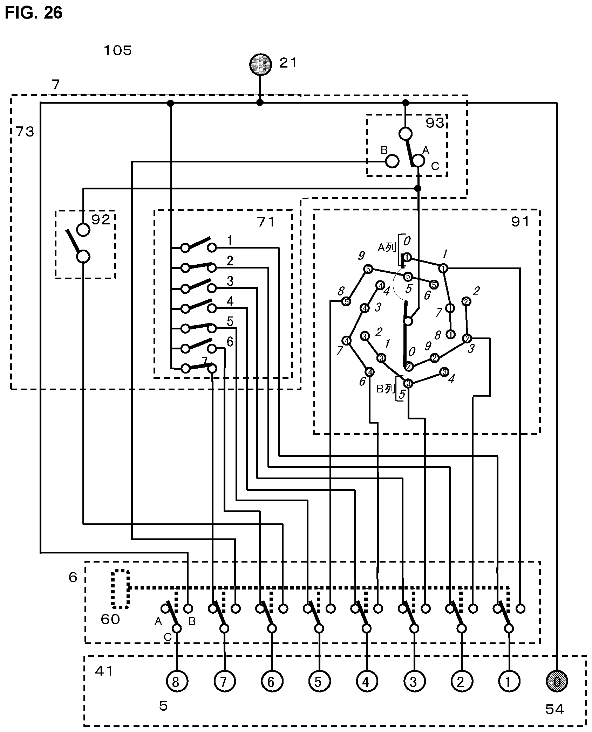

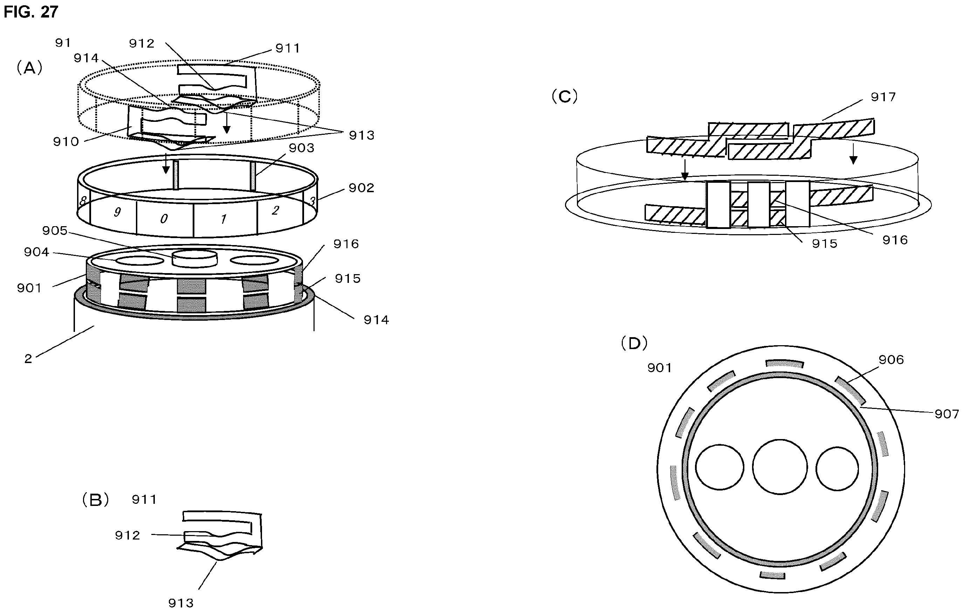

FIG. 25 shows schematic diagrams of an external form of a code generation apparatus 105 according to the fourth embodiment. FIG. 25(A) shows a side view, FIG. 25(B) shows a top view, and FIG. 25(C) shows a bottom view. FIG. 26 is schematic diagram of a circuit of a code generation circuit 105. Table 2 is a list of functions assigned to each electrode of the first code pattern and the second code pattern. FIG. 27 shows schematic diagrams of a structure of a rotary switch for setting a numerical code. FIG. 27(A) shows a schematic exploded view, FIG. 27(B) shows a perspective view of a flat spring contact, and FIG. 27(C) shows a structural view of a fixed contact. FIG. 27(D) shows a top view of the switch body. Table 3 is a correspondence table of between setting numbers of the rotary switch 91 and rotary switch terminals. In addition, descriptions of parts other than the operation unit 6 and the setting unit 7 that are not significantly different from those of the code generation apparatus of the first embodiment are omitted.

As shown in FIGS. 25 to 26, for the code generation apparatus 105, each electrode of the first code pattern and the second code pattern can be assigned a function in accordance with the method of use, corresponding switches can be provided, and part of the code setting can be performed with the operation unit 6, thereby facilitating the switching of code patterns.

For example, when the code generation apparatus 105 is used in a point rewarding service system of a retail chain store, if a function that enables easy change to a necessary pattern code is assigned, the first code patterns that are the first conductive patterns 81 generated in STEP 1 are assigned to the ID codes of each store, and a switch for switching functions is provided so that the operator in the store can easily switch the second code patterns that are the second conductive patterns 82 generated in STEP 2 to code patterns that each correspond to an operation used in a point rewarding service system. For example, a rotation switch 91 for changing numerical point values, a slide switch 92 for switching between point granting and point erasing, and a push button switch 93 for resetting functions are arranged on the side surface of the housing 2 so that operations can be done on the outside of the housing 2.

The code generation apparatus 105 has a shape similar to that of a square stamp, and a push button of a push button switch 60, which is the operation unit 6, is provided with the human body contact conductive material 21 as one on the upper surface of the housing 2. Contact points of the push button switch 60 and the main body moiety of switches for driving mechanisms and the like are provided in the bottom part of the housing 2 in order to reduce parasitic capacitance of the electrodes 5. By placing the housing 2 on the touch panel 31 and pressing the push button while the human body contact conductive material 21 is touched by the hand, two types of pattern codes, the first conductive pattern 81 and the second conductive pattern 82 can be generated sequentially.

A rotary switch 91 enabling the selection from 10 types of code patterns is provided on the side surface of the upper part of the housing 2 of the main body moiety of the switch of the push button switch 60 of the housing 2, and also provided on the side surface of the housing 2 is a protrusion 22 as an indicator of direction for when the stamp is placed on a touch panel, a slide switch 92 for switching between point granting and point erasing, and a push button switch 93 for resetting functions.

The bottom surface 4 has a first circuit board 41 made of a non-conductive material, and nine electrodes 5 provided on the bottom surface of the first circuit board 41 are arranged in a 3 × 4 array on the same plane as the bottom surface 4, among which electrode 5 No. 0 is a reference electrode 54, an electrode detected by the touch panel 31 regardless of whether STEP 1 or STEP 2 is in operation. (No electrode is placed in the remaining three places of the arrangement.) The number and arrangement of the electrodes 5 are not limited, and can be increased or decreased as appropriate depending on the number of code patterns required for ID codes or the like.

Furthermore, the external form is not limited to a square, and any specification may be adopted as long as the stamp can be placed on a touch panel and the plurality of electrodes 5 can be evenly brought into contact with the surface of the touch panel. In FIG. 19, the push button 60 and the human body contact conductive material 21 are integrated. However, each may be provided at different positions of the housing 2.

As shown in FIG. 26 and Table 2, with respect to each electrode 5, in the state of STEP 1, No. 1 to 7 electrodes 5 are assigned to ID code electrodes and connected to slide switches that are first code switches 71 provided inside of the housing 2, and by setting within one to a maximum of four out of the seven switches ON, the electrodes 5 corresponding to the ON settings are conductive to the human body contact conductive material 21, ID codes can be set, and the first conductive pattern 81 can be generated.

**[Table 2]**

| No. | Electrode | First pattern code STEP 1 (When placed on a panel) | Second pattern code STEP 2 (When pressed onto a panel) |
|---|---|---|---|
| 1 | Reference | ON | ON |
| 2 | ID code or numeral | The ID is set by the combination of having 1 to 4 electrodes from the 7 electrodes ON: maximum of 98 combinations | A number is selected by the combination of 1 or 2 electrodes from the 5 electrodes: 10 combinations (maximum of 15 combinations) |
| 3 | ID code or numeral | | |
| 4 | ID code or numeral | | |
| 5 | ID code or numeral | | |
| 6 | ID code or function | | ON: + (added) |
| | | | OFF: - (erased) |
| 7 | ID code or function reset | | ON: Function reset OFF: Function operated |
| 8 | Pressing judgement | OFF | ON |

The No. 8 electrode 5 is assigned to a push button switch pressing determination electrode 5 for determining whether the current conductive pattern is STEP 1 or STEP 2, is switched only by the push button switch 60, and is connected to the human body contact conductive material 21 when pressed. Is done. When the No. 8 electrode is detected by the touch panel 31, the state is STEP 2.

In the state of STEP 2, No. 1 to 5 electrodes 5 are assigned to numerical value selection electrodes and connected to a rotary switch 91. In regards with the rotation switch 91, two of the five electrodes 5 are selected by a mechanism described later, connected to the common terminals of the rotation switch 91, and connected to the human body contact conductive material 21 via one terminal A of the push button switchover switch 93, and thus 10 types of numerical codes are selected. The numerical codes are assigned to arbitrary numerical values by the code recognition apparatus 3. The No. 6 electrode 5 is assigned to a function setting electrode and is connected to one terminal of the slide switch 92. The other terminal of the slide switch 92 is connected to the human body contact conductive material 21 via one terminal A of the push button switchover switch 93 in the same manner as the common terminal of the rotary switch. For example, when the slide switch 92 is set to ON and the No. 6 electrode 5 is detected by the touch panel 31, a reward point granting function is assigned.

The No. 7 electrode 5 is assigned to the function reset electrode and is connected to the other terminal B of the push button switchover switch 93. When the push button switchover switch 93 is pushed, the No. 7 electrode 5 is connected to the human body contact conductive material 21 and is detected by the touch panel 31. As a result, not only are codes set for electrodes 5 of No. 1 to No. 7, but by pushing the push button switch 60, a second conductive pattern 82 can be generated.
by setting the codes of the electrodes 5 up to 7 and pressing the push button switch 60.

Furthermore, the electrodes 5 of No. 1 to 6 are disconnected from the human body contact conductive material by the push button switchover switch 93 and thus are in a state where they are not detected by the touch panel 31. This is to deal with control that performs error processing when the code recognition apparatus is a smartphone and the number of coordinates detectable simultaneously by a touch panel set to a maximum of five is exceeded.

As the drive mechanism of the push button switch 60, the same mechanism as that of the fourth embodiment shown in FIG. 24 can be used. Furthermore, the first code switch 71, the slide switch 92, and the push button switchover switch 93 are installed on a fourth circuit board 730 (not shown).

FIG. 27 shows an example of the structure of a rotary switch 91 for selecting two electrodes from the five electrodes used in the code generation apparatus 105. As shown in FIG. 27(A), the rotary switch body 901 provided in the housing 2 has a cylindrical shape whose outer circumference is smaller than that of the housing 2, and a brim shaped moiety is provided at where there is a step with respect to the housing 2 at the lower part of the cylinder, on which a common electrode terminal 914 is provided over the entire upper surface of the circumference. On the side surface of the rotary switch body 901, A-row terminals 916 and B-row terminals 915 are arranged side by side at equal intervals in two stages, in an upper and a lower row, on the circumference. The terminal is formed by fitting the step-shaped metal plate 917 shown in FIG. 27(C) to the slit 907 between the side surface of the cylindrical portion and the projecting wall portion 906. By connecting each metal plate 917 arranged on the side surface of the cylindrical portion to each corresponding electrode 5 in order by conductive wires, the composition has 4 successive terminals connected to one electrode 5, with two A-row terminals 916 and two B-row terminals 915 in a row. As a result, the length of the conductors to the A and B terminals of the rotary switch connected from each electrode 5 can be minimized.

On the outer periphery of the rotary switch body 901, a cylindrical numerical value display portion 902 whose outer periphery has the same diameter as that of the housing 2 is fitted maintaining slidability. The outer surface of the numerical value display unit 902 is divided into 10 at equal intervals, and graphics corresponding to numerical values or codes are displayed. Furthermore, two contact fixing portions 903 formed with two vertically extending protrusions provided at two positions 180 degrees rotationally symmetric with respect to the center of the cylinder on the inner periphery of the numerical value display portion 902. At the two contact fixing components 903, the A-row side contact flat springs 910 and the B-row side contact flat springs 911 are fitted and fixed between the protrusions of the contact fixing component 903, respectively. In addition, as shown in FIG. 27(B), the B-row side contact flat spring 911 is provided with a common electrode terminal side contact 913 having a flat spring structure curved downward at the bottom, and the two plate-like components extend along the inner peripheral side surface of the numerical value display portion 902, and the lower plate-like component serves as a B-row terminal side contact 912 having a flat spring structure in which the lower plate-like component curves inward. A-row side contact spring 910 (not shown) serves as an A-row terminal-side contact 914 having a flat spring structure in which the upper plate-like portion is curved inward.

From the arrangement of the 10 A-row terminals 916 and B-row terminals 915 on the cylindrical side surface and the A-row terminal side contacts 914 and B-row terminal side contacts 912 arranged in the numerical value display unit 902, the combination of the selected terminals of the 10 rotary switches is as shown in Table 3.

**[Table 3]**

| Setting N | Rotary switch term | |
|---|---|---|
| | Column | Column |
| 0 | 1 | 2 |
| 1 | 1 | 3 |
| 2 | 2 | 3 |
| 3 | 2 | 4 |
| 4 | 3 | 4 |
| 5 | 3 | 5 |
| 6 | 4 | 5 |
| 7 | 4 | 1 |
| 8 | 5 | 1 |
| 9 | 5 | 2 |

As a result, the numerical value display unit 902 comes into contact with the rotary switch body 901 elastically at an opposing position by a flat spring, and the sliding operation can be stabilized. In addition, since the portions between the terminals on the side surface of the rotary switch body 901 are expanded toward the outer periphery by the thickness of the projecting wall portion 906 with respect to the terminal surface, they serve as barriers for preventing sliding of the numerical value display portion 902, and thus it does not move by an unintentional touch, and the selection terminals of the rotary switch can be stabilized.

As a result, for the code generation apparatus 105 of the fifth embodiment, each electrode of the first code pattern and the second code pattern can be assigned a function in accordance with the actual method of use by a customer, and by including switches corresponding to them and making the switching of code patterns easy, along with the increase in the attractiveness of the product specifications to increase product value, convenience for the customer is also improved.

Needless to say, as with the code generation apparatus 101 of the first embodiment, the number of pattern codes can be greatly increased by switching between the first and second conductive patterns 81 and 82, and since the code pattern setting can be changed after the product is completed, the manufacturing costs for changing the pattern code can be reduced, the TAT for making changes can be shortened, and convenience for the customer can be improved.

Assigning functions or the like to the setting unit 7 and the operation unit 6 used in the present embodiment at the time of use by using various switches such as a rotation switch and a push button switch, may also be applied to the other embodiments such as the first, second, third, and fourth embodiments and the like.

### [Sixth Embodiment]

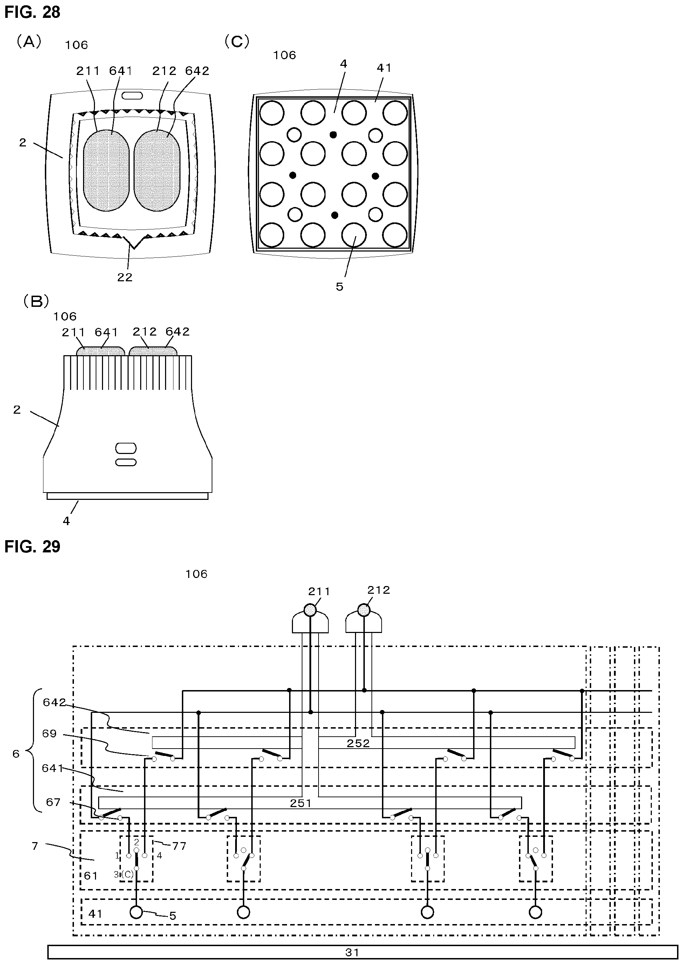

FIG. 28 shows schematic diagrams of the external form of the code generation apparatus 106 according to the sixth embodiment. FIG. 28(A) shows a side view, FIG. 28(B) shows a top view, and FIG. 28(C) shows a bottom view. FIG. 29 is schematic diagram of a circuit of the code generation circuit 106. In addition, descriptions of parts other than the operation unit 6 and the setting unit 7 that are not significantly different from those of the code generation apparatus of the first embodiment are omitted.

As shown in FIGS. 28 to 29, the code generation apparatus 106 has a specification where the first conductive pattern 81 and the second conductive pattern 82 are changeable with the slide switch 77 which is a SP3T type (one input pathway, three output pathways) code switch of the setting unit 7, and with the two sets of push button switches 641, 642 of the operation unit 6 and the human body contact conductive materials 211 and 212, the first, second, and third conductive patterns 81, 82, and 83 can be generated selectively.

The code generation apparatus 106 has a shape similar to that of a square stamp, and the push button of the push button switch 641 that is the operation unit 6 is provided as one with the human body contact conductive material 211 on the upper surface of the housing 2, and the push button of the push button switch 642 push buttons is provided as one with the human body contact conductive material 212.

Furthermore, the external form is not limited to a square, and any specification may be adopted as long as the stamp can be placed on a touch panel and the plurality of electrodes 5 can be evenly brought into contact with the surface of the touch panel. Although in FIG. 28 and FIG. 29, the push button switches 641 and 642, and the human body contact conductive materials 211 and 212 are integrated, each may be provided at different positions of the housing 2.

As shown in FIGS. 28 and 29, 16 electrodes 5 provided on the bottom surface of the first circuit board 41 on the bottom surface 4 of the housing 2 are arranged in a 4 × 4 array on the same plane as the bottom surface 4. The number and arrangement of the electrodes 5 are not limited, and can be increased or decreased as appropriate according to the number of required code patterns.

Each electrode 5 provided on the first circuit board 41 is connected by a conductive wire or a conductor to a C terminal of each slide switch 77 which is a code switch provided on the second circuit board 61. Each terminal 1 of each slide switch is connected to a corresponding first contact 67 by a conducting wire, and each terminal 4 is connected to a corresponding second contact 69 by a conducting wire. The second contacts 67 are opposed to the movable electrodes 251 of the push button switch 641 and the movable electrodes 251 are connected by a conductive wire or a conductor to the human body contact conductive material 212, and the second contacts 69 are opposed to the movable electrodes 252 of the push button switch 642 and the movable electrodes 252 are connected by a conductive wire or a conductor to the human body contact conductive material 212.

For example, when the push button switch 641 is pressed while the human body contact conductive material 211 is touched by the hand, the first contacts 67 and the movable electrodes 251 are connected, and only the electrodes 5 corresponding to each switch slid to terminal 1 side of the slide switch are connected to the human body contact conductive material 211 and detected by the touch panel 31 enabling the generation of the first conductive pattern 81. Also, when the push button switch 642 is pressed while the human body contact conductive material 212 is touched by the hand, the second contacts 69 and the movable electrodes 252 are connected, and only the electrodes 5 corresponding to each switch slid to the terminal 4 side are in contact with the human body contact conductive material 212 and detected by the touch panel 31 enabling the generation of the second conductive pattern 82.

Furthermore, for example, when the push button switches 641 and 642 are pressed together while both human body contact conductive materials 211 and 212 are touched by the hand, the first contacts 67 and the movable electrodes 251 are connected, electrodes 5 corresponding to each switch slid to the terminal 1 side of the slide switch are connected to the human body contact conductive material 211, the second contacts 69 and the movable electrodes 252 are further connected, electrodes 5 corresponding to each switch slid to the terminal 4 side of the slide switch are connected to the human body contact conductive material 212. Thus, the electrodes 5 are detected by the touch panel 31, and the third conductive pattern 83 can be generated.

When a smartphone is used as the code recognition apparatus 3, it is preferable that the maximum number of switches for sliding to the terminal 1 side and the terminal 4 side of the slide switch is 5 or less. This is to deal with code recognition apparatuses 3 when they are smartphones where the number of coordinates simultaneously detectable by the touch panel 31 is set to a maximum of five locations and error processing control is performed if this number is exceeded.

As described above, for the code generation apparatus 106 of the sixth embodiment, by enabling the selective generation of the first, second and third conductive patterns 81, 82, and 83, by setting the setting unit 7 so that three output pathways can be switched over with a single switch, and dividing push button switches 641 and 642 of the operation unit 6 and the human body contact conductive materials 211 and 212 into two sets, three types of pattern codes can be generated with a single code generation apparatus 106 and a single code generation apparatus can be used for three types of applications in accordance with the customer's usage. Thus, convenience for the customer can be further improved.

Also, needless to say that the number of pattern codes can be greatly increased by the switching of the first, second, and third conductive patterns 81, 82, and 83, as in the case of the code generation apparatus 101 of the first embodiment. Since the code pattern setting can be changed after the product is completed, the manufacturing costs for changing the pattern code can be reduced, the TAT for making changes can be shortened, and convenience for the customer can be improved.

The method of generating three types of pattern codes with a single code generation apparatus 106 as in the present embodiment in which the setting unit 7 is used for a setting so that the three output pathways can be switched with a single switch, and the switches of the operation unit 6 and the human body contact conductive material divided into two sets can be applied to the other embodiments such as the first, second, third, fourth, and fifth embodiments and the like.

### [Seventh Embodiment]

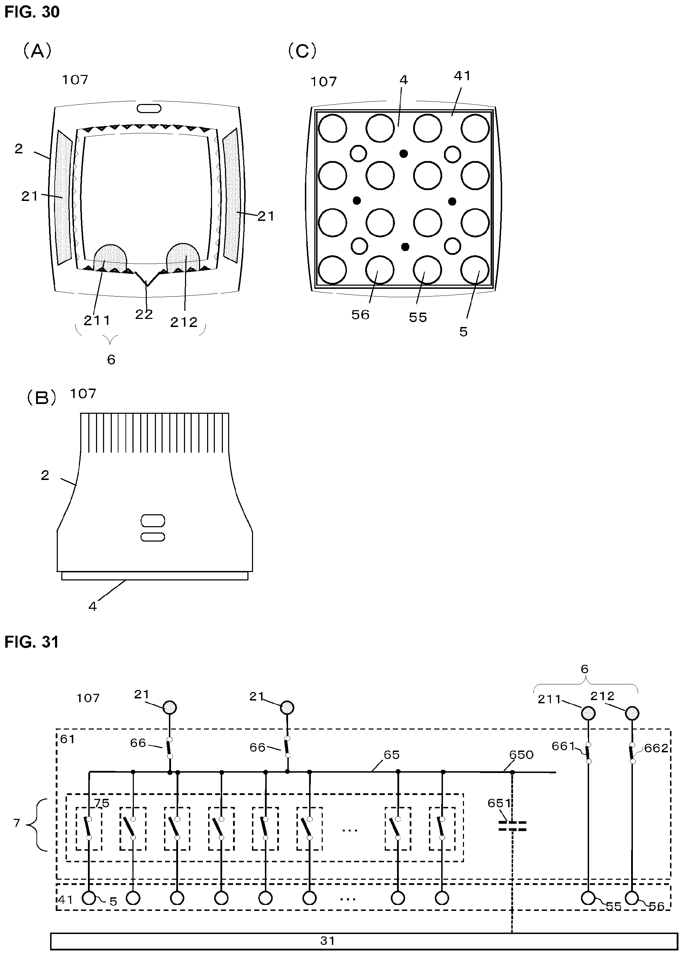

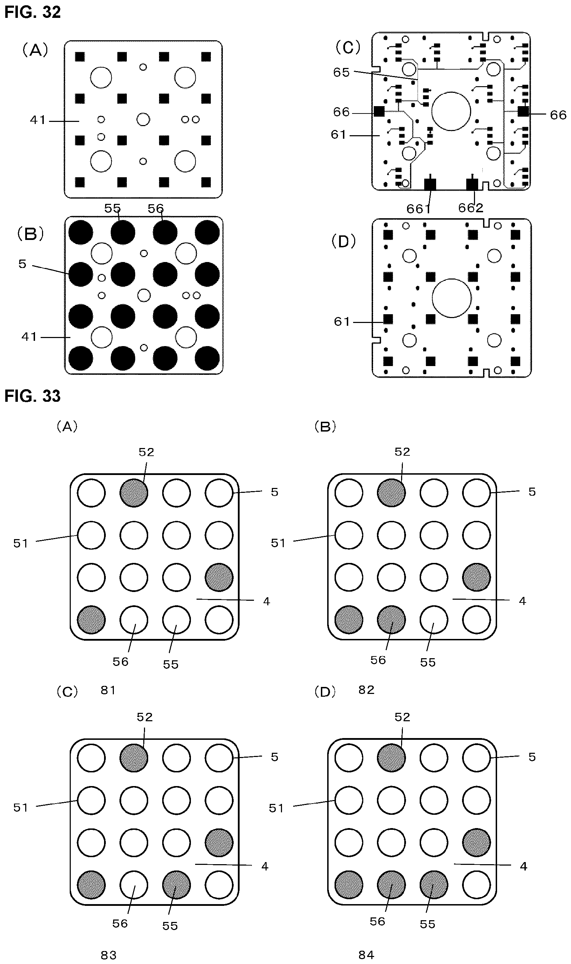

FIG. 30 shows schematic diagrams of the external form of a code generation apparatus 107 according to the seventh embodiment. FIG. 30(A) shows a side view, FIG. 30(B) shows a top view, and FIG. 30(C) shows a bottom view. FIG. 31 is a schematic diagram of a circuit of the code generation circuit 107. FIG. 32 shows a PCB circuit board for forming the electrodes 5 and the setting unit 7 of the code generation circuit 107. FIG. 32(A) shows a pattern of the upper surface of the first circuit board 41, FIG. 32(B) shows a pattern of the bottom surface of the first circuit board 41, and FIG. 32(C) shows a pattern of the upper surface of the second circuit board, and FIG. 32(D) shows a pattern of the bottom surface of the second circuit board.

In addition, descriptions of parts other than the setting unit 7 that are not significantly different from those of the code generation apparatus of the first embodiment are omitted.

As shown in FIG. 30 to FIG. 32, according to the specifications, the code generation apparatus 107, the first conductive pattern 81, the second conductive pattern 82, the third conductive pattern 83, and the fourth conductive pattern 84 are changeable with slide switches 75 which are SPST type (one input pathway, one output pathway) code switches of the setting unit 7, and for example, by selecting from three sets of human body contact conductive materials 21, 211, and 212 when a stamp is placed on a touch panel 31 either by touching or not touching by the hand, the first, second, third, and fourth conductive patterns 81, 82, 83, and 84 can be selectively generated.

As shown in FIG. 30, the code generation apparatus 107 has a shape similar to that of a square stamp, and where the protrusion 22 of the housing 2 is located is the front side, and human body contact conductive materials 21 are provided on both side surfaces sandwiching the front at positions where they can be touched with no effort, for example, when a person holds the housing 2 with the thumb and ring finger of the hand, and also human body contact conductive materials 211 and 212 are provided on the front side of the upper surface of the housing 2 sandwiching the protrusion 22 which are positions where touching or not touching with the index finger and middle finger can easily be controlled at will when the housing 2 is held in the state as mentioned above. Furthermore, the external form is not limited to a square shape, and any specification may be adopted as long as the stamp can be placed on a touch panel and the plurality of electrodes 5 can be evenly brought into contact with the surface of the touch panel. In FIG. 24, as for arrangement of the human body contact conductive material, human body contact conductive materials 21 are provided at two locations of the side surface. However, the locations may be anywhere as long as they can be touched without effort when the housing 2 is held by the hand, and it may be only one place. Also, the human body contact conductive materials 211 and 212 need not be on the front side of the upper surface, as long as touching and not touching of them can easily be controlled at will when the housing 2 is held by the hand.

Still further, the human body contact conductive material 21 may be arranged at a position where it is not touched simply by holding the stamp by the hand, and may be made so that it is touched only when a person has the will to do so.

As shown in FIGS. 30 and 32, electrodes 5 provided on the bottom surface of the first circuit board 41 on the bottom surface 4 of the housing 2 are arranged on the same plane as the surface 4 with sixteen in a 4 × 4 array. he number and arrangement of the electrodes 5 are not limited, and can be increased or decreased as appropriate according to the number of required code patterns.

The selection by the setting unit 7 of the electrodes 5 to be detected by the touch panel 31 is performed by slide switches 75 provided on the first circuit board 41. Each electrode 5 is connected to one terminal of each slide switch 75, which is a code switch provided on the second circuit board 61, by a conductive wire or a conductor, and the other terminals are all connected by a common connection line 65 on the second circuit board 61, and are connected to the human body contact conductive material 21 of the housing 2 through contacts 66 so as to be separable.

Next, switching by the operation unit 6 is performed by an operation of selectively touching the human body contact conductive materials 211 and 212 with a human hand. When the code generation apparatus 107 is placed on the touch panel 31 while touching the human body contact conductive material 21, for example, with the hand, only the electrodes 5 corresponding to each switch that is slid to the terminal 1 side of the slide switch 75 and turned ON are connected with human body contact conductive material 21 and detected by the touch panel 31, and a first conductive pattern 81 can be generated.

Furthermore, when the human body contact conductive material 211 is touched by the hand from that state, the corresponding electrodes 55 are connected to the human body contact conductive material 211 and are additionally detected by the touch panel 31, and the second conductive pattern 82 can be generated. Furthermore, when the human body contact conductive material 212 is touched by the hand from the state where the human body contact conductive material 211 is being touched by the hand, the corresponding electrodes 56 are connected to the human body contact conductive material 212 and are additionally detected by the touch panel 31, and the third conductive pattern 83 can be generated.

Still further, when the human body contact conductive material 211 and the human body contact conductive material 212 are touched together by the hand from a state where the human body contact conductive material 21 is touched by the hand, the corresponding electrodes 55 and electrodes 56 are respectively connected to the human body contact conductive material 211 and the human body contact conductive material 212, and are additionally detected by the touch panel 31, and thus the fourth conductive pattern 84 can be generated.

The order in which the first, second, third, and fourth conductive patterns 81, 82, 83, and 84 are generated is not limited, and for example, when the code generation apparatus 107 is placed on a touch panel 31, and the human body contact conductive materials 21, 211, 212 are all touched by the hand, the fourth conductive pattern 84 can be generated from the beginning upon stamp placement on the touch panel 31.

FIG. 33(A) shows an example of the first conductive pattern 81, FIG. 33(B) shows an example of the second conductive pattern 82, FIG. 33(C) shows an example of the third conductive pattern 83, and FIG. 33(D) shows an example of the fourth conductive pattern 84. As shown in FIG. 33, the second and third conductive patterns 82 and 83 are patterns in which electrodes 55 and 56 are detected, respectively, by the touch panel 31 in addition to the electrodes 52 detected by the touch panel 31 of the first conductive pattern 81. The fourth conductive pattern 84 is a pattern in which two electrodes 55 and 56 are detected by the touch panel 31 in addition to those of the first conductive pattern 81.

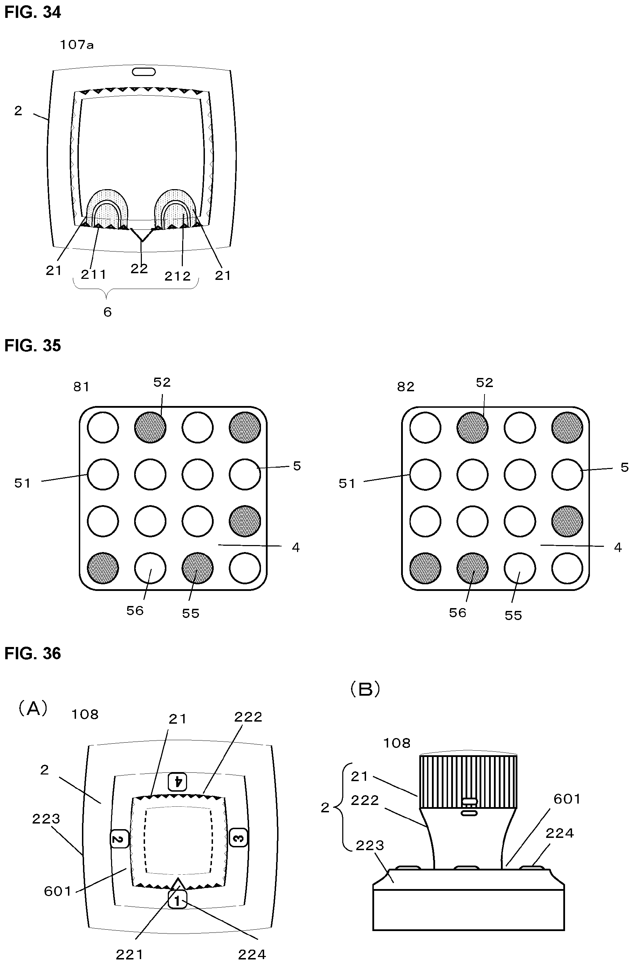

FIG. 34 shows a code generation apparatus 107a which is a modification example of the code generation apparatus 107. The code generation apparatus 107a differs from the code generation apparatus 107 in FIG. 30(A) in the position of the human body contact conductive material 21.

As for the code generation apparatus 107a, the human body contact conductive material 21 is disposed on the outer periphery of the human body contact conductive materials 211, 212, so as to surround the human body contact conductive materials 211, 212. As a result, the human body contact conductive material 21 is simultaneously touched by an operation of selectively touching the human body contact conductive material 211 or 212 with a human hand.

For example, when the code generation apparatus 107a is placed on a touch panel 31 and a human body contact conductive material 211 is touched by the hand, since the human body contact conductive material 21 is also touched simultaneously, an electrode 52 corresponding to the switch and electrodes 55 corresponding to the human body contact conductive material 211 are detected by the touch panel 31, and the first conductive pattern 81 as shown in FIG. 35(A) can be generated. Similarly, when the human body contact conductive material 212 is touched by the hand, since the human body contact conductive material 21 is also touched simultaneously, the electrodes 52 corresponding to each switch turned ON by sliding the slide switch 75 to the terminal 1 side, and the electrodes 56 corresponding to the contact conductive material 212 are detected by the touch panel 31, and the second conductive pattern 82 of FIG. 35(B) can be generated.

As a result, there is no need to keep in mind the need to touch two electrodes at distant positions, and since the human body contact conductive materials 21 and 211 or 21 and 212 can be easily touched with one finger, the switching operation of two kinds of conductive patterns can be performed easily.

In addition, as shown in FIG. 31, further additionally arrangement of wiring 650 with a predetermined length or more inside the housing 2 with respect to the common connection line 65 leads to the generation of parasitic capacitance 651 in a dispersed manner between the wiring 650 and the surface of the touch panel 31. As a result, the impedance between the common connection line 65 and the touch panel 31 is changed, and it becomes possible to have the touch panel 31 detect electrodes turned ON by corresponding slide switches 75 with the housing 2 placed on the touch panel 31 even if a person does not touch the human body contact conductive material 21. For this reason, even if a person does not fully touch the human body contact conductive material 21 by the hand, the electrodes 5 can be detected by the touch panel and the first conductive pattern can be generated with certainty.

The reason why the dispersed parasitic capacitance is maintained using the wiring 650 is to prevent the occurrence of misdetections due to localization of capacitance with the touch panel 31 enough to correspond to the capacitance of an electrode.

FIG. 30 and FIG. 31 exemplify a configuration in which four types of conductive patterns are switched by two human body contact conductive materials 211 and 212. However, the number of human body contact conductive materials is not limited to two. Thus, a plurality of types of conductive patterns may be switched by three or more human body contact conductive materials.

As a result, as for the code generation apparatus 107 of the seventh embodiment, by enabling the selective generation of the first, second, third, and fourth conductive patterns 81, 82, 83, and 84, by setting the setting unit 7 so as to make it changeable with a simple slide switch, and dividing the human body contact conductive materials 21, 211, and 212 into three systems for use in the place of the push button switch of the operation unit 6, it is possible to generate four types of pattern codes with a single code generation apparatus 107. Not only is the manufacturing cost greatly reduced by greatly reducing the number of parts of the apparatus, but also a single code generation apparatus can be used for four types of applications according to the customer's usage, and thus convenience for the customer can be improved.

Furthermore, by providing the additional wiring 650 to the common connection line 65, it is possible to have the touch panel 31 detect the first conductive pattern only by bringing the housing 2 into contact with the touch panel 31, and thus it is possible to properly generate a code pattern and reduce misdetections regardless of how a customer holds it when using a stamp.

Needless to say, the number of pattern codes can be greatly increased by switchover with switches of the first conductive pattern 81 as in the case of the code generation apparatus 101 of the first embodiment. Since the code pattern setting can be changed after the product is completed, the manufacturing cost for changing the pattern code can be reduced, the TAT for making changes can be shortened, and convenience for the customer can be improved.

The dividing of human body contact conductive material used into multiple systems, and selective touching of the human body contact conductive materials to enable the selective generation of a plurality of conductive patterns, the addition of wiring 650 to the common connection line 65 to enable touch panel 31 to detect the first conductive pattern just by bringing the housing 2 into contact with the touch panel 31, and the like in this embodiment can also be applied to the other embodiments such as the first, second, third, fourth, and fifth embodiments, and the like.

### [Eighth Embodiment]

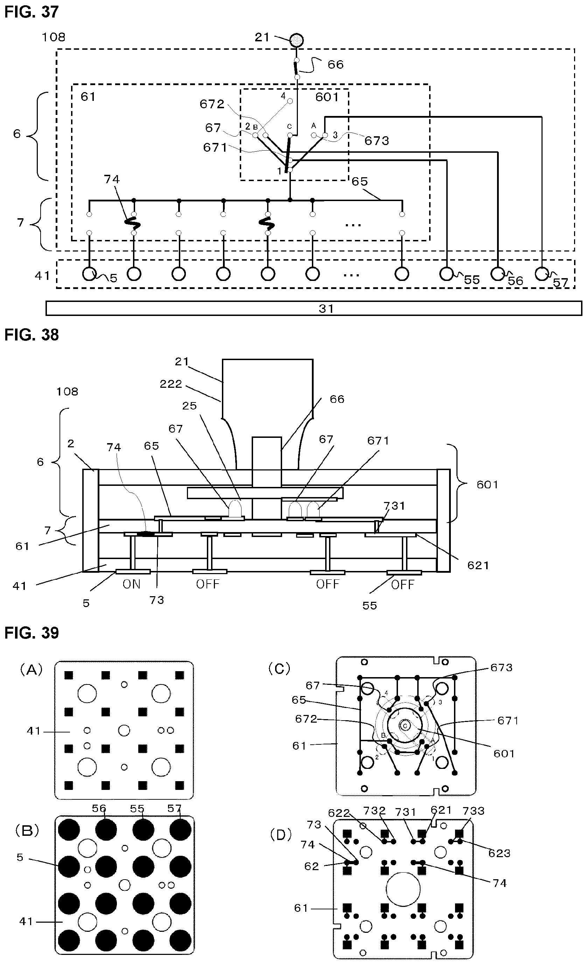

FIG. 36 shows schematic diagrams of an external form of a code generation apparatus 108 according to the eighth embodiment. FIG. 36(A) shows a top view and FIG. 36(B) shows a side view. FIG. 37 shows a schematic diagram of a circuit of the code generation circuit 108. FIG. 38 is a schematic diagram of a sectional view showing the contact structure of a rotary switch 601 which is an operation unit 6 of the code generation circuit 108. FIG. 39 shows PCB circuit boards for forming electrodes 5, a setting unit 7 and an operation unit 6 of the code generation circuit 108. FIG. 39(A) shows a pattern of the upper surface of the first circuit board 41, FIG. 39(B) shows a pattern of the bottom surface of the first circuit board 41, FIG. 39(C) shows a pattern of the upper surface of the second circuit board, and FIG. 39(D) shows a pattern of the bottom surface of the second circuit board.

In addition, descriptions of parts other than the setting unit 7 and the operation unit 6 that are not significantly different from those of the code generation apparatus of the first embodiment are omitted.

As shown in FIG. 36 to FIG. 39, according to the specifications, the code generation apparatus 108, by the solder joint 74 of the setting unit 7 and the four switching settings of the rotary switch 601 of the operation unit 6, the first, second, third, fourth conductive patterns 81, 82, 83, 84 can be selectively generated by touching only the human body contact conductive material 21, for example, by the hand when a stamp is placed on the touch panel 31.

As shown in FIG. 36, the code generation apparatus 108 has a shape similar to that of a square stamp, and the handle unit 222 is made rotatable by a rotation mechanism of a rotary switch (not shown) provided at the center of the housing 2 with a column shape. Conductive material is used for the handle unit 222 and by connecting it to the contact 66 described later, a human body contact conductive material 21 is formed. As a result, for example, when a person holds the housing 2 by the hand, it can be touched without effort.

Furthermore, the external form is not limited to a square shape, and any specification may be adopted as long as the stamp can be placed on a touch panel and the plurality of electrodes 5 can be evenly brought into contact with the surface of the touch panel.

As shown in FIGS. 37 to 39, the bottom surface 4 of the housing 2 has a first circuit board 41 made of a non-conductive material, and the electrodes 5 provided on the bottom surface of the first circuit board 41 are arranged on the same plane as the surface 4 with sixteen in a 4 × 4 array. The number and arrangement of the electrodes 5 are not limited, and can be increased or decreased as appropriate according to the number of required code patterns.

The operation unit 6 uses a method in which the conductive pattern is switched by a rotation operation of a handle unit 222 which is a rotation axis of a rotation switch 601.

The handle unit 222 is provided with a recess 221, and setting display units 224 that indicates the position of the switching setting of the rotation switch 601 is formed on the upper surface of the lower part of the housing 223. The setting display units 224 are formed by providing bulging portions at the center of each side of the rectangular upper surface of the lower part of the housing 223 and displaying setting numbers on the surface of the bulging portions.

A rotation switch 601 can selectively switchover the first, second, third, and fourth conductive patterns 81, 82, 83, and 84 which are generated when a stamp is brought into contact with the touch panel 31 by matching the positions of the recess 221 and the setting display units 224 by a rotation operation of the handle unit 222.

What is displayed on the setting display units 224 need not be a number as long as correspondence with the setting of the rotary switch 601 is apparent, and may be a symbol or a graphic. The symbol or graphic may be a symbol or a graphic corresponding to processing performed by the code recognition apparatus 3 made by the pattern code of a conductive pattern generated by the code generation apparatus 108.

Next, the setting unit 7 adopts a setting method using the solder joint 74 employed in the first embodiment. Among second circuit board electrode terminals 62 and pattern setting terminals 73 provided on the bottom surface of the second circuit board 61 connected from electrodes 5 other than electrodes 55, 56, 57 among electrodes 5 of the first circuit board 41, only the terminals corresponding to the electrodes detected by the touch panel in the first conductive pattern 81 are connected by the solder joint 74. The solder joint 74 corresponds to ae function of turning ON the first code switch 71 of the setting unit 7. The pattern setting terminals 73 are connected to a common connection line 65 on the upper surface of the first circuit board 61 through through holes, and are connected to four first contacts 67 of the rotary switch 601.

The electrodes 55, 56, and 57 of the first circuit board 41 are connected to first contacts 671, 672, and 673, respectively, of the rotary switch 601 on the upper surface of the second circuit board 61 through holes and wiring on the circuit board, and corresponding second circuit board electrode terminals 621, 622, and 623 provided on the bottom surface of the second circuit board 61 and pattern setting terminals 731, 732, and 733 are connected by the wiring pattern of the circuit board.

In addition, the mechanism of the rotary switch 601 which is an operation unit 6 is shown in FIG. 38 and FIG. 39. The first contacts 67, 671, 672, and 673 are opposed to the movable electrodes 25 of the rotary switch. The first contacts 67, 671, 672, and 673 are made elastic with a spring pin connector, conductive rubber, contact spring, or the like on the top, so that a good connection state can be maintained even when the movable electrodes are rotated. The movable electrodes 25 are rotated in units of 90 degrees by a rotation mechanism of a rotation switch 601 (not shown), and four types of settings are selected. Furthermore, the rotation mechanism of the rotary switch 601 is not particularly limited, and any mechanism may be used as long as switching of two circuits and four contacts (2P4T type) is possible.

In addition, the movable electrodes 25 are connected to a human body contact conductive material 21 formed of the conductive material of the handle unit 222 in a state where the movable electrodes 25 can be separated from the lower part of the housing 223 via contacts 66.

The first conductive pattern 81 can be generated by connecting electrodes 5 connected to first contacts 62 and pattern setting terminals 73 connected with solder joints 74 on the bottom surface of the second circuit board 61 to a human body contact conductive material 21 via first contacts 67 and movable electrodes 25 on the upper surface of the second circuit board 61 by settings of the rotary switch 601 among the electrodes 5 of the first circuit board 41, by aligning the recess 221 of the handle unit 222 of FIG. 36 with the display "1" among the setting display units 224, and for example, by bringing a code generation apparatus 108 into contact with a touch panel 31 with a human hand, and further by connecting electrodes 55 of the first circuit board 41 to a human body contact conductive material 21 via first contacts 671 and movable electrodes 25 on the upper surface of the second circuit board 61 by settings of the rotary switch 601 via first contacts 621 and pattern setting terminals 731 on the bottom surface of the second circuit board 61, and by having a touch panel 31 detect electrodes 5 and electrodes 55 connected with solder joints 74.

The second conductive pattern 82 can be generated by connecting electrodes 56 of the first circuit board 41 to a human body contact conductive material 21 via first contacts 672 and movable electrodes 25 on the upper surface of the second circuit board 61 by settings of the rotary switch 601 via first contacts 622 and pattern setting terminals 732 on the bottom surface of the second circuit board 61, in the place of electrodes 55 of the first circuit board among circuit paths for generating the first conductive pattern 81, by aligning the recess 221 of the handle unit 222 of FIG. 36 with the display "2" among the setting display units 224, and by having a touch panel 31 detect electrodes 5 and electrodes 55 connected with solder joints 74.

The third conductive pattern 83 can be generated by connecting electrodes 57 of the first circuit board 41 to a human body contact conductive material 21 via first contacts 673 and movable electrodes 25 on the upper surface of the second circuit board 61 by settings of the rotary switch 601 via first contacts 623 and pattern setting terminals 733 on the bottom surface of the second circuit board 61, in the place of electrodes 55 of the first circuit board among circuit paths for generating the first conductive pattern 81, by aligning the recess 221 of the handle unit 222 of FIG. 36 with the display "3" among the setting display units 224, and by having a touch panel 31 detect electrodes 5 and electrodes 55 connected with solder joints 74.

The fourth conductive pattern 83 can be generated by having a touch panel 31 detect only electrodes 5 connected with solder joints 74 among circuit paths for generating the first conductive pattern 81, since there are no connections to the A-side contact by the settings of the rotary switch 601 by aligning the recess 221 of the handle unit 222 of FIG. 36 with the display "4" among the setting display units 224.

As a result, four types of conductive patterns can be generated just by a simple operation of switching the rotary switch 601 with a single code generation apparatus 108.

In addition, since the fourth conductive pattern 84 has one less electrode detected by the touch panel 31 than the other first, second, and third conductive patterns 81, 82, and 83, it cannot be used if the above described method of error determination by checking the number of detected electrodes of a code pattern by a code recognition apparatus 3 is used. In order to deal with this case, a stopper having a detachable structure that prevents the handle 222 of the rotation switch 601 from being rotated to the position of setting "4" may be provided in the housing 2 or the rotation switch 601.

FIG. 36 to FIG. 39 exemplify a configuration in which four types of conductive patterns are switched over according to four switchover settings of a rotary switch 601. However, the switchover setting of the rotary switch 601 is not limited to four types. That is, a plurality of types of conductive patterns may be switched over with a rotary switch 601 having five or more switchover settings.

Thus, with the code generation apparatus 108 according to the eighth embodiment, by enabling the selective generation of four types of conductive patterns by a simple operation of turning the handle 222 according to the four switchover settings of the rotary switch 601 of the operation unit 6, it is possible to easily generate four types of pattern codes with a single code generation apparatus 106, and thus, a single code generation apparatus can be used for four types of applications according to the customer's usage, and convenience for the customer can be improved.

Needless to say, the number of pattern codes can be greatly increased by the switching of the switch of the first conductive patterns 81 as in the case of the code generation apparatus 101 of the first embodiment. Since the code pattern setting can be changed after the product is completed, the manufacturing cost for changing the pattern code can be reduced, the TAT for making changes can be shortened, and convenience for the customer can be improved.

The methods of selectively generated a large number of conductive patterns by a simple operation of turning the handle 222 using switchover settings of a rotary switch described in this embodiment can also be applied to other embodiments such as the first, second, third, fourth, and fifth embodiments and the like.

### [Ninth Embodiment]

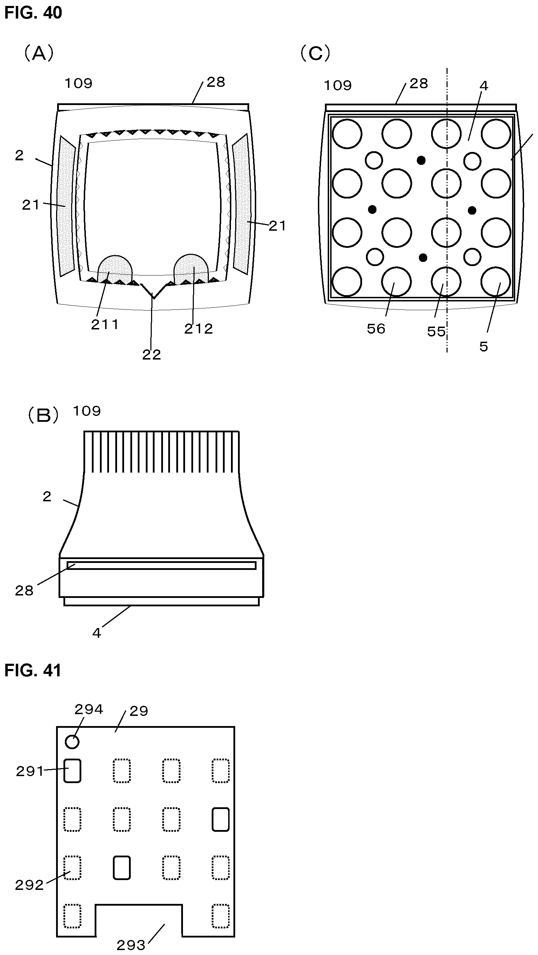

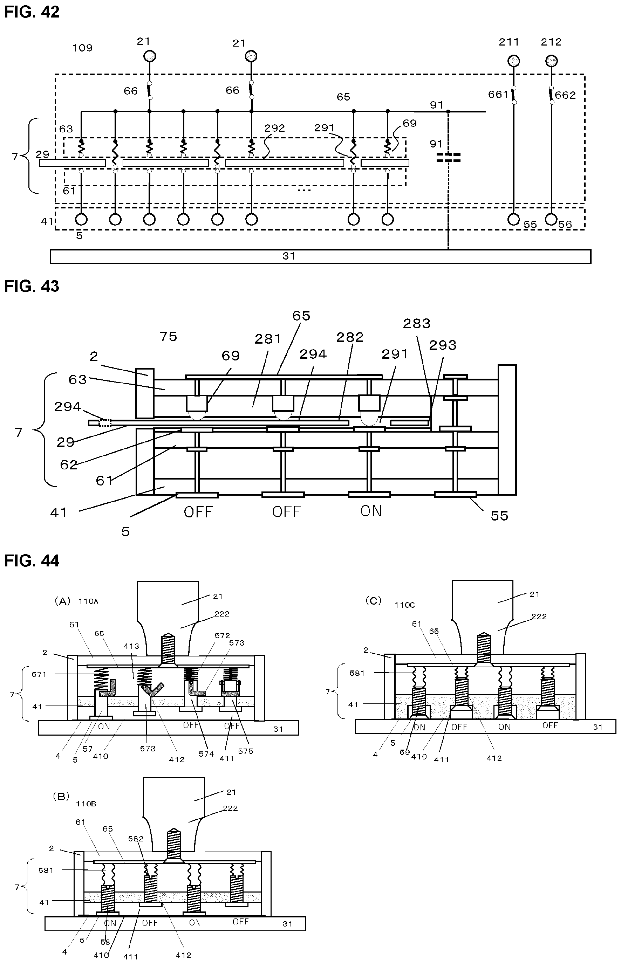

FIG. 40 is a schematic diagram of an external form of a code generation apparatus 109 according to the ninth embodiment. FIG. 40(A) is a top view, FIG. 40(B) is a rear side view, and FIG. 40(C) is a bottom view. FIG. 41 is a plan view of a code setting card 29 used for a setting unit 7 of the code generation apparatus 109. FIG. 42 is a schematic diagram of a circuit of a code generation circuit 109. FIG. 43 is a vertical sectional view of the code setting mechanism portion of the code generation apparatus 109. Also, descriptions of parts other than the operation setting unit 7 that are not significantly different from those of the code generation apparatus of the seventh embodiment are omitted.

As shown in FIG. 40 to FIG. 43, according to the specifications, a code generation apparatus 109 uses a first conductive pattern 81, a second conductive pattern 82, a third conductive pattern 83, and a fourth conductive pattern 84 as a setting unit 7, and by inserting a code setting card 29 into an insertion hole 28 provided in the housing 2, the first conductive pattern can be set to be changeable, and when the code generation apparatus 109 is placed on the touch panel 31, by selecting from the three sets of human body contact conductive materials 21, 211, and 212 by touching one of them or selecting not to touch any of them, the first, second, third, and fourth conductive patterns 81, 82, 83, and 84 can be generated selectively.

Since the pattern generation mechanism and the like of the second, third, and fourth conductive patterns 82, 83, and 84 are the same as those in the seventh embodiment, descriptions thereof are omitted.

As shown in FIG. 40, a code generation apparatus 109 has a shape similar to that of a square stamp, and an insertion hole 28 is provided in the lower portion of the rear side surface with the direction in which the protrusion 22 of the housing 2 is located in assigned as the front. The insertion hole 28 has an opening in the form of an elongated slit in a direction parallel to the bottom surface 4.

FIG. 41 is a plan view of a code setting card 29 that is inserted into the insertion hole 28 for performing code setting. A code setting card 29 has a narrow flat plate shape that is slightly narrower in width and slightly thinner in thickness than the slit shaped opening of the insertion hole 28 so that it can easily be inserted into the insertion hole 28, and is made of resin or paper.

A notch 293 is provided asymmetrically with respect to the center of the plane in the horizontal direction at an end side of the code setting card 29. The notch 293 is for avoiding a connection structure of electrodes 55 and 56 for generating the second, third and fourth conductive patterns 82, 83 and 84, and has the function of detecting the insertion end point when a card is inserted and of preventing a card from being inserted to the end when the wrong side is inserted.

On the rear end side of the code setting card 29, a small hole is provided as an index mark 294 at the left end of the upper plane. Also with the index mark 294, it is possible to prevent the wrong side from being inserted by mistake. The index mark 294 may be any mark other than a hole as long as it serves as a mark for identifying a position such as a recess, convex, ink, or the like.
A code setting card 29 has a function of selectively switching the connection between electrodes 5 to be detected by a touch panel 31 and electrodes 5 not to be detected., Setting holes 291 are opened in areas on the plane of the code setting card 29 to correspond to the positions of electrodes 5 on the bottom surface 4 of the housing 2 to be detected by a touch panel when a code setting card 29 is properly inserted into an insertion hole 28 of the housing 2. Furthermore, areas 292 corresponding to electrodes 5 that are not to be detected by the touch panel 31 are not opened and maintain the state of the card surface.

As shown in FIG. 42 and FIG. 43, the setting unit 7 of a code generation apparatus 109 is configured with a contact mechanism inside the insertion hole 28 and a code setting card 29.

The first conductive pattern 81 is set by the connection of only electrodes among electrodes 5 of the first circuit board 41 at positions where setting holes 291 of a code setting card 29 are opened connected to first contacts 67 on the upper surface of the second circuit board 61 connected to electrodes 5 of the first circuit board 41 and second contacts 69 on the bottom surface of the third circuit board via the setting holes 291 upon inserting a code setting card 29 into an insertion hole 28, and by the connection of second contacts 69 to human body contact conductive materials 21 via common wiring 65 and contact 66.
has.

Furthermore, the second contacts 69 are made elastic with a spring pin connector, conductive rubber, contact spring or the like so that a good connection state can be maintained even with insertion-removal of a code setting card 29. Furthermore, it is preferable to provide a taper shape that widens toward the side facing the second contacts 69 with respect to the cross-sectional shape of the setting holes 291 of a code setting card 29 in the insertion-removal direction.

Thus, a first conductive pattern 81 can be generated by having a touch panel 31 detect only electrodes 5, among electrodes 5 of the first circuit board 41 with corresponding setting holes 291 opened on the code setting card 29, selectively connected to human body contact conductive materials 21, for example, by bringing the code generation apparatus 109 into contact with the touch panel 31 with a human hand.

FIG. 40 to FIG. 43 exemplify a configuration in which a set of the insertion holes 28, an internal contact mechanism, and a code setting card 29 is provided. However, the set of insertion holes 28, an internal contact mechanism, and a code setting card 29 are not limited to one. That is, in the embodiments in which a push button switch 60 is provided in an operation unit 6, the configuration described here may be used for changing the settings of both the first and second code switches 71 and 72 which are setting units 7 for first and second conductive patterns 81 and 82.

As a result, with a code generation apparatus 109 according to the ninth embodiment, by employing a method of inserting a code setting card 29 having setting holes 291 into an insertion hole 28 of the housing 2, changing settings can be done by simply exchanging the code setting card of the setting unit 7. This enables a customer to easily change the pattern code in accordance with the usage situation, and therefore convenience for the customer can be further improved. Needless to say, the number of pattern codes can be greatly increased by switchover with switches of the first conductive pattern 81 as in the case of a code generation apparatus 101 of the first embodiment. Since the code pattern setting can be changed after the product is completed, the manufacturing cost for changing the pattern code can be reduced, the TAT for making changes can be shortened, and convenience for the customer can be improved.

The method of using the code setting card 29 for the setting unit 7 used in this embodiment can also be applied to the other embodiments such as the first, second, third, fourth, fifth, sixth, seventh, and eighth embodiments, and the like.

### [Tenth Embodiment]

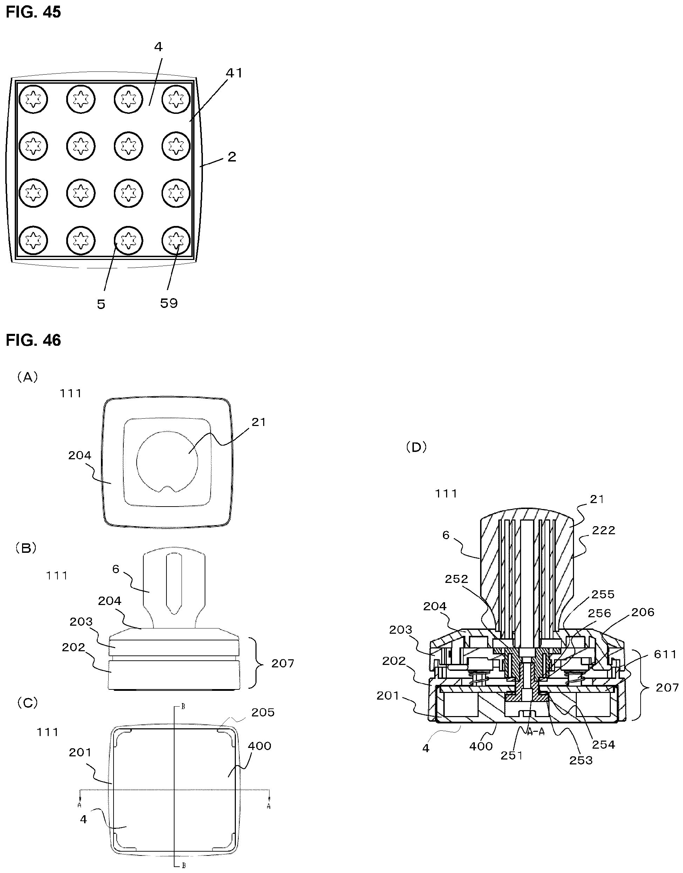

FIG. 44 shows schematic diagrams of sectional views in the vertical direction of the setting unit 7 of the code generation apparatus 110 of the tenth embodiment. FIG. 44(A) shows a case where electrodes 5 have a toggle mechanism, FIG. 44(B) shows a case where electrodes 5 are configured with screws and are screwed from the upper surface side of the first circuit board, and FIG. 44(C) shows a case where electrodes 5 are configured with screws and are screwed from the bottom surface of the first circuit board. FIG. 45 shows a bottom view of the code generation apparatus 110 of FIG. 44(C). In addition, descriptions of parts other than the setting unit 7 that are not significantly different from those of the code generation apparatus of the first embodiment are omitted.

As shown in FIG. 44, according to the specifications, the code generation apparatus 110, conductive patterns can be selectively generated by switching electrodes 5 between being in contact and not being in contact with the surface of the touch panel 3 when the housing 2 is placed on the touch panel 31 by adopting a structure that enables the electrodes 5 provided on the first circuit board 41 to move in the vertical direction with respect with the bottom surface 4 by any one of the methods of FIG. 44(A), FIG. 44(B), and FIG. 44(C) with the setting unit 7.

As shown in FIGS. 44(A), FIG. 44(B), and FIG. 44(C), the code generation apparatuses 110A, 110B, and 110C have shapes similar to that of a square stamp, and the bottom surface 4 is covered with a sheet of colored resin or a thin plate 410 thin enough to prevent the capacitance of the electrodes 5 from decreasing significantly. In the upper side of sheet 410, the first circuit board 41 is fixed to the housing 2 to secure spaces 411 and 413 in which the electrode columns 57, 58 and 59 that form the electrodes 5 are movable in the vertical direction within the housing 2. Sixteen electrodes 5 provided on the bottom surface of the first circuit board 41 on the bottom surface 4 of the housing 2 are arranged in a 4 × 4 arrangement. The number and arrangement of the electrodes 5 are not limited, and can be increased or decreased as appropriate according to the number of required code patterns.

A second circuit board 61 is detachably fixed to the housing 2 in an upper section of the housing 2, and a common connection line 65 is provided on the bottom surface of the second circuit board 61 in correspondence with the position of the electrodes 5 of the first circuit board 41.

The common connection line 65 is screwed to the handle unit 222 provided on the upper portion of the housing 2 with a conductive screw at the center of the circuit board, and is connected to the human body contact conductive material 21 by connection with a conductive material part of which at least a part is formed of conductive material.

If the second circuit board 61 is separated from the touch panel 31 to an extent that the parasitic capacitance between the common connection line 65 and the touch panel 31 is small enough not to affect electrode detection by the touch panel 31, the common connection line 65 may have a configuration in which the whole bottom surface of the circuit board is a conductor. In that case, it is not necessary to create a wiring pattern for the second circuit board 65, and the manufacturing cost can be reduced.

When the bottom surface 4 of the housing 2 is placed on the touch panel 31 with contact, in order to accommodate both a case where electrodes 5 are disposed in positions where there is no spacing 411 between the electrodes 5 and the touch panel 31 so that electrodes 5 provided on the bottom surface of the first circuit board 41 movable in the vertical direction are in contact with the touch panel 31, and a case where electrodes 5 are disposed in positions where there is spacing 411 between the electrodes 5 and the touch panel 31 so that the electrodes 5 are not in contact with the touch panel 31, that is, the electrodes 5 are located farthest from the touch panel 31, to prevent the opposite surfaces of the electrode columns 57, 58, 59 forming the electrodes 5 from separating from the common connection line 65, they are connected with conductive springs 571 that can be vertically expanded or contracted, conductive rubber 581 or the like.

The setting unit 7 has a structure in which the first circuit board 41 and the electrode columns 57, 58, and 59 inserted in the insertion holes 412 of the first circuit board 41 are movable in the vertical direction, and a conductive pattern is set by changing the vertical position of the electrodes 5.

FIG. 44(A) shows a structure in which rotatable connection components 572 are provided at the tip of the electrode columns 57 on the side opposite to the electrodes 5 and are connected to L-shaped cranks 573 on both sides of the electrode column 57. The L-shaped components on both sides of the electrode columns 57 of the L-shaped cranks 573 are connected at the ends on the first circuit board 41 side. The L-shaped crank 573 forms a supporting point at the corner portion of the L-shaped crank 573 with the first circuit board 41, and it is possible to move an electrode column 57 in the vertical direction by using the end of an L-shaped crank 573 opposite to the connection component 572 as a lever.

The setting of a conductive pattern by changing the vertical position of the electrode columns 57 is performed in a state where the second circuit board 61 in an upper section of the housing 2 is removed.

FIG. 44(A) shows a state where the electrode column 57 is fixed to the bottom side, the electrode column 573 is in the middle of transition, the electrode column 574 is fixed to the upper side, and where the electrode column 575 shows a view of the electrode column 574 fixed to the upper side with 90 degrees rotation.

FIG. 44(B) shows a structure in which the insertion holes 412 of the first circuit board 41 are screw holes and the ends of the electrode columns 58 are screwed with electrodes 5 as screws. Since the diameter of the end portion on the electrodes 5 side is larger than the diameter of the columnar screw portion of the electrode column 58, the other screw head has the same diameter as the columnar screw portion of the electrode column 58, and has a form where there is only a plus or minus slot for turning the screw.

Depending on how deep the screw of the electrode column 58 is screwed into the insertion hole 412, the vertical position of the electrode column 58 can be changed.

The setting of a conductive pattern by changing the vertical position of the electrode columns 58 is performed in a state where the second circuit board 61 in an upper section of the housing 2 is removed.

FIG. 44(C) shows a screw structure where the insertion hole 412 of the first circuit board 41 is a screw hole, the end of the screw head of the electrode column 59 is a flat countersunk screw, and the screw head of the screw is used as an electrode 5. In this configuration, the diameter of the screw head is the same as the diameter of an electrode 5 and thus it is necessary for the screw head to have a diameter sufficient for an electrode 5.

Depending on how deep the screw of the electrode column 59 is screwed into the insertion hole 412, the vertical position of the electrode column 59 can be changed.

The setting of a conductive pattern by changing the vertical position of the electrode column 59 in a state where the sheet 410 on the bottom surface of the first circuit board 41 is removed. Thus, when it is desired to prevent the setting from being changed easily, as shown in FIG. 45, it is preferable for the screw head of a countersunk screw which is the surface of an electrode 5 to have an uncommon shape such as with a hexagonal hole or a hexalobular hole so that the screwing depth cannot be easily changed.

For the first circuit board 41 having a structure in which spacing 411 is provided only at the positions of the electrodes 5, the bottom surface of the first circuit board 41 serves as the bottom surface 4 of the code generation apparatus 110C, and it becomes easy to even the heights of the electrodes 5 for the touch panel 31 to detect, and the flatness of the bottom surface 4 can be easily secured. This structure of the first circuit board can also be applied to the structures of FIGS. 44(A) and FIG. 44(B).

With these structures, the electrodes 5 and the human body contact conductive material 21 are connected, for example, when a person holds the handle 222 by the hand and has the code generation apparatus make contact with the touch panel 31. However, capacitance necessary for detection by the touch panel 31 can be generated, the code generation apparatus can be detected by the touch panel 31, and a conductive pattern can be generated only with electrodes 5 of which there is no spacing 411 between electrodes 5 and the touch panel 31.

As a result, with a code generation apparatus 110 according to the tenth embodiment, by adopting specifications in which the setting unit 7 has a structure in which the electrodes 5 provided on the first circuit board 41 are movable in the vertical direction with respect to the bottom surface 4 and conductive patterns can be generated selectively, the number of parts can be greatly reduced and thus manufacturing costs can be reduced.

Needless to say, similarly to the code generation apparatus 101 of the first embodiment, the number of pattern codes can be greatly increased by switching the vertical positions of the electrodes 5. Since the code pattern setting can be changed after the product is completed, the manufacturing cost for changing the pattern code can be reduced, the TAT for making changes can be shortened, and convenience for the customer can be improved.

While various embodiments using the code generation apparatus have been described above, the present invention is not limited to these embodiments, and the code generation apparatus can be used for various other purposes. Furthermore, the embodiments in the present specification and drawings can be combined in various ways.

Furthermore, in the embodiments in the present specification and drawings, the code generation apparatus is described as being used by bringing it into contact with the touch panel 31. However, the electrodes of the code generation apparatus are not limited to being in contact with the touch panel, and it is sufficient to have the apparatus over the code detecting area as long as capacitance change is in a range enough for detection of touching by the touch panel, and the functions of the present invention can also be realized with a touch panel having a hovering function.

### [Eleventh Embodiment]

FIG. 46 is a schematic view showing the external form of the code generation apparatus 111 of the eleventh embodiment. FIG. 46(A) shows a top view, FIG. 46(B) shows a side view, and FIG. 46(C) shows a bottom view. FIG. 46(D) is a sectional view with scission in the vertical direction. As shown in FIG. 46(A) to FIG. 46(C), the code generation apparatus 111 has a shape similar to that of a square stamp, and since the upper part of the housing 2 is a push button of a push button switch of the operation unit 6, by holding the housing 2 by the hand and having the apparatus make contact with the touch panel 31 and then pressing it, the two kinds of pattern codes, the first conductive pattern 81 and the second conductive pattern 82 can be sequentially generated. The handle unit 222 is formed of a conductor for use as a human body contact conductive material 21 so that it can be touched naturally when the code generation apparatus is held in the hand,

Also, the descriptions of the parts other than the electrode and the conductive pattern creation method that are not significantly different from those of code generation apparatuses of the first embodiment and other embodiments are omitted.

As shown in FIG. 46 to FIG. 49, the eleventh embodiment is different from the first embodiment in that the method for forming the electrodes 5 provided on the bottom surface 4, the arrangement and connection structure of the electrodes 5 for generating two types of pattern codes, the first conductive pattern 81, and the second conductive pattern 82, and the code pattern changing method are different.

As shown in FIG. 46(D), conductive pattern printed sheet 400 of PET resin having a thickness of 0.188 mm on which electrodes 5 are printed with conductive ink is bonded to the bottom surface 4 and the side surface of the housing bottom 201 of the code generation apparatus 111 with a double-sided adhesive tape having a thickness of 50 µm so that the positions of the electrodes 5 do not deviate but the sheet 400 can still be easily peeled off.

The thickness and the material of the conductive pattern printing sheet 400 are such that when the electrode 5 makes contact with the touch panel 31, the electrode 5 is detected by the touch panel through the base material of the sheet. The thickness and material are not limited to the above-mentioned thickness and material, and any thickness and material may be used as long as durability that can withstand the stamp operation of repeatedly pressing a touch panel can be secured. For example, a polypropylene resin sheet or high-quality paper for photographic printing with PP coating is sufficient. Furthermore, the method of bonding is not limited to a method of using double-sided tape, and as long as there is no positional deviation of the bonding surface and the bonding can easily be removed when it is to be removed, a method of applying adhesive glue or the like is sufficient.

The conductive ink used for printing a conductive pattern printed sheet 400 may be any ink as long as it has conductivity, such as silver paste ink, silver salt ink, silver nano ink, carbon ink, or the like, The minimum wiring width for wiring in a conductive pattern is preferably 0.8 mm to 1.0 mm for carbon ink in view of the percentage of defective products due to parasitic capacitance of the conductive pattern, wiring time constants, necessity of ink layer flattening, wiring pattern disconnection, increase in resistance or the like, and when the percentage of defective products due to wiring pattern disconnection, increase in resistance, or the like is within an allowable range, a width of 0.6 mm to 1.0 mm is more preferable. In the case of silver paste ink or the like containing metal, it is preferably to have a width of 0.2 mm to 0.3 mm, and if the percentage of defective products due to wiring pattern disconnection, increase in resistance, or the like is within an allowable range, a width of 0.1 mm to 0.2 mm is more preferable.

In the case of a conductive pattern printed sheet 400 made of PET resin having a thickness of 0.188 mm, from the viewpoint of parasitic wiring capacity, it is sufficient that the minimum wiring width is 0.8 mm or less by adopting a wiring method described later. The wiring resistance is preferably about 100 Ω/mm, and may be 1 KΩ/mm or less. Furthermore, The thicknesses of the electrodes 5 formed by printing and the ink layer of the wiring is preferably as thin as possible, and is preferably 10 µm or less, and 20 µm or less which does not require planarization is sufficient.

Guiding grooves 205 that are shallower than the thickness of a conductive pattern printed sheet 400 including the double-sided adhesive tape are provided on the bottom surface 4 and the side surface of the lower housing 201. By attaching the conductive pattern printed sheet 400 to the lower housing 201 using the guide groove 205, it is possible to improve work efficiency for attaching while ensuring the attachment position accuracy. Furthermore, by making the depth of the guide groove 205 shallower than the thickness of a conductive pattern printed sheet 400, the conductive pattern printed sheet 400 can be brought into tight contact with the touch panel 31 when being brought into contact with the touch panel 31.

The design can also be improved by printing a graphic such as a product logo on the outer surface of a conductive pattern printed sheet 400 that makes contact with a touch panel 31. Furthermore, since the conductive pattern printed sheet 400 is exposed, it is possible to attach a protective sheet such as a thin silicon sheet of about 50 µm that does not interfere with detection of electrodes by a touch panel 31 for the purpose of protecting the sheet and the outer printed surface, and preventing slippage (displacement) when making contact with a touch panel 31. When attaching a protective sheet, it is preferable to reduce the sheet thickness of the conductive pattern printed sheet 400 to about 0.125 mm in consideration of the thickness of the protective sheet.

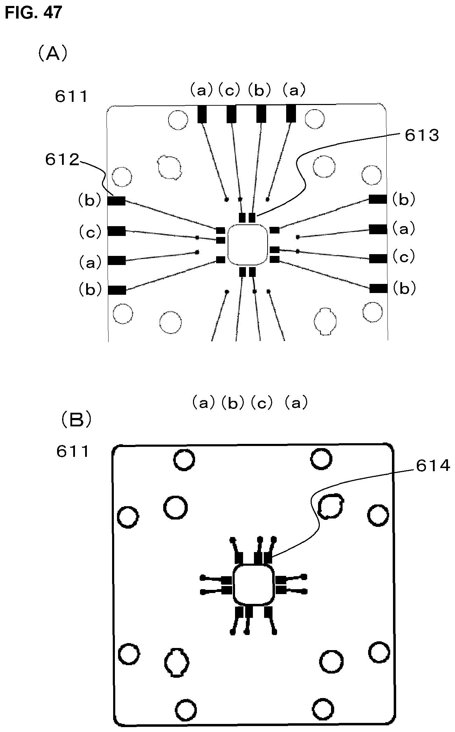

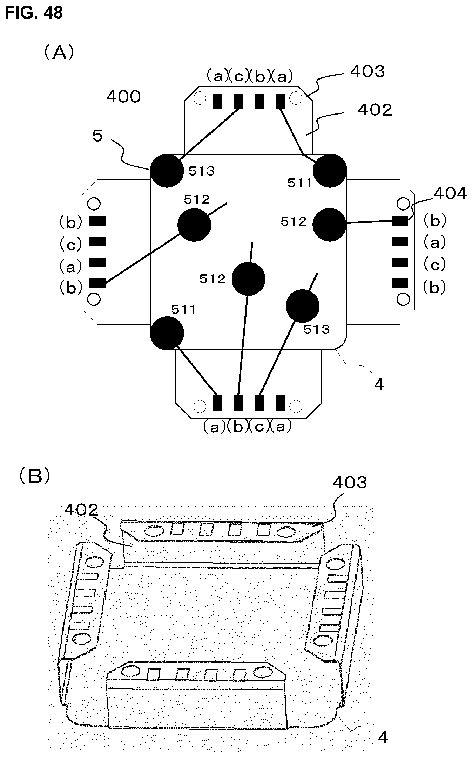

A circuit board 611 is fitted on the upper surface portion of the lower housing 201. As shown in FIG. 47(A), circuit board connection terminals 612 are arranged at equal intervals on the outer periphery of the front surface side of the circuit board 611. Also, as shown in FIG. 48(A), sheet connection terminals 404 are provided at positions corresponding to the folding portion 403 provided at the edge of a side surface attaching unit 402 of a conductive pattern printed sheet 400. The circuit board connection terminals 612 on the front surface of the circuit board 611 can be crimped and electrically connected to conductive pattern connection terminals 404 provided in the folding portion 403 of the conductive pattern printed sheet 400 by folding the folding portion 403 of the conductive pattern printed sheet 400 attached to the lower housing 201 over the circuit board 611 and screwing down a circuit board sheet presser 202 from above. Also, if the strength of crimping between the terminals differs due to variations in the circuit board thickness or in the height of the circuit board sheet presser 202 and conductivity becomes insufficient, it is possible to secure conduction between the connection terminals by applying conductive adhesive glue or placing conductive double-sided tape between the connection terminals. It is sufficient if the connection resistance between the connection terminals is lower than about several tens of KΩ

Also, a circuit board sheet presser 202 is provided with a planar fixing unit that can simultaneously fix a circuit board 611 and a conductive pattern printed sheet 400 on the outer periphery of the surface of the lower housing 201, and an outer frame portion that covers the side surface of the lower housing 201. By providing an outer frame portion, the side surface portion of the conductive pattern printed sheet 400 is protected, and since almost the entire side surface of the code generation apparatus 111 is covered, the design of the code generation apparatus 111 can be improved, by applying colors or patterns to the outer surface of the outer frame portion. Furthermore, by extending the side surface of the upper housing 203 to the vicinity of the bottom surface 4 so as to cover the side surface of a code generation apparatus 111, the circuit board sheet presser 202 can be a simple flat plate without the outer frame portion.

A circuit board 611 has openings at four locations on the inner side corresponding to the corners of the rectangle, and by inserting substantially column shaped supporting columns 206 protruding from the lower housing 201, positioning of with the lower housing 201 is determined. In addition, the circuit board 611 has an opening at the center of the circuit board, and a lower side movable contact unit 251 is inserted from the back surface to the front surface retaining slidably and fixed by sandwiching the circuit board 611 with an upper side movable contact unit 252.

A thin wiring pattern is used to connect board connection terminals 612 provided on the outer periphery of the front surface of a circuit board 611 to the upper side fixed contacts 613 provided around the front surface of the central opening with the shortest distance. In addition, as shown in FIG. 47(B), lower side fixed contacts 614 are provided around the back surface of the central opening of the circuit board 611, and are wired to circuit board connection terminals 612 on the outer periphery of the front surface via a thin wiring pattern and through holes with the shortest distance.

There are three types of connection specifications from the circuit board connection terminals 612 to the fixed contacts 613 and 614 near the central opening. (a) One in which lower side fixed contacts 614 are provided only on the back surface, (b) one in which upper side fixed contacts 613 are provided only on the front surface of a circuit board 611, and (c) one in which fixed contacts 613 and 614 are provided on both the front and back surfaces.

As for the three types of connection specifications, at least one set is provided on each side of the circuit board 611, the sufficient total for each side is 5 sets or more of (a) and (b), and 4 sets of (c). This is because there is a limit in the number of multi-touches that can be detected simultaneously by a touch panel 31 of a smartphone such as an iPhone (registered trademark), and to ensure an ease of wiring between electrodes 5 of a conductive pattern printed sheet 400 and circuit board connection terminals 612. For use with tablets of the like where the number of allowed multi-touch is large or there is no limit, the total number of necessary sets of terminals of the connection specifications for each side of the circuit board is the same number as the multi-touch number for (a) and (b),and multi-touch number minus one for (c).

The three types of connection specifications are used according to electrode detection specifications for the conductive pattern to be created. (a) is used for electrodes detected by the touch panel 31 only for the second conductive pattern, (b) is used for electrodes detected by the touch panel 31 only for the first conductive pattern, and (c) is used for electrodes detected for both the first and second conductive patterns.

As shown in FIG. 46(D), the lower side movable contact unit 251 has a structure in which a brim-shaped portion 253 is provided at a lower portion of a columnar body having a substantially rectangular shape in a plan view, and the whole unit has conductivity. At positions facing the lower side fixed contacts 614 provided near the central opening of the back surface of the circuit board 611 of the brim-shaped portion 253, movable contacts 254 made of conductive rubber having elasticity is provided to absorb the contact interval variations of the portion where the lower side fixed contacts 614 on the circuit board 611 and the lower side movable contact unit 251 make contact and enables all of the contacts to have contact conduction. Furthermore, a movable contact 254 is not limited to conductive rubber, and may be a plate spring contact or the like or anything as long as it has elasticity, absorbs contact interval variations and enables all of the contacts to have contact conduction.

The upper side movable contact unit 252 has a structure in which a step portion 255 is provided at the top of a columnar body with a substantially rectangular shape in a plan view, a concave is provided in the center of the columnar body, and the lower side movable contact unit 251 is fitted in, and the whole unit has conductivity. At positions facing the upper side fixed contacts 613 provided near the central opening of the front surface of the circuit board 611 of the step portion 255, a movable contact 256 made of conductive rubber having elasticity is provided to absorb the contact interval variations of the portion where the upper side fixed contacts 613 on the circuit board 611 and the upper side movable contact unit 252 make contact and enables all of the contacts to have contact conduction.
Furthermore, a movable contact 256 is not limited to conductive rubber, as with the lower side movable contact unit 251.

The upper side movable contact unit 252 is provided with a latch structure at the upper portion, and is fitted and fixed to the upper housing 203. The upper housing 203 is provided with a cylindrical opening through which a supporting column 206 is inserted with maintenance of slidability at a position corresponding to the supporting column 206 protruding from the lower housing 201. At the bottom of the cylindrical opening, there is a step where the opening diameter is reduced, and a spring is inserted into the supporting column 206, and in a state sandwiched between the lower housing 201 and the upper housing 203, a screw with a brim is fixed to the supporting column 206 which is inserted in the opening from above the upper housing 203. Thus, the upper housing 203 and the lower housing 201 are fixed maintaining slidably, and a contact driving mechanism for a conductive pattern switchover push button switch of a code recognition apparatus 111 is formed. The pairs of a lower side fixed contact 614 and a movable contact 254, and the pairs of an upper side fixed contact 613 and a movable contact 256 are set with spacing so that both of the contacts of the pairs are not in contact simultaneously at the time of a switching operation, and thus is of a non-shorting type switching method. This is to avoid being subject to limits on the number of multi-touches that can be simultaneously detected set in a touch panel 31 of a smartphone such as an iPhone (registered trademark). The structure of the lower housing 201 to the upper housing 203 corresponds to the main body 207.

A holding unit 204 is attached to the upper housing 203 with a detachable structure. The holding unit 204 includes a non-conductive lid portion that covers the upper housing 203 and enhances designability, and a conductive handle unit 222 that corresponds to a handle of a stamp. The handle unit 222 comes into contact with the upper side movable contact unit 252 and is electrically connected.

FIG. 48(A) shows a conductive pattern printed on a conductive pattern printed sheet 400, and FIG. 48(B) shows the shape when the conductive pattern printed sheet 400 is attached to the lower housing 201. The conductive pattern is printed with a conductive ink on the inner surface of the conductive pattern printed sheet 400 attached to the lower housing 201. In the conductive pattern, the circular electrodes 5 having a diameter of 8 mm provided on the bottom surface 4 portion and the sheet connection terminals 404 provided on the folding portion 403 are connected by a printing pattern so that the wiring is of the shortest distance and the wiring has minimum printable line width for each electrode. Electrodes 511 detected by the touch panel 31 for a first conductive pattern 81 are connected to sheet connection terminals 404 with a symbol (a), electrodes 512 detected by the touch panel 31 for a second conductive pattern 82 are connected to sheet connection terminals 404 with a symbol (b), and electrodes 513 detected by the touch panel 31 for both a first conductive pattern 81 and a second conductive pattern 82 with ae symbol (c).

Of the electrodes 5 shown in FIG. 48(A), electrodes 5 arranged near the center of the bottom surface 4 are provided with wiring with a length about that of the radius of an electrode 5 and passing through the center point of the electrode 5 and extending in the opposite direction by 180° with respect to the original wiring connected to a sheet connection terminal 404.

When the wiring width is wide, due to the parasitic capacitance generated between the wiring and a touch panel when the wiring is making contact with the touch panel 31, the touch panel 31 detects the wiring part besides the electrodes, and a phenomenon of the detected coordinates of the electrodes being deviated in the direction of the wiring occurs. For this reason, in the case of electrodes with long wiring printed in the region of the bottom surface 4, wiring is extended in the opposite direction to the original wiring as shown in FIG. 48(A), thereby generating parasitic capacitance by wiring also on the opposite side, and thus reducing the amount of deviation of the detected coordinates of the electrodes. When the wiring for electrodes in the area of the bottom surface 4 is a short, no extension wiring is necessary.

If the wiring can be printed with a width of less than 0.2 mm, the extension wiring is not necessary because the parasitic capacitance of the wiring is small.

Table 4 shows results of the evaluation of deviation of the detected coordinates compared with and without extension wiring when the evaluation sample was detected 20 times by the touch panel of a smartphone (iPhone 6) with the sample having a conductive pattern formed by arranging five 8 mm diameter electrodes made of carbon ink on a 7 × 6 grid lattice with a grid spacing of 7 mm on the inner surface of a 0.188 mm thick PET resin sheet and connecting with wiring with a width of 0.8 mm The sample having the extension wiring is provided with a 4 mm extension wiring having a wiring width of 0.8 mm in a direction 180 ° opposite to the original wiring.

Based upon the method shown in the [Overview of a pattern code decoding method] section, the electrodes 1 and 5 were used as reference electrodes so that the coordinates detected by the touch panel could be converted into coordinates of a grid arrangement with grid intervals of 7 mm, and as a result of the evaluation of the deviation of the other three electrodes with respect to the arranged grid in percentage of a grid spacing, it was confirmed that the average amount of deviation could be reduced by 10% with the extension wiring.

**[Table 4]**

| Term | | Without wiring extension | | | With wiring extension | | |
|---|---|---|---|---|---|---|---|
| | | Electrode 2 | Electrode 3 | Electrode 4 | Electrode 2 | Electrode 3 | Electrode 4 |
| Deviation in the detected coordinates | avg | 35 | 25 | 28 | 25 | 18 | 18 |
| | min | 17 | 10 | 20 | 16 | 2 | 7 |
| | max | 56 | 39 | 36 | 35 | 58 | 27 |

In the above evaluation, in regards with the wiring between electrodes 5 for forming a conductive pattern, it was confirmed that when the wiring width is 0.8 mm, the touch panel 31 detects both the electrodes 5 and the wiring due to parasitic capacitance between the touch panel and the wiring, and thus, the detected arrangement coordinates of the electrodes 5 are deviated in the direction of the wiring, and it was confirmed that the deviation could be corrected with the extension wiring. Thus, the width of the wiring between the electrodes 5 is preferably 0.8 mm or less, and more preferably 0.2 mm or less, within a range of allowable wiring width for conductive ink printing (wiring resistance does not increase).

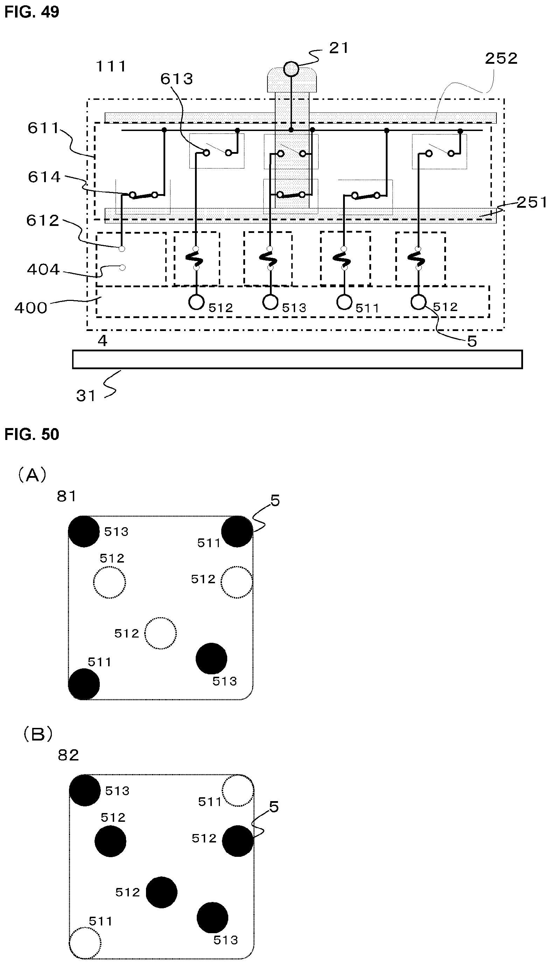

FIG. 49 is a schematic diagram of a circuit of a code generation apparatus 111. FIG. 50(A) schematically shows a first conductive pattern 81 detected by a touch panel when a code generation apparatus 111 is making contact with a touch panel while touching a human body contact electrode 21 (STEP 1). FIG. 50(B) schematically shows a second conductive pattern 82 detected by a touch panel when the push button of a code generation apparatus 111 is pressed (STEP 2) from the state of (STEP 1).

As shown in FIG. 46 to FIG. 50, according to the specifications, the code generation apparatus 111 can be set so that the first conductive patterns 81 and the second conductive patterns 82 be changed simply by changing the printing pattern of the conductive pattern printed sheet 400 by connecting selectively the conductive pattern printed sheet 400 having electrodes 5 and wiring printed thereon with conductive ink, with sheet connecting terminals 404 and circuit board connecting terminals 612(a), 612(b), and 612(c) of the circuit board 611.

The first conductive pattern 81 is formed by connecting sheet connection terminals 404 connected from electrodes 5 (511, 513) of the conductive pattern printed sheet 400 and circuit board connection terminals 612(a) and 612(c) of the circuit board 611. The second conductive pattern 82 is formed by connecting sheet connection terminals 404 connected from electrodes 5 (512, 513) of the conductive pattern printed sheet 400 and circuit board connection terminals 612(b) and 612(c) of the circuit board 611.

For the first conductive pattern 81, it is preferable to have at least three electrodes 5 so that the orientation of a code generation apparatus 111 placed on a touch panel 31 can be specified, to have the arrangement of the electrodes 5 not be rotationally symmetric, and also to have the number of electrodes 5 be five or less due to restrictions on multi-touches of smartphones.

As a result, the orientation of the code generation apparatus 111 making contact on the touch panel can be specified from the results of code decoding processing of the first conductive pattern 81. Thus, since the second conductive pattern 82 can be subjected to code decoding processing using this orientation information, a pattern in which the arrangement of the electrodes 5 is rotationally symmetric can also be used as a conductive pattern. Therefore, the number of codes for the second conductive pattern 82 can be dramatically increased.

Furthermore, since according to this specification transition from (STEP 1) to (STEP 2) can be done by pressing the push button switch and two types of codes can be generated in a time series, and thus the number of codes becomes the multiplication of the number of first conductive patterns 81 and the number of second conductive patterns 82. As a result, the number of codes that can be set by the code generation apparatus 111 increases dramatically.

### [Twelfth Embodiment]

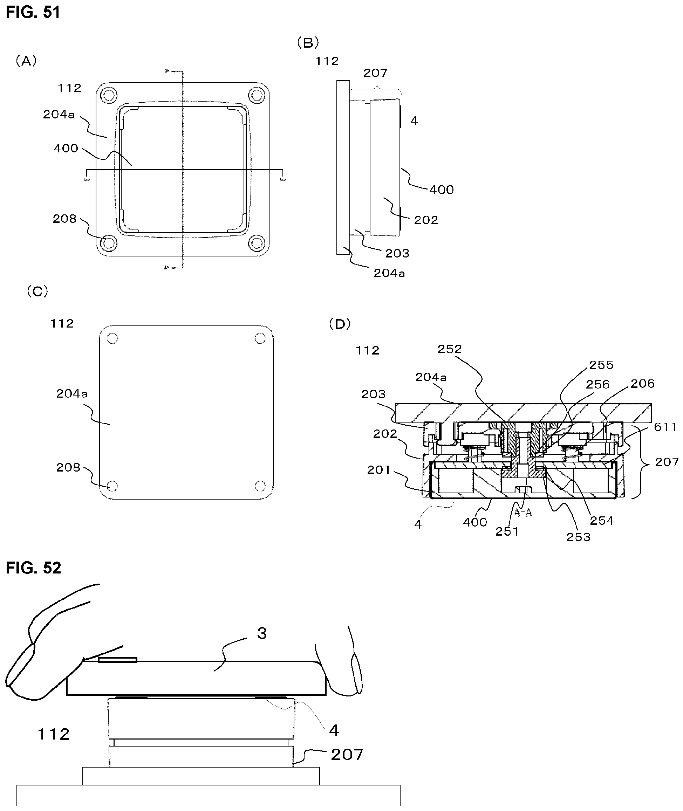

FIG. 51 shows schematic diagrams of the external form of a code generation apparatus 112 of the twelfth embodiment. FIG. 51(A) shows a top view, FIG. 51(B) shows a side view, and FIG. 51(C) shows a bottom view. FIG. 51(D) shows a sectional view with scission in the vertical direction. As shown in FIGS. 51(A) to FIG. 51(D), the code generation apparatus 112 has a structure different from that of the eleventh embodiment only in the holding section 204a, and the main body 207 is composed of the same parts as those of the code generation apparatus 111 of the eleventh embodiment.

The code generation apparatus 111 is of a stamp type, and is used to generate pattern codes in time series by holding the handle unit 222 by the hand, touching a human body contact electrode 21, bringing into contact with and pressing down on a touch panel 31 of a smartphone or the like which is a code recognition apparatus 3, the touch panel 31 detecting a conductive pattern formed on a pattern printed sheet 400 and further switching conductive patterns with a push button switch. (Human body conductivity detection)

On the other hand, the code generation apparatus 112 is used in a state where the main body 207 is attached to a flat holding unit 204a and the bottom surface 4 faces the front. As shown in FIG. 51(A), holes for attachment 208 are provided at the four corners of the flat holding unit 204a, and it is possible to fix it to a wall or the like with the holes for attachment 208 and screws. As shown in FIG. 52, the touch panel 31 is brought into contact with and pressed onto the bottom surface 4 of a code generation apparatus 112 while holding the smartphone which is a code recognition apparatus 3 or the like by the hand. A code generation apparatus 112 is effective, for example, by setting one on a wall or desk near an exhibition display in a museum, when a visitor brings a touch panel such as that of a smartphone into contact with the code generation apparatus 112, the visitor can obtain information on the exhibits, or by setting a code generation apparatus 112 on a desk in a railway station, when a passenger brings a touch panel such as that of a smartphone into contact with the code generation apparatus 112, the passenger can obtain a stamp rally point.

In this case, with a code generation apparatus 112, it is necessary to have a touch panel 31 detect a conductive pattern formed on a conductive pattern printed sheet 400 without having a the human body contact electrode 21 being touched with a finger or by the hand and without conduction to the human body. (Human body non-conduction detection)

Also, as with a code generation apparatus 111, conductive patterns can be switched by a push button switch of the main body 207 and the pattern codes can be generated in time series.

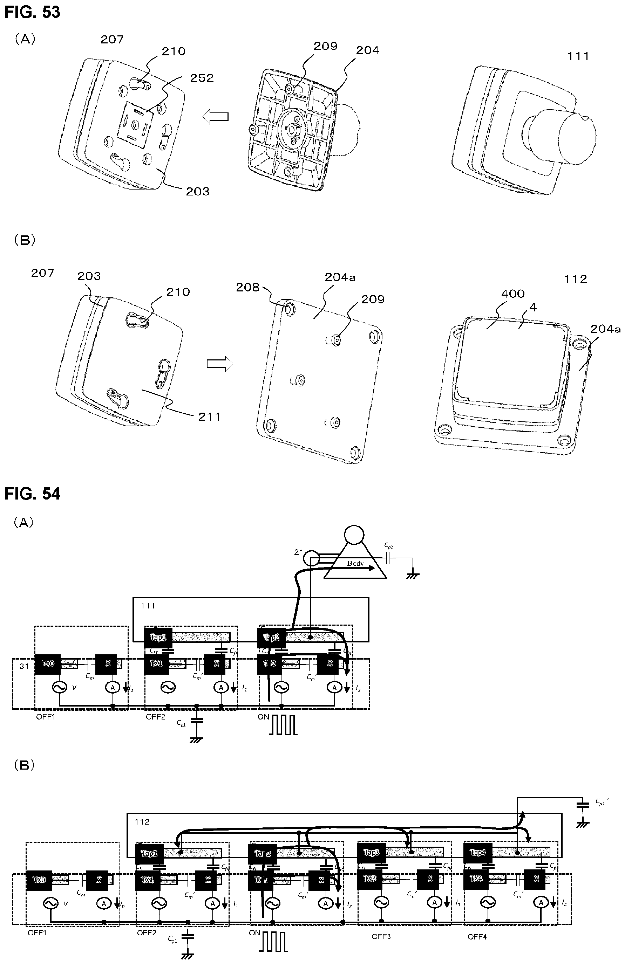

Assembly structures of the holding unit 204 and the main body 207 of the code generation apparatus 111 are shown in FIG. 53(A), and assembly structures of the holding unit 204a and the main body 207 of the code generation apparatus 112 are shown in FIG. 53(B) for comparison. The upper surface of the upper housing 203 of the main body 207 is provided with a fitting groove 210 with a part of the opening on the upper surface side being narrowed, and a thick cylindrical fitting protrusion 209 is provided on the attachment surface of the holding units 204 and 204a. By inserting a fitting protrusion 209 into a fitting groove 210 and rotating the holding unit 204 or the main body 207, the holding units 204 and 204a and the main body 207 are fixed, and code generation apparatuses 111 and 112 are formed.

FIGS. 54(A) and 54(B) show overviews of electrode 5 detection operations of a general capacitive touch panel 31. FIG. 54(A) shows a detection operation of a state where a code generation apparatus 111 is placed on a touch panel 31 with human body contact (human body conduction detection method), and FIG. 54(B) shows a detection operation of a state where a code generation apparatus 111 is placed on a touch panel 31 with no human body contact (human body non-conduction detection method).

As shown in FIG. 54(A), in general, a capacitive touch panel 31 has a large number of TXn and RXn are arranged in a mesh shape so that they intersect perpendicularly with intervals of about 4 mm to 6 mm inside the touch panel 31 in order to detect the presence/absence of a touch with a finger on the surface of the touch panel and the touch position, and a capacitance Cm for detecting a touch is provided at the intersections of TXn and RXn.

When there is a Tap due to a finger or electrodes 5 on the surface of a touch panel 31, electrostatic capacitance is formed between Tap-TXn and between Tap-RXn, and the combined capacitance Cm' between TXn-RXn becomes smaller than Cm. Voltage amplitudes (alternating current signals) of about several hundred KHz are sequentially applied to a large number of TXn and current In flowing on the RXn side is measured for the large number of RXn. The capacitance change of Cm' is measured by the change in the current value In at the intersections of TXn and RXn being Tapped and the positions (coordinates) of the Taps on the touch panel 31 are specified.

In the human body conduction detection of FIG. 54(A), a code generation apparatus 111 is placed on a touch panel 31, and when electrodes 5 having a diameter of about 8 mm printed on the conductive pattern printed sheet 400 are Tapped on any position on the touch panel 31, the capacitance Cm' is changed by the electrodes 5. However, the determination threshold value for coordinate detection by the touch panel 31 is not reached, since the change in the amount of Cm' is small and thus the change in the amount of current I1 is also small with only a single electrode 5 separated from the human body by a push button switch (not shown) built in the code generation apparatus 111, like Tap1 in FIG. 54(A).

As for the Tap2 electrode 5 connected to the human body via a push button switch (not shown) of the code generation apparatus 111, the human body contact electrode 21 has a coupling capacitance Cp2 with the human body, and the voltage amplitude (alternate current signal) of TX2 makes a small current flow also to the human body side via coupling capacitance Cp2. For this reason, the amount of change in current 12 of RX2 increases, and the determination threshold value for coordinate detection by the touch panel 31 is exceeded, and thus the positions of electrodes 5 can be detected.

On the other hand, in the human body non-conduction detection shown in FIG. 54(B), for the electrodes 5 printed on a conductive pattern printed sheet 400 used in the code generation apparatus 112, a plurality of electrodes 5 are always connected to each other via a circuit board 611 and a push button switch (not shown). In the case of FIG. 54(B), the electrodes 5 from Tap 1 to Tap 4 are connected to form a conductive pattern. Furthermore, an additional capacitance Cp2' is added to a conductive sheet 211 or a circuit board 611 described later provided at a common node to which the electrodes 5 are connected.

Considering a case where a touch panel 31 applies a voltage amplitude (alternate current signal) to TX2 at the position of Tap2 where an electrode 5 is located, with human body non-conduction detection, each electrode 5 of the other Tap1, Tap3, and Tap4 has a coupling capacitance with TXn and RXn via a common node, and the voltage amplitude (alternate current signal) of TX2 makes a small current In flow to RXn via each coupling capacitance. Furthermore, the additional capacitance Cp2' also becomes coupling capacitance, and a small current flows to the ground.

For this reason, the amount of change in the current 12 of RX2 increases, and the determination threshold value for coordinate detection by the touch panel 31 is exceeded, and thus the positions of electrodes 5 can be detected.

In addition, it is possible to have the touch panel 31 detect the positions of all of the electrodes 5 connected to the common node, since a small current can be flowed similarly to the coupling capacitance of an electrode 5 located at a place other than the intended TXn and RXn, even if TXn and RXn are sequentially switched over on a touch panel 31 to a location of another electrode 5.

In FIG. 54(B), the electrodes 5 are all arranged on different TXn and RXn, but the actual conductive patterns of a touch panel 31 and a code generation apparatus 112 are two-dimensional (planar), and thus in some cases, a plurality of electrodes 5 are arranged on a common TXn or a common RXn. In this case, the total effective capacitance may decrease compared to cases where all of the electrodes 5 are arranged on different TXn and RXn. For example, if the wiring resistances between TXn, RXn and the electrodes are ignored, when two electrodes 5 are arranged on the same RXn, the electrode-RXn capacitances CfR of the two electrodes 5 have a configuration similar to that when terminals on both sides of the combined capacitance are connected in a series to the same RXn node, and the capacitance becomes effectively invisible to RXn. Thus, in human body non-conduction detection, on a touch panel 31, a dependency between the electrode arrangement positions of a conductive pattern and electrode detection performance occurs. Normally, since TXn and RXn on the touch panel 31 are arranged in the vertical and horizontal directions on a square touch panel surface, when a plurality of conductive pattern electrodes 5 are arranged in the vertical or horizontal direction on the touch panel surface, electrode detection becomes difficult.

For this reason, with a code generation apparatus 112 of human body non-conduction detection, both the conductive pattern 81 and the conductive pattern 82 need to be conductive patterns using a plurality of electrodes 5, and more stable detection is possible by using more electrodes 5 within the number limit of multi-touches of the code recognition apparatus 3.

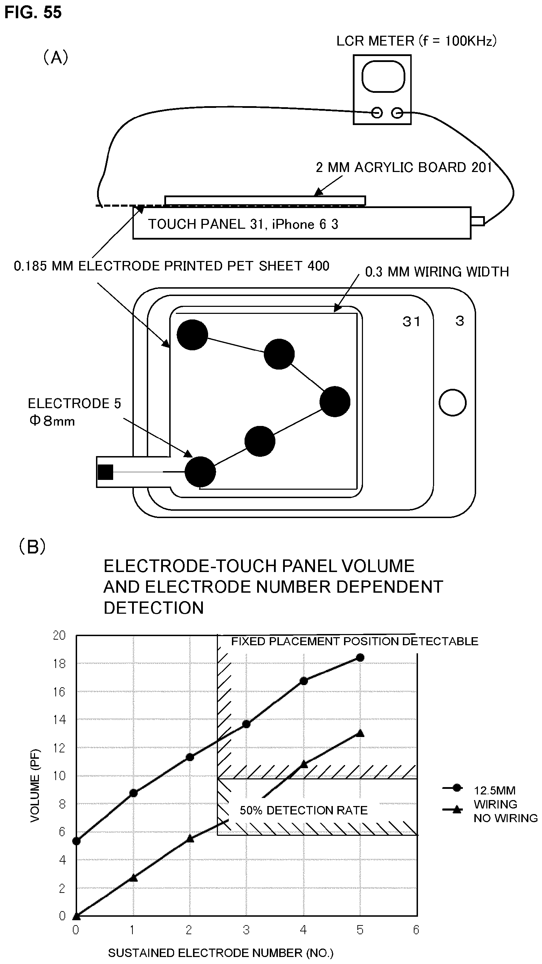

FIG. 55 shows the results of a study on the required number of electrodes for a conductive pattern of a code generation apparatus of human body non-conduction detection. FIG. 55(A) is a schematic diagram of the evaluation method, and FIG. 55(B) is a graph of the evaluation result. As shown in FIG. 55(A), the conductive pattern capacitance and the electrode detection state were evaluated by placing a sample with a conductive pattern printed sheet 400 which is a 0.185 mm thick PET resin sheet with an area of 50 mm × 50 mm bonded onto a 2 mm thick acrylic plate corresponding to the lower housing 201 on a touch panel 31 of a code recognition apparatus 3 (iPhone 6) with a surface protective glass of 0.55 mm thickness.

On the conductive pattern printed sheet 400, 1 to 5 circular electrodes 5 having a diameter of 8 mm are arranged and connected with 0.3 mm-width wiring, and furthermore, a conductive pattern in which 12.5 mm wiring for additional capacitance is wired on the outer periphery is printed with silver nano ink. Electrode capacitance (conductive pattern) is measured with an LCR meter (f = 100 KHz) between the GND of a USB connector and a terminal of a conductive pattern drawn to the outside of the touch panel 31. In an electrode detection state, an application program that displays detected coordinates by the touch panel is used, and a sample of an acrylic plate with a conductive pattern printed sheet 400 attached is placed on a touch panel 31 with an orientation as shown in the figure, and the number of electrodes detected upon rotating about 15 degrees was confirmed with 10 attempts.

FIG. 55(B) shows the electrode dependency of electrode-touch panel capacitance and detection status. Evaluation was made for 0 to 5 electrodes with and without wiring for additional capacitance. The area with hatched lines going diagonally to the upper right in the graph corresponds to when all of the sample electrodes are detected at once for the 10 trials, but the number of detections decreases due to rotation, and with wiring, 3 or more electrodes, and with no wiring, 4 or more electrodes were found to be required. Also, the area with hatched lines going diagonally to the lower right corresponds to when all of the sample electrodes are detected at once for 50% or more of the 10 trials, and a case where there are three electrodes with no additional wiring corresponded. With two electrodes or less, regardless of whether or not there is additional wiring, cases where all of the sample electrodes were detected at once was 50% or less for 10 trials. There were no specifications including rotation where all of the electrodes were detected all ten times.

Also, it was found that the wiring of 12.5 cm with 0.3 mm width could add a capacitance of 5.4 pF, and the detection performance could be slightly improved compared with when the wiring is not used. The capacitance per electrode is 2.6 pF on the average, and there are deviations depending on the electrodes (the slope of the graph is not uniform) because also included is inter-electrode wiring capacitance.

These evaluation results indicate that, for a code generation apparatus 112 with human body non-conduction detection, when the number of electrodes and additional capacitance is at the level of this evaluation sample, it is necessary to set requirements on the position and direction when the touch panel 31 is brought into contact with the bottom surface 4 of the code generation apparatus 112, and furthermore for conductive patterns, to limit the number of electrodes that can align in the vertical direction or the horizontal direction on the touch panel surface when the electrodes 5 are brought into contact. In addition, the present provision is unnecessary if the conductive pattern can be detected for any electrode arrangement by further reducing the thickness of the conductive pattern printed sheet 400, increase the capacitance of the electrodes 5, and improving detection performance by increasing the capacitance of the node to which the electrodes are connected by additional wiring or the like.

As shown in FIG. 53(B), on the upper surface of the upper housing 203 of the main body 207 of a code recognition apparatus 112, a conductive sheet 211 for additional capacitance is affixed so that the upper movable electrode unit 252 and the conductive area of the conductive sheet are connected (electrically connected). The conductive sheet 211 for additional capacitance may be of a copper film or the like which is entirely conductive, or may be a sheet on which a conductive pattern is formed by printing with conductive ink in the same manner as the conductive pattern printed sheet 400. When forming a conductive pattern, it is possible to assist touch panel electrode detection by providing wiring in a loop shape of approximately 12.5 cm and resonating with a radio wave having a WiFi frequency of 2.5 GHz. Furthermore, the conductive sheet 211 may not be necessary.

Furthermore, instead of a conductive sheet 211 for additional capacitance, a conductive pattern connected with a movable electrode unit may be formed in a pattern free area without any wiring or contacts on the front and back surfaces of the circuit board 611 shown in FIGS. 47(A) and 47(B), and may be used as additional capacitance.
Still further, in an area of a conductive pattern printed sheet 400 as shown in FIG. 48(A) where there are no electrodes or wiring, conductive patterns may be formed as wiring and be connected to the movable electrodes unit via the circuit board 611, and may be used as additional capacitance.

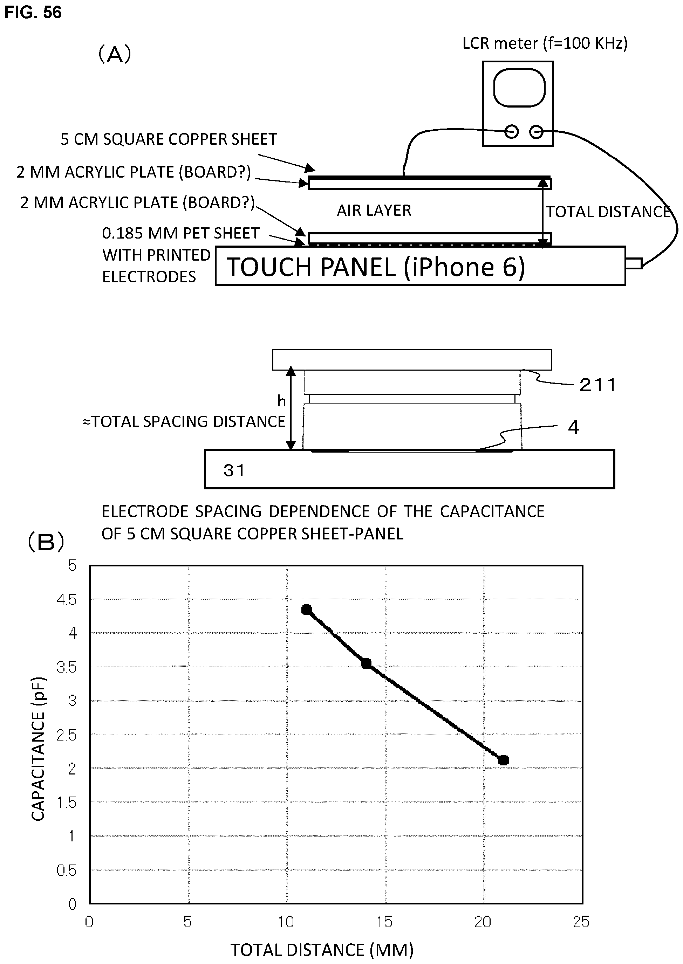

FIG. 56 shows the results of the evaluation of the additional capacitance of the conductive sheet 211 for additional capacitance of a code generation apparatus 112 with human body non-conduction detection. FIG. 56(A) is a schematic diagram of the method of evaluation, and FIG. 56(B) is a graph of the evaluation results. As shown in FIG. 56(A), the conductive pattern capacitance and the electrode detection state were evaluated by placing a sample with a conductive pattern printed sheet 400 which is a 0.185 mm thick PET resin sheet with an area of 50 mm × 50 mm bonded onto a 2 mm thick acrylic plate corresponding to the lower housing 201 on a touch panel 31 of a code recognition apparatus 3 (iPhone 6) with a surface protective glass of 0.55 mm thickness.

The capacitance was measured between the GND of the USB connector and the copper sheet with an LCR meter (f = 100 KHz).

FIG. 56(B) shows the electrode spacing dependency of the capacitance between a copper sheet and a touch panel. With a copper sheet of 50 mm × 50 mm, it is possible to add a capacitance of 4.4 pF for an electrode interval of 11 mm and 2.1 pF for an interval of 21 mm. Since the distance h from the bottom surface 4 of the code generation apparatus 112 to the conductive sheet 211 is about 20 mm, the capacitance is less than that of one electrode 5 calculated from FIG. 55(B). The additional capacitance of 5.4 pF by wiring with a line width of 0.3 mm and a wiring length of 12.5 mm on the conductive pattern printed sheet is larger by twice or more. It can be found that it is not very effective to provide a conductor at a position away from the surface of the touch panel 31 for additional capacitance.

These evaluation results indicate that, in order to add capacitance to a conductive pattern of a code generation apparatus 112, it is desirable to add capacitance in the order of the blank part of a conductive pattern printed sheet 400, the blank portion of a circuit board 611, and the conductive sheet 211 for additional capacitance.

### [Thirteenth Embodiment]

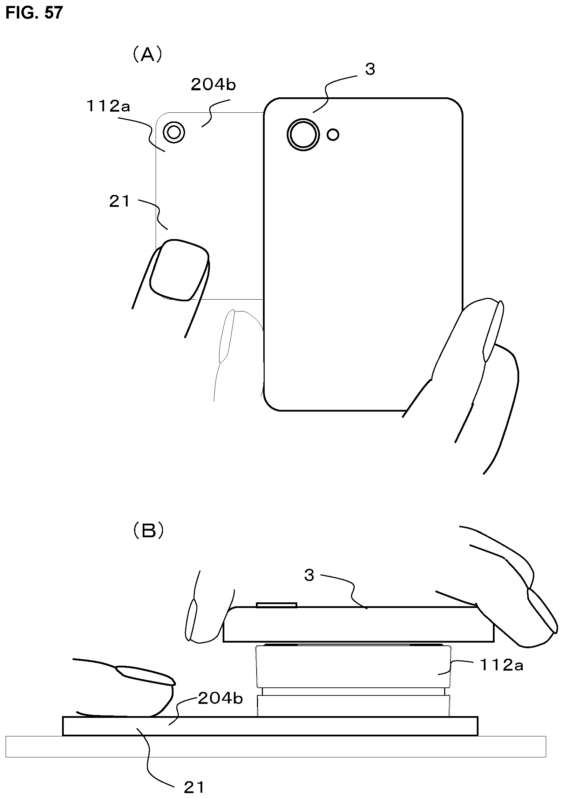

FIG. 57 is a schematic diagram showing an external form of a code generation apparatus 112a of the thirteenth embodiment. FIG. 57(A) shows a top view of when in use, and FIG. 57(B) shows a side view of when in use.

The code generation apparatus 112a is obtained by changing the holding unit 204a of the code generation apparatus 112 with human body non-conduction detection to human body conduction detection. There is no change from the code generation apparatus 112 except for the holding unit 204a and the method of use.

As shown in FIG. 57(A), the holding unit 204b of a code generation apparatus 112a has a size in which one direction is larger with respect to the plane dimensions of the main body 207 so that the holding unit 204b can be easily touched when the bottom surface 4a of a code generation apparatus 112a is making contact with a smartphone which is a code recognition apparatus 3. The holding unit 204b is of a conductive resin, a resin with the surface plated with metal, or a metal, and has conductivity.

Although not shown, as in the case of the holding unit 204a, by fitting the fitting groove 210 provided in the upper housing 203 of the main body portion 207 and the fitting protrusion 209 on the attachment surface of the holding unit 204b together and rotating, the holding unit 204b and main body 207 are fixed together, and the holding unit 204b is crimped and electrically connected to the upper movable contact unit 252 exposed in the upper housing 203 when it is fixed to the main body 207.

Thus, the holding unit 204b becomes a human body contact electrode 21, and the code generation apparatus can be regarded as a code generation apparatus of a human body conduction detection system.

Furthermore, FIG. 57 shows a smartphone which is a code recognition apparatus 3 held by the right hand and 204b sticking out on the left side under the assumption that the holding unit 204b is touched with the left hand. However, 204b may be stick out on both sides.

### [Fourteenth Embodiment]

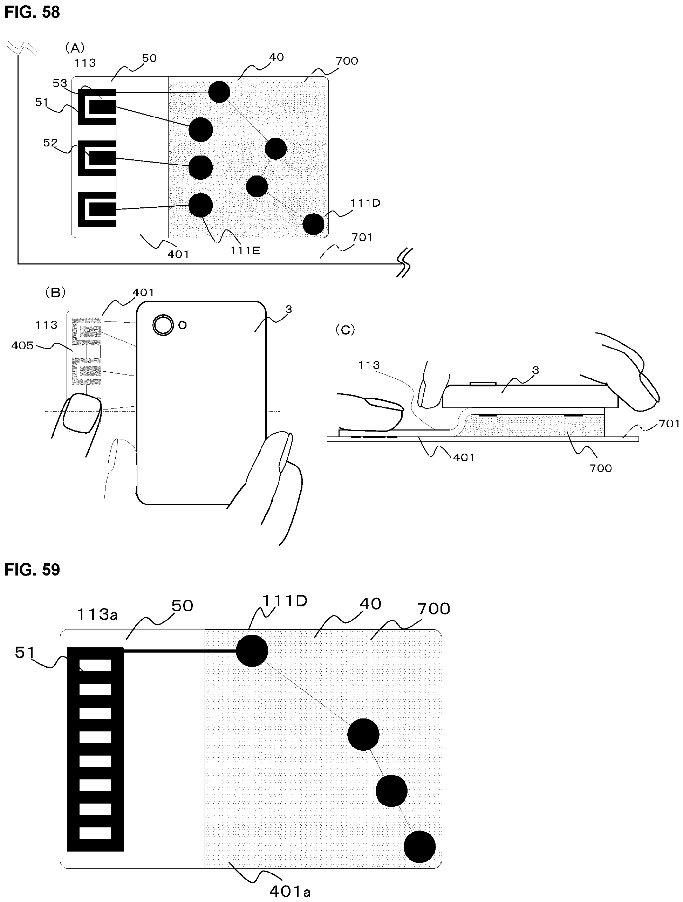

FIG. 58 is a schematic diagram showing an external form of a code generation apparatus 113 of the fourteenth embodiment. FIG. 58(A) is a perspective view viewed from the upper surface, FIG. 58(B) is a top view of when in use, and FIG. 58(C) is a sectional view viewed from the side of when in use.

The push button switch mechanism of the code generation apparatus 112a with human body conduction detection is eliminated in the code generation apparatus 113, with the aim of reducing weight and cost.

As shown in FIG. 58, the conductive pattern printed sheet 401 of the code generation apparatus 113 has the same specifications as the conductive pattern printed sheet 400 of the eleventh embodiment, but has a different planar shape.

A conductive pattern printed sheet 401 that defines the shape of a code generation apparatus 113 formed with a size where a short side is shorter than the short side of a touch panel 31 of a smartphone and a long side that can secure a length long enough on the outside of the smartphone so that a human finger can further touch it while holding the short side of the smartphone by the hand, and a contact area 40 is provided on the right side in the long side direction, a holding area 50 is provided on the lower side, and ID electrodes 111D, which are the first electrodes, are arranged with a circular shape with a diameter of about 8 mm, and adjacent ID electrodes 111D are connected together in a single stroke with single straight line wiring so that the distance is the shortest. Furthermore, the ID electrode 111D at the left end is connected to a first indicator electrode 51 provided in the holding area 50. Moreover, in the contact area 40, three information electrodes 111E, which are second electrodes having a circular shape with a diameter of about 9 mm, and each is connected independently to one each of the three second indicator electrodes 52 in the holding area 50 so that the distance is the shortest with single straight line wiring.

Four ID electrodes 111D and three information electrodes 111E are arranged in the contact area 40, and conductive patterns 85 are formed by combining the four ID electrodes 111D and one information electrode 111E to form unique pattern codes. Therefore, with a card 110B, three types of conductive patterns 85 corresponding to the information electrodes 111E can be created.

Three sets of the first and second indicator electrodes 51 and 52 are provided corresponding to the information electrodes 111E, and the three first indicator electrodes 51 are all connected by wiring.

The first indicator electrodes 51 are formed so as to surround the periphery of the second indicator electrodes 52, and the spacing 53 between the first indicator electrode 51 and the second indicator electrode 52 must be narrow enough so that when a finger is placed, both electrodes are simultaneously touched with the finger without failure, and also to prevent the coupling capacitance between a first indicator electrode and a second indicator electrode from becoming large, the spacing is set to about 1.5 mm. Furthermore, the spacing between adjacent second indicator electrodes 52 is set at a predetermined distance so that when a finger is placed, they are not touched simultaneously with the finger.

Surface 405 opposite to the surface on which the conductive pattern of the conductive pattern printed sheet 401 is printed is a graphic printing surface 405 processed so that graphics can be printed on the card. The graphic printing surface 405 is subjected to printing protection processing by PP lamination or the like for protecting the printing layer after printing, as necessary.

FIG. 58(B) is a diagram for describing a detection operation and a conductive pattern formation method. FIGS. 58(B) and 58(C) show a state where the touch panel 31 of the code recognition device 3 such as a smartphone is in contact with the holding area 50 of a code generation device 113. In practice, a conductive pattern cannot be visually recognized from the upper side of the conductive pattern printed sheet 401, but in the drawing, the conductive pattern is shown as a transparent view from above for the purpose of explanation. FIG. 58(C) is a sectional view.

As shown in FIGS. 58(B) and 58(C), when a finger is placed on one pair of the indicator electrodes 51 and 52 on the left side of the code generator 113, via a conductive pattern printed sheet 401 which is an insulator (dielectric substance), capacitance is generated between the finger surface and the indicator electrode 51, and between the finger surface and the indicator electrode 52 in the area where the finger is in contact, so that the indicator electrodes 51 and 52 and the finger surface are coupled together, and in addition to the human body contact electrode 21 shown in FIG. 54(A), capacitance between the indicator electrode and the finger surface is connected in series, and an alternate current conductive state is established, and the voltage amplitude (alternate current signal) of TX2 can make a small current flow also to the human body side via the coupling capacitance Cp2. For this reason, an ID electrode 111D connected to a first indicator electrode 51 and the one information electrode 111E connected to the second indicator electrode 52 with a finger on it are detected by the touch panel 31.

Furthermore, since the two remaining information electrodes 111E connected to the second indicator electrode without a finger on them do not generate capacitance, they do not have coupling capacitance with the human body, and the electrodes are not detected even if a voltage amplitude (alternate current signal) of TXn of the touch panel 201 gets generated.

Thus, by changing the indicator electrode on which a finger is placed with respect to the positions of the three indicator electrodes 51 and 52, three types of conductive patterns 85 in which only the coordinates of the information electrode 111E are changed can be generated.

Cushioning material 700 is adhered to the back surface of the contact area 40 of the conductive pattern printed sheet 401 with double-sided tape or adhesive glue. The cushioning material 700 is constituted of an elastic material such as a sponge having a thickness of about 10 mm, with the purpose to enable the entire contact area 40 to reliably make contact and to prevent the surface of the touch panel 31 from being damaged when a touch panel 31 of the smartphone which is a code recognition apparatus 3 is brought into contact. Furthermore, a chamfered curved surface or inclined surface is used for the boundary between the contact area 40 and the holding area 50, to prevent the sheet surface from bending with an acute angle and causing wiring between the electrodes to become disconnected when a conductive pattern printed sheet 401 is attached.

Since the code generation apparatus 113 is composed only of a conductive pattern printed sheet 401 and a cushioning material 700, it is very light and can be used by attaching the back surface with double-sided tape or adhesive glue onto a substrate 701 for attachment such as a poster made of paper for attaching to a wall.
Furthermore, the substrate 701 for attachment is required to have insulating properties so as not to affect the conductive pattern.

FIG. 59 shows a code generation apparatus 113a according to a modification example of the code generation apparatus of the fourteenth embodiment. As shown in FIG. 59, the conductive pattern printed sheet 401a is composed of only an ID electrode 111D and first indicator electrodes 51 with no information electrode 111E and no second indicator electrodes 52. A code generation apparatus 113a formed using a conductive pattern printed sheet 401a can generate only one type of conductive pattern 85, and thus can easily be operated.

Although the code generation apparatus 113 is of human body conduction detection, according to specifications, an alternate current signal is conducted via coupling capacitance between a finger and an indicator electrode with a conductive pattern printed sheet 401 interposed therebetween. For this reason, in order to secure a required amount of capacitance, an indicator electrode needs to have an area according to the thickness of the base material of a conductive pattern printed sheet.

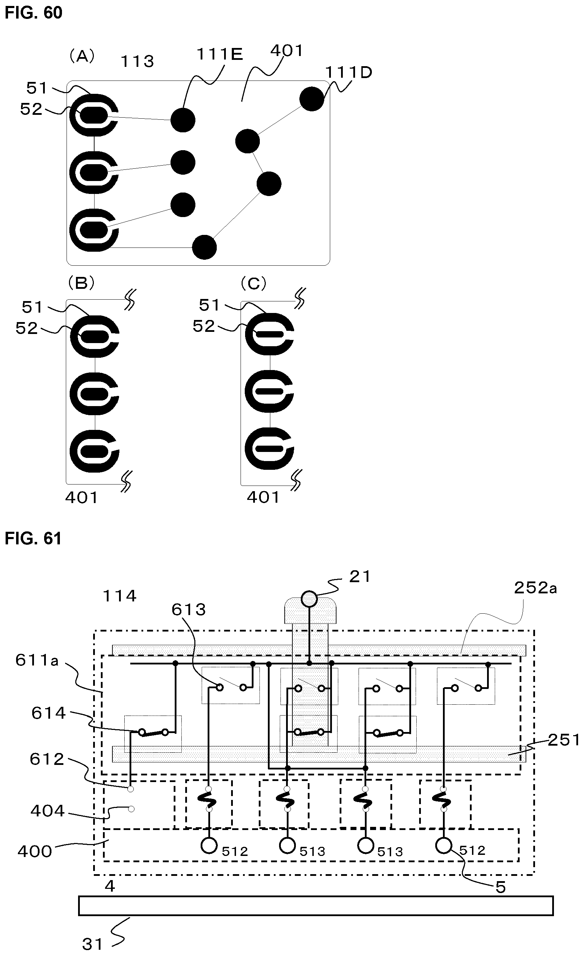

FIG. 60 and Table 5 show the results of an evaluating of the area of an indication electrode necessary for a code generation apparatus 113 for human body conduction detection. FIG. 60(A), FIG. 60(B), and FIG. 60(C) show specifications of the indicator electrodes for the evaluated conductive patterns and Table 5 is a table summarizing the evaluation results.

A sample on which a 0.3 mm thick PVC sheet is attached with double-sided tape to the front surface (printed surface) of a conductive pattern printed sheet 401 made of a 0.188 mm thick PET resin sheet with a conductive pattern of FIG. 60 printed on it with carbon ink was prepared. A surface protective glass of 0.55 mm thickness was attached to the touch panel 31 of a code recognition apparatus 3 (iPhone 6), which was placed in a cardboard case having a low relative dielectric constant, and the pairs of indicator electrodes 51 and 52 were each held with a finger one by one, and the process of bringing the back surface of the conductive pattern printed sheet 401 into contact with the surface of the touch panel 31 and releasing contact was repeated 20 times each for the three pairs for a total of 60 times, and the number of times the touch panel 31 detected the information electrodes 111E was counted. The ratio of the number of times there was detection is the detection rate, and the ratio of the number of times there was no detection is the non-detection rate.

**[Table 5]**

| No. | Indicator electrode area (sq mm) | Capacitance (pF) | Reactance (KQ) | Detection rate | Non-detection rate |
|---|---|---|---|---|---|
| A | 70 | 10 | 161 | 92% | 8% |
| B | 53 | 7 | 213 | 94% | 6% |
| B | 28 | 4 | 414 | 79% | 21% |

| | | | | | |
|---|---|---|---|---|---|
| Base material 401: 0.188 MM PET, Relative dielectric constant = 3 Alternate current frequency for reactance calculations: 100 KHz Detection rate: Rate of the number of times the information electrode 111E was detected per 60 times the base material was touched. | | | | | |

The coupling capacitance was set to a relative dielectric constant of 3, and the reactance was calculated with the alternate current frequency set to 100 KHz. Also, in consideration of the usage method of the code generation apparatus 113, the indicator electrode area, the coupling capacitance, and the reactance were converted and tabulated based on coupling capacitance values only for cases where only the front surface side of the conductive pattern printed sheet 401 of the PET resin sheet was touched with a finger.

Table. 5 shows the second indicator electrode area dependency on the detection of the information electrode 111E. It is found that the detection rate decreases under conditions where the command electrode area of (C) is 20 mm² and the reactance is 414 KΩ. For this reason, for a code generation apparatus 113 with human body contact detection by the coupling capacitance with the alternating current signal, it is necessary for the indicator electrode to have an area size to accommodate the reactance of 200 KΩ or less, and for a PET resin sheet with a thickness of 0.188 µm, an area of about 55 mm² or more is necessary.

### [Fifteenth Embodiment]

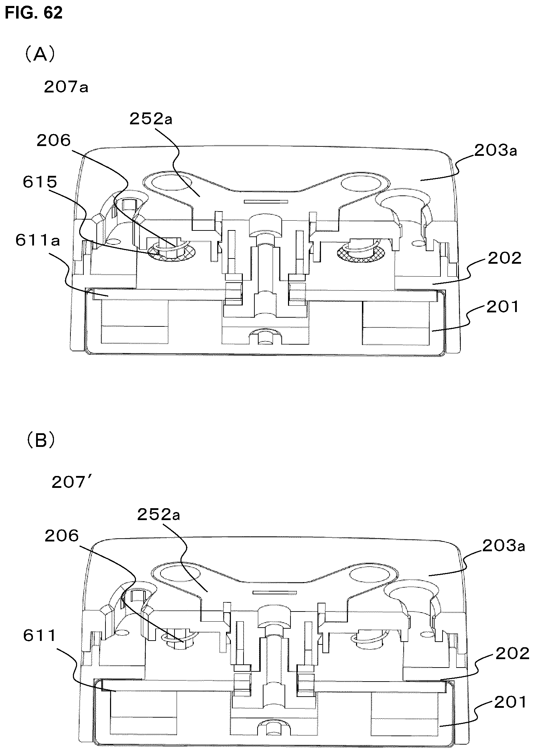

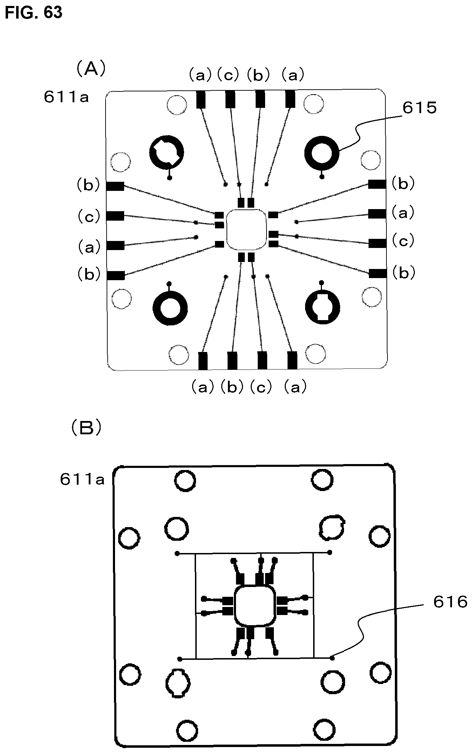

FIG. 61 is a schematic diagram of a circuit of the code generation apparatus 114 of the fifteenth embodiment. FIGS. 62(A) and 62(B) are sectional views of the main body 207a used for the code generation apparatus 114 of the fifteenth embodiment and the main body 207' where other than the circuit board 611 of the code generation apparatus 111 of the eleventh embodiment are shared with the code generation apparatus 114. FIGS. 63(A) and 63(B) show pattern diagrams of the circuit board 611a used in the code generation apparatus 114.

The specifications of a code generation apparatus 114 differ from the specifications of a code generation apparatus 111 in the states at the time of switching between the first conductive pattern 81 and the second conductive pattern 82. According to specifications, when the conductive patterns of a code generation apparatus 111 switch over, all of the electrodes 5 are once in a non-detected state, and the push button switch is that of a non-shorting type switching method, and according to specifications, when code patterns of a code generation apparatus 114 switch over, electrodes 5 detected for the first conductive pattern 81 remain in a detected state, and the push button switch is that of a shorting type switching method.

In order to make both specifications common except for the pattern of the circuit board 611, for the electrodes 5 to be detected for a first conductive pattern 81, it is necessary to connect the handle unit 222 which is a human body contact electrode 21 directly to electrodes 5 without going through contacts of the push button switch. For this reason, as shown in FIG. 62(A), a cylindrical opening for slidably inserting a supporting column 206 in the upper housing 203 is provided in the upper movable contact unit 252, and each is assigned the upper housing 203a, and the upper movable contact unit 252a. Furthermore, as shown in FIGS. 63(A) and 63(B), for the first conductive pattern 81 and the second conductive pattern 82 connected to the fixed contacts 613 and 614 of the central opening as in the circuit board 611a, all of the backside wiring patterns of specifications (c) having fixed contacts on both the front and back surfaces used for the electrodes 5 to be detected are connected, through holes 616 are provided, and spring conduction terminals 615 are provided on the circuit board opening portions of the spring units on the front side. As a result, the handle unit 222 via the upper movable contact unit 252a and the springs of metal, and the fixed contacts 613 and 614 of the specification (c) are always in conduction, and the electrodes 5 to be detected for the first conductive pattern 81 and the second conductive pattern 81 are continuously conducting directly with the handle unit 222 and can continuously be detected even during switching of the push button switch.

In addition, as shown in FIG. 62(B), if a circuit board 611 is used, even if the upper housing 203a and the upper movable contact unit 252a are used, since there is no spring conduction terminal 615, they do not get connected with the fixed contacts 613 and 614, and thus all of the electrodes 5 are once in an undetected state when the push button switch is switched.

In the specifications of a code generation apparatus 114, the number of electrodes for the first conductive pattern 81 needs to be set to 4 or less. However, according to this specification, the program for controlling is not complex, since the timing of switching from the first conductive pattern 81 to the second conductive pattern 82 may be determined in the pattern code decoding process performed on the code recognition apparatus 3 side with the first conductive pattern 81 being decoded when the number of electrodes of the first conductive pattern 81 is determined, and the second conductive pattern 82 being decoded when the number of electrodes increases for the second conductive pattern 82.

### [Sixteenth Embodiment]

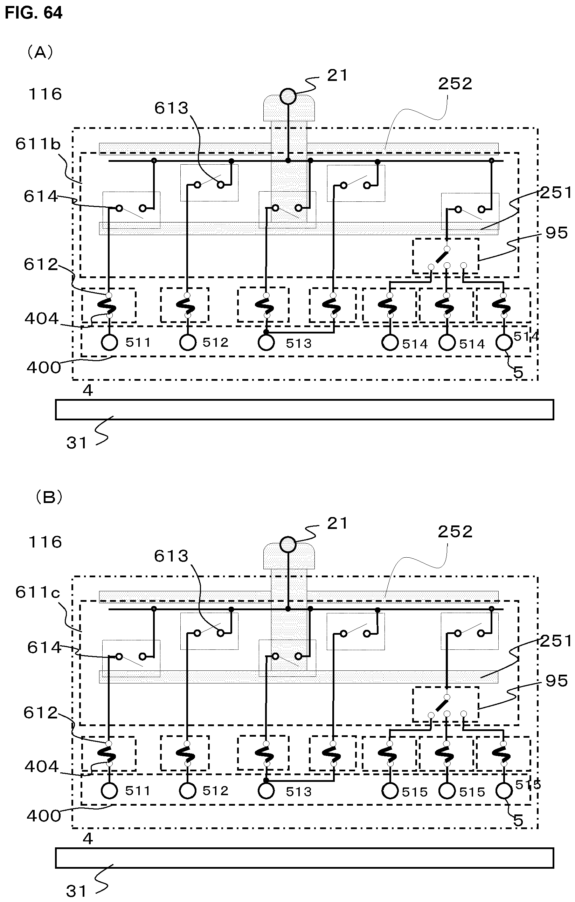

FIG. 64 shows schematic diagrams of circuits of a code generation apparatus 115 according to the sixteenth embodiment. FIG. 64(A) shows a schematic diagram of a circuit where the ID switching electrodes 514 are provided in a first conductive pattern 81, and FIG 64(B) shows a schematic diagram of a circuit where the ID switching electrodes 514 are provided in a second conductive pattern 82. The specifications of the code generation apparatus 115 differ from the specification of the code generation apparatus 111 in that an ID switchover switch 95 which is an operation unit is added, and a plurality of conductive patterns can be provided for either one of the first conductive pattern 81 or second conductive pattern 82.

In addition, descriptions of parts other than the ID switchover switch 95 and the conductive pattern switching method that are not significantly different from those of the code generation apparatuses of the eleventh embodiment and other embodiments are omitted.

In the circuit specifications of FIG. 64(A), an SP3T type (one circuit and three contacts) slide switch 95 is provided between the fixed contacts 614 on the back surface of the circuit board 611b and the electrodes 5, and electrodes 514 are connected to each contact terminal of the switch, respectively. As a result, it is possible to switch among electrodes 514 for conduction to the human body contact electrode 21 for the first conductive pattern 81 according to the position of the slide switch 95, and three different first conductive patterns 81 can be generated.

In the circuit specifications of FIG. 64(B), an SP3T type (one circuit and three contacts) slide switch 95 is provided between the fixed contacts 613 on the front surface of the circuit board 611c and the electrodes 5, and electrodes 515 are connected to each contact terminal of the switch, respectively. As a result, it is possible to switch among electrodes 515 for conduction to the human body contact electrode 21 by the second conductive pattern 82 according to the position of the slide switch 95, and three different second conductive patterns 82 can be generated.

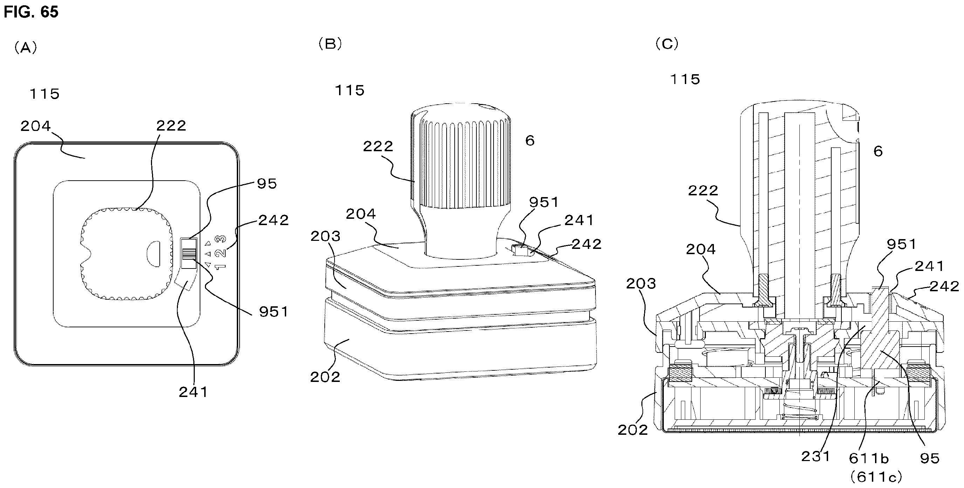

FIG. 65 is a schematic view showing an external form of a code generation apparatus 115. FIG. 65(A) is a top view, and FIG. 65(B) is a side view. FIG. 65(C) is a sectional view with scission in the vertical direction. As shown in FIGS. 65(A) to 65(C), a code generation apparatus 115 has specifications in which the shape is similar to that of a square stamp as in the case of a code generation apparatus 111 shown in the eleventh embodiment, and since the upper part of the housing 2 is a push button of a push button switch of an operation unit 6, it is possible to sequentially generate two types of patterns codes, a first conductive pattern 81 and a second conductive pattern 82, by bringing the code generation apparatus into contact with the touch panel 31 while holding the housing 2 by the hand and pressing down. In addition, a code generation apparatus 115 has specifications in which it is possible to provide a plurality of conductive patterns for either one of the first conductive pattern 81 or the second conductive pattern 82, since an ID switchover switch 95 is provided.

As shown in FIGS. 65(A) to 65(C), openings 231 and 241 are provided in the upper housing 203 and the holding unit 204, respectively, and the switch operation unit 951 for switching codes is protruded from the opening 241 enough to enable switchover operations. On the side of the opening 241 on the upper surface of the housing 2 along the direction in which the switch operation unit 951 for switching codes slides, a mark 242 corresponding to a code of a conductive pattern is provided in a part corresponding to each switching position of the slide switch. In FIG. 63(A), the marks 242 are provided as numerals and Δ marks to indicate position and are shallowly engraved on the upper surface of the holding unit 204. Furthermore, the marks 242 are not limited to these, and may be provided in convex shapes or may be formed by printing or by stickers. Still further, the marks 242 need not be numbers, and may be graphics or the like according to how the apparatus is used.

In addition to having a rectangular opening along the direction in which the switch operation unit 951 for switching codes slides, the opening 241 provided in the holding unit 204 extends in a substantially arc shape in the counterclockwise direction in regards with the center of the holding unit 204. This is because the code generation apparatus 115 is provided with a mechanism of rotating and fixing together the holding unit 204 and the upper housing 203 as shown in FIG. 53, as with the code generation apparatus 111 of the eleventh embodiment.

Furthermore, the opening 231 provided in the upper housing 203 is large enough so that the body portion of the slide switch 95 and the upper housing 203 do not come into contact with each other when the handle 222 is pressed to switch the push button switch of the operation unit 6.

In addition, the two types of circuit specifications corresponding to FIGS. 64(A) and 64(B) can be changed by simply exchanging the circuit boards 611b and 611c that differ only in the pattern wiring, and all of the parts other than the circuit boards can be used in common for both circuit specifications.

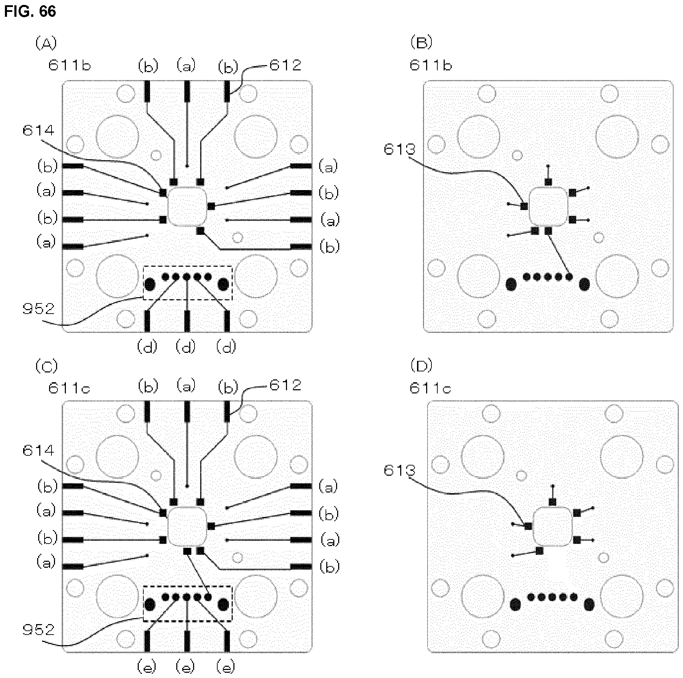

FIG. 66 shows diagrams of wiring patterns of circuit boards used in the code generation apparatus 115. FIG. 66(A) shows a wiring pattern on the front surface of a circuit board in which three types of first conductive patterns 81 having the circuit specifications shown in FIG. 64(A) are provided. FIG. 66(B) shows a wiring pattern on the back surface. FIG. 66(C) shows a wiring pattern on the front surface of a circuit board in which three types of second conductive patterns 82 having the circuit specifications shown in FIG. 64(B) are provided. FIG. 64(D) shows a wiring pattern on the back surface. The circuit board connection terminals 612 on the outer periphery of the circuit board 611b shown in FIGS. 66 (A) and (B) include terminals with lower fixed contacts 614 only on the back surface (a), and terminals with upper fixed contacts 613 only on the board surface (b), and they are alternately arranged on three sides, and flexibility of the wiring between the electrodes 5 (511, 512, 513) and the fixed contacts 613, 614 of the conductive pattern sheet described later is secured. Also on the remaining side, (d), in which lower fixed contacts 614 are provided only on the back surface via the switch terminals of the area 952 where the code switchover switch 95 is installed, are intensively arranged, and thus, the connection between the electrodes 514 and the code switchover switch 95 is facilitated, and the wiring length from the electrodes 514 to the fixed contacts 613 is minimized.

In the circuit board 611c shown in FIGS. 66(C) and 66(D), the circuit board connection terminals 612 of specifications (a) and (b) on the three outer sides are the same as those of the circuit board 611b, and on the remaining side, (e), in which upper fixed contacts 613 are provided only on the front surface via the switch terminals of the area 952 where the code switchover switch 95 is installed, are intensively arranged, and thus, the connection between the electrodes 515 and the code switchover switch 95 is facilitated, and the wiring length from the electrodes 515 to the fixed contacts 613 is minimized.

In this way, it is possible to easily change which of the first conductive pattern 81 and the second conductive pattern 82 is provided with a plurality of conductive patterns simply by changing the wiring pattern of a part of the circuit board.

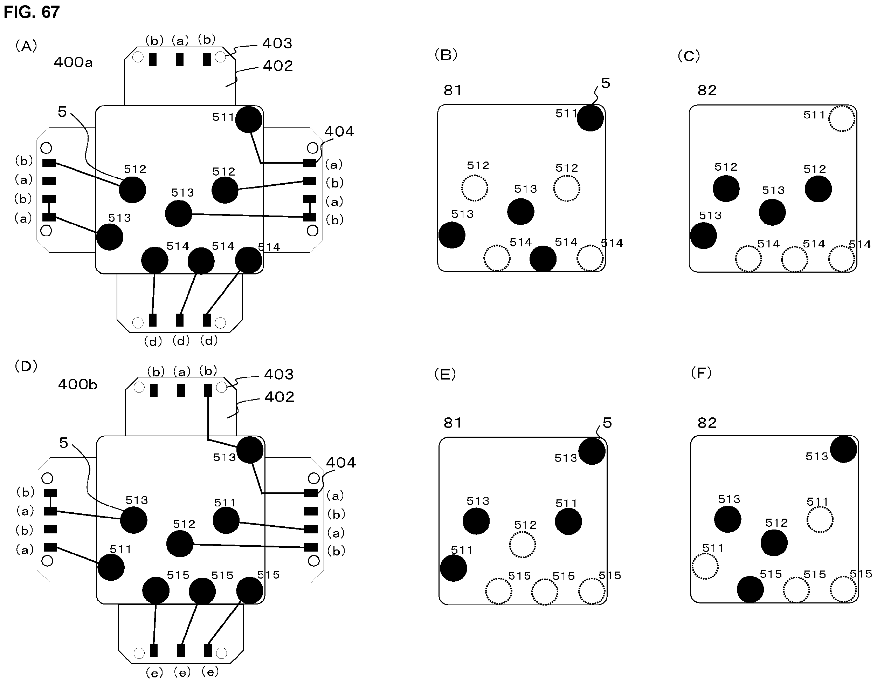

FIG. 67 shows a conductive pattern printed sheet used in a code generation apparatus 115 and a generated conductive pattern. FIG. 67(A) shows a conductive pattern printed sheet 400a corresponding to a circuit board 611b on which three types of first conductive patterns 81 are provided, FIG. 67(B) shows a schematic representation of a first conductive pattern 81 detected by a touch panel in a state where a code generation apparatus 115 having specifications of using a circuit board 611b and a conductive pattern printed sheet 400a is in contact with the touch panel (STEP 1) with the human body contact electrode 21 being touched, and FIG. 67(C) shows a schematic diagram of a second conductive pattern 82 detected by a touch panel in a state where a push button is pressed (STEP 2) for a code generation apparatus 115 with the same specifications.

Furthermore, FIG. 67(D) shows a conductive pattern printed sheet 400b corresponding to circuit board 611c, which has the same electrode 5 arrangement positions as the conductive pattern printed sheet 400a, and on which three types of second conductive patterns 82 can be provided by changing only the wiring between the electrodes 5 and the sheet connection terminal 404, and FIG. 67(E) and FIG. 67(F) schematically show a first conductive pattern 81 and a second conductive pattern 82 generated in (STEP 1) and (STEP 2), respectively, with specifications of using the circuit board 611c and the conductive pattern printed sheet 400b of FIG. 67(D).

When the push button switch of a code generation apparatus 115 formed with a conductive pattern printed sheet 400a and a circuit board 611b of FIG. 67(A) is pressed, there is a switchover from (STEP 1) to (STEP 2), and, and thus a switchover from a first conductive pattern 81 in FIG. 67(B) to a second conductive pattern 82 in FIG. 67(C).

Furthermore, the state of the first conductive pattern 81 shown in FIG. 67(B) corresponds to when the operation unit 951 for the ID switchover switch 95 of the code generation apparatus 115 is set to the center contact among the three contacts (the position "2" of mark 242 shown in FIG. 65(A)), and the center electrode among the three electrodes 514 is detected by the touch panel. When the operation unit 951 of the ID switchover switch 95 is moved to the left contact position (the position "1" of the mark 242 shown in FIG. 65(A)), the left electrode among the three electrodes 514 is detected by the touch panel, and when the operation unit 951 of the ID switchover switch 95 is moved to the right contact position (the position "3" of the mark 242 shown in FIG. 65(A)), the right electrode among the three electrodes 514 is detected by the touch panel.

Thus, three types of first conductive patterns 81 can be provided by switching the ID switchover switch 95.

Similarly, by pressing the push button switch of a code generation apparatus 115 formed with a conductive pattern printed sheet 400b and a circuit board 611c of FIG. 67(D), there is a switchover from (STEP 1) to (STEP 2), and thus a switchover from a first conductive pattern 81 in FIG. 67(E) to a second conductive pattern 82 in FIG. 67(F). The state of the second conductive pattern 82 in FIG. 67(F) corresponds to when the operation unit 951 of the ID switchover switch 95 of the code generation apparatus 115 is set to the left contact among the three contacts (the position "1" of mark 242 shown in FIG. 65(A)), and the left electrode among the three electrodes 514 is detected by the touch pane. When the operation unit 951 of the ID switchover switch 95 is moved to the center contact position (the position "2" of the mark 242 shown in FIG. 65(A)), the center electrode among the three electrodes 514 is detected by the touch panel, and when the operation unit 951 of the ID switchover switch 95 is moved to the right contact position (the position "3" of the mark 242 shown in FIG. 65(A)), the right electrode among the three electrodes 514 is detected by the touch panel.

Thus, three types of second conductive patterns 82 can be provided by switching the ID switchover switch 95.

Thus, a code generation apparatus 115 can generate three types of codes with one housing. Furthermore, since the STEP for generating three types of conductive patterns can be changed simply by changing the circuit board, the number of codes that can be issued as a whole can be doubled by simply preparing two types of circuit boards.

In addition, compared with the circuit board 611 (FIG. 47) shown in the eleventh embodiment, the circuit boards 611b and 611c are not provided with circuit board connecting terminals 612 of specification (c) dedicated for electrodes 513 to be detected by touch panel 31 for both the first conductive pattern 81 and the second conductive pattern 82.

In the specifications of the circuit boards 611b and 611c, the electrodes 513 are wired to sheet connection terminals 404 of specifications (a) and (b) of conductive pattern printed sheets 400a and 400b so that they are connected to circuit board connection terminals 612 arranged adjacent of specifications (a) and (b). Thus, the fixed contacts 613 and 614 at the center of the circuit board can be reduced, the spacing between the fixed contacts can be increased, and the coupling parasitic capacitance between the electrodes can be reduced.

In addition, depending on the arrangement coordinates of the electrodes 5, there may be cases where circuit board connection terminals 612 of specifications (a) and (b) adjacent on one side of a conductive pattern printed sheet for electrodes 513 cannot be secured. In these cases, as electrodes 513 shown at the upper right end of the conductive pattern printed sheet 400b in FIG. 67(D), it is possible to provide two lines of wiring from electrodes 513 and connect the electrodes 513 to circuit board connection terminals 612 of specifications (a) and (b) that are not adjacent to each other and are provided on different sides of the conductive pattern printed sheet.

In this case, it is preferable to have the wiring as short as possible, since the largest factor for error of the coordinates of electrodes 5 detected by a touch panel is the parasitic capacitance between the wiring corresponding to the bottom surface 4 of the conductive pattern printed sheet and the touch panel.

Needless to say, the number of conductive patterns switched by the ID switchover switch 95 is not limited to three, and may be more than or less than three. For example, the slide switch may be of a SPDT type (one circuit and two contacts), and specifications may have the configuration include two electrodes 514 or 515 which are connected and enable switching between two types of conductive patterns.

In addition, the specification in which sheet connection terminals 404 of specifications (a) and (b) of a conductive pattern printed sheet are connected without providing circuit board connection terminals 612 of specification (c) dedicated to electrodes 513 on a circuit board may also be applied to code generation apparatuses 111, 112, and 114.

Furthermore, by applying an upper housing 203 and a holding unit 204 provided with openings 231 and 241 to the main body 207 of code generation apparatuses 111, 112, and 114, and changing the wiring specifications of the circuit board and the conductive pattern printed sheet, it is also possible to use the parts of the main body 207 of the code generation apparatuses 111, 112, 114, and 115 in common.

### [Seventeenth Embodiment]

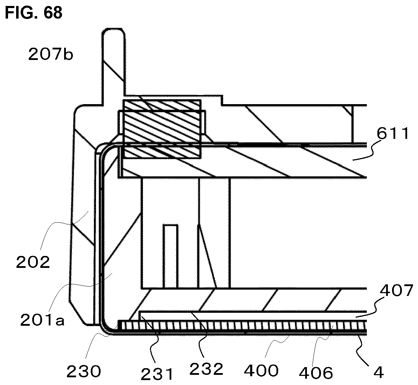

FIG. 68 shows a partial sectional view of a main body 207b of a code generation apparatus using a conductive pattern printed sheet of the seventeenth embodiment. The main body 207b is different in the structure of the bottom surface 4 from the main body 207 of code generation apparatuses using other conductive pattern printed sheets.

For example, the main body 207 of the code generation apparatus 111 is made of ABS resin, and partially of metal or the like. In addition, due of the structure of the push button switch, the material and density of the parts provided on the upper side of the bottom surface 4 are not uniform, and thus, the effective dielectric constant of the bottom surface 4 is not uniform. For this reason, when a conductive pattern printed sheet 400 is directly attached to the bottom surface portion of the lower housing 201, the characteristics of the parasitic capacitance generated due to the arrangement of electrodes 5 of conductive patterns and the wiring pattern between electrodes 5 and sheet connection terminals 404 change. Due to the non-uniform parasitic capacitance characteristics, the electrode coordinate detection error by the touch panel increases or decreases depending on the conductive pattern. For this reason, codes that cannot be decrypted are generated, and as a result, the number of codes that can be issued by code generation apparatuses 111 as a whole is reduced.

As shown in FIG. 68, the lower housing 201a used for the main body 207b is provided with two steps 230, 231 on the outer periphery of the bottom surface 4 portion,
and the entire inner side of the steps is formed with a flat concave 232 with respect to the bottom surface. Furthermore, on the inner side surface of the conductive pattern printed sheet 400, a flat resin plate 406 with plane dimensions substantially the same as the dimensions of the bottom surface 4 of the sheet, inner dimensions substantially the same as those of the step 230, and thickness substantially the same as the height of the step of the step 230 is attached.

By fitting a conductive pattern printed sheet 400 attached with a flat plate 406 inside the step 230 of the lower housing 201a, and attaching a side surface attaching unit 402 to the side surface of the lower housing 201a, it is possible to provide an air gap 407 having the same width as the step height of the step 231 between the concave 232 of the bottom surface 4 of the lower housing 201a and the flat plate 406 for the entire surface of the bottom surface 4 of the conductive pattern printed sheet 400.

Since the relative dielectric constant of the air which fills an air gap 407 is about 1 and the smallest, by providing the air gap 407, it is possible to suppress parasitic capacitance lower than when the conductive pattern printed sheet 400 is directly attached to the bottom surface of the lower housing 201, and in addition, position dependence of the bottom surface 4 is reduced and thus it can be made uniform. Thus, the error of electrode coordinates of a conductive pattern detected by a touch panel can be reduced. For this reason, the number of codes that can be issued by the code generation apparatuses 111 as a whole can be increased.

Furthermore, since the influence of the structure of the main body 207b including the lower housing 201a and the relative dielectric constant characteristics of the material on the electrode coordinates of a conductive pattern detected by a touch panel is reduced, restrictions on the structure of the main body 207b and the relative dielectric constant of the material can be alleviated.

Furthermore, since in the structure, the flat plate 406 on which a conductive pattern printed sheet 400 is attached is fitted inside the step 230 of the lower housing 201a, accuracy of the attaching position between the sheet and the lower housing is improved, and the ease of assembly is improved.

It is preferable to make the width of the flat portion between the steps 230-231 provided in the lower housing 201a as narrow as possible within a range in which the flat plate 406 can be fixed flatly, and the concave 232 as wide as possible so as not to have overlap with the electrodes 5 printed on the sheet 400. In addition, it has been experimentally confirmed that the effect of an air gap 407 can be obtained with a spacing of about 0.4 mm. Furthermore, the flat plate 406 is preferably made of a resin plate such as PVC having moderate tension and a low relative dielectric constant.

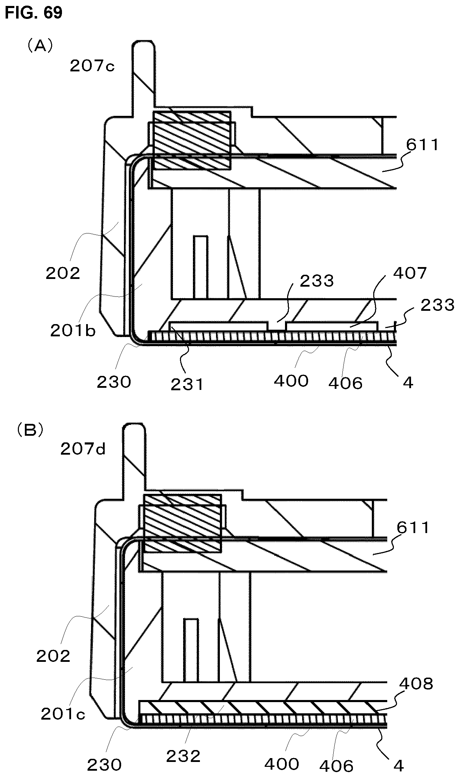

FIG. 69 shows diagrams of a modification example of the apparatus of the seventeenth embodiment. FIG. 69(A) shows a sectional view of a structure of a modification example in which supporting columns are provided in the gap portions of the lower housing. FIG. 69(B) shows a sectional view of a structure of a modification example in which an elastic sheet having a low relative dielectric constant is provided in a gap portion of the lower housing.

As shown in FIG. 69(A), the lower housing 201b is provided with supporting columns 233 having the same height as the step 231 in the region of the concave 232 provided on the bottom surface 4 at regular intervals. The supporting column 233 has a structure that supports the flat plate 406 together with the flat portion between the steps 230-231 provided on the outer periphery of the lower housing 201b, and by suppressing the unevenness of the bottom surface 4 due to the warpage of the flat plate 406 and improving flatness, the conductive pattern portion of the conductive pattern printing sheet 400 can uniformly make contact with the touch panel 31.

Since the flat plate 406 can be thinned by supporting with supporting columns 233, the influence of the flat plate 406 on the detection of electrode coordinates of conductive patterns can be reduced, and also, the increase in the thickness of the main body portion due to the width of the air gap 407 (that is, the height of the step 231) and the thickness of the flat plate 406 (that is, the height of the step 230) can be reduced.

Moreover, the supporting column 233 may be provided as a wall connected to the outer periphery of both ends opposing the concave 232 instead of with a column shape, and also, the wall may be provided with a lattice structure or a honeycomb structure. Regardless of the material of the lower housing 201b, the supporting column or wall 233 has a relative dielectric constant higher than that of the air gap 407, and thus influence of the portion on the conductive pattern is larger than that of the air gap 407. For this reason, the it is preferable for the supporting columns or walls 233 to have small widths and wide arrangement spacings so that the area in contact with the flat plate 406 is small within a range in which the flatness of the flat plate 406 and the conductive pattern portion of the conductive pattern printed sheet 400 can be secured.

Furthermore, the step 231 and the supporting column 233 of the lower housing 201b may be eliminated from the structure, and instead, structure elements of a supporting column or wall 233 may be provided on the flat plate 406 and an air gap 407 may be provided by fitting them into the concave 232 inside the step 230 of the lower housing 201b.

Still further, a large number of columns or walls 233 may be provided to ensure flatness of the bottom, and the step 230 of the lower housing 201b may be eliminated, and by having the height from the bottom of the concave portion 232 of the column or wall 233 be equal to that of the outer periphery of the lower housing 201b, the conductive pattern printing sheet 400 may be used as it is without attaching the flat plate 406 to the bottom surface of the lower housing 201b.

As shown in FIG. 69(B), as another modification example of the apparatus of the seventeenth embodiment, a low dielectric constant layer 408 is provided instead of an air gap 407 between the housing lower portion 201c and the flat plate 406. In the lower housing 201c, by forming a concave 232 on the bottom surface 4 with only the step 230, and by attaching an elastic sheet made of a material having a low relative dielectric constant and having the same planar shape as the flat plate 406 on the surface of the flat plate 406 on the lower housing 201c side, a low dielectric constant layer 408 is formed between the concave 232 inside the step 230 and the flat plate 406. As a result, the same effect as the air gap 407 can be obtained, and the influence of the structure of the main body 207d including the lower housing 201c and the relative dielectric constant characteristics of the material on the electrode coordinates of the conductive patterns detected by a touch panel may be decreased, and the number of codes that can be issued by code generation apparatuses 111 as a whole can be increased.

The elastic sheet used for the low dielectric constant layer 408 is a foamable rubber sheet such as a poron sponge sheet or a foamable CR (chloroprene) rubber sheet, or the like, and it preferably has weak elasticity.

The concave 232 of the flat plate 406 and the lower housing 201c, and the flat plate 406 are fixed by slightly reducing the size of the flat plate 406, and with the fitting portion with the side surface of the step 230 in a loose state, by attaching the bottom surface of the concave 232 and the surface opposite to the flat plate 406 of the low dielectric constant layer 408. As a result, since the variation in flatness of the concave 232 and the variation in the step height of the step 230 of the lower housing 201c can be absorbed by the elasticity of an elastic sheet of the low dielectric constant layer 408, it is not necessary to increase processing accuracy, and manufacturing can be facilitated.

Furthermore, in the configuration of the plate 406 and the low dielectric layer 408, the flat plate 406 and the low dielectric constant layer 408 are attached to the structure of the lower housing 201a in FIG. 68 or the lower housing 201b in FIG. 407 in an opposite order, in addition to an air gap 407 a low dielectric constant layer 408 may be provided between the flat plate 406 and the conductive pattern printing sheet 400. As a result, it is possible to obtain both the effect of reducing parasitic capacitance of the air gap 407 and the low dielectric constant layer 408 with the main body, and the effect of absorbing the processing variation of the lower portion of the housing by the elastic sheet of the low dielectric constant layer 408.

Needless to say, the specifications in which a step is provided in the lower housing, and an air gap 407 or a low dielectric constant layer 408 is provided between a flat plate and a conductive pattern printed sheet can be applied to code generation apparatuses 111, 112, 114, 115, and the like.

### [Eighteenth Embodiment]

### [Switchable conductive patterns and pattern code decoding method]

With a code generation apparatus 1 capable of switching a conductive pattern, in order to increase the number of codes that can be issued with all of the code generation apparatuses 1 and to facilitate decoding into pattern codes, it is necessary to provide conditions for methods of electrode arrangement each for the first conductive patterns 81 of (STEP 1) and the second conductive patterns 82 of (STEP 2), and to perform a pattern coding process with considerations of the electrode arrangement conditions. An example of switchable conductive patterns and a pattern code decoding method is shown below.

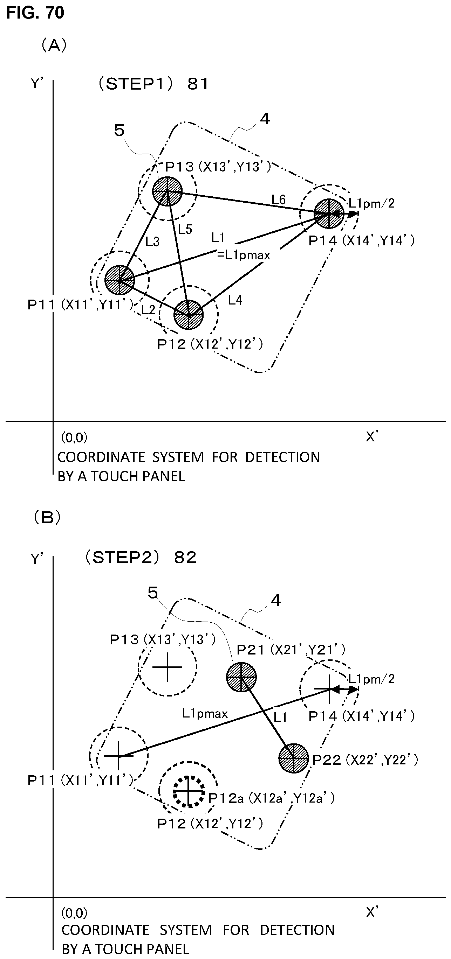

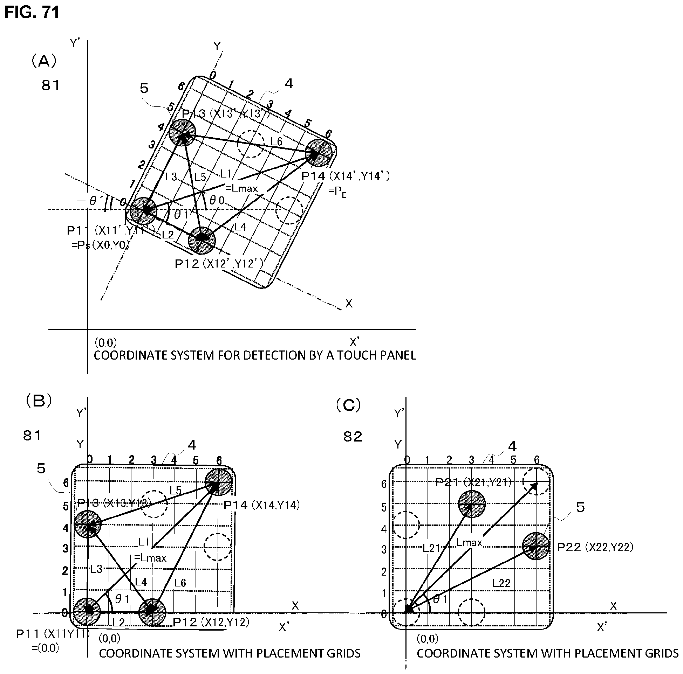

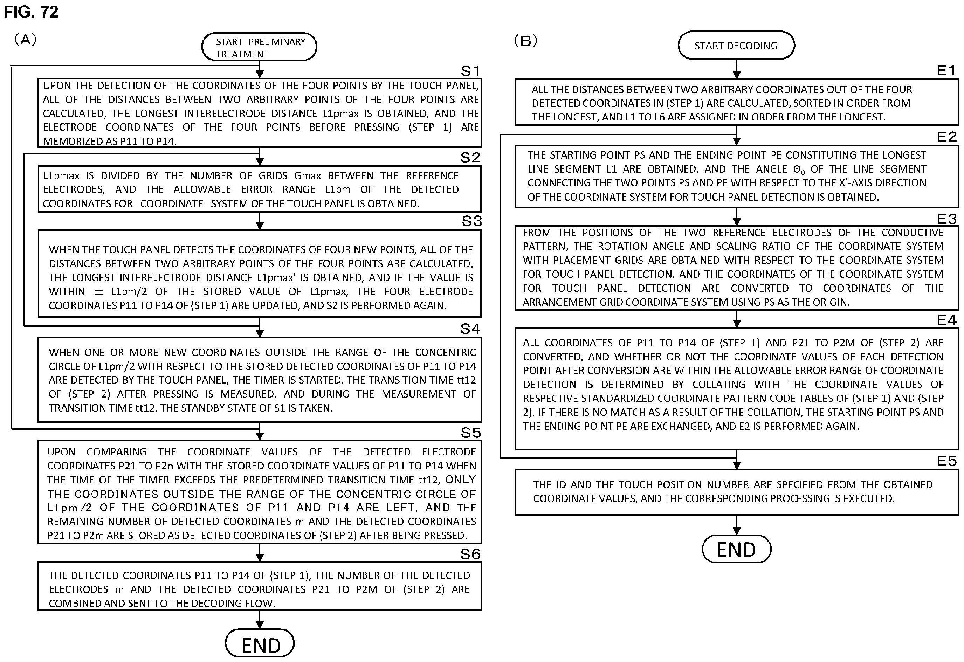

FIG. 70 shows explanatory diagrams of the determination method of (STEP1) and (STEP2) of the detected electrode coordinates for pattern coding, where FIG. 70(A) shows the state of (STEP1) and FIG. 70 (B) shows the state of (STEP2). FIG. 71 shows diagrams of a method of coordinate conversion for pattern coding, in which FIG. 71(A) shows the detection state of a touch panel of a coordinate detection system, FIG. 71(B) shows the conversion of the detected state of (STEP 1) to the electrode arrangement grid coordinate system of code generation apparatus 1, and FIG. 71(C) shows the conversion of the detected state of (STEP 2) to the electrode arrangement grid coordinate system of code generation apparatus 1. FIG. 72 is a flowchart showing an example of pattern coding processing of the code generation apparatus 1 which has an operation unit 6 and can switch between the first conductive pattern 81 and the second conductive pattern 82.

With the code generation apparatus 1, according to specifications, by pressing for example a push button switch 60 of the operation unit 6, with (STEP 1) corresponding to the state before pressing and (STEP 2) corresponding to the state after pressing, by switching the connections between the plurality of electrodes 5 provided respectively for the first conductive pattern 81 and the second conductive pattern 82, and the human body contact conductive material 21 ON or OFF, two types of codes can be generated.

### [Specifications for electrode arrangement for conductor patterns]

FIG. 71(B) shows an electrode arrangement example of the first conductive pattern 81, and FIG. 71(C) shows an electrode arrangement example of the second conductive pattern 82. An X and Y electrode arrangement grid coordinate system is provided in the bottom surface 4 area of the code generation apparatus 1 which comes into contact with the touch panel 31, and the electrodes 5 are arranged at their integer coordinate points. Thus, the arrangement distances of each electrode 5 can be easily calculated from the unit grid distance of the grid coordinate system. The unit grid distance is set based on the size of the touch panel 31 assumed to be used, the coordinate position detection accuracy of the touch panel, the size of the bottom surface 4 of the code generation apparatus 1, the size of the electrodes 5, and the like. In the case of the present embodiment, a coordinate system in which the area of the bottom surface 4 is divided from 0 to 6 for both X and Y is used.

In addition, the electrodes 5 of each conductive pattern cannot be arranged at all integer coordinate points, and for the determination of restrictions on the distance between the electrodes 5 and arrangement positions, the size of the electrodes 5 and the influence on coordinate detection by touch panel 31 of the placement of a plurality of electrodes at close coordinate positions in a conductive pattern and the like are to be considered.
For example, the minimum value for the electrode to electrode distance needs to be greater than or equal to the distance at which two electrodes 5 are not detected as one electrode by the touch panel 31.

Furthermore, in particular for projected capacitive touch panels often used in smartphones, when a plurality of electrodes are arranged in parallel to the outer frame of the touch panel, since a plurality of code generation apparatus electrodes 5 are aligned on one line of transparent electrodes for coordinate detection in the touch panel, there are cases where detection by the touch panel 31 is affected. For this reason, the number of the electrodes 5 arranged on the same line in a conductive pattern may be given a limit.

For the first conductive pattern 81, it is necessary to detect at least three electrodes 5 so that the orientation in which the code generation apparatus 1 is placed on the touch panel 31 can be specified, and in consideration of the assumed limitation of the number of multi-touches for a smartphone, a maximum number of five electrodes is preferable. Therefore, in this embodiment, the four electrodes 5 are provided for the first conductive pattern 81.

However, when the method of use has the orientation of the surface making contact with the touch panel 31 of the code generation apparatus 1 fixed, or when there are no limit on the number of multi-touches, or when tablets which detect five or more, or dedicated business apparatuses are used as the code recognition apparatus 3, the minimum number and the maximum number of electrodes are not limited to the above described numbers.

As for the first conductive pattern 81, it is preferably to provide a reference electrode to facilitate code decoding. In this embodiment, all of the first conductive patterns 81 are provided with the two electrodes at the positions (0, 0) and (6, 6) of the grid coordinate system as reference electrodes, which have the longest distance in between. As a result, the length Lmax between the reference electrodes, the angle θ1 formed by the line segment connecting the reference electrodes and the X axis of the grid coordinate system can be used for code decoding. Furthermore, the reference electrode positions are not limited to the coordinates of this embodiment, as long as the distance between the reference electrodes, and the angle formed by the line segment connecting the reference electrodes and the X axis of the grid coordinate system can be specified.

For example, in this embodiment, reference electrodes can also be provided at the two points (0, 0) and (5, 6). By making the code decoding processing algorithm correspond to other reference electrode positions, a large number of conductive patterns having different code systems can be set. If conductive patterns and code decoding processing algorithms corresponding to each of a plurality of code systems are prepared, for example, a code system using the two points (0, 0) and (6, 6) of this embodiment as reference electrodes, a code system using the two points (0, 0) and (5, 6) as reference points, and a code system using two other points as reference points and so forth, even more codes can be issued for the whole system without having to change the main body of a code generation apparatus 1.

As for the second conductive pattern 82, due to switchable feature of a code generation apparatus 1, information on the electrode arrangement coordinates of both the first conductive pattern 81 in (STEP 1) and the second conductive pattern 82 in (STEP 2) can be used for decoding, and thus reference electrodes are unnecessary. Therefore, for the second conductive pattern 82, electrodes 5 can be freely arranged at the arrangement coordinates as long as restrictions on spacing between electrodes 5 and arrangements are followed.

Also, the number of arranged electrodes can be freely arranged within the range of 1 or more to the restricted number of multi-touches. Therefore, more conductive patterns can be set for the second conductive pattern 82. According to the present embodiment, code generation apparatus 1 is configured to have one to four electrodes arranged in the second conductive pattern 82.

Furthermore, for the second conductive pattern 82, due to the switchable feature of a code generation apparatus 1, it is possible to arrange electrodes 5 of the second conductive pattern 82 at the same coordinates as those of electrodes 5 arranged in the first conductive pattern 81. For example, for a code generation apparatus 1 having a configuration in which a conductive pattern printed sheet 400 is used and the code generation apparatus 1 is capable of switching conductive patterns, if the electrodes 5 of the first and second conductive patterns 81 and 82 are arranged at the same coordinates, the number of electrodes printed on the conductive pattern printed sheet 400 is smaller than the sum of the number of electrodes used in (STEP 1) and (STEP 2), and thus the arrangement of electrodes 5 of the two types of conductive patterns is facilitated, and a large number of conductive patterns can be set.

Also, although according to the present embodiment, the code generation apparatus 1 is configured so that reference electrodes are provided in the first conductive pattern 81, and the number of the electrodes 5 is three or more, so that the orientation of the code generation apparatus 1 placed on the touch panel 31 can be specified with the first conductive pattern 81, and reference electrodes are not provided in the second conductive pattern 82, it is also possible to provide reference electrodes in the second conductive pattern 82, and have the number of the electrodes 5 be three or more, so that the orientation of the code generation apparatus 1 placed on the touch panel 31 can be specified with the second conductive pattern 82, and reference electrodes are not provided in the first conductive pattern 81. If specifications of the latter configuration are also provided separately, even more codes can be issued for the whole system without having to change the main body of a code generation apparatus 1.

Still further, it is also possible to set a group of reference electrodes by combining patterns of both the first conductive pattern 81 and the second conductive pattern 82. For example, the reference electrode at the position (0, 0) can be provided in the first conductive pattern 81, and the reference electrode at the position (6, 6) can be provided in the second conductive pattern 82, and longest distance between electrodes can be set with electrodes 5 of both the first conductive pattern 81 and the second conductive pattern 82, and by using an electrode 5 other than those used as reference electrodes for the first and second conductive patterns 81 and 82, the orientation of the code generation apparatus 1 placed on the touch panel 31 can also be specified. As a result, since the number of electrodes that can be freely arranged in both the first and second conductive patterns 81 and 82 increases, even more conductive patterns can be provided, and even more codes can be issued for the whole system.

A normalized coordinate pattern code table is created by organizing coordinate values of first conductive patterns 81 and second conductive patterns 82 created upon these specifications as normalized coordinate pattern codes for (STEP1) and (STEP2).

### [Pattern code decoding method]

With the code generation apparatus 1 capable of switching conductive patterns, according to specifications, a first conductive pattern 81 of (STEP 1) and a second conductive pattern 82 of (STEP 2) are provided, and by pressing a push button switch 60 which is the operation unit 6, the connections between the plurality of electrodes 5 provided respectively and the human body contact conductive material 21 are switched ON or OFF, and thus two types of codes can be generated.

For this reason, it is necessary to determine whether the electrode coordinate information detected by the touch panel 31 is that of the first conductive pattern 81 of (STEP 1) or the second conductive pattern 82 of (STEP 2) as a pre-stage of general code decoding processing.

Since two types of conductive patterns are provided, electrodes 5 that are not necessary for the electrode arrangements of either the conductive patterns 81 and 82 are provided on the bottom surface 4 of the code generation apparatus 1 disconnected with human body contact conductive material 21 are present on the touch panel 31 of a smartphone which is an example of a code recognition apparatus 3.

Moreover, in the touch position detection algorithm of a touch panel 31 of a smartphone 3, in order to continuously recognize a finger touch as the same touch, there are some smartphones in which there is a control system for reducing the detection sensitivity threshold value at a touch position once detected (detection threshold hysteresis control), and for some of these smartphones in which the extent of detection threshold decrease due to hysteresis control of the threshold is set to be a large, in some cases, electrodes 5 of the first conductive pattern 81 of (STEP 1) connected to the human body contact conductive material 21 may continue to be detected by the touch panel 31 in spite of being disconnected from the human body contact conductive material 21 for the second conductive pattern 82 of (STEP 2), thus causing the problem of misrecognition of the correct code of the second conductive pattern code 82.

An example of a pattern code decoding method dealing with these two problems will be described.

The electrode arrangement specification of the conductive patterns of the present embodiment complies with the following four conditions. (1) Four electrodes 5 including two reference electrodes are used for the first conductive pattern 81. (2) One to four electrodes 5 are used for the second conductive pattern 82. (3) In the electrode arrangement of the second conductive pattern 82, electrodes are not arranged at electrode arrangement positions of the first conductive pattern 81. (4) The values of distance between the electrodes of the second conductive pattern 82 are set to be smaller than the distance of Lmax between the reference electrodes.

FIG. 72(A) shows a pre-processing flow for detected coordinate determination, and FIGS. 70(A) and 70(B) show examples of electrode detection states in (STEP 1) and (STEP 2) in regards with the touch panel coordinate system. As shown in FIG. 72(A), when the code generation apparatus is placed on the touch panel 31, (STEP 1) is attained, and the touch panel 31 detects the coordinates of four points in the state of S1. Based on the detected coordinates, all of the distances between two of the four points are calculated by the code recognition apparatus, and not only is the longest interelectrode distance Llpmax obtained but also the electrode coordinates of the four points before pressing (STEP1), P11 to P14, are stored.

Next, in the state of S2, Llpmax is divided by the number of electrode arrangement grids between the reference electrodes (6 in this embodiment) to obtain the detected coordinate allowable error range length Llpm of the coordinate system on the touch panel. FIG. 70(A) shows an example in which the touch panel detects the four points P11 to P14 in (STEP1), the distance between the detected coordinates of P11 and P14 is L1pmax, the longest, and the inside of the concentric circles indicated by broken lines having the radius of L1pm/2 at each detected position indicates the allowable error range of the detected coordinate.

In addition, when the touch panel further detects four new coordinates in the state of S2, the state becomes S3, and all of the distances between two of the four points are calculated and the longest interelectrode distance of L1pmax' is obtained, and if the value is in the range of ± Llpm /2 with respect to the stored L1pmax, the electrode coordinates of P11 to P14 of the four points of (STEP1) are updated, and S2 is performed again.

Next, as shown in FIG. 72(A), when one or more coordinates outside of the range of the concentric circle L1pm/2 of the coordinates are newly confirmed and detected by the touch panel with respect to the stored detected coordinates of P11 to P14, the state becomes S4, a timer is started, and the transition time tt12 after the code generation apparatus is pressed (STEP2) is measured. During the transition time tt12 measurement, the system is in waiting in the state of S1.

When the predetermined transition time tt12 has passed, the state becomes S5, the coordinate values of the detected electrode coordinates of P21 to P2n at that time are compared with the stored coordinate information of P11 to P14, and leaving out only the coordinates outside the range of the concentric circle L1pm/2 of the coordinates, the number of remaining detected electrodes m and detected coordinates P21 to P2m are stored as detected coordinates after pressing (STEP2).

FIG. 70(B) shows an example in which detected electrode coordinates of P21, P22, and P12a are obtained (STEP2) after the elapsed time of tt12 from the starting of the timer, and since P21 and P22 are outside the range of the concentric circles of L1pm/2 of the stored detected coordinates of P11 to P14, they are stored as the detected electrode coordinates of the second conductive pattern 82 of (STEP2). Since P12a is determined to be within the range of the concentric circle of L1pm/2 of the stored detected coordinates of P12, it is determined to be a remaining detected electrode 5 of the first conductive pattern 81 due to the influence of the hysteresis control of the detection threshold and is deleted from the detected electrode coordinates of the second conductive pattern 82.

When the detected electrode coordinates of the second conductive pattern 82 are obtained, the state becomes S6, and the detected coordinates P11 to P14 of (STEP 1) and the number of detected electrodes m and the detected coordinates P21 to P2m of (STEP 2) are combined, sent to the decryption flow, and the pre-processing ends.

Next, when the detected coordinate information of (STEP 1) and (STEP 2) are ready, the code decoding flow is executed. FIG. 72(B) shows a code decoding flow for detected coordinate determination, and FIG. 71(A) shows an electrode detection state of (STEP 1) in the touch panel coordinate system, and FIGS. 71(B) and 71(C) show examples of the electrode detection states of (STEP1) and (STEP2) after conversion to the arrangement grid coordinate systems.

As shown in FIG. 72(B), first, all of the distances between two of the four detected coordinates detected in (STEP 1) are calculated, sorted from the longest order, and assigned L1 to L6 in order from the longest. Next, the starting point PS and the end point PE constituting the longest line segment L1 are obtained, and the angle θ0 of the line segment connecting the two points PS and PE with respect to the X'-axis direction of the coordinate detection system of the touch panel is obtained. (States E1 and E2).

FIG. 71(A) shows an example where, the electrode coordinates of the four points from P11 to P14 are detected in (STEP1), the distances between each two electrodes are obtained, the longest line segment L1 corresponds to P11-P14, and with PS as P11 and PE as P14, the angle with respect with the X' axis is θ0.

Here, since the angle θ1 of the line segment connecting with the reference electrodes P11 and P14 with respect to the X axis of the arrangement grid coordinates is known, the rotation angle θ' of the arrangement grid coordinate system with respect to the touch panel coordinate detection system can be obtained by subtracting θ1 from θ0. Also, similarly, since the length of the line segment connecting the reference electrodes P11 and P14 is also known, by taking the ratio with the longest line segment L1, the enlargement/reduction ratio of the arrangement grid coordinate system with respect to the touch panel coordinate detection system can be determined.

From these pieces of information, the coordinates are converted into those of the arrangement grid coordinate system for electrode arrangement by rotating the coordinate values on the touch panel by -θ' and applying enlargement/reduction ratios with PS as the origin. FIG. 71(B) shows an example in a case where the touch panel detected coordinate P11 is converted to PS from the arrangement grid coordinates of the P11 reference electrode of the conductive pattern 81, and converting P11 to P14 of (STEP 1) into corresponding points of the arrangement grid coordinate system. FIG. 71(C) shows an example where P21 to P22 of (STEP2) are converted to corresponding points the arrangement grid coordinate system.

All of the detected coordinates of (STEP 1) and (STEP 2) are coordinate-converted, and whether or not the coordinate values of the respective detection points after conversion are within the range of the detected coordinate allowable error is determined by collation with coordinate values of each normalized coordinate pattern code table. If there is no match as a result of the collation, the starting point PS and the end point PE are exchanged, and the process is executed again from the state E2. (States E3 and E4 in FIG. 72(B))

By specifying each ID code of (STEP1) and (STEP2) from the obtained coordinate values, specifying ID codes as those of a code generation apparatus by combining them, and executing corresponding processings, code decoding processing is completed. (States E3 and E4 in FIG. 72(B))

Also, according to specifications of this embodiment, although the code generation apparatus 1 is configured so that the code can be recognized regardless of the angle of placement when the code generation apparatus 1 is brought into contact with the touch panel 31, it is possible to execute processings according to the rotation angle upon code generation apparatus 1 making contact with the touch panel 31 by using the rotation angle between the detected coordinate system of the touch panel 31 obtained in the process of the code decoding processing and the arrangement grid coordinate system. With a single code generation apparatus 1, for example, it is also possible to execute four different processings corresponding to the four states of rotation angles of 0, 90, 180, 270 degrees of the code decoding process, corresponding to each of the four sides of the substantially square bottom surface shape of the code generation apparatus 1 with respect to one side of the touch panel 31.

Furthermore, the pre-processing flow part shown in FIG. 72(A) of the pattern code decoding processing can be provided as an application program or a web browser program for a smartphone which is a code recognition apparatus 3, and the code decoding flow part shown in FIG. 72(B) can be executed on a server, the pre-processed electrode coordinate detection information can be transmitted to the server by telecommunication from the smartphone, and the ID code decoded on the server can be sent back to the smartphone. As a result, it is possible to improve the confidentiality of the code decoding processing method and the normalized coordinate pattern code table.

The conductive pattern specifications and the pattern code decoding methods of the present embodiment are not limited to those described, and it is needless to say that as long as it is possible to determine whether or not pattern codes created based on the conductive pattern specifications and subjected to decoding processing match with those of the pattern code table, the code decoding processing may be performed in any manner.

### [Nineteenth Embodiment]

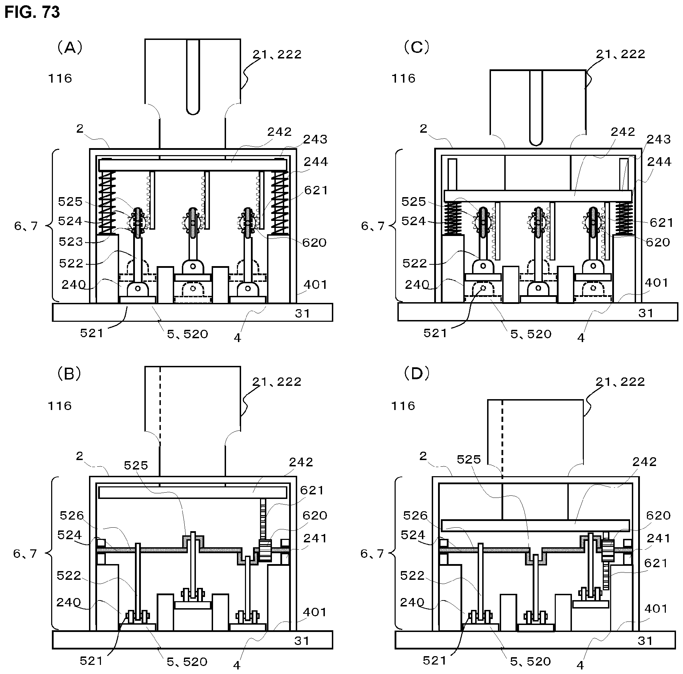

FIG. 73 are schematic diagrams of sectional views in the vertical direction of the code generation apparatus 116 of the nineteenth embodiment. FIG. 73(A) shows a sectional view with scission parallel with the front side in a state before pressing of the code generation apparatus 116, FIG. 73(B) shows a sectional view with scission parallel with the side of the same state as FIG. 73(A), FIG. 73(C) shows a sectional view with scission parallel with the front side in a pressed state, FIG. 73(D) shows a sectional view with scission parallel with the side of the same state as FIG. 73(C). As shown in FIG. 73, the code generation apparatus 116 has a specification which enables a plurality of conductive patterns to be selectively generated by a rack and pinion mechanism provided in the operation unit 6 where electrodes 5 with piston structures slide vertically by pressing the handle unit 222 of the housing 2 to switch between making contact with a touch a panel 31 and releasing contact.

Also, the descriptions of the parts other than the main body portion, the operation unit 6 and the setting unit 7 that are not significantly different from those of code generation apparatuses of other embodiments are omitted.

As shown in FIGS. 73(A) and 73(B), the code generation apparatus 116 has a shape similar to that of a square stamp, and the bottom surface 4 is covered with a colored resin sheet or a thin plate 410 thin enough not to significantly reduce the capacitance of the electrodes 5.

On the upper side of the sheet 410, piston parts 520 forming the electrodes 5 are attached to one end portion of the connecting rods 522 with allowable rotation by pins 521.

Furthermore, shaft bearing holes 523 having a C-shaped opening on the side surface of the longer direction of the rods are provided at the other end of the connecting rod 522, and are attached to the crankshaft 524 in a detachable manner with allowable rotation.

The bottom surface 4 of the housing 2 is provided with cylinder parts 240 that have substantially the same shape as those of electrodes 5 and are provided with a cylindrically shaped opening that enable the piston parts 520 to slide in the vertical direction. The cylinder parts 240 are evenly arranged with enough spacing to disable the detection of two adjacent electrodes 5 as a single electrode even if they are in contact with the touch panel 31 at the same time.

Crankshafts 524 are provided with a shaft arm 525 that moves a piston part 520 vertically via a connecting rod 522 as the shafts rotates. The shaft arms 525 are set to have lengths long enough so that the electrodes 5 which are the bottom surfaces of the piston parts 520 are at the same vertical positions as the bottom surface 4 of the housing 2 when the piston parts 520 are at the lowest point, and the electrodes 5 rise to positions sufficiently away from the surface so they are not detected by the touch panel 31 when the piston arms 520 are at their highest points.

Furthermore, it is possible to have the crankshafts 524 not to be provided with the shaft arms 525, and the connecting rods 522 are directly attached to the shaft parts 526 of the crankshafts 524. In this case, the lengths of the connecting rods 522 are set so that the electrodes 5 which are the bottom surfaces of the piston parts 520 are at the same vertical position as the bottom surface 4 of the housing 2 regardless of the rotation of the shafts.

Both ends of the shaft part 526 of a crankshaft 524 are attached to a shaft bearing 241 inside the side surface of the housing 2 with allowable rotation, and a pinion gear 620 is fixed to the shaft part 526. Also, a rack 621 is fixed from the sliding plate 242 fixed to the handle unit 222 so as to mesh with the pinion gear 620 of the crankshaft 524, and the crankshaft 524 and the handle 222 are dynamically connected by the rack and pinion mechanism.

In the structure, sliding guide columns 243 are provided at the four corners of the housing 2, and there is sliding through the through holes provided at the end of the sliding plate 242. A spring 244 is wound around the sliding guide column 243 and is sandwiched between the bottom end portion of the sliding guide column 243 and the sliding plate 242 and is fixed to be expandable. Except when the handle 222 is pressed, the sliding plate 242 is pushed up to the upper end of the housing 2 by the spring 244.

From the handle 222 to the sliding plate 242, rack 621, pinion gear 620, crankshaft 524, shaft arm 525, connecting rod 522, pin 521, piston part 520 and electrodes 5, all are of metal, of a conductive resin, of a resin with surface plating treatment or the like, and are parts with conductivity. The handle 222 and electrodes 5 which are the human body contact conductive material 21 are electrically connected.

The setting unit 7 comprises a shaft arm 525 provided on the crankshaft 524 and a piston part 520 that can be attached and detached.

It is possible to switch the number of electrodes to be detected and arrangement coordinates for the electrodes 5 depending on whether or not the piston parts 520 which are electrodes 5 are installed in the cylinder parts 240 provided on the bottom surface 4 of the housing 2. Furthermore, it is possible to change conductive patterns before and after pressing by changing between the states of making contact and releasing contact at the pressing position of the handle 222 by the orientation of the shaft arm 525 provided on the crankshaft 524 at a position corresponding to the piston part 520 of the electrodes 5 and the positional relationship between the pinion gear 620 and the rack 621.

As shown in FIGS. 73(C) and 73(D), when the handle 222 is pressed down, the crankshaft 524 rotates 180 degrees, and while the crank arm 525 is facing down and up, and the electrodes 5 are making contact and releasing contact with the touch panel 31, respectively, in FIGS. 73(A) and 73(B), the crank arm 525 is facing up and down, and the electrode 5 are releasing contact and making contact with the touch panel 31, respectively, in FIGS. 73(C) and 73(D). Furthermore, electrodes 5 without a crank arm 525 and having a connecting rod 522 attached to a shaft parts 526 are always making contact before and after the handle 222 is pressed down.

By the rack and pinion mechanism and the piston mechanism, it is possible to switch between making contact and releasing contact for the electrodes 5 with respect to the touch panel 31 before and after the handle unit 222 is pressed, and thus conductive patterns can be switched.

Furthermore, since electrodes 5 that are not electrically connected to the human body contact conductive material 21 when conductive patterns are switched are physically separated from the touch panel 31, the capacitance of the touch panel 31 does not change, and thus more stable code recognition is possible.

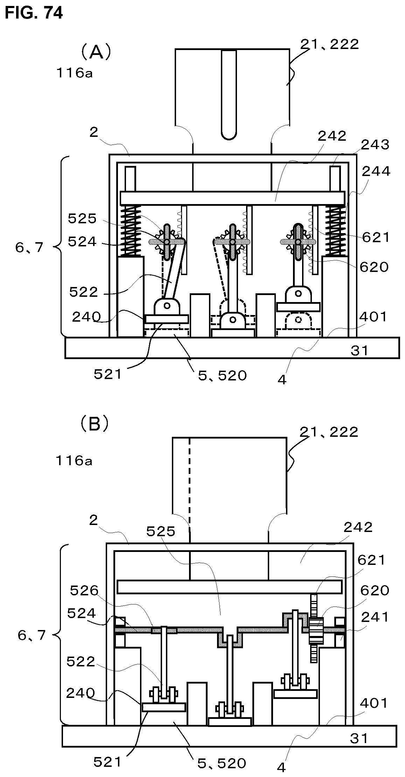

FIGS. 74(A) and 74(B) are schematic diagrams of sectional views in the vertical direction of a code generation apparatus 116a which is a modification example of the apparatus of the nineteenth embodiment. FIG. 74(A) is a schematic diagram of a sectional view of the code generation apparatus 116a in a state before pressing with scission parallel with the front side, and FIG. 74(B) is a schematic diagram of a sectional view with scission parallel with the side of the same state as FIG. 74(A).

As shown in FIGS. 74(A) and 74(B), the code generation apparatus 116a differs from the code generation apparatus 116 in that the directions for extending the shaft arm 525 of the crankshaft 524 are provided for every 90 degrees.

By having the directions in which the shaft arm 525 of the crankshaft 524 extends to be in units of 90 degrees and associating the positional relationship between the pinion gear 620 and the rack 621, it is possible to set four types of conductive patterns according to the amount of pressing of the handle 222. Thus, four types of codes can be issued by a single code generation apparatus.

Furthermore, it is possible to issue more conductive patterns by finely dividing the directions in which the shaft arm 525 extends.

### [Twentieth Embodiment]

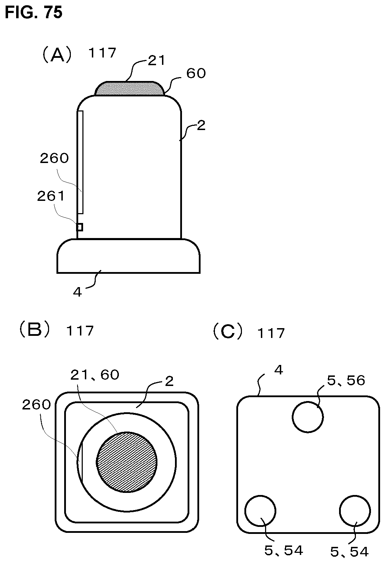

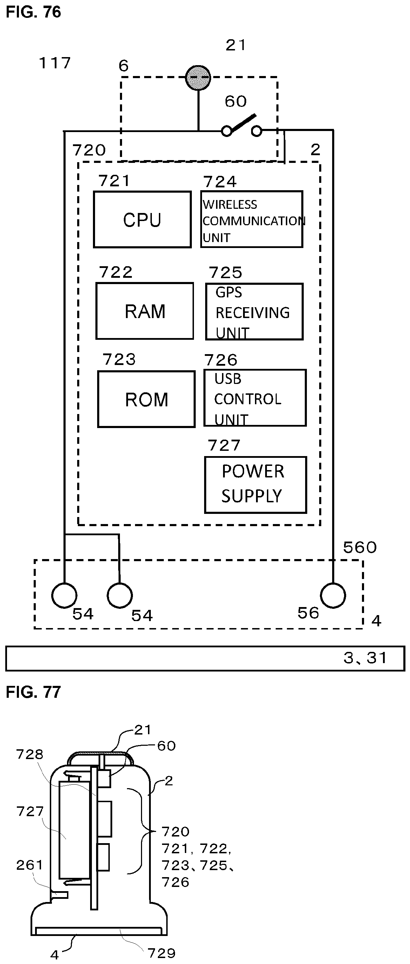

FIG. 75(A) is a schematic diagram of a side view showing an example of an external form of a code generation apparatus 117, FIG. 75(B) is a schematic diagram of a top view, and FIG. 75(C) is a schematic diagram of a bottom view. FIG. 76 is a schematic diagram of a configuration of a code generation apparatus 117. FIG. 77 is a schematic diagram of a sectional view of ae side of a code generation apparatus 117 with scission in the vertical direction. The code generation apparatus 117 transmits and receives pattern codes and many other kinds of information by one-to-one communication with a smartphone triggered by having the touch panel 31 of a smartphone which is a code recognition apparatus 3 detect electrodes 5 upon the use of a push button switch.

As shown in FIGS. 75(A) and 75(B), the code generation apparatus 117 has a shape similar to that of a square stamp, the upper part of the housing 2 is a push button switch 60, the push button has conductivity, and it is used as a human body contact conductive material 21. In addition, a battery case door 260 which is opened and closed when a battery is replaced and a USB connector 261 are provided on the side surface. Moreover, as shown in FIG. 75(C), a plurality of adjacent electrodes 5 are arranged on the bottom surface 4 with enough spacing to disable detection of adjacent electrodes 5 as a single electrode even if the adjacent electrodes 5 are making contact with the touch panel 31 at the same time. In the figure, electrodes 5 are shown, but actually the bottom surface 4 is covered with a sheet of colored resin or a thin plate 410 thin enough so that the capacitance of the electrodes 5 is not significantly reduced.

The three electrode arrangement of the electrodes 54 and 56 is an arrangement which can be distinguished as a code pattern from others. Furthermore, for example, when human fingers in a form such as a right triangle touch a touch panel 31, it is preferable to have an arrangement where easy touching of the same form is difficult to accomplish. Furthermore, by increasing the number of electrodes provided in the electrode area 560 to 4 or 5, it may be made difficult for human fingers to easily touch the touch panel 31 with reproduction of the same shape.

As shown in FIGS. 76 and 77, the code generation apparatus 117 includes an electrode area 560 having electrodes 5 on the bottom surface 4, a control unit 720 installed on a PCB circuit board 728 in the housing 2, and an operation unit 6 of the push button switch 60.

The electrode area 560 is provided with two electrodes 54 that are directly connected to the human body contact conductive material 21, and is further provided with one trigger electrode 56 which is connected to a human body contact conductive material 21 via the push button switch 60.

In the housing 2, there is a control unit 720 installed on a PCB circuit board 728. As an information processing apparatus, the control unit 720 includes a CPU (Central Processing Unit) 721, internal memories RAM (Random Access Memory) 722 and ROM (Read Only memory) 723, a wireless communication unit 724, a GPS (Global Positioning System) receiving unit 725, a USB (Universal Serial Bus) control unit 726, and a power supply unit 727. Furthermore, the operation unit 6 is provided with a push button switch 60 as one with a human body contact conductive material 21. The components other than the power supply unit 727 and the operation unit 6 may be configured with one semiconductor device or with a combination of a plurality of semiconductor devices.

The CPU 721, RAM 722, and ROM 722 constitute an information processing apparatus, and when the push button switch 60 is turned ON by pressing, the power is turned ON, necessary data is read from the ROM 722, and corresponding processing is performed. The ROM 723 stores an ID number corresponding to each of the code generation apparatuses 117, information to be transmitted to a smartphone when the push button switch 60 is pressed, and the like. The wireless communication unit 724 uses a wireless device such as WiFi or Bluetooth (registered trademark) which can serve to construct a wireless LAN (local area network). The GPS receiving unit 725 obtains positional information of the place where the code generation apparatus 117 is located. The USB control unit 726 controls USB connection with another apparatuses (not shown) when program update, data input/output, charging, or the like of the code generation apparatus 117 is performed. Furthermore, the USB control unit 726 may not be necessary. The power supply unit 727 supplies power to the control unit 720, and may be either a dry battery or a rechargeable battery as long as it can supply power that meets the specifications of the circuits and devices installed on the control unit 720. If a rechargeable battery is used, it may be chargeable via the USB connector 261.

A code recognition apparatus 3 is installed with an application program for recognizing a code generation apparatus 117 from detected coordinates when a touch panel 31 detects electrodes 5 of the code generation apparatus 117, and also for constructing a wireless LAN

The operations and processings of a code generation apparatus based on this embodiment will be described. (1) When the code generation apparatus 117 is brought into contact with a touch panel 31 of a code recognition apparatus 3 and a human finger touches a human body contact conductive material 21, two reference electrodes 54 are detected by the touch panel 31. (2) Furthermore, when a push button switch 60 is pressed, a human body contact conductive material 21 and trigger electrodes 56 are electrically connected, and detected by the touch panel 31. (3) The code generation apparatus 117 further activates the control unit 720 and sends a connection request for establishing a wireless LAN by the information processing apparatus to the code recognition apparatus 3 within a predetermined amount of time.
(4) When three detected coordinates are obtained, the code recognition apparatus 3 analyzes the detected coordinates and determines whether or not they are the three information trigger points with an application program. If they are the information trigger points, a wireless LAN is activated and connection is accepted, and the apparatus that requested connection within the predetermined amount of time is determined to be the relevant code generation apparatus 117 and is connected.
(5) When the code generation apparatus 117 and the code recognition apparatus 3 are connected by the wireless LAN, the code generation apparatus 117 sends the ID number written in the ROM 723 by the information processing apparatus to the code recognition apparatus 3. The code recognition apparatus 3 checks the received ID number to determine whether the connection is correct. If the connection is correct, other necessary information is exchanged.

The detected electrode coordinates of the touch panel 31 are used as a communication activation trigger, and ID numbers and other kinds of information can be exchanged in large numbers by performing communication. Since the ID number is written in the ROM, the required number can be easily created.

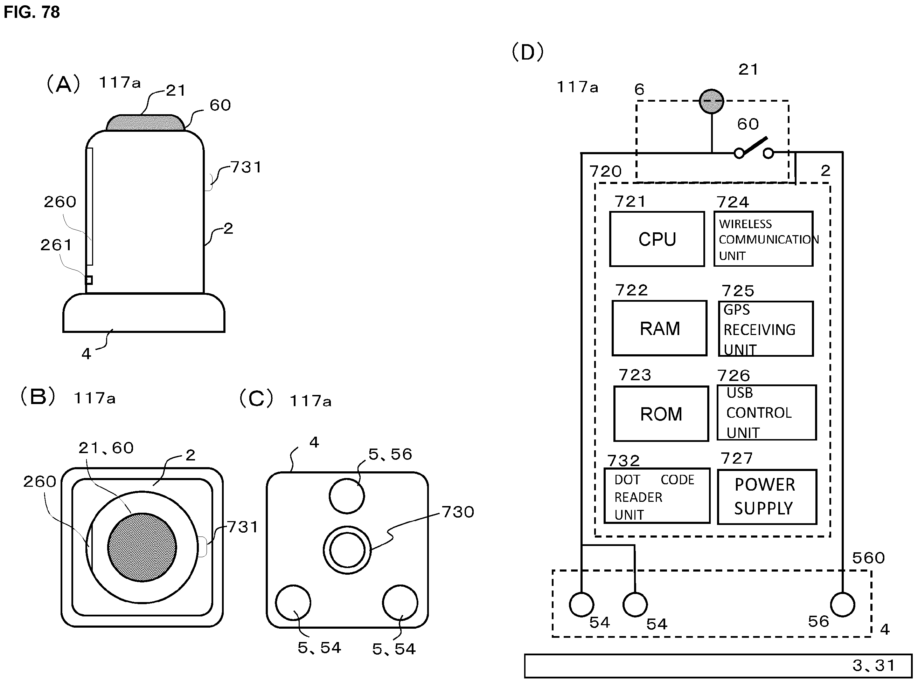

FIG. 78(A) is a schematic diagram of a side view showing an example of an external form of a code generation apparatus 117a, which is a modification example of a code generation apparatus 117 of the twentieth embodiment. FIG. 78(B) is a schematic diagram of a top view, and FIG. 78(C) is a schematic diagram of a bottom view, and FIG. 78(D) is a schematic diagram of a configuration.

As shown in FIGS. 78(C) and 78(D), the code generation apparatus 117a is a code generation apparatus 117 provided with a dot code reader 730 on the bottom surface 4 and a dot code reader 732 on the controller 720. There is an opening on the sheet or thin plate 410 provided on the bottom surface 4 at the part where the dot code reading apparatus 730 is.

As shown in FIG. 78(A), when a dot code reading switch 731 is provided on a side surface of the housing 2 and the dot code reading switch 731 is turned ON, a dot code displayed on a touch panel 31 or some other medium is read and is stored in a RAM 722 or a ROM 723 of a control unit 720.

By providing a dot code reading apparatus 730, not only is information input to the ROM 723 in advance but also other kinds of information embedded in a dot code, separately, can be transmitted using a code generation apparatus 117a to a smartphone which is a code recognition apparatus 3.

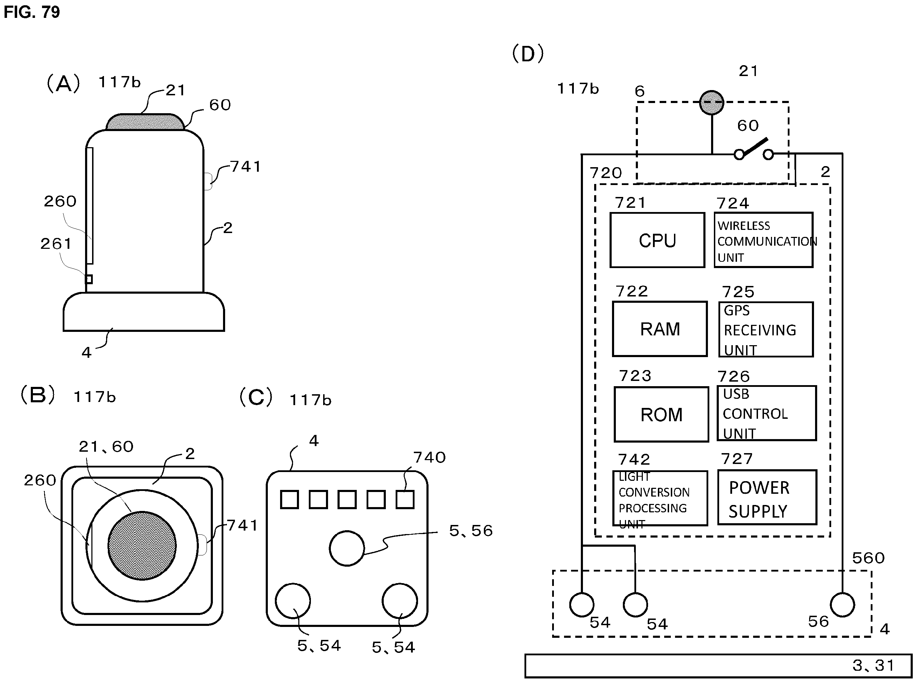

FIG. 79(A) is a schematic diagram of a side view showing an example of an external form of a code generation apparatus 117b, which is a modification example of a code generation apparatus 117 of the twentieth embodiment, FIG. 79(B) is a schematic diagram of a top view, FIG. 79(C) is a schematic diagram of a bottom view, and FIG. 79(D) is a schematic diagram of a configuration.

As shown in FIGS. 79(C) and 79(D), a code generation apparatus 117b is a code generation apparatus 117 provided with a photodiode 740 on the bottom surface 4 and a light conversion processor 742 on the controller 720. There is an opening on the sheet or thin plate 410 provided on the bottom surface 4 where the photodiode 740 is. Furthermore, instead of a wireless communication unit 724, an optical conversion processing unit 742 may be provided.

As shown in FIG. 79(A), by a providing a receiving switch 741 on the side surface of the housing 2, and the receiving switch 741 is turned ON, an optical code displayed on the touch panel 31 is read, and the light conversion processing unit 742 of the control unit 720 performs code conversion processing and the data is stored in the RAM 722 or the ROM 723.

Furthermore, when a light conversion processing unit 742 is provided instead of a wireless communication unit 724, by bringing the code generation apparatus 117b into contact with a touch panel 31 and pressing the push button switch 60, the electrode coordinate information is recognized and checked by the code recognition apparatus 3. If the ID is correct, the light intensity of the touch panel 31 in the area corresponding to the photodiode 740 of the code generation apparatus 117b can be changed for issuing optical data patterns for ID confirmation, the photodiode 740 of the code generation apparatus 117b can receive light, and the light conversion processing unit 742 can confirm that the ID has been confirmed.

By providing a photodiode 740, a code generation apparatus 117b can receive information from the smartphone which is a code recognition apparatus 3 without using wireless communication.

The functions of the control unit 720 provided in the code generation apparatuses 117, 117a, and 117b can be used in combination, and furthermore, unnecessary functions can be omitted. Needless to say, the method of providing a control unit 720 provided in the code generation apparatuses 117, 117a, and 117b can also be applied to code generation apparatuses of other embodiments.

### [Twenty-first Embodiment]

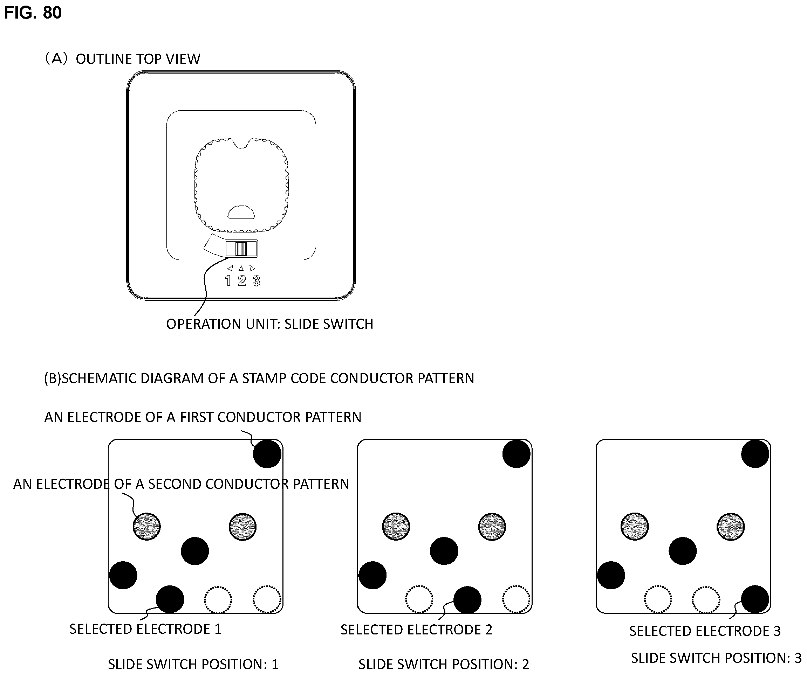

Next, various systems using the code generation apparatus will be described with reference to FIGS 80 to 89.

### (Company ID/stamp code authentication system)

FIG. 80 shows an embodiment of a setting of an operation unit of an electronic stamp which is one type of a code generation apparatus. A code specification of a multi-code stamp in which a plurality of stamp codes can set by a slide switch is shown. In the present embodiment, although the electronic stamp issues stamp codes by a slide switch, it may have any shape and form regardless of the type of the stamp or the slide switch.

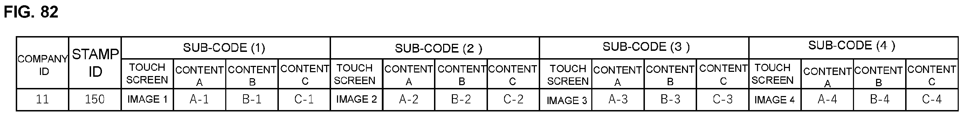

The slide switch which is the operation unit in FIG. 80A can be switched to slide switch positions "1," "2," and "3." As shown in FIG. 80B, with the slide switch position "1" the selective electrode 1 is electrically connected, with the slide switch position "2" the selective electrode 2 is electrically connected, with the slide switch position "3" the selective electrode 3 is electrically connected, and thus a first conductive pattern is formed. As shown in this practical example, among the first conductive patterns, a stamp ID: 150 is shown for a conductive pattern that does not include any selective electrodes. Here, when any one of the selective electrodes is electrically connected, for the selective electrode 1 stamp code: 1501, for the selective electrode 2 stamp code: 1502, and for the selective electrode 3 stamp code: 1503 is assigned. As shown in FIG. 82, stamp codes each including selective electrodes 1, 2, and 3 correspond to A, B, and C, respectively.

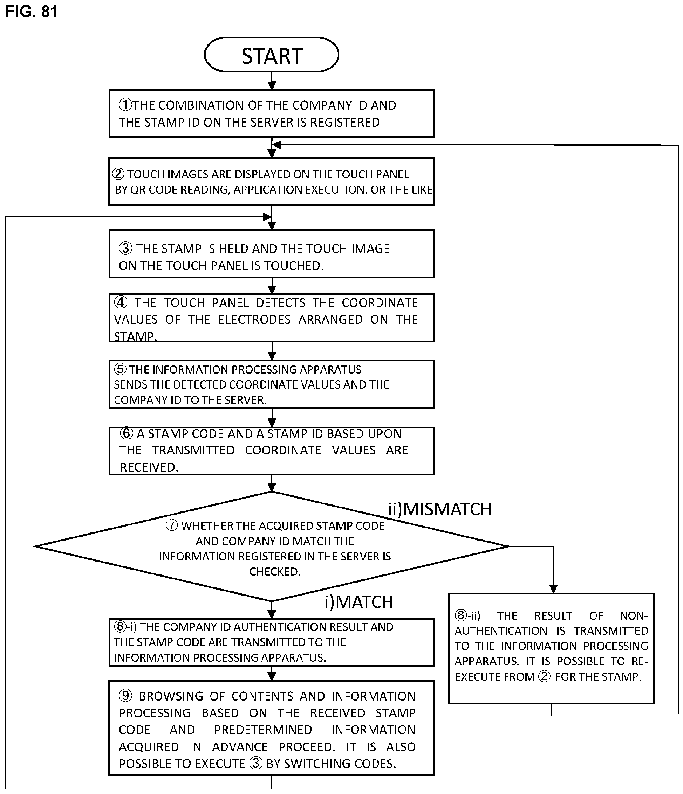

When a user uses an electronic stamp, it is desirable to construct a stamp ID authentication system in order to maintain confidentiality in performing charging, obtaining usage logs, and analyzing stamp codes issued by the electronic stamp. The flow of an authentication system is shown in FIG. 81.
(1) First, the company ID of the company under contract and one or more stamp IDs used by the company are registered in the authentication server. A company ID-stamp ID table may be created. Although not shown, the plurality of stamp codes that can be issued with a multi-code stamp may be registered in the authentication server instead of a stamp ID. Of course, both the stamp IDs and the stamp codes may be registered.
(2) Next, when a predetermined processing such as reading a QR code or executing an application is performed by an information processing apparatus, a touch image that guides stamping of the electronic stamp is displayed on the touch panel.
(3) Next, the user holds and stamps an electronic stamp on the touch image displayed on the touch panel.
(4) Next, the touch panel on which the electronic stamp is pressed detects the coordinate positions (coordinate values) of a predetermined number of electrodes from the detected capacitance.
(5) Next, the information processing apparatus (including software) connected to the touch panel transmits at least the coordinate values and the company ID to the authentication server. Here, although not shown, the information processing apparatus may have a function of recognizing a stamp code from the coordinate values by pattern analysis and acquiring a stamp ID from the stamp code. Note that the information processing apparatus may have a function of only recognizing the stamp code and the function of acquiring a stamp ID from the stamp code may be in the authentication server. As a result, it is possible to keep confidential which stamp code corresponds to which stamp ID.
(6) Next, the authentication server recognizes the stamp code by pattern analysis from the received coordinate values of the electrodes, and acquires a stamp ID corresponding to the stamp code. Note that if the electronic stamp does not have a multi-code issuing function, there is one stamp code for each stamp, and the stamp code and the stamp ID correspond. When the stamp code is recognized from the coordinate values by pattern analysis and the stamp ID is acquired from the stamp code in procedure (5), the authentication server may receive both the stamp code and the stamp ID, or may acquire only the stamp code and the authentication server may transmit the stamp ID corresponding to the stamp code.
(7) Next, the authentication server collates the acquired stamp ID or stamp code along with the company ID with the registered codes.
(8) When the acquired stamp code agrees with the pre-registered stamp code, the authentication server transmits the stamp code to the information processing apparatus (including software) to complete the authentication. If not verified, the authentication server transmits a code indicating error to the information processing apparatus (including software) and there is no authentication. In the case of non-authentication, since an electronic stamp with an unregistered stamp code is used, it is necessary to re-execute from process (2) for the electronic stamp.
(9) Based upon the authenticated stamp code, the information processing apparatus (including software) executes access to contents such as WEB sites and various information processings.

Note that in process (1), a predetermined number of stamp codes corresponding to the stamp ID may be registered in the place of the stamp ID. In that case, the predetermined number of stamp codes registered together with the company ID are collated in process (5). The stamp ID authentication system can record the history of authenticated company IDs and stamp codes with time, and this can be utilized for measuring the effects of electronic stamps and for marketing research. If linked with a GPS device built into an information processing apparatus such as a smartphone, the history can be recorded together with the areas of use. In a stamp rally that uses an electronic stamp, if the location information of the electronic stamp is registered on the authentication server and the location information is included in the transmission information from the smartphone, even if the number of stamp IDs is limited, the stamp can be reliably identified by the stamp ID and the position information. In addition, a similar system can be provided for stamps, coupons, and point granting/erasing at stores. Furthermore, if it is found that a stamp is used with improbable position information, it can be acknowledged that the stamp is a counterfeit or a stolen item. Also, when an electronic stamp is given to each user, a stamp ID is recorded on each user's smartphone, and the smartphone ID and the stamp ID are registered on the authentication server. If an electronic stamp is stamped on a touch panel (including those of a smartphone or a tablet) installed at a predetermined location registered in the authentication server in advance, from the authentication server connected to the touch panel, it is also possible to send a history of stamp stamping on the authenticated user's smartphone and provide corresponding services.

For performing various charging by using electronic stamps, high security can be ensured by using PIN code input and passwords together with stamp code authentication. For PIN code and password input, if the application has a function to detect the rotation angle of the stamp, by placing a mark such as ▲ in the positive direction of the stamp, the order of the placement directions for stamp placements can be set as a password. A code generation apparatus of the present invention has a touch panel detect physical quantities and acquire multiple pieces of coordinate information, and an information processing apparatus built in or connected to the touch panel analyzes a pattern from the multiple pieces of coordinate information, and not only does it acknowledge the code generated from the code generation apparatus, it also calculates the orientation of the pattern, that is, the orientation of the code generation apparatus at the same time. Therefore, the stamp code and the orientation of the stamp can be recognized regardless of the orientation the stamp is placed on the touch panel. The accuracy is within ± several degrees, and even in consideration of human operability, up to a total of 8 directions (vertical, horizontal, and diagonal directions) can be reliably recognized. Thus, using the number of combinations including the order of the angles set with the eight directions θ₁ to θ₈ with the following rotation angle ranges, PIN codes or passwords can be set. The upward direction (0 degrees): range of 337.5 degrees < θ₁ ≦ 22.5 degrees, oblique upper right direction (45 degrees): range of 22.5 degrees < θ₂ ≦ 67.5 degrees, right direction (90 degrees): range of 67.5 degrees < θ₃ ≦ 112.5 degrees, oblique lower right direction (135 degrees): range of 112.5 degrees < θ₄ ≦ 157.5 degrees, downward direction (180 degrees): range of range of 157.5 degrees < θ₅ ≦ 202.5 degrees, diagonally lower left direction (225 degrees): range of 202.5 degrees < θ₆ ≦ 247.5 degrees, left direction (270 degrees): range of 247.5 degrees < θ₇ ≦ 292.5 degrees, diagonally upper left direction (315 degrees): range of 292.5 degrees < θ₈ ≦ 8 of 331 degrees. When inputting a PIN code or password, the stamp orientation may be changed in a predetermined order while maintaining touching or replacing each time. In order to make the operation smooth, first, the stamp may be placed in the upward direction, and then the direction may be changed for inputting the password.

### (Content download with a browser)

The user photographs a QR code (registered with a URL including at least the company ID) printed on a poster, a flyer, or the like of stores and facilities that provide services using electronic stamps with a QR code reader (including the camera) provided in (or connected to) an information processing apparatus such as a smartphone, a tablet, or a PC. Then, the user reads the URL analyzed by a means of analysis of a smartphone or the like, accesses the URL with a browser, and downloads content data including HTML, JavaScript (JS), and predetermined data (including company ID). When content display or the like is executed, an electronic stamp touching screen is displayed on a display (touch panel) such as that of a smartphone. When the store side or the facility side sets a multi-stamp code for the electronic stamp (an electronic stamp that does not have a multi-stamp code function does not require special settings), and the electronic stamp is stamped, the touch panel detects the coordinate values of a predetermined number of electrodes, JS transmits at least the coordinate values and the company ID to the stamp ID authentication system of the authentication server, and receives the results of the stamp code analyzed from the coordinate values and the company ID authentication results by the authentication server. The information processing apparatus may have a function of recognizing a stamp code from the coordinate values by pattern analysis and acquiring a stamp ID from the stamp code. In that case, the authentication server may be set to receive the stamp code and the stamp ID. Thereafter, processing based on the stamp code is executed. Note that if the HTML or JS is acquired by downloading with a general-purpose browser, since the HTML or JS temporarily stored in the information processing apparatus can be analyzed and the URL or the like corresponding to images, video data, and contents can be acquired, these contents can spread to third parties. To provide contents only to those who can enjoy the service, it is necessary to develop a dedicated browser (app) with a QR code reading function, download, install, and use the dedicated browser according to the following procedure, and create a mechanism in which the URL of the connection site is concealed and content data cannot be stored. Note that by downloading and installing the application, a smartphone ID can be acquired, and push communication (email or information distribution to a smartphone user) is possible.
(1) Use a general-purpose browser to read the QR code for electronic stamps and download and install a dedicated browser.
(2) A dedicated browser is used to read the QR code for the electronic stamp, to acquire the corresponding URL, to download confidential HTML, JS, and predetermined data (including company ID and the like), and to acquire or stream contents.

### (Application development using SDK (Software Development Kit))

If priority is given to real-time performances such as games, or if you do not want to go through an authentication server, an authentication system may be provided as an SDK and may be incorporated into an application or JS, to perform stamp code analysis of the coordinate values detected by the touch panel, and acquire and authenticate the stamp ID. In that case, an SDK in which a stamp ID (or stamp code) under contract along with a company ID is registered may be provided. As a result, an electronic stamp having a stamp code of a company not under contract cannot be used and security can be ensured.

### (Setting of subcodes (dedicated arguments))

Even with a single stamp code, it is possible to download different contents by adding a subcode (dedicated argument) to the URL registered in a QR code and changing the URL according to the combination of the company ID and each subcode. As a result, it is possible to realize multiple types of electronic stamps having the same stamp ID (an electronic stamp having a multi-stamp code function possesses a predetermined number of stamp codes, and in this embodiment, there are three types, A, B, and C). QR codes corresponding to these multiple types of electronic stamps registered with URLs including at least company IDs and subcodes are provided to users. Note that the company ID and subcodes may be included in the data area of the QR code.

### (Content creation with subcode setting by a content generator)

Furthermore, in the present invention, by using a content generator (CMS: content management system) that automatically creates electronic stamp contents, and by setting touch screen images (may also be videos) settings or by setting (for stamps that do not have the multi-stamp code function, only setting of the stamp ID) a multi-stamp code function capable of setting a multiple number of stamp codes with the operation unit, it is possible to make settings for content viewing and operations when an electronic stamp is stamped on a touch screen for each subcode. Note that although the above-mentioned operation unit has been described with respect to the setting of the multi-stamp code function, when stamping a stamp, the electrodes detected by the touch panel change, and depending on the combination, a large number of stamp IDs exceeding 1 million and stamp codes can be issued. However, with one stamp, the multi-stamp code function of the above-mentioned operation unit is limited to the generation of several types (in this embodiment, there are three types, A, B, and C) of stamp codes.

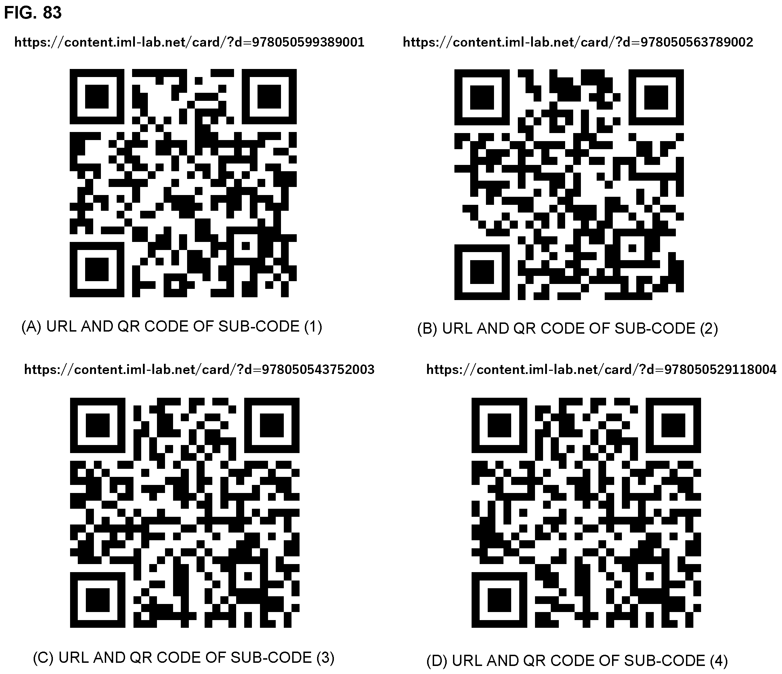

The user inputs a file name, URL, or execution software name in an interface screen as shown in FIG. 82. In the figure, the company ID is set to 11, and one stamp code (150) is set for the company ID (11). Four subcodes 1 to 4 are set. Note that the number of subcodes and corresponding numbers may be set freely. As shown, for each subcode, although different touch screens of images 1 to 4 are set, the same touch screen may be set. Furthermore, by entering a server name (for example: https://content.iml-lab.net/card/) for registering an automatically generated content, a QR code registered with a URL including at least a company ID and a subcode may be generated automatically as shown in FIG. 83. In (a), (b), (c), and (d) of this figure, subcodes 001 to 004 are included as the last three digits of the dedicated arguments of the URLs. Note that the company ID should be kept confidential and it is desirable to include it in the URL encrypted. The 4th to the 8th digit from the bottom of the dedicated arguments correspond to the company ID. Needless to say, the subcode may be encrypted and included. Such a format may be in any form or order. In addition, although A1 to A4, B1 to B4, and C1 to C4 are set as file names, URLs, and execution software names for each subcode, the same names may be included. When a subcode is not used, the subcode (1) may or may not be included in the URL. Note that if the touch screen, and contents A, B, and C are all set with URLs, the capacity of contents including HTML, JS, and predetermined data (including company ID, subcodes, and the like) automatically created by a CMS become small and thus they become easier to manage. Here, the contents A, B, and C may have a non-input field, and even if a multi-stamp code function is set in the operation unit, there will be no response. Note that when a touch image has been input and the contents A, B, and C have not been input, the contents of the electronic stamp will not be set.

### (Setting of group numbers (dedicated arguments))

When multiple stamp IDs for one company ID are set, and if the user stamps multiple electronic stamps with different stamp codes on one electronic stamp touch screen, different contents can be downloaded from each electronic stamp. In that case, it is possible to group stamp IDs targeted for a given touch screen, and by assigning a group number to the combination, the same stamp ID can be set at least to one part of the group number. Similar to a case in which subcode numbers are used, a group number (dedicated argument) is additionally included in the URL registered in the QR code by changing the group number while maintaining the same stamp ID, and by changing the URLs for users according to each combination of the company ID, group number, and subcode, it is possible to also download different contents. Furthermore, by concurrently using a subcode, it is possible to provide many circumstances where a plurality of electronic stamps can be used on a predetermined touch screen. In that case, it is necessary to include at least a group number and a subcode in the URL registered in the QR code. Note that the group number may also be encrypted, and such a format may be in any form or order. Thus, with a group number and a subcode, a QR code in which a URL including at least a company ID, a group number, and a subcode is registered is provided to the user. Note that the company ID, the group number, and the subcode for authentication may be included in the QR code data area.

### (Content creation with group numbers and subcode settings by a content generator)

Furthermore, in the present invention, a content for an electronic stamp may be automatically created for each group number and subcode using a content generator (CMS: content management system).

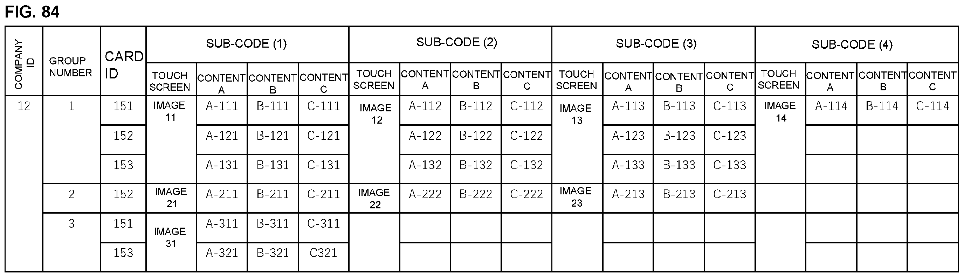

The user inputs a file name, URL, or execution software name in an interface screen as shown in FIG. 84. In the figure, the company ID is set to 12, and a plurality of stamp codes (151, 152, 153) are set for the company ID (12). Note that even if only one stamp code is set, a group number can be set like a subcode. A maximum of 4 subcodes (1 to 4) are set. Note that the number of group numbers and subcodes, and the corresponding numbers may be set freely. Although different touch screens of images 11 to 31 are set for each group number and subcode, the same touch screen may be set. Furthermore, although A111 to A321, B111 to B321, and C111 to C321 are set as file names, URLs, and execution software names, the same names may be included. When a group number is not used, the group number (1) may or may not be included in the URL. Note that if the touch screen, and contents A, B, and C are all set with URLs, the capacity of contents including HTML, JS, and predetermined data (including company ID, subcodes, and the like) automatically created by a CMS become small and thus they become easier to manage. Here, the contents A, B, and C may have a non-input field, and even if a multi-stamp code function is set in the operation unit, there will be no response. Note that when a touch image has been input and the contents A, B, and C have not been input, the contents of the electronic stamp will not be set.

In the practical example of FIG. 84, for the group number (1), stamp codes 151, 152, and 153, and respectively, subcodes 1 to 4 are set. As a result, by changing the electronic stamp and successively stamping them onto the touch images set for each subcode when the multi-stamp code function of each of the electronic stamps having the corresponding three stamp codes 151, 152, and 153 is set with the operation unit, the electronic stamp is changed, and the stamp is stamped, corresponding content browsing is enabled and information processing is performed. For the group number (2), only stamp code 152 and subcodes 1 to 3 are set. For the group number (3), stamp codes 151 and 153, and only one subcode are set.

### (Electronic stamp own by an individual and security by PIN code entering)

In order to strengthen the security of prepaid payments on the Internet by users with electronic stamps, it is desirable have PIN code entry in addition to stamp ID (including stamp codes) authentication using a dedicated browser (application). PIN code input can be implemented by changing the placement orientation of a stamp as described above, and a PIN code cannot be input unless a PIN code inputter possesses a stamp. Currently, PIN codes are employed for electronic prepaid cards such as POSA cards used on the Internet with smartphones and PCs. The user purchases a prepaid card or the like at a convenience store or the like, obtains a PIN code by scratching off a concealed PIN code or by removing a concealment sticker, enters the PIN code at the time of prepaid payment, and settles a charge payment. However, "imposter fraud," where fraud groups telephone elderly people, make them purchase prepaid electronic stamps for e-commerce at convenience stores, elicit the PIN code, and illegally use the prepaid electronic stamps, are becoming a social problem. The problem is that even if the fraud group does not obtain the prepaid card, fraud can be easily executed by making an elderly purchase a prepaid electronic stamp over the telephone and eliciting the PIN code. A mechanism is available in which the PIN code cannot be input unless a dedicated browser (application) is downloaded and installed, and the electronic stamp is stamped, when an electronic stamp is used for prepaid payment, in order for the user to input the PIN code. Furthermore, as described above, it is possible to make PIN code input only with an electronic stamp. As a result, "imposter fraud" is impossible with only the telephone, and the delivery of the electronic stamp is required. With "imposter fraud", it is extremely difficult to implement delivery, and since evidence is likely to remain extremely high security can be provided.

On the other hand, PIN code input is also desirable when providing contents (including items with charges) such as videos, images, game items, or the like, and benefits such as coupons, points, or the like only to specific people. This is because if the content or coupon is copied and spread to a third party, the meaning of service for a specific person is lost. In addition, if economic services such as discounts and cash vouchers for specific people spread, companies will suffer serious damage. Therefore, when a user uses an electronic stamp, it can be made so that the service provider can provide various services only when a dedicated browser (application) is downloaded and installed, and the electronic stamp holder is authenticated. If the application is downloaded and installed, the ID of an information processing apparatus such as a smartphone can be acquired by the provider, and thus push communication can be performed from the provider side, and new services can be provided to the user in a timely manner. When push communication or content concealment is not required, a general-purpose browser may be used with emphasis on convenience. Note that a stamp equipped with a communication function and/or an information reading function, which will be described later, can secure a high level of security without having to enter a PIN code.

### (Code generation apparatus with an information reading function)

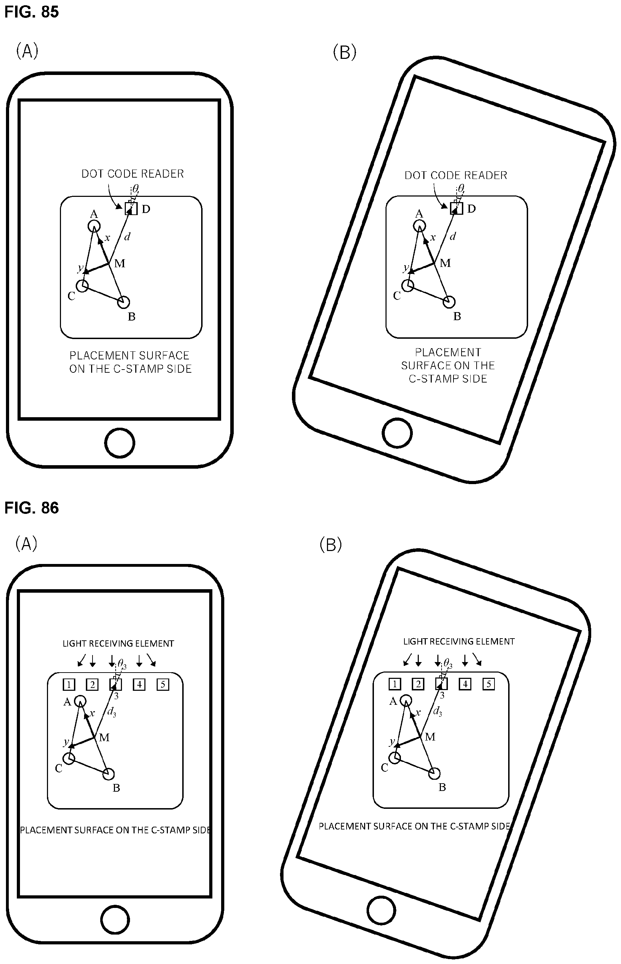

FIG. 85 shows an embodiment of a code generation apparatus equipped with a dot code reader. A dot code reader is an apparatus built in a code generation apparatus that reads a dot code by placing the code generation apparatus on a printed matter in which a dot code has been printed in advance, or on a touch panel such as that of a smartphone or tablet on which a dot code is displayed.

When a code generation apparatus is pressed in two stages onto a touch panel such as that of a smartphone or tablet, a stamp code is recognized by the smartphone or tablet from a conductive pattern formed with the detected plurality of electrodes. Regardless of where the code generation apparatus is placed or the orientation on the touch panel, since the conductive pattern of the first stage and/or second stage is formed with a geometrically unique arrangement, the position of the dot code reader of the code generation apparatus can be specified. For example, as shown in FIG. 85(A), when the pattern forms triangle ABC and the reading apparatus is at the position D, if the middle point M of the longest side AB is assigned as the origin, the side AB as the X axis, and the line perpendicular to the side AB passing through the origin as the Y axis, the coordinate position of the reading apparatus at distance d can be defined in advance. Furthermore, if a straight line connecting the origin and the coordinate position of the reader is drawn, and the inclination angle of the reader with respect to the line is assigned angle θ, the orientation of the reader can also be defined. Therefore, if the unique geometric arrangement of a conductive pattern of a code generation apparatus can be recognized by a smartphone or tablet, as shown in FIG. 85(B), even if the code generation apparatus is placed on the touch panel with an angle, the position and orientation of the reading apparatus can be calculated, and the dot codes may be displayed so as to match them. The method for defining the coordinate position and orientation of a reader is not limited to this method, and any method may be used as long as they can be defined in the same manner. Since it is only necessary to display a dot code instantaneously when the dot code is read, it can be said that this is a highly secure method in which a dot code that is originally difficult to see cannot be visually recognized by another person or by an imaging apparatus. By using a dot code, one block unit that can store one dot code can store 27 bits to 108 bits of information in an area of 1.5 x 1.5 mm to 3 x 3 mm, and by increasing the size of a block, even more information can be stored in a dot code. Here, if a time-series dot code whose dot code changes with time is displayed on a display and read, an even larger amount of data can be transmitted and received. Furthermore, the amount of information can be further increased by colorizing the dots. Since the reading apparatus reads dot colors in RGB, regardless of the display that may display different colors depending on each model type, at least red (R), green (G), blue (B), yellow (RG color mixture), cyan (GB color mixture), magenta (RB color mixture), black, white (no dots) can be distinguished, and just with that itself there can be an increased to 3 bits per dot. That is, the amount of information per cell is tripled. Furthermore, if a color tone modulation technique is used, there is a high possibility that the amount of information can be furthermore increased by two times, that is, by about six times in total. As a result, the system can transmit a photograph or a short-scale animation with a high compression ratio by changing the color of the dot code with time in combination with the use of the time series dot code with time change. If a code generation apparatus is provided with a communication function, even if imposturous use is attempted by some other code generation apparatus, if an authentication server is provided, by comparing the unique IDs of the code generation apparatuses sent to it, it is possible perform authenticity determination. Therefore, further improvement of security can be achieved. In addition, a one-time ID is sent to a smartphone from an authentication server (which may be the cloud), the one-time ID is converted by the smartphone into a dot code, it is displayed on the code generation apparatus so that it is hidden from the human eye by the outer appearance of the code generation apparatus, the code generation apparatus obtains the dot code (one-time ID), a one-time password is calculated from the dot-code with the concealed ID and a concealed equation recorded in the code generation apparatus, the result is transmitted to the authentication server, and the server collates the relationship of it with the priorly transmitted one-time password, and thus a code generation apparatus can be identified with extremely high security. In addition, since the authentication server also identifies and collates smartphone IDs, utilization in various fields requiring security such as financial settlements, settlements of important matters, provision of information, and browsing between smartphone users and code generation apparatus owners can be done. Note that since the dot code can define a large amount of information, contents such as photographs, illustrations, and simple animations may be transmitted as authentication is complete.

Note that although a dot code reader installed in a code generation apparatus reads a dot code from an image photographed with visible light including color dots that are visible, as a dot code displayed on a display of a smartphone or the like that is a light-emitting medium, in order to photograph and read a dot code formed on a non-light emitting medium such as printed matter, since there is no interspace between the bottom of the code generator and the paper surface and light does not enter, it is necessary to irradiate light and read dots from the reflected light. Therefore, in order to read only a dot code that is printed superimposed on a graphic, the dots may be printed with infrared absorbing ink (carbon black ink, infrared absorbing stealth ink, or the like), and the other colors may be printed with ink that does not absorb infrared light. When infrared light are irradiated and the reflected light is photographed, since only the dot portion absorbs the infrared light and is imaged black, the dot code can be read. In this case, since visible light does not enter, it is not necessary to provide a filter that transmits only infrared light. Note that the CMOS sensor used in the dot code reader can image both visible light and infrared light.

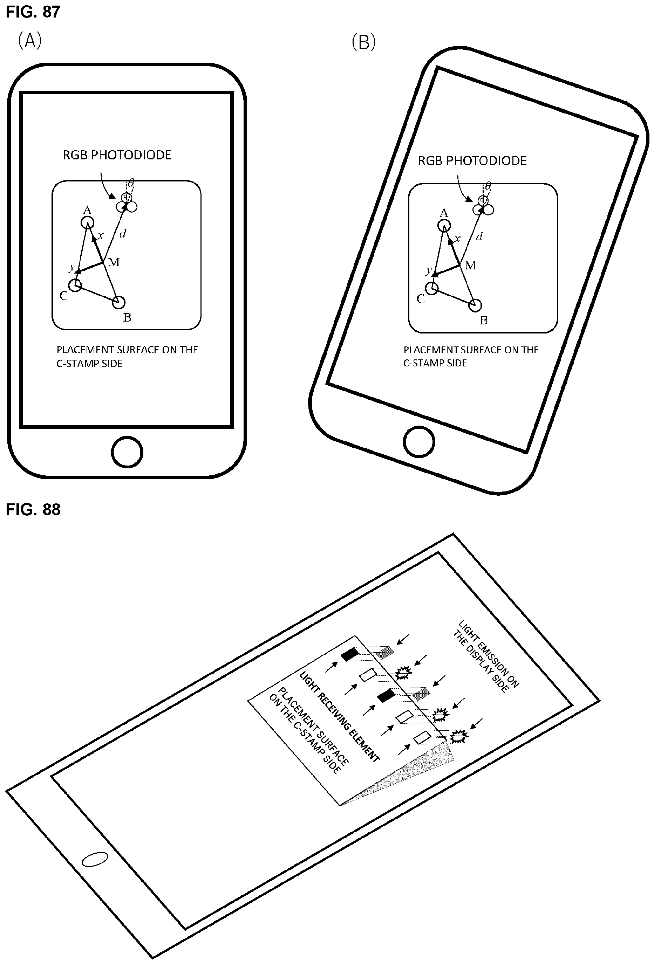

FIG. 86 shows an embodiment of a code generation apparatus equipped with an optical code reader. An optical code reader is an apparatus that can read an optical code emitted from a display of a smartphone or tablet with a module having a light receiving function such as a plurality of diodes upon placing a code generation apparatus on the touch panel of the smartphone or tablet. As shown in FIG. 86, regardless of where the code generation apparatus is placed or the orientation on the touch panel, the position and arrangement of each light receiving element (diodes or the like) of the optical code reader of the code generation apparatus can be specified from the unique pattern code of the code generation apparatus in the same way that a reading apparatus can be specified by a code generation apparatus equipped with a dot code reading apparatus. Here, light receiving elements 1 to 5 are exemplified, and the method of defining the position and orientation of the light receiving element 3 is exemplified as in the example of the dot code. The same applies to the method of defining the positions and orientations of the other light receiving elements. The method of defining coordinate positions and orientations of the light receiving elements is not limited to this method, and any method may be used as long as it can similarly define them. When using elements such as diodes, since the number of elements that can be mounted is limited, the amount of data that can be transmitted and received at one time is small compared to dot codes. However, the amount of data can be greatly increased by sending 1-bit information with each element turned ON/OFF at a very short predetermined time interval of 1/60 seconds at the fastest. Also, instead of dichroic diodes, by using RGB diodes capable of emitting the eight colors based on RGB and their mixtures, red (R), green (G), blue (B), yellow (RG color mixture), cyan (GB color mixture), magenta (RB color mixture), black, white (no dots) which are said to be detectable without problems on general smartphones and tablets, the amount of information of each element increases to 3 bits. Furthermore, if a color modulation technology is used, the amount of information can be increased further to at least 4 bits. As shown in FIG. 87, regardless of where the code generation apparatus is placed or the orientation on the touch panel, the position and arrangement of the RGB diodes of the optical code reader of the code generation apparatus can be specified from the unique pattern code of the code generation apparatus in the same way that a reading apparatus can be specified by a code generation apparatus equipped with a dot code reading apparatus. Since it is only necessary to display an optical code for an instance for having an optical code read, as with the method using a dot code, it can be said that the method using an optical code is a highly secure since an optical code is not visible to others or imaging devices. In addition, when a communication function is added to a code generation apparatus, the code generation apparatus and smartphone can be specified by an authentication server, and it can be used in various fields as with the code generation apparatus equipped with the dot code reader as described above, and thus a great advantageous effect can be expected. Although an optical code can hold a less amount of information, since there is the advantage that manufacturing can be performed at a low cost, the optical code has an advantage when there is no need to transmit a large amount of data. Note that with a code generation apparatus equipped with a dot code reader, a code can be formed on a medium that is not a light emitter, and by printing dot codes on print media such as newspapers, magazines, catalogs, circulars, flyers, tickets, and the like, cards with which an individual can be identified, trading cards, and the like, application to various fields is possible. Note that if an information reading apparatus for optical codes, dot codes or the like is installed but a communication function is not installed, upon making collations with or judgements on the information received by the code generation apparatus, collation or judgement results may be output by providing audio output, optical output with LEDs, and also a code generation apparatus may be provided on a display. Furthermore, related history may be output later via a USB or the like.

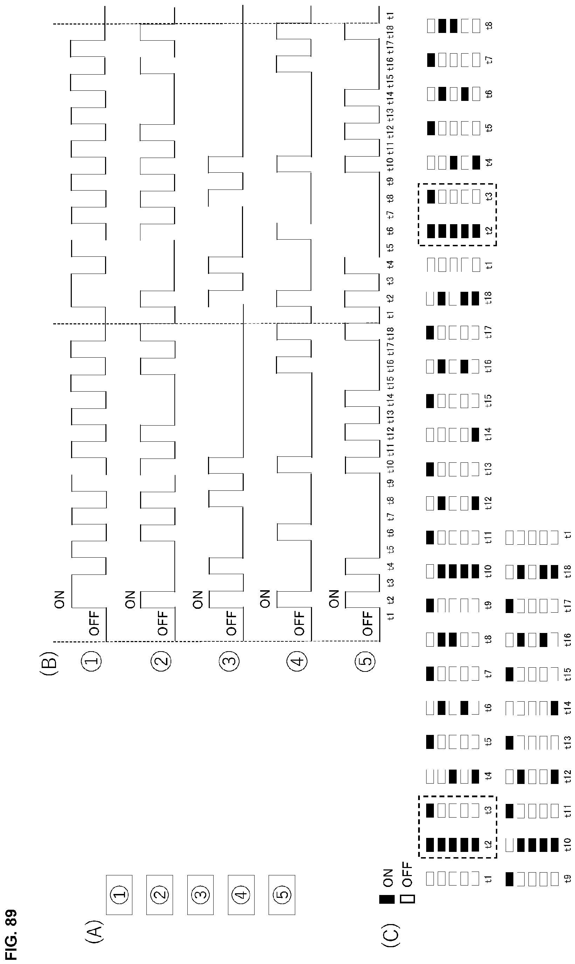

FIG. 88 shows an example of synchronization by a code generation apparatus equipped with an optical code reader, accompanying light emission from a light emitting area of a smartphone display. This is an example in which the second, fourth, and fifth light receiving elements (diodes or the like) from the left each receive light emitted from the corresponding display side. A simple example of such an optical code exchange process is shown in FIG. 89. FIG. 89(A) shows five light receiving elements, FIG. 89(B) shows the relationship between each element and time-series changes, and FIG. 89(C) shows the state of synchronization of the elements at each timing. Reading is started triggered by a change to a state where all elements are ON at t2, from a state where all of the elements are OFF at t1, with element 1 continuously ON at t3, element 1 is determined to take the role of time axis in the time series changes. In other words, the group surrounded with broken lines is the header, and thereafter, ON and OFF are repeated for each predetermined time interval by synchronization of the element 1. The remaining four elements allow the code generation apparatus to receive information such as an optical code. A state where element 1 is OFF in consecutive steps (t18 and t1), corresponds to a delimiter signal. This series of processes is repeated. An intermediary t1 is not necessarily required.

Thus, it is possible to directly acquire a user's personal information without using the NET simply by placing a code generation apparatus on a touch screen of a user's smartphone. The above mentioned personal information may include as necessary information such as membership numbers, name, address, various Internet addresses, smartphone IDs, financial settlement information of credit cards and the like, certification information, health insurance information, and biometric information such as facial photos. Upon registering information associated with My Numbers, it may be made so that only information approved by the user can be read by a code generation apparatus.

### (A code generation apparatus equipped with a communication function.)

An embodiment in which a communication function is installed in an electronic stamp which is a type of code generation apparatus will be described. If WiFi is installed as a communication function, the stamp address for each stamp is stored, and the stamp ID and the stamp address are registered with a linkage between them on the authentication server. Furthermore, a smartphone ID may be registered on the authentication server, and collation with the smartphone being used may be possible. When a stamp is stamped on the touch screen of a stamp-compatible application on a smartphone at a store or facility, an authentication server obtains a stamp ID, and concurrently, a stamp address is sent from the stamp to the authentication server by a stamping operation (switch is ON), and upon collating the stamp ID and stamp address registered on the server in advance with the acquired stamp ID and stamp address, authentication may be granted if they match, and thus forgery and theft can be prevented. If a theft is detected, the stolen stamp may be made not to be approved if the theft is registered on the server, or it may be made so that the thief if tracked and found. Note that in order to have the stamp usable in different places wherever it may be, it is only necessary to have names of the SSIDs the same. By registering information on the location of a stamp on the authentication server, it is possible to recognize where the stamp was stamped. The stamp stamping service may provide users with various contents via a server through WiFi communication.

Since it is not impossible to forge a capacitance code and generate the same stamp ID, as exemplified in this embodiment, by assigning a unique concealed stamp address to the stamp and performing authentication, extremely high security can be ensured. Furthermore, a one-time password may be transmitted from a stamp to an authentication server for authentication if a real-time clock is installed in the stamp and it is stamped on a smartphone. Based upon the authentication result, the processing of payments or the like intended to be implemented with a smartphone may be implemented. Also, when stamping on the smartphone, stamp authentication may be performed by having the smartphone send a request to the authentication server, having the authentication server send a one-time pass ID to the stamp, having a one-time password be generated based upon a concealed ID and concealed equation stored in the stamp, and having it be sent to the authentication server. Note that it is needless to say that any network means including LAN or the like other than with WiFi may be used. On the other hand, if a stamp equipped with a dot code reader or optical code reader as described above is used, a one-time password can be sent from a authentication server to the stamp simply by placing the stamp on the touch screen of a user's smartphone, and the one-time password may be sent to the authentication server for authentication. Alternatively, upon checking the one-time password with the stamp, authentication may be confirmed by sound output, confirmation light with LED or the such, or vibration by the stamp. If the stamp is equipped with a display, the result may be displayed on the stamp.

Note that it is possible to confirm whether or not a stamp has executed correctly if the stamp ID or stamp code acquired by the smartphone by stamp stamping on the touch screen to the stamp is sent to the stamp, and if the data received by the stamp, and the stamp ID and stamp code issued when the stamp was stamped are collated. Confirmation of misrecognition may be performed as a stand-alone, or by transmitting the information to the authentication server after collation confirmation, reliability of the system lowered by misrecognition of the stamp can be restored. Needless to say that confirmation of misrecognition as described above can be used together in any embodiment.

When BLE (including classic Bluetooth) is installed as a communication function, the stamp address is stored as the BLE device name for each stamp as in the above example, and the stamp ID and the stamp address are registered with a linkage between them on the authentication server. Furthermore, the smartphone ID may also be registered on the authentication server, and collation with the smartphone being used may be enabled. When a smartphone is stamped on a touch screen of a stamp-compatible application at a store or facility, a BLE installed in the stamp in a sleep state undergoes an advertising process as a peripheral to the central by a stamping operation (switch is ON). At the same time, the authentication server obtains a stamp ID, sends a stamp address corresponding to the stamp ID to the smartphone, and the central pairs with a BLE device having the stamp address. Upon completion of pairing, authentication and services similar to those with WiFi communication by stamp stamping can be implemented. Furthermore, when using BLE as a beacon, if a stamp address is stored as data for an advertising process and it is distributed unilaterally, even if the central and peripheral are not connected, the application displaying a stamp touch screen can obtain a stamp address instantaneously. Thus, the smart phone side (including the authentication server) can authenticate the stamp. In this case, since the central and the peripheral are not connected, data cannot be exchanged because the central is limited to acquiring one-time addresses. Here, in order to eliminate the possibility of a central operating on another smartphone acquiring and using the stamp address, it is desirable to advertise a one-time address by making the stamp address variable. In addition, the stamp ID or stamp code may be included in the peripheral data at the time of stamping. As a result, it is possible to authenticate by collating the stamp ID or stamp code acquired by a stamp being stamped on a smartphone. Note that it is needless to say that communication means with smartphones other than BLE may be used. The communication functions such as WiFi and BLE and the information reading functions such as the dot code reader and the optical code reader as described above may be used in any combination in all of the embodiments.

By placing a stamp in the segmented area, registering the stamp address and the like in a peripheral, the smartphone central acquires the data from entering/exiting of the area, and the user is able to obtain vibrational or sound output, or a display on the smartphone, that can perceptually urge the user to promptly perform stamping. Note that there may be a plurality of the above-mentioned areas, and different stamps may be set for each area, and the stamp address may be registered in the peripheral so that a new service can be provided every time the area is moved. Good. Note that the stamp installer may move the stamp and provide the same service.

If the stamp is affixed to a wall or poster, since there is no need for manpower, service can be provided more easily. Furthermore, if the smart phone transmits the data acquired from the peripheral to the authentication server, the smart phone can acquire a touch screen that can access new services and the contents thereof, and a strong motivation for stamp stamping can be obtain. Needless to say that it is also possible to provide different services depending on the position upon movement. Here, if the installation position of a stamp (including the installation position of a moved stamp) is also registered on the authentication server, a smartphone can track and search for a stamp with its GPS function. Furthermore, if the stamp is equipped with a GPS, the position may be transmitted to the smartphone as data from a peripheral.

### (Personal authentication of an electronic stamp owner)

In the storage apparatus built-in a stamp, a person's name, date of birth, address, and biometric information such as photographs, and other basic personal information may be registered. Other information such as credit card information, bank accounts, licenses, health insurance cards and other certificates may be registered. Such information may be registered on the server. After a person selects information that can be disclosed on the person's smartphone, by stamping a stamp on another party's touch panel, the other party obtains the information by means of communication and by having the stamp holder state the date of birth, address, and the like, identity verification may be performed. By disclosing a photo, identity verification can be done easily. Such identity information may be deleted immediately to prevent leakage of identity information. In addition, when personal authentication is performed with a device, if the person makes an approval on the touch panel of the device upon request of provision of information from the device, by stamping the stamp on the touch panel of the device, biometric information of the user is transmitted from the stamp or server to the device and unmanned identity verification can be performed by matching it with biometric information acquired from the person on the spot (acquisition of face, fingerprint, iris, vein information, or the like by a camera or sensor set at a facility or in a device), and financial settlements, entry to important facilities, and operations of important equipment can be performed with high security. In order to facilitate biometric information authentication, although not shown, a fingerprint authentication apparatus or a camera may be attached to a stamp for personal authentication when the person uses the stamp. Note that the biometric information of a person can be easily registered by photographing the face, fingerprints, and iris with a camera installed on the person's smartphone, and the biometric information communicated from the smartphone may be stored in a storage apparatus built-in the stamp or registered on a server. Note that if a stamp is stolen, it may be set to refuse authentication of the stamp and information communication from the stamp or server may be stopped. Note that if a stamp equipped with a dot code reader or optical code reader is used, the user's personal information can be obtained directly by simply stamping the stamp on the touch screen of the user's smartphone without having to use the Internet. The above mentioned personal information may include as necessary information such as membership numbers, name, address, various Internet addresses, smartphone IDs, and biometric information such as facial photos. The method of personal authentication is as described above. In this case, it is desirable to enable the user to choose which personal information to disclose. Note that the user's personal information may be transmitted by an information reading apparatus by stamping a stamp set at a facility or in a device against a smartphone owned by the user. A stamp may have any shape or form, and instead of pressing a stamp on a smartphone, a smartphone may be placed on or over a stamp.

Furthermore, when using a BLE as a beacon, if a stamp holder carries a stamp and roams to various stores, facilities, or regions, the stamp address is stored as data for an advertising process, and it is unilaterally distributed, a stamp application can constantly transmit data such as a stamp address as a peripheral, an information processing apparatus equipped with a touch panel that plays a central role can acknowledge the existence of the stamp, and the information processing apparatus can catch the attention of the user by giving out signals to the stamp or a stamp holder's smartphone by outputting vibrations or sounds or by displaying to prompt the user to stamp the stamp on the information processing apparatus. With this stamping, various services can be provided to smartphone users. In such a system, information processing apparatuses may be searched for be stamped as if it were treasure hunting at an event, in a museum, at an amusement facility, in a mall or the like having many stores. Furthermore, by using a time stamp and position information at the time of stamp authentication as keys, events branched for individual users or guidance for new routes can be displayed, and thus various routings and experiences can be provided in the same venue. Furthermore, a new route guidance may be provided by reading a dot code or an optical code displayed on a paper medium or a display with an information reading apparatus installed in a stamp. In addition, a game-like element in which the location information of where the user stamped a stamp while moving and the location information of where a stamp placed at a fixed location such as a store was stamped are displayed "on a map only at the time of the stamping (for example, for 10 seconds to 3 minutes) and someone else tries to track the trace" may be added.

### (Financial settlements with an electronic stamp)

In an example of a financial settlement, when the store side applies a stamp on a touch screen of a purchaser's smartphone and the stamp is authenticated, the item names, the unit prices, the total payment amount, and the like of purchasing items sent from the store side system to a settlement server are received by and displayed on the smartphone, and after the purchaser confirms and approves the display contents, the purchaser selects a payment method, and information on a pre-registered bank account for withdrawal payments for financial settlements, credit cards, prepaid cards, or the like are transmitted to a settlement server, and when the payment server makes an approvement and a settlement, the store side system is immediately notified, and the purchase/payment procedure of the items is completed. Furthermore, icons such as "settlement," "cancellation," "single payment," and "split payment," and the like may be displayed on the purchaser's smartphone for selection and settlement. Note that if a payment cannot be completed, if there is overuse of a credit card, if there is a shortage in remaining balance for a prepaid card, or a bank account, such information may be displayed on a smartphone and recorded. In this way, payments can be made without having to issue receipts with purchased items, unit prices, payment totals, and the like, and the store side can eliminate the use of a printer, and the purchaser can record and manage purchased product information as data .

In addition, by issuing different stamp codes, by using a switchover switch on an operation unit of a stamp, any combination of processings such as "confirm purchasing items," "settlement," and "cancellation," or "settlement," "stamp granting," and "stamp erasing," or the like may be performed.

If you want to send money between individuals or corporations, if the sender enters the amount of money and the destination on the smartphone, applies a stamp and the stamp is authenticated, remittance information such as the destination and amount will be displayed again for confirmation, and upon approval, the remittance is notified to the receiving side and the remittance is carried out. In that case, in order to increase security so that a third party other than the principal cannot send or receive money, it made be set so that a password is input when the "settlement" icon is tapped. For this password input, if the application has a function for detecting the rotation angle of a stamp, a mark such as Δ can be provided for indicating the positive direction of the stamp, and the order of orientation of each placement upon placing the stamp can be set as the password. For the orientation of the touch screen (password input screen), for example, for a password set as "right (90 degrees), diagonally lower left (225 degrees), down (180 degrees), diagonally upper right (45 degrees)," it is sufficient to change the orientation of the stamp in this order while keeping the surface in contact, or to remove and place the stamp every time. In order to make the operation smooth, first, the stamp may be placed in the upward direction, and then the orientation may be changed for password input. Furthermore, if the sender's personal information (including biometric information) is registered on a stamp or server, the sender can be identified by a personal authentication as described above. For these financial transactions, in addition to the amount and date, classifications such as 'Loan,' 'Gift,' 'Consideration,' and the like may be set by issuing different stamp codes or according to the orientation of stamp placement using the stamp operation unit switchover switch. Also, the transmission side may confirm the sender and approve the transfer. Furthermore, when a stamp equipped with a dot code reader or optical code reader as described above is used, the user's personal information can be obtained from the user's smartphone via the dot code or optical code simply by placing the stamp on the touch screen of the user's smartphone. Such information may be acquired to determine whether a financial settlement can be allowed. The personal information may include information such as a settlement numbers, name, address, various Internet addresses, smartphone ID, and biometric information such as facial photo as necessary.

While the smartphone receives and displays the items, unit price, total payment amount, and the like for items for purchased sent from the store-side system to the payment server, bar codes, QR codes, or the like affixed or printed on the items purchased by the user may be photographed with the user's smartphone, the items, unit price, total payment amount, and the like for items for purchased may be tabulated, displayed, and confirmed, and then the store-side may stamp a stamp to obtain the information by an information obtaining apparatus, may display and confirm the information on a store-side system, and may perform a settlement. A display may be installed on the stamp, and the information may be displayed, confirmed, and settled.

### (Granting/erasing of points, coupons, and stamps using an electronic stamp)

In the use with points, coupons, and stamps, for a user to acquire a benefit, the user can acquire the benefit if a stamp is stamped on a touch screen displayed on a user's smartphone and authenticated by an approval server. In this case, a different stamp code may be issued by a switchover switch of the stamp operation unit and the provided service may be changed for each stamp code, for example such as for "point granting," "point erasing," "cancellation of operation," "point granting/erasing," "stamp granting/erasing," and "coupon granting/erasing." Here, if two types of processings such as "granting/erasing" are performed with one stamp code, a mark indicating orientation may be provided on the stamp, and the processing of "granting" may be performed when the stamp is placed in the vertical direction on the touch image, and the processing of "erasing" may be performed when the stamp is placed in the horizontal direction. Even by taking into consideration human operability, since up to a total of eight directions, that is, vertical and horizontal directions and diagonal directions, can be reliably recognized, even more functions may be assigned. Needless to say that the corresponding processings may be selected by a touching operation on a smartphone with a stamp with removal and placement. Furthermore, a variety of services may be provided easily by updating and communicating the contents of services stored in a stamp. Since the acquisition status and usage status of user points, coupons, and stamps can be stored on the server, services can be provided via the server. However, by installing a stamp authentication function in an application, and by having only direct communication between a stamp and smartphone via a BLE or the like, it is possible to provide authentication and services in an environment that does not use the Internet. As a result, information leakage from the server can be prevented. A method that does not use a server can also be used for personal authentication, and the like, and leakage of personal information can be prevented. The information stored in a stamp can be updated from any information processing apparatus such as a smartphone having a communication function, either wired or wireless. Note that authority to update the information may be granted only to specific persons, and the authority may be exercised upon authentication of personal information including the human body information.

Furthermore, when using a stamp equipped with an above-mentioned dot code reader or optical code reader, the user's personal information can be obtained directly without going through the Internet simply by placing the stamp on the touch screen of the user's smartphone. The personal information may include information such as membership numbers, name, address, various Internet addresses, smartphone ID, and biometric information such as facial photo as necessary. The method of personal authentication is as described above.

### (Use in ticketing)

A stamp ID or stamp code that approves an acquired ticket is registered on an authentication server in advance, and by stamping the corresponding stamp on a touch screen at the time of entry, allowance of entry is approved, and the user's smartphone displays the result. Furthermore, in order to strengthen security, by enabling a stamp read the ticket number or the like via an optical code or dot code from the user's smartphone, collation with the ticket number or the like stored in the stamp may be performed and permission of admission may be indicated with a sound, confirmation light with LED or the like, or vibration. Furthermore, for a stamp equipped with a communication function, an acquired ticket number or the like may be transmitted to the authentication server for verification. The result may be transmitted to the user's smartphone, or may be confirmed by sounds, light, vibration, or the like from a stamp. If a display is installed on the stamp, the result may be displayed on the stamp. An optical code or dot code displayed on the user's smartphone may include a one-time password by transmission from the cloud. As a result, security can be furthermore improved.

In addition, when a purchaser moves an item in the store from a shelf to a basket using barcode scanning, RFID, sensors, or the like, by reading a dot code printed on an item or on an affixed sticker with a stamp equipped with a dot code reading apparatus and making a payment after authentication using an electronic stamp, it is possible to complete a payment in the state where the purchaser is in the store with certainty.

### (Installation of GPS and communication function in a code generation apparatus)

An embodiment in which a GPS and a communication function are installed in an electronic stamp which is a kind of code generation apparatus will be described. It is assumed that the user carries the electronic stamp and uses it in various places. When a user possesses an electronic stamp, the corresponding stamp ID of the electronic stamp and user information are registered on the authentication server. By tracking the GPS installed in an electronic stamp, when an electronic stamp is stamped on a touch panel (including those of smartphones and tablets), an authentication server obtains the location information of the electronic stamp based on the stamp ID of the authenticated electronic stamp, and thus can specify where the electronic stamp was used. Even if the number of stamp IDs of the electronic stamp is limited, if position information from a GPS can always be tracked, it can be determined whether or not the electronic stamp is that possessed by a specific user. However, it is difficult for a GPS to recognize positions indoors. Note that if an electronic stamp and the smartphone ID of a smartphone owned by a user are registered together on a authentication server, even if location information from the GPS installed in the electronic stamp cannot be continuously tracked, the usage status of the electronic stamp is transmitted to the user's smartphone and it is possible to disable the use of the electronic stamp unless the user makes an approval. This also allows the user to approve the use of the electronic stamp by a third party.

By installing a communication function in an electronic stamp, it is possible to realize the following wide usage.
- By using communication functions (including wireless networks of carriers and the like, independent private networks such as those with beacons, and local networks provided by shopping malls and the like) upon the authorization of an electronic stamp, it is possible to prevent improper stamp stamping by unauthorized modification of browsers and applications outside of the primary participation area, and by specifying the electronic stamp to be used at the ID coordinate position of an electronic stamp, it is possible to have the set usage period and usage content be reflected.
   Initial participation by
- If an electronic stamp has communication functions (including wireless networks of carriers and the like, independent private networks such as those with beacons, and local networks provided by shopping malls and the like), performs position authentication in installed areas (stores, event venues, and the like), and detects movement to the outside of the area registered through communication, it becomes possible to prevent unauthorized use and send new action instructions to devices such as a smartphone for the use of the electronic stamp in the destination area..
- By recognizing and recording a time stamp on a communication server connected to a network (including wireless networks of carriers and the like, independent private networks such as those with beacons, and local networks provided by shopping malls and the like) when using an electronic stamp, and by having a smartphone browser application or dedicated application that detected the coordinate position of the stamp records the time stamp, it is possible to determine illegal use when a stamp is newly used at an improbable destination based on the recorded position and time.
- If an electronic stamp itself has a communication function (including wireless networks of carriers and the like, independent private networks such as those with beacons, and local networks provided by shopping malls and the like), by combining location information and a time stamp indicating where the stamp was used, it is possible to perform a unique authentication. In addition, by installing a notification function such as an issuing unit or a vibration unit in an electronic stamp, it is possible to notify the user that the electronic stamp is in a usable area or an event has occurred.
- By authenticating with an electronic stamp and a smartphone as a set, it is possible to assume an environment that "a smartphone holder is definitely at the place where the stamp is placed," there is a double merit of providing merits allowed to those that "continuously stay in a specific place," and "actions that only the stamp carriers are allowed" by having an electronic stamp move "with the user."

In addition, according to the present invention, it has become possible to realize the following functions that have been difficult with conventional electronic stamps.
- Since an operation unit is provided on the stamp and a plurality of conductive patterns can be switched in stages during the execution of a predetermined operation, and a large number of codes can be issued according to the combinations, and thus it is possible to provide a large number of stamps with different codes.
- It is possible to issue a plurality of codes with a single stamp by switching a plurality of different conductive patterns by providing an operation unit on the stamp and carrying out predetermined settings.
- Multiple codes can be issued with a single stamp by providing multiple areas where the human body can touch the stamp and by changing the conduction path.
- A large number of conductive patterns can be set by providing a setting unit on the stamp and setting whether or not to conduction is to be made for each of the plurality of electrodes, thus making it possible to manufacture a large number of stamps with different conductive patterns with one type of housing.

### [Description of the dot pattern]

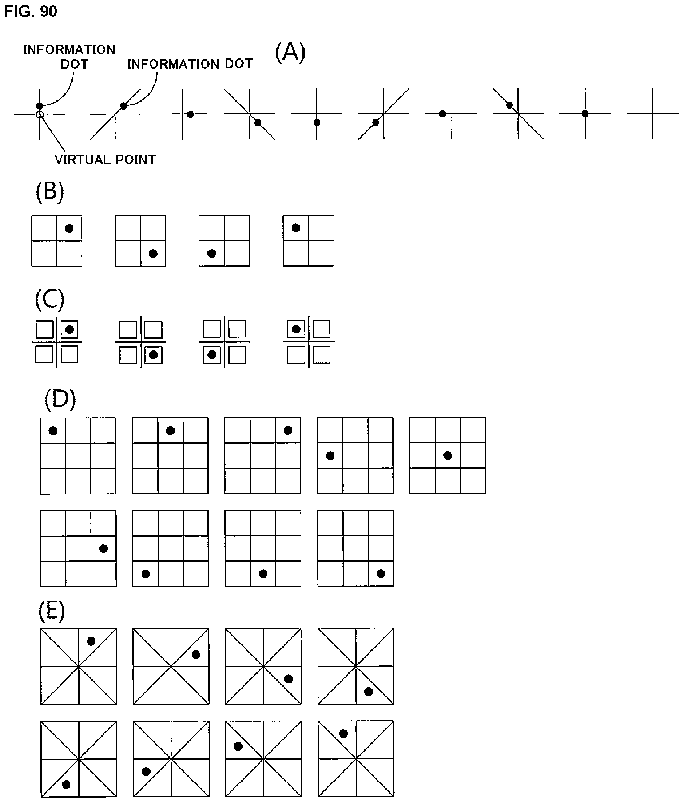

Next, an example of the dot code (dot pattern) referred to above will be described with reference to FIGS. 90 to 97.

Here, the "dot pattern" refers to an information code encoded by a plurality of dot placement algorithms.

Note that the numeric information (code) obtained by reading the above dot pattern is a dot code and includes the notation of "dot code" as a general term. The same applies for the rest of the description.

Regarding the encoding algorithm of the information code by the dot pattern, well-known algorithms such as Grid Onput (registered trademark) of Gridmark Inc., the Anoto Pattern of Anoto Co., Ltd. may be used.

Note that Grid Onput (registered trademark) of Gridmark among the dot patterns will be described in detail later.

The dot pattern encoding algorithm itself is common in the case of reading with visible light and in the case of reading with infrared light, so it is not particularly restricted.

Besides this, the dot pattern is sufficient even if it cannot be visually recognized or even in the case in which it can be visually recognized but just as a pattern, and any dot pattern may be adopted.

Furthermore, by defining the coordinate values of a dot pattern, it is possible to encode different information codes in accordance with the reading position. Furthermore, the dot pattern includes a direction factor serving as a reference for encoding and decoding the information code, and by reading the direction, the rotation angle of the code generation apparatus 1 with respect to the dot pattern can be acquired. On the other hand, when the code generation apparatus 1 is tilted with respect to the dot pattern formation medium, it is also possible to acknowledge the direction and the degree of tilting of the generation apparatus 1 by a change in the brightness of the captured image.

### [Ways of viewing an information dot in FIG. 90]

Ways of viewing an information dot are as shown in FIGS. 90(A) to 90(E).

Note that ways of viewing an information dot are not restricted to the examples of FIGS. 90(A) to 90(E).

That is, as shown in FIG. 90(A), information dots are arranged above, below, on the left of, on the right of the virtual point, and in the case where information dots are not placed, an information dot is placed at the virtual point, and it is possible to increase the amount of information including the case where information dots are not placed.

In FIG. 90(B), information dots are arranged in a total of four virtual regions in an array of 2 rows × 2 columns, however, since there is a possibility of the occurrence of erroneous recognition if information dots are arranged near the boundaries, as shown in an embodiment in FIG. 90(C), adjacent virtual regions may be set with spacing.

As in FIG. 90(D), information dots are arranged in a total of nine virtual regions in an array of 3 rows × 3 columns.

In FIG. 90(E), information dots are arranged in the total of eight virtual regions formed by lines or virtual lines connecting midpoints of the sides and passing through the center point and diagonal lines of a square.

Note that, as shown in FIG. 90(B) to 90(E), it is possible to increase the amount of information by including cases in which a plurality of information dots is placed in and not placed in the virtual regions.

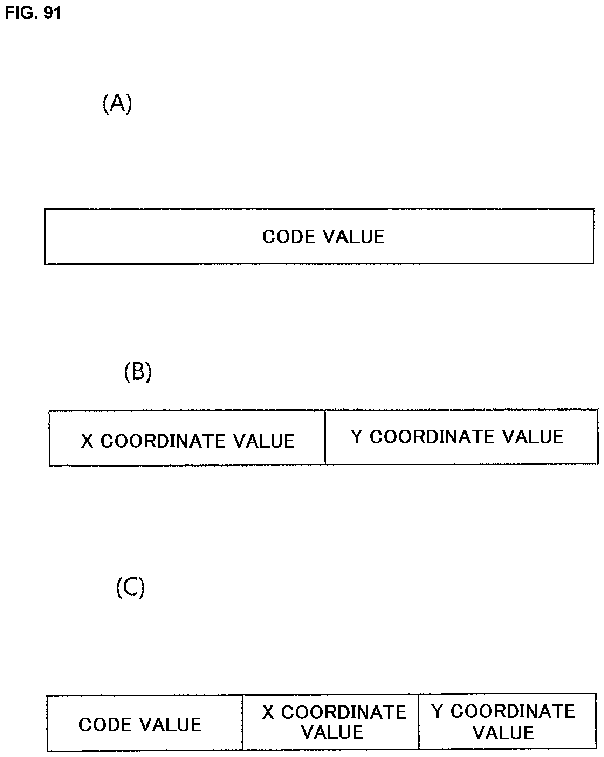

### [Assignment of a Code of an Information Dot in FIG. 91]

The code assignment of an information dot is as shown in FIGS. 91(A) to 91(C).

That is, as shown in FIG. 91(A), all may be assigned to a "code value" such as a company code, or as shown in FIG. 91(B), may be assigned as one code format to the two data areas of the "X coordinate value" and the " Y coordinate value," or as shown in FIG. 91(C), may be assigned to the three data areas of the "code value," the "X coordinate value," and the " Y coordinate value." When assigning coordinate values to a rectangular region, the data area of the "X coordinate value" and the "Y coordinate value" may be different so as to reduce the amount of data. Furthermore, although not shown, the "Z coordinate value" may further be assigned in order to define the height for position coordinates. Note that when the "X coordinate value" and the "Y coordinate value" are assigned, since the coordinate value is incremented by a predetermined amount in the + direction of the X and Y coordinates because of the position information, all of the dot patterns will not be the same.

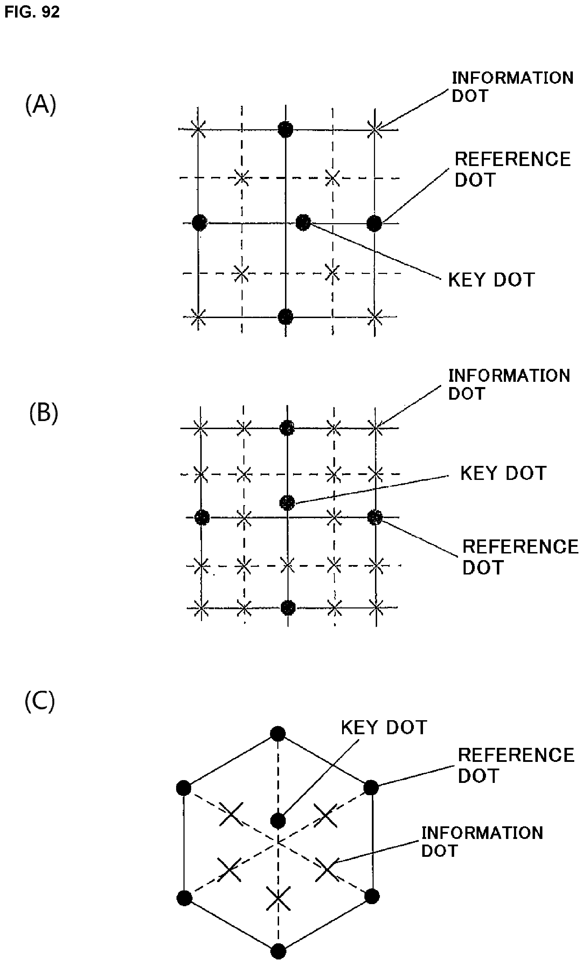

### [First example ("GRID 0"), FIGS. 92 to 94]

As for the first example of the dot pattern, the present applicant refers to it as "GRID 0" as a tentative name.

A feature of "GRID 0" is that by using key dots, at least the range or the orientation of the dot pattern is made to be recognizable.

"GRID 0" has the following configuration as shown in FIGS. 92 to 94.

### (1) Information dot

An information dot is a dot for storing information.

Note that ways of viewing an information dot is as shown in FIGS. 90(A) to 90(E), and the assignment of an information dot code is as shown in FIGS. 91(A) to 91(C).

### (2) Reference dot

A reference dot is a dot placed at a plurality of preset positions and is for specifying the position of a virtual point or a virtual region to be described later.

### (3) Key dot

Though not shown, a key dot is a dot placed by shifting a reference dot or is a dot placed in a position displaced from the placement position of a reference dot in addition.

A Key dot is for specifying the reference orientation for information dots with respect to reference points and virtual points or for information dots arranged in the virtual region with respect to reference points. By determining this reference orientation, it is possible to provide information in the orientation of the information dot with respect to the virtual point and have it read. Furthermore, it is possible to specify the range of a dot pattern in which one piece of data is defined by a plurality of information dots. Thus, even if the dot patterns are placed vertically and horizontally, it is possible to decode the data by reading the range of the dot pattern.

### (4) Virtual point or virtual area

A virtual point or virtual area is specified by the arrangement of reference dots.

FIG. 92 shows a general-purpose example of a dot pattern of "GRID 0," wherein FIG. 92(A) shows an example in which reference dots are arranged in a substantially plus character shape, FIG. 92(B) shows an example in which the number of arranged information dots is increased, and FIG. 92(C) shows an example in which reference dots are arranged in a hexagon shape, respectively.

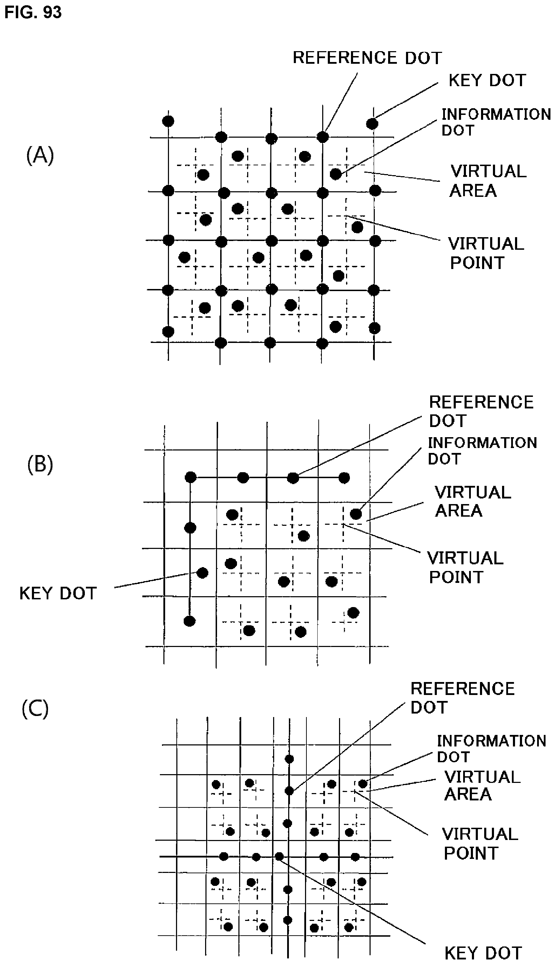

FIG. 93 shows a modification example of the dot pattern of "GRID 0," wherein FIG. 93(A) shows an example in which reference dots are arranged in a substantially square shape, FIG. 93(B) shows an example in which reference dots are arranged in a substantially L shape, and FIG. 93(C) shows an example in which the reference dots are arranged in a substantially cross shape or substantially plus shape, respectively.

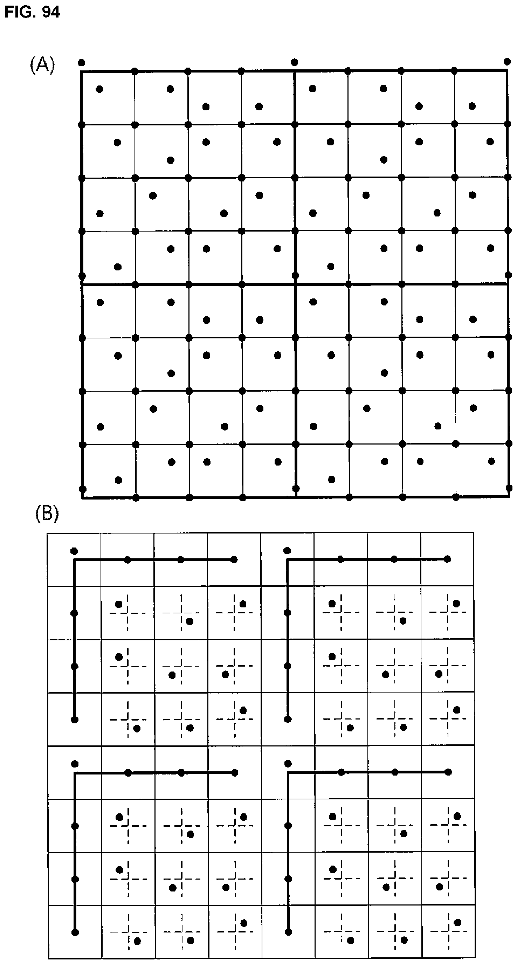

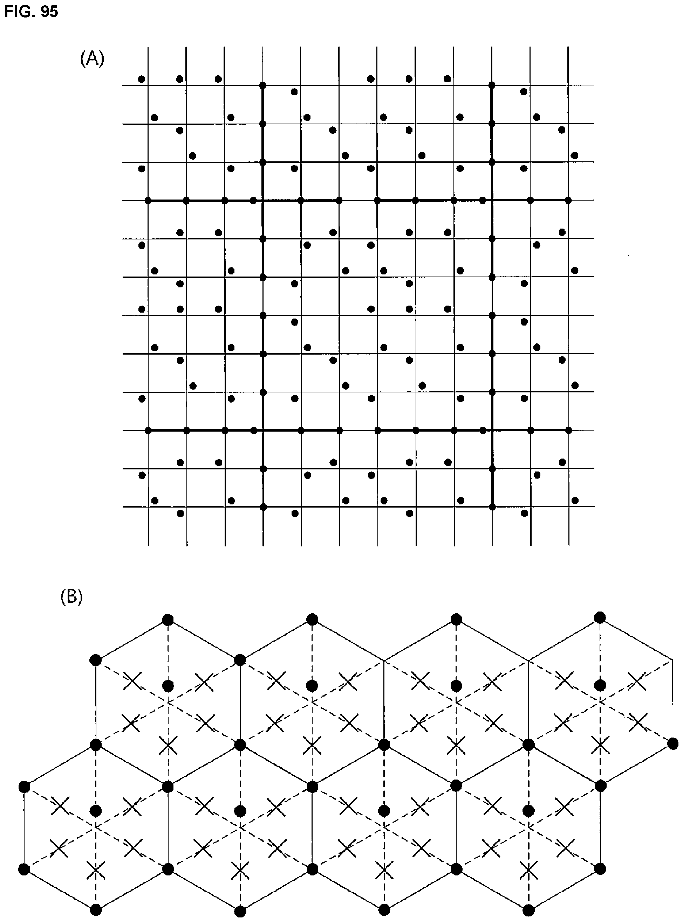

FIGS. 94 to 95 show examples of a connection or a concatenation of a dot pattern of "GRID 0," wherein FIGS. 94(A) and 95(A) are examples of a connection where a plurality of dot patterns in which reference dots are arranged in substantially square shapes are arranged adjacent to each other so that part of the reference dots are common. As for the conditions under which the connection can be made, the positions of the upper and lower dots and/or those at the left and right ends of one dot pattern must necessarily be of common positions. Note that connections involving only the upper and lower sides or only the right and left sides may also be possible. FIGS. 94(B) and 95(B) each show a first example of a concatenation in which a plurality of dot patterns in which reference dots are arranged in substantially L shapes are arranged independent of each other. FIG. 95(A) shows a second example of a concatenation in which a plurality of dot patterns in which reference dots are arranged to form a plus shape are arranged independent of each other. Note that concatenating is a method of arranging dot patterns vertically and horizontally at a predetermined interval. FIG. 95(B) shows an example of a connection where a plurality of dot patterns in which reference dots are arranged in a hexagon shape are arranged adjacent to each other so that part of the reference dots is common.

### [Second Example ("GRID 5")]

As for the second example of the dot pattern, the present applicant refers to it as "GRID 0" as a tentative name.

In "GRID 5", in the place of the key dot of "GRID 0", the range and orientation of the dot pattern is made to be recognized by utilizing "how to arrange reference dots." In order to recognize the orientation of the dot pattern utilizing "how to arrange the reference dots", regardless of what kind of point the reference dot arrangement is centered on and how much it is rotated (excluding 360°), the arrangement must be non-axisymmetric so that it is not identical with that before rotation. Furthermore, it is necessary to be able to recognize the range and orientation of dot patterns even when a plurality of dot patterns repeatedly arranging vertically and/or horizontally are connected or concatenated.

Note that in "GRID 5," the orientation of the dot pattern is recognized using pattern recognition. That is, the shape of a dot pattern formed by the reference dots is stored in a storage means. Then, by collating the image of the read dot pattern with the shape stored in the storage means, the orientation of the dot pattern can be recognized.

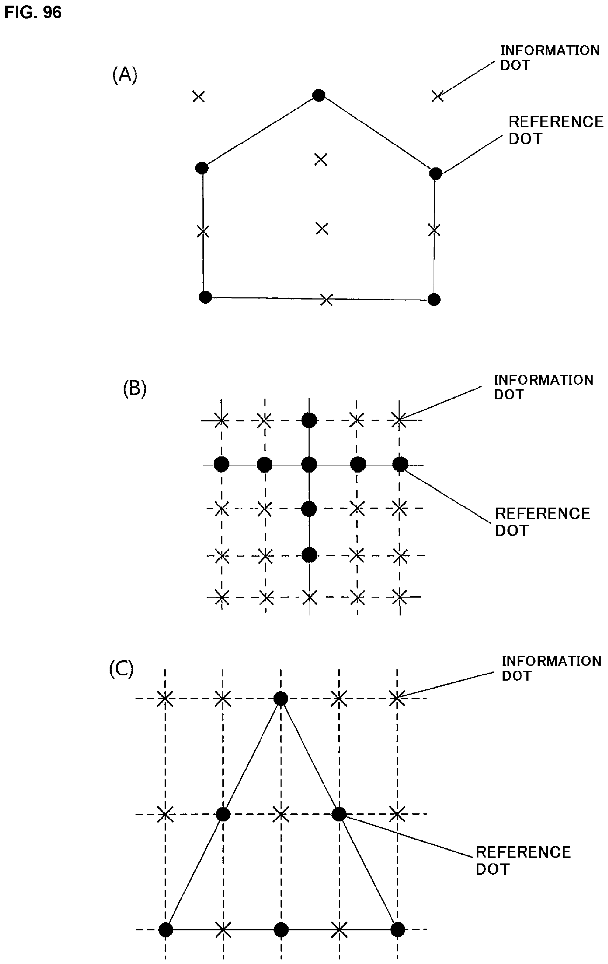

FIG. 96 shows a general-purpose example of a dot pattern of "GRID 5," wherein FIG. 96(A) shows an example in which reference dots are arranged in a substantially house shape unsymmetrical in the vertical direction, FIG. 96(B) shows an example in which the reference dots are arranged in a substantially cross shape unsymmetrical in the vertical direction, and FIG. 96(C) shows an example in which the reference dots are arranged in a substantially isosceles triangle unsymmetrical in the vertical direction, respectively.

With "GRID 5", the reference dots may be arranged in any way, as long as the arrangement of the dots form a recognizable pattern.

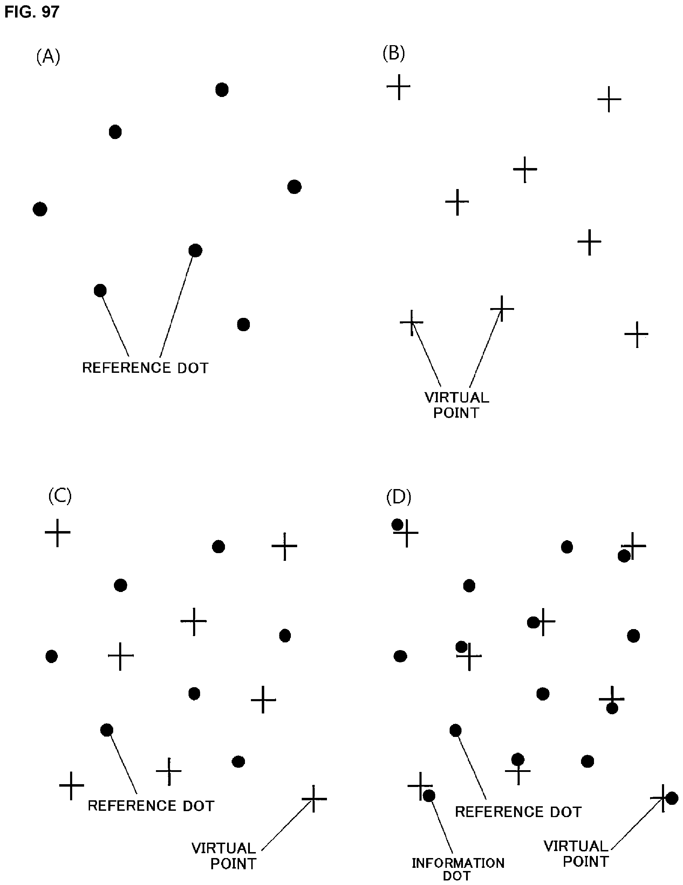

FIG. 97 shows diagrams explaining a case where reference dots or virtual points are arbitrarily arranged in "GRID 5."

As in FIG. 97(A), the pattern of the reference dots is of a unique non-axisymmetric arrangement, and the arrangement pattern of the virtual points is recognizable.

In FIG. 97(B), the virtual point pattern is of a unique non-axisymmetric arrangement, and the reference dot arrangement pattern is recognizable.

In FIG. 97(C), the pattern of the reference dots and the pattern of the virtual points are arranged in association with each other.

In FIG. 97(D), information dots are arranged with virtual points as starting points.

Note that although in the description of FIGS. 90 to 97, the dots of the dot patterns are of circular shape, in the present invention, the dots may assume any shape including a circle, a polygon, a line, and the like. In addition, if the dot assumes a shape (for example, a triangle) of which its orientation can be recognized, the orientation indicated by the dot shape can also be defined as information.

Furthermore, although in the above embodiment, the dot code (dot pattern) is exemplified as information that can be read by the code generation apparatus, in the present invention, any type of information that can lead to the generation of a code in the code generation apparatus is sufficient, and the form or the like are not particularly limited. For example, QR codes (registered trademark), barcodes, color codes, or the like can be adopted as the predetermined information C.

While various embodiments using the code generation apparatus have been described above, the present invention is not limited to these embodiments, and the code generation apparatus can be used for various other purposes.

In addition, the embodiments in this specification and the drawings can be combined in various ways.

Furthermore, although in the present specification and the embodiments in the drawings, the code generation apparatus is described as being in contact with the touch panel 31, the condition of the electrodes of the code generation apparatus is not limited to being in contact with the touch panel, and as long as the capacitance used for contact detection determination by the touch panel can be changed, the code generation apparatus can be above the code detection area of the touch panel, and the functions of the present invention can be realized even with a touch panel having a hovering function.

As long as the touch panel of the code recognition apparatus 3 has a multi-touch function, in addition to a projection capacitive type, a surface capacitive type, a resistive film type, an ultrasonic surface acoustic wave (SAW) type, an optical type, an electromagnetic induction type, or a combination type touch panel thereof may be used.

### [Explanation of Signs]

### DESCRIPTION OF REFERENCE NUMERALS AND SIGNS

1, 101, 102, 103, 104, 105, 106, 107, 108, 109, 110, 111, 112, 113, 114, 115...CODE GENERATION APPARATUS
2... HOUSING
21... HUMAN BODY CONTACT CONDUCTIVE MATERIAL
22 PROTRUSION
24... CENTRAL AXIS
25.. . MOVABLE ELECTRODE
3... CODE RECOGNITION APPARATUS
31...TOUCH PANEL
4... BOTTOM SURFACE
41.. . FIRST CIRCUIT BOARD
5... ELECTRODE
54... REFERENCE ELECTRODE
6... CONTROL UNIT
60...PUSH BUTTON SWITCH
61... SECOND CIRCUIT BOARD
62... SECOND CIRCUIT BOARD ELECTRODE TERMINAL
63...THIRD CIRCUIT BOARD
65... COMMON CONNECTION LINE
66...CONTACT
67... FIRST CONTACT
68... SECOND CONTACT ON THE SECOND CIRCUIT BOARD SIDE
69... SECOND CONTACT ON THE THIRD CIRCUIT BOARD SIDE
7... SETTING UNIT
71...FIRST CODE SWITCH
72... SECOND CODE SWITCH
73.. . PATTERN SETTING TERMINAL
74... SOLDER JOINT
75... SLIDE SWITCH
81.. . FIRST CONDUCTIVE PATTERN
82... SECOND CONDUCTIVE PATTERN

## Claims

1. An apparatus that is detected by bringing it into contact with a panel comprising a sensor that detects a change in a physical quantity at one or more positions, comprising:
a plurality of electrodes arranged on the bottom portion,
a housing that is at least partially formed of a conductive material,
a setting unit that enables selective switching of conduction between the said electrodes and the said conductive material, and presets a conductive pattern formed by one or more electrodes detected by the said panel.

2. An apparatus that is detected by bringing it into contact with a panel comprising a capacitance sensor, comprising:
a plurality of electrodes arranged on a bottom portion,
a housing that is at least partially formed of a conductive material,
one or more operation units that enables switching between a plurality of conductive patterns formed by one or more electrodes detected by the said panel by conduction or cutoff of at least part of a conduction path between the said electrodes and the said conductive material when a predetermined operation is received.

3. An apparatus that is detected by bringing it into contact with a panel comprising a capacitance sensor, comprising:
a plurality of electrodes arranged on a bottom portion,
a housing that is at least partially formed of a conductive material,
wherein a part of the said conductive material is formed in a plurality of areas on a surface of a housing, and when the apparatus is brought into contact with the said panel and receives a human body contact operation at the said conductive material formed at least on one or more of areas among the plurality of areas on the said surface, a plurality of conductive patterns formed by one or more electrodes detected by the said panel are made switchable by conduction between a conductive material of each of the areas and any one of a plurality of electrodes.

4. An apparatus that is detected by bringing it into contact with a panel comprising a capacitance sensor, comprising:
a plurality of electrodes arranged on a bottom portion,
a housing that is at least partially formed of a conductive material,
wherein at least part of the said conductive material is conducting wire connected to the said electrodes, and the apparatus is configured so that a capacitance of the said electrodes is within a capacitance range that can be detected by the said panel, based at least on an area of the said electrodes and a length of the conducting wires that is of predetermined length or longer.

5. The apparatus according to any one of Claims 2 to 4, further comprising:
a setting unit that enables selective switching of conduction between the said electrodes and the said conductive material, and presets a conductive pattern formed by one or more electrodes detected by the said panel.

6. The apparatus according to Claim 1 or 5,
wherein the said setting unit can set a plurality of conductive patterns,
and comprises one or more operation units that makes the panel detect any one of a plurality of conductive patterns set by the said setting unit when receiving a predetermined operation and is capable of switching a plurality of conductive patterns formed by one or more electrodes.

7. The apparatus according to any one of Claims 1, 5, and 6,
wherein the said setting unit enables the said conduction to be selectively switched at least by any one of a connector, a push button type switch, a slide type switch, a toggle switch, and a solder.

8. The apparatus according to any one of Claims 1, 3 to 5, and 7, further comprising:
one or more operation units that enables switching between a plurality of conductive patterns formed by one or more electrodes detected by the said panel by conduction or cutoff at least of part of a conduction path between the said electrodes and the said conductive material when a predetermined operation is received.

9. The apparatus according to Claim 2 or 8 further comprising:
each first terminal conducting with each of the said plurality of electrodes,
a second terminal conducting with the said conductive material,
respective contacts conducting with the said first terminal and the second said terminal,
one or more operation units that enable switching of a plurality of the said conductive patterns formed by one or more electrodes detected by the said panel depending on whether or not the said respective contacts are conductive with conduction changed to cutoff, cutoff changed to conduction, or conduction changed to cutoff then to conduction between the said first terminal and the said second terminal when a predetermined operation is received.

10. The apparatus according to any one of Claims 2, 6, 8, and 9
wherein one of the said plurality of conductive patterns can be switched by the said operation unit independent of at least one other conductive pattern.

11. The apparatus according to any one of Claims 2, 6 and 8 to 10,
wherein at least one of the electrodes forming the said plurality of conductive patterns is not switchable by the said operation unit.

12. The apparatus according to any one of Claims 2, 6 and 8 to 11,
wherein the said operation unit has a mechanism in which predetermined electrode positions are selectively moved in a vertical direction when receiving the said predetermined operation
comprising electrodes that are not detected by the panel by providing a predetermined gap between the panel and the electrodes when the said predetermined electrodes are moved in an upward direction
comprising electrodes detected by the panel when the said predetermined electrodes are moved in a downward direction.

13. The apparatus according to any one of Claims 2, 6 and 8 to 12,
wherein the said predetermined operation includes one or more of operations of one or more buttons, dials, toggles, and slide switches provided on a surface of the said housing, or an operation of pressing or rotating at least a part of the said housing.

14. The apparatus according to any one of Claims 1, 2 and 5 to 13, further comprising:
electrodes that are continuously in conduction with the said conductive material.

15. The apparatus according to any one of Claims 1, 2 and 5 to 14,
wherein the area made conductive by contact with the human body is formed of the said conductive material.

16. The apparatus according to any one of Claims 2, 6 and 8 to 14,
wherein regarding the electrodes that form respective conductive patterns, a number of the electrodes detected by the said panel multiple times is the same as or less than a number of multi-touches that the panel can detect simultaneously, when switching from a first conductive pattern to another conductive pattern in response to a predetermined operation by the said operation unit.

17. The apparatus according to any one of Claims 2, 6 and 8 to 14, comprising
a switching mechanism wherein at least different electrodes among electrodes that form each conductive pattern are not simultaneously detected by the said panel, when switching from a first conductive pattern to another conductive pattern in response to a predetermined operation by the said operation unit.

18. The apparatus according to any one of Claims 2, 6 and 8 to 17,
wherein as a first operation, the said predetermined operation is to have the said panel detect two or more conductive patterns upon switching a plurality of conductive patterns formed by the said one or more electrodes by pressing one or more buttons provided on a surface of the said housing or at least a part of the said housing.

19. The apparatus according to Claim 18,
wherein the said predetermined operation is a second operation performed as needed before or after the said first operation by performing an operation with one or more second buttons, dials, toggles, and slide switches provided on a surface of the said housing or by rotating at least a part of the said housing, and having the said panel detect corresponding conductive patterns by switching a plurality of conductive patterns formed by the said one or more electrodes.

20. The apparatus according to any one of Claims 1, 2 and 5 to 19,
wherein a part of the said conductive material is formed in a plurality of areas on a surface of a housing, and when the apparatus is brought into contact with the said panel and receives a human body contact operation at the said conductive material formed on at least one or more of areas among a plurality of areas on the said surface, a plurality of conductive patterns formed by one or more electrodes detected by the said panel are made switchable by conduction between a conductive material of each of the areas and any one of the said plurality of electrodes.

21. The apparatus according to Claim 3 or 20,
wherein a first conductive pattern is made to be detected by the said panel by having the three or more electrodes arranged to recognize an orientation and an arrangement of a conductive pattern to be in conduction when the housing is held and the apparatus comes into contact with the said panel with a first area formed at least in one of the said plurality of areas is provided at positions for holding a housing.

22. The apparatus according to Claim 21,
wherein one or more areas are provided at least at positions different from the said first region among the said plurality of areas, and the said housing is held and the apparatus comes into contact with the said panel,
wherein in addition to electrodes forming the said first electrode pattern, electrodes newly arranged at one or more different positions are in conduction, and corresponding electrode patterns are made to be detected by the said panel when a human body comes into contact with at least one area among the said one or more areas.

23. The apparatus according to Claim 3 or 20,
wherein the said plurality of areas is provided at positions other than positions for holding a housing, the housing is held and the apparatus comes into contact with the panel,
wherein three or more of predetermined electrodes arranged to enable the recognition of an orientation and an arrangement of a conductive pattern are in conduction and a corresponding conductive pattern is made to be detected by the said panel when at least one area of the said plurality of areas comes into contact with a human body.

24. The apparatus according to Claim 23,
wherein the apparatus conducts to a predetermined electrode and makes the said panel detect a corresponding conductive pattern when a human body comes into contact with two or more of the said plurality of areas.

25. The apparatus according to any one of Claims 3 and 20 to 24,
wherein a plurality of conductive materials is formed with predetermined intervals within a range where simultaneous contact is possible at least in one of the said plurality of areas when a human body comes into contact with the said area
comprising electrodes in conduction with each of the said plurality of conductive materials.

26. The apparatus according to any one of Claims 1 to 3 and 5 to 25,
wherein a capacitance at least of a part of the said electrodes in conduction with the said conductive material is formed within a capacitance range detectable by the said panel even if a human body does not come into contact with the conductive material.

27. The apparatus according to Claim 26,
wherein a part of the said conductive material is a conductive wire, and a capacitance of the said electrodes detectable by the said panel is within a capacitance range detectable by the said panel based at least on the area of the said electrodes and a predetermined length or more of the said conductive wires.

28. The apparatus according to any one of Claims 1 to 3 and 5 to 27,
wherein the said electrodes that are in conduction with the said conductive material are formed to have physical quantities in a range detectable by the said panel when a human body comes into contact with at least a part of the said conductive material.

29. The apparatus according to Claim 28,
wherein the electrodes are formed within a capacitance range in which the said panel can recognize a cutoff when at least a part of a conduction path of the said conducting electrodes with the said conductive material is cut off from conduction.

30. The apparatus according to any of Claims 1 to 3 and 5 to 28,
wherein electrodes not conducting to the said conductive material are formed within a capacitance range in which the said panel cannot detect.

31. The apparatus according to any of Claims 1 to 11 and 13 to 30,
wherein each surface of the said plurality of electrodes is provided on a same surface, and the plurality of electrodes are provided on a same surface or in a convex shape with respect to a surface of the said bottom portion.

32. The apparatus according to any of Claims 1 to 11 and 13 to 30,
wherein the said housing has a sheet-like medium on a side that is brought into contact with the said panel, and the said plurality of electrodes are formed in a film shape on a surface of the said sheet-like medium that is brought into contact with the said panel or on a surface opposite thereof.

33. The apparatus according to Claim 32,
wherein the said sheet-like medium is attached to a bottom portion of a thin plate of a non-conductive material, and the said bottom portion is formed by fitting a thin plate of the said non-conductive material.

34. The apparatus according to Claims 32 or 33,
wherein the said thin plate comprises a non-conductive material having a low dielectric constant and elasticity.

35. The apparatus according to Claim 32 or 33,
wherein the said thin plate includes honeycomb walls, lattice walls, or ribs at predetermined intervals so as to provide air gap regions and maintain flatness.

36. The apparatus according to Claim 32 or 33,
wherein at a bottom portion of the said housing, honeycomb walls, lattice walls, or ribs at predetermined intervals are formed so as to provide air gap regions and maintain flatness, and the said sheet-like medium is attached.

37. The apparatus according to Claim 33 or 33,
wherein a predetermined air gap is provided between a thin plate of the said non-conductive material and the said housing.

38. The apparatus of Claim 37,
wherein the said predetermined gap is 0.4 mm or more.

39. The apparatus according to any one of Claims 32 to 36,
wherein at least a part of a conduction path conducting to the said electrode is further formed on the said sheet-like medium.

40. The apparatus of Claim 39,
wherein a line width of a conduction path formed at least in the area of the said sheet-like medium that is brought into contact with the said panel is 0.3 mm or less in a case where a conduction path is of silver salt ink, silver nano ink, or silver paste ink.

41. The apparatus according to Claim 39 or 40,
wherein at least one or more terminals are further formed at least either at a middle or an end of the said conduction path formed above the bent section formed by bending upward the said sheet-like medium including a portion where the said conduction path is formed, at least in a vicinity of an area where the apparatus is brought into contact with the panel.

42. The apparatus according to Claim 39 or 40,
wherein the said sheet-like medium can be bent upward in a vicinity of an area for bringing the apparatus into contact with the panel, and one or more terminals are further formed on the said sheet-like medium at least either at a middle or at an end of the said conduction path.

43. The apparatus according to Claim 41 or 42,
wherein the said terminal or a terminal connected to the terminal through a conduction path is the said first terminal according to Claim 9.

44. The apparatus according to any of Claims 32 to 43,
wherein the said sheet-like medium is removable.

45. The apparatus according to any one of Claims 1 to 44,
wherein an information processing apparatus connected to the said panel is made to recognize an orientation of the said conductive pattern formed by detecting three or more electrodes arranged uniquely, and to decode a capacitance code defined by the conductive pattern.

46. The apparatus according to any one of Claims 2 to 45,
wherein one conductive pattern among the said plurality of conductive patterns is a conductive pattern where an information processing apparatus connected to the said panel detects three or more electrodes arranged uniquely, recognizes an orientation of the said conductive pattern formed, and decodes a capacitance code defined by the conductive pattern, and using the one conductive pattern as a reference pattern, relative positions of electrodes forming other conductive patterns are made to be recognized, and capacitance codes defined by other conductive patterns are made to be decoded.

47. The apparatus according to any one of Claims 2 to 45,
wherein a pattern in which at least two of the said plurality of conductive patterns are overlaid is used as a reference pattern for an information processing apparatus connected to the said panel to recognize an orientation of a formed conductive pattern by a detection of at least three or more electrodes arranged uniquely and arrangements of other electrodes, and based upon the reference pattern, relative positions of electrodes forming the said plurality of conductive patterns are made to be recognized and a plurality of capacitance codes defined by the plurality of conductive patterns are made to be decoded.

48. The apparatus according to Claim 46 or 47,
wherein a code including an order of capacitance codes decoded from arrangements of electrodes forming the said plurality of conductive patterns is defined.

49. The apparatus according to any of Claims 2 to 45,
wherein among the said plurality of conductive patterns, with a first conductive pattern that is made to be detected first of all is used as a reference pattern, codes defined by combinations of arrangements of relative positions of electrodes that form other conductive patterns including their order are made to be decoded by an information processing apparatus connected to the said panel.

50. The apparatus according to any one of Claims 1 to 49,
wherein a sensor that detects a change in a physical quantity at one or more positions is a capacitance sensor.

51. The apparatus according to any one of Claims 1 to 50, comprising:
a sheet, a thin plate, a coating, or a film covered with printing formed of a non-conductive material for blindfolding and/or protecting at least the said plurality of electrodes.

52. The apparatus according to any one of Claims 1 to 51,
wherein the said panel is a touch panel equipped with or connected to a smartphone, a tablet, or an information processing apparatus.

53. An information reading system, comprising:
a panel having a sensor for detecting a change in a physical quantity at one or more positions,
an information processing apparatus that can be mounted on or can be connected externally to the said panel,
the apparatus according to Claims 1 to 52 that is detected by bringing it into contact with the said panel
wherein the said panel detects one or more of the said plurality of electrodes,
wherein the said information processing apparatus decodes capacitance codes defined by arrangements of the said electrodes.

54. A reading method,
wherein the said panel detects a conductive pattern formed by one or more electrodes disposed on a bottom portion of the said apparatus when the apparatus according to any one of Claims 1 to 52 comes into contact with a panel comprising a sensor that detects a change in a physical quantity at one or more positions,
wherein an information processing apparatus connected to the said panel recognizes an orientation of the said conductive pattern formed by detecting three or more electrodes arranged uniquely and decodes a capacitance code defined by the conductive pattern.

55. A reading method
wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of Claims 2 to 52 comes into contact with a panel comprising a sensor that detects a change in a physical quantity at one or more positions,
wherein an information processing apparatus connected to the said panel recognizes an orientation of the said conductive pattern formed by detecting three or more electrodes arranged uniquely from one of the said plurality of conductive patterns and decodes a capacitance code defined by the conductive pattern, and with the one conductive pattern as the reference pattern, relative positions of electrodes forming other conductive patterns are recognized, and capacitive codes defined by other conductive patterns are decoded.

56. A reading method,
wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of Claims 2 to 52 comes into contact with a panel comprising a sensor that detects a change in a physical quantity at one or more positions,
wherein a pattern in which two of the said plurality of conductive patterns are overlaid is used as a reference pattern for an information processing apparatus connected to the said panel to recognize an orientation of a formed conductive pattern by a detection of at least three or more electrodes arranged uniquely and an arrangement of other electrodes, and based upon the reference pattern, relative positions of electrodes forming the said plurality of conductive patterns are made to be recognized and a plurality of capacitance codes defined by the plurality of conductive patterns are made to be decoded.

57. The reading method according to Claim 53 or 54,
wherein an information processing apparatus connected to the said panel defines codes including the order of capacitance codes decoded from arrangements of electrodes forming the said plurality of conductive patterns.

58. A method of reading
wherein one or more electrodes are disposed on a bottom portion of an apparatus, and when a predetermined operation is received, a panel detects a plurality of conductive patterns formed by one or more electrodes detected by the said panel based upon conduction or cutoff at least of a part of a conduction path between the said electrodes and the said conductive material when the apparatus according to any one of Claims 2 to 52 comes into contact with a panel comprising a sensor that detects a change in a physical quantity at one or more positions,
wherein codes defined by a combination of arrangements of relative positions of electrodes that form other conductive patterns including their order among the said plurality of conductive patterns, with a first conductive pattern that is made to be detected first of all is used as a reference pattern, codes defined by a combination of arrangements of relative positions of electrodes that form other conductive patterns including their order are decoded by an information processing apparatus connected to the said panel.
